(19) Europäisches Patentamt
European Patent Office
Office européen des brevets

(11) **EP 4 281 418 B1**

(12) **EUROPÄISCHE PATENTSCHRIFT**

(45) Veröffentlichungstag und Bekanntmachung des Hinweises auf die Patenterteilung:
**07.08.2024   Patentblatt 2024/32**

(21) Anmeldenummer: **22701208.5**

(22) Anmeldetag: **17.01.2022**

(51) Internationale Patentklassifikation (IPC):
**C03B 1/02** *(2006.01)*     **C03B 20/00** *(2006.01)*
**C03C 3/06** *(2006.01)*     **C03B 5/425** *(2006.01)*
**C03C 4/12** *(2006.01)*

(52) Gemeinsame Patentklassifikation (CPC):
**C03B 1/02; C03B 5/425; C03B 20/00; C03C 3/06; C03C 4/12;** C03B 2201/03; C03C 2201/23; C03C 2201/30; C03C 2203/34

(86) Internationale Anmeldenummer:
**PCT/EP2022/050858**

(87) Internationale Veröffentlichungsnummer:
**WO 2022/157107 (28.07.2022 Gazette 2022/30)**

(54) **VERFAHREN ZUR HERSTELLUNG EINES QUARZGLASKÖRPERS**

METHOD OF MAKING A QUARTZ GLASS BODY

PROCÉDÉ DE FABRICATION D'UN CORPS EN VERRE DE QUARTZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2021   EP 21152778**

(43) Veröffentlichungstag der Anmeldung:
**29.11.2023   Patentblatt 2023/48**

(73) Patentinhaber: **Heraeus Quarzglas GmbH & Co. KG**
**63450 Hanau (DE)**

(72) Erfinder:
• **GROMANN, Boris**
  **63450 Hanau (DE)**
• **KAYSER, Thomas**
  **06803 Bitterfeld-Wolfen (DE)**
• **SÖHN, Matthias**
  **63450 Hanau (DE)**
• **GÖBEL, Marcus Constantin**
  **63450 Hanau (DE)**
• **WEISENSEEL, Bastian**
  **63450 Hanau (DE)**
• **WISSEL-STOLL, Kathrin**
  **63450 Hanau (DE)**
• **WITTRIN, Mirko**
  **63450 Hanau (DE)**
• **WHIPPEY, Nigel R.**
  **63450 Hanau (DE)**
• **SCHEICH, Gerrit**
  **63450 Hanau (DE)**
• **WILDE, Markus**
  **06803 Bitterfeld-Wolfen (DE)**

(74) Vertreter: **Heraeus IP**
**Heraeus Business Solutions GmbH**
**Intellectual Property**
**Heraeusstraße 12-14**
**63450 Hanau (DE)**

(56) Entgegenhaltungen:
**WO-A1-2021/013876     WO-A2-2017/103124**
**JP-A- H0 524 852**

**Beschreibung**

Die vorliegende Erfindung betrifft ein Verfahren zum Herstellen eines Quarzglaskörpers beinhaltend die Verfahrensschritte: i.) Bereitstellen eines Pulvers aus Siliziumdioxidpartikeln, sowie einer Flüssigkeit; ii.) Bilden einer Aufschlämmung beinhaltend die Flüssigkeit und die Siliziumdioxidpartikel durch Mischen des Pulvers und der Flüssigkeit; iii.) Behandeln der Aufschlämmung mit Ultraschall unter Erhalt einer Vorläufersuspension; iv.) Leiten der Vorläufersuspension durch mindestens eine erste mehrstufige Filtervorrichtung unter Erhalt einer Siliziumdioxidsuspension; v.) Bilden eines Siliziumdioxidgranulats aus der Siliziumdioxidsuspension; vi.) Bilden einer Glasschmelze aus dem Siliziumdioxidgranulat in einem Ofen; vii.) Bilden eines Quarzglaskörpers aus zumindest einem Teil der Glasschmelze; wobei das Behandeln der Aufschlämmung in Schritt iii.) ein Deagglomerieren mindestens eines Teils der Siliziumdioxidpartikel beinhaltet; wobei Schritt v.) ein Granulieren beinhaltet; wobei das Siliziumdioxidgranulat einen größeren Partikeldurchmesser aufweist als die in der Siliziumdioxidsuspension enthaltenen Siliziumdioxidpartikel; wobei der Ofen einen Schmelztiegel und einen Gasauslass aufweist, wobei ein Gas durch den Gasauslass dem Ofen entnommen wird; wobei der Taupunkt des Gases beim Austritt aus dem Ofen durch den Gasauslass weniger als 0°C beträgt; wobei die erste mehrstufige Filtervorrichtung zumindest eine erste, eine zweite und eine dritte Filterstufe aufweist, wobei die zweite Filterstufe stromabwärts von der ersten Filterstufe, und die dritte Filterstufe stromabwärts von der zweiten Filterstufe angeordnet ist, wobei jede Filterstufe mindestens einen Filter beinhaltet, wobei die erste Filterstufe eine Filterfeinheit von 5 $\mu$m oder mehr, die zweite Filterstufe eine Filterfeinheit in einem Bereich von 0,5 bis 5 $\mu$m, und die dritte Filterstufe eine Filterfeinheit von 1 $\mu$m oder weniger aufweist, wobei die Filterfeinheit angibt, welches die kleinste Partikelgröße ist, die von dem genannten Filter zurückgehalten wird, wobei die Abscheiderate für die erste Filterstufe 50 % oder mehr, für die zweite Filterstufe 95% oder mehr, und für die dritte Filterstufe 99,5 % oder mehr, jeweils ermittelt gemäß ISO 16889, aufweist. Die Erfindung betrifft auch einen gemäß dem Verfahren erhältlichen Quarzglaskörper, sowie daraus herstellbare Lichtleiter, Leuchtmittel, Anordnungen und Formkörper.

Quarzglas, Quarzglaserzeugnisse und Erzeugnisse, die Quarzglas enthalten, sind bekannt. Ebenso sind verschiedene Verfahren zum Herstellen von Quarzglas und Quarzglaskörpern bereits bekannt.

WO2021013876 A1 zeigt ein Verfahren zur Herstellung eines Quarzglaskörpers durch Schmelzen eines Siliziumdioxidgranulats. WO2017103124 A2 lehrt einen Quarzglaskörper, hergestellt durch Schmelzen eines Siliziumdioxidgranulats. JPH0524852 A beschreibt ein Verfahren zur Herstellung von Quarzglas einschliesslich Ultraschallbehandlung und Filtration.

Nichtsdestotrotz werden weiterhin erhebliche Bemühungen unternommen, Herstellungsverfahren aufzuzeigen, mittels derer Quarzglas von noch höherer Reinheit, das bedeutet Abwesenheit von Verunreinigungen, hergestellt werden können.

So werden bei manchen Einsatzgebieten von Quarzglas und seinen Verarbeitungsprodukten besonders hohe Anforderungen, zum Beispiel hinsichtlich Homogenität und Reinheit gestellt. Dies ist unter anderem der Fall bei Quarzglas, das zu Lichtleitern oder in Leuchtmitteln verarbeitet wird. Verunreinigungen können hier Absorptionen bewirken. Das ist nachteilig, da es zur Dämpfung des emittierten Lichts führt.

UV-Lampen und deren Hüllrohre werden z.B. in der Wasserentkeimung oder in der Desinfektion von Luft und Oberflächen eingesetzt. Ziel ist die Emission von UV-Strahlung in einem bestimmten Wellenlängenbereich. In diesem Bereich verringern Verunreinigungen die Effizienz der Bestrahlung. Aus diesem Grund eine gewisse Präferenz zugunsten von Produkten mit bzw. aus synthetischem Quarzglas. Um in diesem Markt wettbewerbsfähig zu sein, sollten die Quarzglasprodukte jedoch günstig sein. Die bisher etablierten Verfahren zur Produktion von synthetischem Quarzglas sind damit nicht marktfähig.

Ein weiteres Beispiel für den Einsatz von hochreinem Quarzglas sind Produktionsschritte in der Halbleiterfertigung. Hier führt jede Verunreinigung des Glaskörpers potentiell zu Defekten der Halbleiter, und somit zu Ausschuss in der Fertigung. Da in der Halbleiterfertigung die Entwicklung zu immer schmaleren Strukturbreiten, höheren Packungsdichten, Stapeln (Stacking), einhergehend mit einer größeren Zahl von Verfahrensschritten an einem Wafer und zum Einsatz von größeren Wafern als Substraten führt, bestehen deutlich gestiegene Bedenken in Bezug auf Verunreinigungen. Gleichzeitig steigen die Kosten im Fall von Ausschuss überproportional. Aus diesen Gründen besteht ein Bedarf nach Reaktoren und Produktionsvorrichtungen, die möglichst keine Kontamination auf die Wafer transferieren können.

Aus diesen Gründen ist das Interesse der Industrie an Reaktoren und Vorrichtungen aus synthetischem Quarzglas erheblich gestiegen, wo zuvor Quarzglas aus natürlichen Quellen eingesetzt wurde. Die für diese Verfahren eingesetzten hochreinen Quarzglassorten, insbesondere hochreine synthetische Quarzglassorten, werden sehr aufwendig hergestellt. Sie sind hochpreisig. Nichtsdestotrotz besteht hier eine erhebliche Nachfrage.

In manchen Anwendungen, insbesondere für Reaktoren und Vorrichtungen der Halbleiterfertigung weist synthetisches Quarzglas aber auch Nachteile auf. So führt die Abwesenheit bestimmter Metallionen, insbesondere von Aluminium dazu, dass synthetisches Quarzglas eine niedrigere Viskosität aufweist als natürliches Quarzglas. Dafür beinhaltet es im Vergleich mehr OH-Gruppen, welche vor allem aus der Herstellung von Siliziumdioxid mittels Flammenhydrolyse resultieren. Das führt zu einer geringeren Viskosität und verringert damit die maximale Einsatztemperatur verglichen mit natürlichem Quarzglas.

Andererseits kann OH-gruppenarmes, synthetisches Quarzglas hergestellt werden, indem man die Vorstufe (z.B. einen porösen Körper oder ein Granulat aus Nanopartikeln) vor dem Schmelzschritt, mit Chlor, Chlorwasserstoff oder ähnlichem behandelt. Hierbei werden die OH Gruppen entfernt. Das hieraus gewonnene Quarzglas ist nun aber mit Chlor dotiert und weist zudem eine geringere Viskosität auf, sodass bestimmte Verwendungen nicht möglich sind. Außerdem besteht insbesondere Seitens der Halbleiterindustrie die Befürchtung, dass aus Reaktoren aus chlorhaltigem Quarzglas Chlor ausgetragen wird, welches entweder durch Reaktion mit anderen Metallen zu Verunreinigungen der Wafer, oder aber zu einer Korrosion der auf den Wafern etablierten Strukturen führen könnte. Es besteht also zusätzlich der Wunsch, dass das synthetische Quarzglas nicht nur OH-gruppenarm, sondem auch chlorfrei sein möge, und eine hohe Viskosität aufweisen solle, analog zu natürlichem Quarzglas.

Ausgehend von dem im Markt bestehenden Wunsch nach dem bereits genannten hochreinen Quarzglas, insbesondere hochreinen synthetischen Quarzglas, und Erzeugnissen daraus, wäre es daher äußerst attraktiv, eine mit natürlichem Quarzglas vergleichbare gute Qualität von synthetischem Quarzglas herzustellen, und diese zugleich zu einem niedrigeren Preis als die bisher im Markt bekannte Quarzglasqualitäten anbieten zu können. In diesem Hinblick werden sowohl kostengünstigere Herstellungsverfahren als auch günstigere Rohstoffquellen gesucht.

Bekannte Verfahren zum Herstellen von Quarzglaskörpern beinhalten das Schmelzen von Siliziumdioxid und das Formen zu Quarzglaskörpern aus der Schmelze. Unregelmäßigkeiten in einem Glaskörper, zum Beispiel durch den Einschluss von Gasen in Form von Blasen, können zu einem Versagen des Glaskörpers bei Belastung führen, insbesondere bei hohen Temperaturen, oder die Verwendung für einen bestimmten Zweck ausschließen. So können Verunreinigungen des quarzglasbildenden Rohstoffs zur Bildung von Rissen, Blasen, Streifen und Verfärbungen im Quarzglas führen.

Beim Einsatz in Verfahren zur Herstellung und Behandlung von Halbleiterbauteilen können außerdem Verunreinigungen im Glaskörper herausgearbeitet und auf die behandelten Halbleiterbauteile übertragen werden. Dies ist zum Beispiel bei Ätzverfahren der Fall und führt dann zu Ausschuss bei den Halbleiterrohlingen. Im Falle von Gaseinschlüssen würden sich beim Herausarbeiten bei den in der Halbleiterfertigung zum Einsatz kommenden Ätzprozessen Partikel bilden. Auch dies wird kritisch gesehen. Ein häufig auftretendes Problem bei den bekannten Herstellungsverfahren ist folglich eine ungenügende Qualität der Quarzglaskörper.

Ein weiterer Aspekt betrifft die Rohstoffeffizienz. Es erscheint vorteilhaft, an anderer Stelle als Nebenprodukt anfallendes Quarzglas und Rohstoffe dafür möglichst einer industriellen Verarbeitung zu Quarzglaserzeugnissen zuzuführen, anstatt diese Nebenprodukte wie bisher als einfaches Füllmaterial, z.B. im Hochbau, zu verbringen oder kostspielig als Müll zu entsorgen. Diese Nebenprodukte werden oftmals als Feinstaub in Filtern abgeschieden. Der Feinstaub wirft weitere Probleme, insbesondere im Hinblick auf Gesundheit, Arbeitsschutz und Handhabung auf.

AUFGABEN

Eine Aufgabe der vorliegenden Erfindung ist es, einen oder mehrere der sich aus dem Stand der Technik ergebenden Nachteile zumindest teilweise zu überwinden.

Es ist eine weitere Aufgabe der Erfindung, Lichtleiter, Leuchtmittel, Formkörper und Beschichtungen mit einer langen Lebensdauer bereitzustellen.

Es ist eine weitere Aufgabe der Erfindung, Lichtleiter, Leuchtmittel, Formkörper und Beschichtungen aus Glas bereitzustellen, die blasenfrei oder blasenarm sind.

Es ist eine weitere Aufgabe der Erfindung, Lichtleiter, Leuchtmittel, Formkörper und Beschichtungen aus Glas bereitzustellen, die eine hohe Transparenz aufweisen.

Es ist eine weitere Aufgabe der Erfindung, Lichtleiter, Leuchtmittel, Formkörper und Beschichtungen bereitzustellen, die eine geringe Opazität aufweisen.

Es ist eine weitere Aufgabe der Erfindung, Lichtleiter mit einer geringen Dämpfung bereitzustellen.

Es ist eine weitere Aufgabe der Erfindung, Lichtleiter, Leuchtmittel, Formkörper und Beschichtungen bereitzustellen, die eine hohe Formtreue aufweisen. Insbesondere ist es eine Aufgabe der Erfindung, Lichtleiter, Leuchtmittel, Formkörper und Beschichtungen bereitzustellen, die bei hohen Temperaturen nicht verformen. Insbesondere ist es eine Aufgabe der Erfindung, Lichtleiter, Leuchtmittel, Formkörper und Beschichtungen bereitzustellen, die auch bei Ausbildung großer Abmessungen formstabil sind.

Es ist eine weitere Aufgabe der Erfindung, Lichtleiter, Leuchtmittel, Formkörper und Beschichtungen bereitzustellen, die reiß- und bruchfest sind.

Es ist eine weitere Aufgabe der Erfindung, Lichtleiter, Leuchtmittel, Formkörper und Beschichtungen bereitzustellen, die effizient herstellbar sind.

Es ist eine weitere Aufgabe der Erfindung, Lichtleiter, Leuchtmittel, Formkörper und Beschichtungen bereitzustellen, die kostengünstig herstellbar sind.

Es ist eine weitere Aufgabe der Erfindung, Lichtleiter, Leuchtmittel, Formkörper und Beschichtungen bereitzustellen, bei deren Herstellung auf lange Nachbehandlungsschritte, zum Beispiel Tempern verzichtet werden kann.

Es ist eine weitere Aufgabe der Erfindung, Lichtleiter, Leuchtmittel, Formkörper und Beschichtungen bereitzustellen, die eine hohe Temperaturwechselbeständigkeit aufweisen. Es ist insbesondere eine Aufgabe der Erfindung, Lichtleiter, Leuchtmittel, Formkörper und Beschichtungen bereitzustellen, die bei starken thermischen Schwankungen eine geringe Wärmeausdehnung aufweisen.

Es ist eine weitere Aufgabe der Erfindung, Lichtleiter, Leuchtmittel, Formkörper und Beschichtungen bereitzustellen, die eine hohe Härte aufweisen.

Es ist eine weitere Aufgabe der Erfindung, Lichtleiter, Leuchtmittel, Formkörper und Beschichtungen bereitzustellen, die eine hohe Reinheit und eine geringe Kontamination mit Fremdatomen aufweisen. Unter Fremdatomen werden Bestandteile verstanden, die nicht gezielt eingebracht wurden.

Es ist eine weitere Aufgabe der Erfindung, Lichtleiter, Leuchtmittel, Formkörper und Beschichtungen bereitzustellen, die eine geringe Menge an Dotierstoffen enthalten.

Es ist eine weitere Aufgabe der Erfindung, Lichtleiter, Leuchtmittel, Formkörper und Beschichtungen bereitzustellen, die eine hohe Homogenität aufweisen. Eine Homogenität einer Eigenschaft oder eines Stoffes ist ein Maß für die Gleichmäßigkeit der Verteilung dieser Eigenschaft oder des Stoffes in einer Probe.

Es ist insbesondere eine Aufgabe der Erfindung, Lichtleiter, Leuchtmittel, Formkörper und Beschichtungen bereitzustellen, die eine hohe Stoffhomogenität aufweisen. Die Stoffhomogenität ist ein Maß für die Gleichmäßigkeit der Verteilung von im Lichtleiter, Leuchtmittel oder Halbleiterapparat enthaltenen Elemente und Verbindungen, insbesondere von OH, Chlor, Metallen, insbesondere Aluminium, Erdalkalimetalle, Refraktärmetalle und Dotierstoffe.

Es ist eine weitere Aufgabe der Erfindung, Lichtleiter, Leuchtmittel, Formkörper und Beschichtungen aus Glas bereitzustellen, deren Glaskörper die Lichtintensität im sichtbaren Bereich nicht dämpfen.

Es ist eine weitere Aufgabe der Erfindung, Lichtleiter, Leuchtmittel, Formkörper und Beschichtungen aus Glas bereitzustellen, deren Glaskörper Strahlung im IR-Bereich möglichst wenig dämpfen.

Es ist eine weitere Aufgabe der Erfindung, Lichtleiter, Leuchtmittel, Formkörper und Beschichtungen aus Glas bereitzustellen, deren Glaskörper für Licht im IR-Bereich durchlässig sind.

Es ist eine weitere Aufgabe der Erfindung, Lichtleiter, Leuchtmittel, Formkörper und Beschichtungen aus Glas bereitzustellen, deren Glaskörper Licht nicht absorbieren sind.

Es ist eine weitere Aufgabe der Erfindung, nicht-fluoreszierende Lichtleiter, Leuchtmittel, Formkörper und Beschichtungen aus Glas bereitzustellen.

Es ist insbesondere eine Aufgabe der Erfindung, Lichtleiter, Leuchtmittel, Formkörper und Beschichtungen aus Glas bereitzustellen, die im UV-Bereich, insbesondere bei Anregung mit Strahlung einer Wellenlänge von 254 nm oder 365 nm, oder beidem, keine Fluoreszenz zeigen.

Es ist auch eine Aufgabe der Erfindung, Lichtleiter, Leuchtmittel, Formkörper und Beschichtungen aus Glas bereitzustellen, die einen definierten OH-Gehalt aufweisen. Ein gewisser Gehalt an OH-Gruppen kann beitragen, durch Strahlung wie UV induzierte Strukturänderungen im Quarzglas auszugleichen, also die sogenannte Strahlenschädigung zu kompensieren.

Es ist auch eine Aufgabe der Erfindung, Lichtleiter, Leuchtmittel, Formkörper und Beschichtungen aus Glas bereitzustellen, die einen definierten OH-Gehalt im Bereich von 100 bis 200 ppm aufweisen.

Es ist eine weitere Aufgabe der Erfindung, Reaktoren, Leitungen, Formkörper und Beschichtungen bereitzustellen, die insbesondere für bestimmte Behandlungsschritte in der Halbleiterfertigung insbesondere bei der Herstellung von Wafern, geeignet sind. Beispiele für so einen bestimmten Behandlungsschritt sind das Plasmaätzen, das chemisches Ätzen und Plasmadotierungen.

Es ist eine weitere Aufgabe der Erfindung, Reaktoren, Leitungen, Formkörper und Beschichtungen bereitzustellen, die bei Einsatz in der Halbleiterfertigung, insbesondere bei der Herstellung von Wafern dazu beitragen, möglichst wenig Ausschuss in der Fertigung der Halbleiter zu produzieren.

Es ist eine weitere Aufgabe der Erfindung, Lichtleiter, Leuchtmittel, Formkörper und Beschichtungen bereitzustellen, die keine oder weniger Metallionen aufweisen.

Es ist eine Aufgabe der Erfindung, Lichtleiter, Leuchtmittel, Formkörper und Beschichtungen bereitzustellen, die möglichst keine von Si, O und ggf. H verschiedenen Atome aufweisen.

Es ist eine weitere Aufgabe der Erfindung, Lichtleiter, Leuchtmittel, Formkörper und Beschichtungen bereitzustellen, die unter einer hohen Anwendungstemperatur betrieben werden können.

Es ist eine weitere Aufgabe der Erfindung, Lichtleiter, Leuchtmittel, Formkörper und Beschichtungen bereitzustellen, die auch bei hohen Anwendungstemperaturen stabil sind. Es ist insbesondere eine Aufgabe der Erfindung, Lichtleiter, Leuchtmittel und Bauteile bereitzustellen, von denen sich im Betrieb keine Partikel lösen.

Es ist eine weitere Aufgabe der Erfindung, einen Quarzglaskörper bereitzustellen, der für die Verwendung in Lichtleitern, Leuchtmitteln, Formkörper und Beschichtungen aus Quarzglas geeignet ist und mindestens eine, bevorzugt mehrere der bereits beschriebenen Aufgaben zumindest teilweise löst.

Es ist eine weitere Aufgabe der Erfindung, einen Quarzglaskörper bereitzustellen, der eine geradlinige Ausformung aufweist. Insbesondere ist es eine Aufgabe, einen Quarzglaskörper bereitzustellen, der einen hohen Biegeradius aufweist. Insbesondere ist es eine weitere Aufgabe, einen Quarzglaskörper bereitzustellen, der einen hohen Curl-Parameter aufweist.

Es ist eine weitere Aufgabe, einen Quarzglaskörper bereitzustellen, in dem die Migration von Kationen möglichst gering ist.

Es ist eine weitere Aufgabe, einen Quarzglaskörper bereitzustellen, der eine hohe Homogenität über die gesamte Länge des Quarzglaskörpers aufweist.

Insbesondere ist es eine Aufgabe der Erfindung, einen Quarzglaskörper bereitzustellen, der über die gesamte Länge des Quarzglaskörpers eine hohe Brechzahlhomogenität aufweist.

Insbesondere ist es eine Aufgabe der Erfindung, einen Quarzglaskörper bereitzustellen, der über die gesamte Länge des Quarzglaskörpers eine hohe Homogenität der Viskosität aufweist.

Insbesondere ist es eine Aufgabe der Erfindung, einen Quarzglaskörper bereitzustellen, der über die gesamte Länge des Quarzglaskörpers eine hohe Stoffhomogenität aufweist.

Insbesondere ist es eine Aufgabe der Erfindung, einen Quarzglaskörper bereitzustellen, der über die gesamte Länge des Quarzglaskörpers eine hohe optische Homogenität aufweist.

Es ist eine weitere Aufgabe der Erfindung, einen Quarzglaskörper bereitzustellen, der einen definierten OH-Gehalt aufweist.

Es ist eine weitere Aufgabe der Erfindung, einen Quarzglaskörper bereitzustellen, der einen geringen OH-Gehalt aufweist.

Es ist eine weitere Aufgabe der Erfindung, einen Quarzglaskörper bereitzustellen, der eine hohe Viskosität aufweist.

Es ist eine weitere Aufgabe der Erfindung, einen Quarzglaskörper bereitzustellen, der eine möglichst hohe Einsatztemperatur aufweist.

Es ist eine weitere Aufgabe der Erfindung, einen OH-armen Quarzglaskörper bereitzustellen.

Es ist eine weitere Aufgabe der Erfindung, einen Quarzglaskörper bereitzustellen, der wenig oder kein Chlor enthält. Es ist eine weitere Aufgabe der Erfindung, einen Quarzglaskörper bereitzustellen, der eine geringe Menge an Verunreinigungen aus dem Tiegelmaterial aufweist.

Es ist insbesondere eine Aufgabe der Erfindung, einen Quarzglaskörper bereitzustellen, der einen geringen Gehalt an metallischen Verunreinigungen aufweist.

Es ist insbesondere eine Aufgabe der Erfindung, einen Quarzglaskörper bereitzustellen, der einen geringen Wolfram-Gehalt aufweist.

Es ist insbesondere eine weitere Aufgabe der Erfindung, einen Quarzglaskörper bereitzustellen, der einen geringen Molybdän-Gehalt aufweist.

Es ist eine weitere Aufgabe der Erfindung, einen Quarzglaskörper bereitzustellen, der keine oder wenige Verunreinigungen aus dem Tiegelmaterial, insbesondere Wolfram und Molybdän, im Inneren aufweist.

Es ist eine weitere Aufgabe der Erfindung, einen Quarzglaskörper bereit zu stellen, der OH-arm, chlorarm und arm an metallischen Verunreinigungen ist, und gleichzeitig eine hohe Viskosität, eine hohe Temperaturstabilität und eine hohe Einsatztemperatur aufweist.

Es ist eine weitere Aufgabe der Erfindung, einen Quarzglaskörper bereit zu stellen, der OH-arm, chlorarm und arm an metallischen Verunreinigungen ist, und gleichzeitig eine hohe Viskosität, eine hohe Temperaturstabilität und eine hohe Einsatztemperatur aufweist, und zudem im Vergleich zu anderem, synthetischen Quarzglas kostengünstig herstellbar ist.

Es ist eine weitere Aufgabe der Erfindung, einen Quarzglaskörper bereit zu stellen, der wenige OH-Gruppen, möglichst kein oder wenig Chlor und möglichst frei von oder arm an metallischen Verunreinigungen ist. Gleichzeitig soll der Quarzglaskörper eine hohe Viskosität, eine hohe Temperaturstabilität und eine hohe Einsatztemperatur aufweisen, und zudem im Vergleich zu natürlichem Quarzglas kostengleich, günstiger, oder möglichst wenig teurer herstellbar sein.

Es ist eine weitere Aufgabe der Erfindung, einen Quarzglaskörper und Folgeprodukte daraus wie Lichtleiter, Leuchtmittel, Formkörper, Beschichtungen, Reaktoren, Leitungen und anderes bereitzustellen, wobei der Quarzglaskörper und gegebenenfalls dessen Folgeprodukte bei Bestrahlung mit Licht im UV-Bereich keine Fluoreszenz zeigen, insbesondere nicht bei Wellenlängen von 254 nm oder 365 nm, zudem wenige OH-Gruppen aufweisen, und möglichst kein oder wenig Chlor enthalten. Weiterhin sollten solche Quarzglaskörper und Folgeprodukte daraus auch bei hohen Temperaturen eingesetzt werden können, und eine hohe Viskosität aufweisen. Gerade das Bereitstellen eines Quarzglaskörpers, der eine Kombination von mehreren der vorgenannten Eigenschaften aufweist, ist auch eine Aufgabe der vorliegenden Erfindung.

Es ist eine weitere Aufgabe der Erfindung, ein Verfahren bereitzustellen, mit dem Quarzglaskörper hergestellt werden können, mittels derer mindestens ein Teil der bereits beschriebenen Aufgaben zumindest zum Teil gelöst ist.

Es ist eine weitere Aufgabe der Erfindung, ein Verfahren bereitzustellen, mit dem Quarzglaskörper einfacher hergestellt werden können.

Es ist eine weitere Aufgabe der Erfindung, ein Verfahren bereitzustellen, mit dem Quarzglaskörper kontinuierlich hergestellt werden können.

Es ist eine weitere Aufgabe der Erfindung, ein Verfahren bereitzustellen, mit dem Quarzglaskörper durch ein kontinuierliches Schmelz- und Formgebungsverfahren hergestellt werden können.

Es ist eine weitere Aufgabe der Erfindung, ein Verfahren bereitzustellen, mit dem Quarzglaskörper mit höherer Geschwindigkeit gebildet werden können.

Es ist eine weitere Aufgabe der Erfindung, ein Verfahren bereitzustellen, mit dem Quarzglaskörper mit geringem Ausschuss hergestellt werden können.

Es ist eine weitere Aufgabe der Erfindung, ein Verfahren bereitzustellen, mit dem konfektionierbare Quarzglaskörper hergestellt werden können.

Es ist eine weitere Aufgabe der Erfindung, ein automatisiertes Verfahren bereitzustellen, mit dem Quarzglaskörper hergestellt werden können.

Es ist eine weitere Aufgabe der Erfindung, ein Verfahren zur Herstellung von Quarzglaskörpern bereitzustellen, bei dem ein Siliziumdioxidgranulat in einem Schmelzofen verarbeitet werden kann, ohne dass dieses zuvor einem gezielten Verdichtungsschritt, z.B. durch eine Temperaturbehandlung von mehr als 1000 °C unterworfen werden muss.

Es ist insbesondere eine Aufgabe der Erfindung, ein Verfahren zur Herstellung von Quarzglaskörpern bereitzustellen, bei dem ein Siliziumdioxidgranulat mit einer BET von 20 $m^2$/g oder mehr in einen Schmelzofen eingebracht, geschmolzen und zu einem Quarzglaskörper verarbeitet werden kann.

Es ist eine weitere Aufgabe der Erfindung, ein Verfahren zur Herstellung von Quarzglaskörpern bereitzustellen, wobei die Komponenten eine möglichst lange Lebensdauer unter den Verfahrensbedingungen aufweisen.

Es ist insbesondere eine Aufgabe der Erfindung, ein Verfahren zur Herstellung von Quarzglaskörpern bereitzustellen, bei dem Tiegelkorrosion vermieden wird.

Es ist eine weitere Aufgabe der Erfindung, ein Verfahren zur Herstellung von Quarzglaskörpern bereitzustellen, bei dem Siliziumdioxid-Ausgangsstoffe mit einer hohen Restfeuchte eingesetzt werden können. Unter Siliziumdioxid-Ausgangsstoffen wird beispielsweise Siliziumdioxidgranulat verstanden.

Es ist insbesondere eine Aufgabe der Erfindung, ein Verfahren zur Herstellung von Quarzglaskörpern bereitzustellen, bei dem Siliziumdioxid-Ausgangsstoffe mit einer hohen Restfeuchte ohne Vorbehandlungsschritte eingesetzt werden können.

Es ist insbesondere eine weitere Aufgabe der Erfindung, ein Verfahren zur Herstellung von Quarzglaskörpern bereitzustellen, bei dem Siliziumdioxid-Ausgangsstoffe mit einer hohen Restfeuchte in Anlagen mit Schmelztiegeln aus Refraktärmetallen eingesetzt werden können.

Es ist eine weitere Aufgabe der Erfindung, ein Verfahren zur Herstellung von Quarzglaskörpern bereitzustellen, wobei die Komponenten der Anlage eine möglichst lange Lebensdauer unter den Verfahrensbedingungen aufweisen.

Es ist eine weitere Aufgabe der Erfindung, ein Verfahren zur Herstellung von Quarzglaskörpern mit einem definierten OH-Gehalt bereitzustellen.

Es ist eine weitere Aufgabe der Erfindung, ein Verfahren zur Herstellung von Quarzglaskörpern mit einem geringen OH-Gehalt bereitzustellen.

Es ist eine weitere Aufgabe der Erfindung, ein Verfahren zur Herstellung von Quarzglaskörpern mit einem definierten Gehalt an ODC's (oxygen deficiency centers) bereitzustellen.

Es ist eine weitere Aufgabe der Erfindung, ein Verfahren zur Herstellung von Quarzglaskörpern mit einem hohen Gehalt an ODC's (oxygen deficiency centers) bereitzustellen.

Es ist eine weitere Aufgabe der Erfindung, ein Verfahren zur Herstellung von Quarzglaskörpern bereitzustellen, bei dem der Eintrag von Fremdatomen aus dem Ofen gering ist.

Es ist eine weitere Aufgabe der Erfindung, ein Verfahren zur Herstellung von Quarzglaskörpern bereitzustellen, bei dem ein hygroskopisches Siliziumdioxidgranulat verarbeitet werden kann, ohne die Standzeit der Tiegel zu verringern, insbesondere bei geringer Tiegelkorrosion.

Es ist eine weitere Aufgabe der Erfindung, ein Verfahren zur Herstellung von Quarzglaskörpern bereitzustellen, bei dem der Gasverbrauch gering ist. Es ist insbesondere eine Aufgabe der Erfindung, ein Verfahren zur Herstellung von Quarzglaskörpern bereitzustellen, bei dem der Heliumverbrauch gering ist. Es ist insbesondere eine Aufgabe der Erfindung, ein Verfahren zur Herstellung von Quarzglaskörpern bereitzustellen, bei dem der Wasserstoffverbrauch gering ist.

Es ist eine weitere Aufgabe der Erfindung, Verfahren zum Herstellen von Quarzglaskörpern anzugeben, wobei der Quarzglaskörper und gegebenenfalls aus diesem herstellbare Folgeprodukte bei Bestrahlung mit UV-Licht keine Fluoreszenz zeigen, insbesondere nicht bei den Wellenlängen von 254 nm oder 365 nm, zudem wenig OH-Gruppen aufweisen, und möglichst kein oder wenig Chlor enthalten. Zudem sollten solche Quarzglaskörper und Folgeprodukte auch bei hohen Temperaturen eingesetzt werden können, und eine hohe Viskosität aufweisen.

Es ist eine weitere Aufgabe der Erfindung, ein Verfahren zur Herstellung von hochreinem Quarzglas anzugeben.

Es ist eine weitere Aufgabe der Erfindung, ein Verfahren zur Herstellung von möglichst blasenarmem Quarzglas anzugeben.

Es ist eine weitere Aufgabe der Erfindung, ein Verfahren zur Herstellung von Quarzglas anzugeben, das frei von Partikeln von metallischen Verunreinigungen ist.

Eine weitere Aufgabe ist, die Verarbeitbarkeit von Quarzglaskörpern weiter zu verbessern.

Eine weitere Aufgabe ist, die Konfektionierbarkeit von Quarzglaskörpern weiter zu verbessern.

ZUSAMMENFASSUNG DER ERFINDUNG

Die vorliegende Erfindung beruht insbesondere auf der Erkenntnis, dass erst eine Kombination von mehreren Maßnahmen Quarzglas einer erheblich verbesserten Qualität und mit besonderen Eigenschaften herstellbar ist. Bei dieser Vorgehensweise kann ausgehend von einem Siliziumdioxidpulver, sogar ausgehend von einem Sootpulver, also einem Nebenprodukt bzw. Abfallstoff erhältlich aus einer anderen Glassynthese, ein qualitativ hochwertiges und mit anderen synthetischen Quarzglasprodukten qualitativ vergleichbar gutes Quarzglas hergestellt werden. Dieses ist besonders frei von Verunreinigungen mit Gaseinschlüssen oder Fremdatomen, also solchen, die von Silizium und Sauerstoff verschieden sind. Die Kombination der Maßnahmen beinhaltet eine Zugabe einer von Siliziumdioxid verschiedenen Siliziumkomponente, z.B. Silizium, ein Filtern eines als Zwischenstufe gebildeten Siliziumdioxidsuspension und eine Kontrolle des Taupunkts eines bei der Glasschmelze aus dem Schmelzofen austretenden Gasstroms.

Durch Variation eines einzigen Parameters, der Menge der Zugabe einer von Siliziumdioxid verschiedenen Siliziumkomponente, können wichtige Eigenschaften des herstellbaren Quarzglaskörpers gesteuert werden. Dazu zählen die Viskosität, das Auftreten und der Umfang einer Absorption von elektromagnetischer Strahlung im UV-Bereich, oder das Auftreten und der Umfang einer Absorption von elektromagnetischer Strahlung im IR-Bereich, oder eine Kombination von mehreren der genannten Eigenschaften.

In Bezug auf den Verfahrensschritt eines Schmelzens des Granulats zu einer Glasschmelze kann durch die Zugabe von Silizium außerdem die Menge an OH-Gruppen bzw. Wassermolekülen im Schmelzreaktor so gesteuert werden, dass eine Korrosion des Schmelzreaktors, und damit einhergehend eine mögliche Kontamination der Glasschmelze vermieden wird. Eine wirksame Kontrolle der Situation im Schmelzreaktor ist durch eine Bestimmung des Taupunkts von aus dem Schmelzreaktor ausgeleitetem Gas möglich. Auch hier werden keine in Bezug auf Quarzglas artfremden Atome, also solche jenseits von Silizium, Sauerstoff in das resultierende Quarzglas eingebracht.

Ausgehend von dem zuvor genannten Siliziumdioxidpulver kann so ein qualitativ hochwertiges und mit anderen synthetischen Quarzglasprodukten qualitativ vergleichbar gutes Quarzglas hergestellt werden, wenn das Sootpulver zunächst über eine Aufschlämmung zu einem Granulat verarbeitet wird, und dabei die Aufschlämmung vor dem Granulieren durch eine Filteranlage geführt wird. Diese Vorgehensweise leistet einen erheblichen Beitrag, um die Bildung von Gasblasen infolge von zu Gasen oxidierbaren Verunreinigungen als auch von Gaseinschlüssen zu vermeiden.

AUSFÜHRUNGSFORMEN DER ERFINDUNG

Ein Beitrag zur mindestens teilweisen Erfüllung mindestens einer der zuvor genannten Aufgaben wird durch die Gegenstände des Anspruchs 1 geleistet. Die abhängigen Ansprüche stellen bevorzugte Ausführungsformen bereit, die zur mindestens teilweisen Erfüllung mindestens einer der Aufgaben beitragen.

Ein Verfahren zum Herstellen eines Quarzglaskörpers beinhaltend die Verfahrensschritte:

i.) Bereitstellen eines Pulvers aus Siliziumdioxidpartikeln, sowie Bereitstellen einer Flüssigkeit;
ii.) Bilden einer Aufschlämmung beinhaltend die Flüssigkeit und die Siliziumdioxidpartikel durch Mischen des Pulvers und der Flüssigkeit;
iii.) Behandeln der Aufschlämmung mit Ultraschall unter Erhalt einer Vorläufersuspension;
iv.) Leiten zumindest eines Teils der, bevorzugt der gesamten Vorläufersuspension durch mindestens eine erste mehrstufige Filtervorrichtung unter Erhalt einer Siliziumdioxidsuspension;
v.) Bilden eines Siliziumdioxidgranulats aus der Siliziumdioxidsuspension, bevorzugt durch Sprühtrocknen;
vi.) Bilden einer Glasschmelze aus dem Siliziumdioxidgranulat in einem Ofen;
vii.) Bilden eines Quarzglaskörpers aus zumindest einem Teil der Glasschmelze;

wobei das Behandeln der Aufschlämmung in Schritt iii.) ein Deagglomerieren mindestens eines Teils der Siliziumdioxidpartikel beinhaltet;
wobei Schritt v.) ein Granulieren beinhaltet;
wobei das Siliziumdioxidgranulat einen größeren Partikeldurchmesser aufweist als die in der Siliziumdioxidsuspension enthaltenen Siliziumdioxidpartikel;
wobei der Ofen einen Schmelztiegel und einen Gasauslass aufweist,
wobei ein Gas durch den Gasauslass dem Ofen entnommen wird;

wobei der Taupunkt des Gases beim Austritt aus dem Ofen durch den Gasauslass weniger als 0°C beträgt;

wobei die erste mehrstufige Filtervorrichtung zumindest eine erste, eine zweite und eine dritte Filterstufe aufweist, wobei die zweite Filterstufe stromabwärts von der ersten Filterstufe, und die dritte Filterstufe stromabwärts von der zweiten Filterstufe angeordnet ist,

wobei jede Filterstufe mindestens einen Filter beinhaltet,

wobei die erste Filterstufe eine Filterfeinheit von 5 $\mu$m oder mehr, die zweite Filterstufe eine Filterfeinheit in einem Bereich von 0,5 bis 5 $\mu$m, und die dritte Filterstufe eine Filterfeinheit von 1 $\mu$m oder weniger aufweist,

wobei die Filterfeinheit angibt, welches die kleinste Partikelgröße ist, die von dem genannten Filter zurückgehalten wird,

wobei die Abscheiderate für die erste Filterstufe 50 % oder mehr, für die zweite Filterstufe 95% oder mehr, und für die dritte Filterstufe 99,5 % oder mehr, jeweils ermittelt gemäß ISO 16889, aufweist.

ALLGEMEINES

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Werte Y und kleiner als Y.

AUSFÜHRLICHE BESCHREIBUNG DER ERFINDUNG

Ein Beitrag zur mindestens teilweisen Erfüllung mindestens einer der zuvor genannten Aufgaben wird durch Anspruch 1 geleistet. Die abhängigen Ansprüche stellen bevorzugte Ausführungsformen bereit, die zur mindestens teilweisen Erfüllung mindestens einer der Aufgaben beitragen.

Der Gegenstand der Erfindung ist ein Verfahren zum Herstellen eines Quarzglaskörpers beinhaltend die Verfahrensschritte:

i.) Bereitstellen eines Pulvers aus Siliziumdioxidpartikeln, sowie einer Flüssigkeit;

ii.) Bilden einer Aufschlämmung beinhaltend die Flüssigkeit und die Siliziumdioxidpartikel;

iii.) Behandeln der Aufschlämmung mit Ultraschall unter Erhalt einer Vorläufersuspension;

iv.) Leiten zumindest eines Teils der, bevorzugt der gesamten Vorläufersuspension durch mindestens eine erste mehrstufige Filtervorrichtung unter Erhalt einer Siliziumdioxidsuspension;

v.) Bilden eines Siliziumdioxidgranulats aus der Siliziumdioxidsuspension, zum Beispiel durch Sprühgranulieren oder durch Rollgranulieren;

vi.) Bilden einer Glasschmelze aus dem Siliziumdioxidgranulat in einem Ofen;

vii.) Bilden eines Quarzglaskörpers aus zumindest einem Teil der Glasschmelze;

wobei das Behandeln der Aufschlämmung in Schritt iii.) ein Deagglomerieren mindestens eines Teils der Siliziumdioxidpartikel beinhaltet;

wobei Schritt v.) ein Granulieren beinhaltet;

wobei das Siliziumdioxidgranulat einen größeren Partikeldurchmesser aufweist als die in der Siliziumdioxidsuspension enthaltenen Siliziumdioxidpartikel;

wobei der Ofen einen Schmelztiegel und einen Gasauslass aufweist,

wobei ein Gas durch den Gasauslass dem Ofen entnommen wird;

wobei der Taupunkt des Gases beim Austritt aus dem Ofen durch den Gasauslass weniger als 0°C beträgt;

wobei die erste mehrstufige Filtervorrichtung zumindest eine erste, eine zweite und eine dritte Filterstufe aufweist, wobei die zweite Filterstufe stromabwärts von der ersten Filterstufe, und die dritte Filterstufe stromabwärts von der zweiten Filterstufe angeordnet ist,

wobei jede Filterstufe mindestens einen Filter beinhaltet,

wobei die erste Filterstufe eine Filterfeinheit von 5 $\mu$m oder mehr, die zweite Filterstufe eine Filterfeinheit in einem Bereich von 0,5 bis 5 $\mu$m, und die dritte Filterstufe eine Filterfeinheit von 1 $\mu$m oder weniger aufweist,

wobei die Filterfeinheit angibt, welches die kleinste Partikelgröße ist, die von dem genannten Filter zurückgehalten wird,

wobei die Abscheiderate für die erste Filterstufe 50 % oder mehr, für die zweite Filterstufe 95% oder mehr, und für die dritte Filterstufe 99,5 % oder mehr, jeweils ermittelt gemäß ISO 16889, aufweist.

Pulver aus Siliziumdioxidpartikeln

In Schritt i.) wird ein Pulver aus Siliziumdioxidpartikeln bereitgestellt. Pulver aus Siliziumdioxidpartikeln werden auch als Siliziumdioxidpulver bezeichnet. Im Rahmen der vorliegenden Erfindung ist es prinzipiell möglich, Siliziumdioxidpulver aus natürlich vorkommendem oder aus synthetisch hergestelltem Siliziumdioxid zu gewinnen. Bevorzugt wird synthetisches Siliziumdioxidpulver verwendet. Besonders bevorzugt wird pyrogen erzeugtes Siliziumdioxidpulver verwendet.

Das Siliziumdioxidpulver kann jedes Siliziumdioxidpulver sein, das mindestens zwei Teilchen aufweist. Als Herstellungsverfahren kommt jedes Verfahren in Betracht, das dem Fachmann geläufig und für den vorliegenden Zweck geeignet erscheint.

Gemäß einer Ausführungsform der vorliegenden Erfindung wird das Siliziumdioxidpulver bei der Herstellung von Quarzglas als Nebenprodukt erzeugt, insbesondere bei der Herstellung von sogenannten Sootkörpern. Siliziumdioxid solcher Herkunft wird oftmals auch als "Sootstaub" bezeichnet.

Eine geeignete Quelle für das Siliziumdioxidpulver sind Siliziumdioxidpartikel, die bei der synthetischen Herstellung von Sootkörpern unter Einsatz von Flammhydrolysebrennern erhalten werden. Bei der Herstellung eines Sootkörpers wird entlang einer Brennerreihe ein rotierendes Trägerrohr, das eine Zylindermantelfläche aufweist, reversierend hin- und her bewegt. Den Flammhydrolysebrennern können dabei als Brennergase jeweils Sauerstoff und Wasserstoff sowie die Ausgangsmaterialien für die Bildung von Siliziumdioxidprimärpartikeln zugeführt werden. Die Siliziumdioxidprimärpartikel weisen bevorzugt eine Primärpartikelgröße von bis zu 100 nm auf. Die durch Flammenhydrolyse erzeugten Siliziumdioxidprimärpartikel aggregieren oder agglomerieren zu Siliziumdioxidpartikeln mit Partikelgrößen von etwa 9 $\mu$m (DIN ISO 13320:2009-1). In den Siliziumdioxidpartikeln sind die Siliziumdioxidprimärpartikel durch Raster-Elektronen-Mikroskopie in ihrer Form erkennbar und die Primärpartikelgröße kann bestimmt werden. Ein Teil der Siliziumdioxidpartikel werden auf der Zylindermantelfläche des um seine Längsachse rotierenden Trägerrohrs abgeschieden. So wird Schicht für Schicht der Sootkörper aufgebaut. Ein anderer Teil der Siliziumdioxidpartikel wird nicht auf der Zylindermantelfläche des Trägerrohrs abgeschieden, sondern fällt als Staub an, z.B. in einer Filteranlage. Dieser andere Teil Siliziumdioxidpartikel bildet das Siliziumdioxidpulver, oftmals auch als "Sootstaub" bezeichnet. In der Regel ist der auf dem Trägerrohr abgeschiedene Teil Siliziumdioxidpartikel größer als der als Sootstaub anfallende Teil Siliziumdioxidpartikel im Rahmen der Sootkörperherstellung, bezogen auf das Gesamtgewicht der Siliziumdioxidpartikel.

Heutzutage wird der Sootstaub in der Regel aufwendig und kostenintensiv als Abfall entsorgt oder ohne Wertschöpfung als Füllstoff verbracht, z.B. im Straßenbau, als Zuschlagstoffe in der Farbstoffindustrie, als Rohstoff für die Fliesenherstellung und zur Herstellung von Hexafluorkieselsäure, welche zur Sanierung von Bauwerksfundamenten eingesetzt wird. Im Fall der vorliegenden Erfindung eignet es sich als Ausgangsstoff und kann zu einem hochwertigen Produkt verarbeitet werden.

Durch Flammenhydrolyse hergestelltes Siliziumdioxid wird gewöhnlich als pyrogenes Siliziumdioxid bezeichnet. Pyrogenes Siliziumdioxid liegt üblicherweise in Form amorpher Siliziumdioxidprimärpartikel oder Siliziumdioxidpartikel vor.

Gemäß einer Ausführungsform kann das Siliziumdioxidpulver durch Flammenhydrolyse aus einem Gasgemisch hergestellt werden. In diesem Fall werden die Siliziumdioxidpartikel ebenfalls in der Flammenhydrolyse gebildet und als Siliziumdioxidpulver abgeführt, bevor sich Agglomerate oder Aggregate bilden. Hier ist das zuvor als Sootstaub bezeichnete Siliziumdioxidpulver Hauptprodukt.

Als Ausgangsmaterialien für die Bildung des Siliziumdioxidpulvers eignen sich bevorzugt organische oder und anorganische Siliziumverbindungen. Weiter bevorzugt sind halogenfreie Siliziumverbindungen. Unter den organischen Siliziumverbindungen sind insbesondere solche Verbindungen bevorzugt, in denen die Siliziumatome direkt mit Sauerstoffatomen verbunden sind, insbesondere Siloxane und Siliziumalkoxide. Unter Siloxanen werden lineare und cyclische Polyalkylsiloxane verstanden. Bevorzugt haben Polyalkylsiloxane die allgemeine Formel

$$Si_pO_pR_{2p,}$$

wobei p eine ganze Zahl von mindestens 2, bevorzugt von 2 bis 10, besonders bevorzugt von 3 bis 5, und R eine Alkylgruppe mit 1 bis 8 C-Atomen, bevorzugt mit 1 bis 4 C-Atomen, besonders bevorzugt eine Methylgruppe ist.

Besonders bevorzugt sind Siloxane ausgewählt aus der Gruppe bestehend aus Hexamethyldisiloxan, Hexamethylcyclotrisiloxan (D3), Octamethylcyclotetrasiloxan (D4) und Dekamethylcyclopentasiloxan (D5) oder einer Kombination von zwei oder mehr davon. Umfasst das Siloxan D3, D4 und D5, ist D4 bevorzugt die Hauptkomponente. Die Hauptkomponente liegt bevorzugt mit einem Anteil von mindestens 70 Gew.-%, bevorzugt von mindestens 80 Gew.-%, zum Beispiel von mindestens 90 Gew.-% oder von mindestens 94 Gew.-%, besonders bevorzugt von mindestens 98 Gew.-%, jeweils bezogen auf die Gesamtmenge Siliziumdioxidpulver, vor. Bevorzugte Siliziumalkoxide sind Tetramethoxysilan und Methyltrimethoxysilan.

Als anorganische Siliziumverbindungen als Ausgangsmaterial für Siliziumdioxidpulver eignen sich Siliziumhalogenide, Silikate, Siliziumcarbid und Siliziumnitrid. Besonders bevorzugt als anorganische Siliziumverbindung als Ausgangsmaterial für Siliziumdioxidpulver sind Siliziumtetrachlorid und Trichlorsilan.

Gemäß einer Ausführungsform ist das Siliziumdioxidpulver aus einer Verbindung ausgewählt aus der Gruppe bestehend aus Siloxanen und Siliziumalkoxiden herstellbar.

Bevorzugt ist das Siliziumdioxidpulver herstellbar aus einer Verbindung ausgewählt aus der Gruppe bestehend aus Hexamethyldisiloxan, Hexamethylcyclotrisiloxan, Octamethylcyclotetrasiloxan und Dekamethylcyclopentasiloxan, Tetramethoxysilan und Methyltrimethoxysilan oder einer Kombination aus zwei oder mehr davon besonders bevorzugt aus Octamethylcyclotetrasiloxan.

Für die Bildung von Siliziumdioxid aus Siliziumtetrachlorid durch Flammhydrolyse sind verschiedene Parameter von Bedeutung. Eine bevorzugte Zusammensetzung eines geeigneten Gasgemisches beinhaltet einen Anteil an Sauerstoff bei der Flammenhydrolyse in einem Bereich von 25 bis 40 Vol.-%. Der Anteil an Wasserstoff kann in einem Bereich von 45 bis 60 Vol.-% betragen. Der Anteil an Siliziumtetrachlorid liegt bevorzugt bei 5 bis 30 Vol.-%, alle der vorgenannten Vol.-% bezogen auf das Gesamtvolumen des Gasstroms. Weiter bevorzugt ist eine Kombination der vorgenannten Volumenanteile für Sauerstoff, Wasserstoff und SiCl4. Die Flamme in der Flammenhydrolyse weist bevorzugt eine Temperatur in einem Bereich von 1500 bis 2500 °C, beispielsweise in einem Bereich von 1600 bis 2400 °C, besonders bevorzugt in einem Bereich von 1700 bis 2300 °C auf. Bevorzugt werden die in der Flammenhydrolyse gebildeten Siliziumdioxidprimärpartikel als Siliziumdioxidpulver abgeführt, bevor sich Agglomerate oder Aggregate bilden.

Das Siliziumdioxidpulver kann mindestens eines, zum Beispiel mindestens zwei oder mindestens drei oder mindestens vier, bevorzugt mindestens fünf der folgenden Merkmale aufweisen:

a. eine BET-Oberfläche in einem Bereich von kleiner als 35 $m^2/g$, zum Beispiel von 25 bis 35 $m^2/g$, oder von 20 bis 35 $m^2/g$, oder von 25 bis 30 $m^2/g$, und

b. eine Schüttdichte 0,01 bis 0,3 $g/cm^3$, zum Beispiel im Bereich von 0,02 bis 0,2 $g/cm^3$, bevorzugt im Bereich von 0,03 bis 0,15 $g/cm^3$, weiter bevorzugt im Bereich von 0,1 bis 0,2 $g/cm^3$ oder im Bereich von 0,05 bis 0,1 $g/cm^3$.

c. einen Kohlenstoffgehalt von weniger als 100 ppm, zum Beispiel von weniger als 50 ppm oder von weniger 30 ppm, besonders bevorzugt in einem Bereich von 1 ppb bis 20 ppm;

d. einen Chlorgehalt von weniger als 500 ppm, zum Beispiel von weniger als 300 ppm oder von weniger 150 ppm, besonders bevorzugt in einem Bereich von 1 ppb bis 80 ppm;

e. einen Aluminiumgehalt von weniger als 200 ppb, zum Beispiel im Bereich von 1 bis 100 ppb, besonders bevorzugt im Bereich von 1 bis 80 ppb;

f. einen Gesamtgehalt an Atomen, die von Si, O, H, C, Cl verschieden sind, von weniger als 5 ppm, zum Beispiel von weniger als 2 ppm, besonders bevorzugt in einem Bereich von 1 ppb bis 1 ppm;

g. mindestens 70 Gew.-% der Pulverteilchen weisen eine Primärpartikelgröße in einem Bereich von 10 bis 100 nm, zum Beispiel im Bereich von 15 bis weniger als 100 nm, besonders bevorzugt im Bereich von 20 bis weniger als 100 nm auf;

h. eine Stampfdichte in einem Bereich von 0,001 bis 0,3 $g/cm^3$, zum Beispiel im Bereich von 0,002 bis 0,2 $g/cm^3$ oder von 0,005 bis 0,1 $g/cm^3$, bevorzugt im Bereich von 0,01 bis 0,06 $g/cm^3$, auch bevorzugt im Bereich von 0,1 bis 0,2 $g/cm^3$, oder im Bereich von 0,15 bis 0,2 $g/cm^3$;

i. eine Restfeuchte von weniger als 5 Gew.-%, zum Beispiel im Bereich von 0,25 bis 3 Gew.-%, besonders bevorzugt im Bereich von 0,5 bis 2 Gew.-%;

j. eine Partikelgrößenverteilung $D_{10}$ im Bereich von 1 bis 7 $\mu$m, zum Beispiel im Bereich von 2 bis 6 $\mu$m oder im Bereich von 3 bis 5 $\mu$m, besonders bevorzugt im Bereich von 3,5 bis 4,5 $\mu$m;

k. eine Partikelgrößenverteilung $D_{50}$ im Bereich von 6 bis 15 $\mu$m, zum Beispiel im Bereich von 7 bis 13 $\mu$m oder im Bereich von 8 bis 11 $\mu$m, besonders bevorzugt im Bereich von 8,5 bis 10,5 $\mu$m;

l. eine Partikelgrößenverteilung $D_{90}$ im Bereich von 10 bis 40 $\mu$m, zum Beispiel im Bereich von 15 bis 35 $\mu$m, besonders bevorzugt im Bereich von 20 bis 30 $\mu$m;

oder eine Kombination von zwei oder mehr der Merkmale a. bis l.;
wobei die Gew.-%, ppm und ppb jeweils auf das Gesamtgewicht des Siliziumdioxidpulvers bezogen sind.

Das Siliziumdioxidpulver enthält Siliziumdioxid. Bevorzugt enthält das Siliziumdioxidpulver Siliziumdioxid in einer Menge von mehr als 95 Gew.-%, zum Beispiel in einer Menge von mehr als 98 Gew.-%. oder von mehr als 99 Gew.-%.oder von mehr als 99,9 Gew.-%, jeweils bezogen auf das Gesamtgewicht des Siliziumdioxidpulvers. Besonders bevorzugt enthält das Siliziumdioxidpulver Siliziumdioxid in einer Menge von mehr als 99,99 Gew.-%, bezogen auf das Gesamtgewicht des Siliziumdioxidpulvers.

Bevorzugt weist das Siliziumdioxidpulver einen Gehalt an von Si, O, H, C, Cl verschiedenen Atomen von weniger als 5 ppm, zum Beispiel von weniger als 2 ppm, besonders bevorzugt von weniger als 1 ppm, jeweils bezogen auf das Gesamtgewicht des Siliziumdioxidpulvers, auf. Oftmals weist das Siliziumdioxidpulver jedoch einen Gehalt an von Si, O, H, C, Cl verschiedenen Atomen in einer Menge von mindestens 1 ppb auf. Die von Si, O, H, C, Cl verschiedenen Atome können zum Beispiel als Element, als Ion, oder als Teil eines Moleküls oder eines Ions oder eines Komplexes vorliegen.

Bevorzugt weisen mindestens 70 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf. Die Primärpartikelgröße wird durch mittels Rastermikroskopie (REM) nach den Angaben im Abschnitt "Testmethoden" bestimmt.

Bevorzugt weisen mindestens 75 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 80 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 85 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 90 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weisen mindestens 95 % der Pulverteilchen des Siliziumdioxidpulvers, bezogen auf die Anzahl an Pulverteilchen, eine Primärpartikelgröße von weniger als 100 nm auf, zum Beispiel im Bereich von 10 bis 100 nm oder von 15 bis 100 nm, und besonders bevorzugt im Bereich von 20 bis 100 nm auf.

Bevorzugt weist das Siliziumdioxidpulver eine spezifische Oberfläche (BET-Oberfläche) in einem Bereich von 20 bis 35 $m^2$/g auf, zum Beispiel von 25 bis 35 $m^2$/g, oder von 25 bis 30 $m^2$/g. Die BET-Oberfläche wird nach der Methode von Brunauer, Emmet und Teller (BET) anhand der DIN 66132 ermittelt und basiert auf Gasabsorption an der zu messenden Oberfläche.

Bevorzugt hat das Siliziumdioxidpulver einen pH-Wert von weniger als 7, zum Beispiel im Bereich von 3 bis 6,5 oder von 3,5 bis 6 oder von 4 bis 5,5, besonders bevorzugt im Bereich von 4,5 bis 5. Der pH-Wert kann mittels Einstabmesselektrode ermittelt werden (4 % Siliziumdioxidpulver in Wasser).

Das Siliziumdioxidpulver weist bevorzugt die Merkmalskombination a./b./c. oder a./b./f. oder a./b./g. auf, weiter bevorzugt die Merkmalskombination a./b./c./f. oder a./b./c./g. oder a./b./f./g., besonders bevorzugt die Merkmalskombination a./b./c./f./g.

Das Siliziumdioxidpulver weist bevorzugt die Merkmalskombination a./b./c. auf, wobei die BET-Oberfläche in einem Bereich von 20 bis 35 $m^2$/g liegt, die Schüttdichte in einem Bereich von 0,05 bis 0,3 g/mL liegt und der Kohlenstoffgehalt weniger als 35 ppm beträgt.

Das Siliziumdioxidpulver weist bevorzugt die Merkmalskombination a./b./f. auf, wobei die BET-Oberfläche in einem Bereich von 20 bis 35 $m^2$/g, die Schüttdichte in einem Bereich von 0,05 bis 0,3 g/mL und der Gesamtgehalt an Metallen, die von Aluminium verschieden sind, in einem Bereich von 1 ppb bis 1 ppm liegt.

Das Siliziumdioxidpulver weist bevorzugt die Merkmalskombination a./b./g. auf, wobei die BET-Oberfläche in einem Bereich von 20 bis 35 $m^2$/g liegt, die Schüttdichte in einem Bereich von 0,05 bis 0,3 g/ mL liegt und mindestens 70 Gew.-% der Pulverteilchen eine Primärpartikelgröße in einem Bereich von 20 bis weniger als 100 nm aufweisen.

Das Siliziumdioxidpulver weist weiter bevorzugt die Merkmalskombination a./b./c./f. auf, wobei die BET-Oberfläche in einem Bereich von 20 bis 35 $m^2$/g liegt, die Schüttdichte in einem Bereich von 0,05 bis 0,3 g/mL liegt, der Kohlenstoffgehalt weniger als 40 ppm beträgt und der Gesamtgehalt an Metallen, die von Aluminium verschieden sind, in einem Bereich von 1 ppb bis 1 ppm liegt.

Das Siliziumdioxidpulver weist weiter bevorzugt die Merkmalskombination a./b./c./g. auf, wobei die BET-Oberfläche in einem Bereich von 20 bis 35 $m^2$/g liegt, die Schüttdichte in einem Bereich von 0,05 bis 0,3 g/mL liegt, der Kohlenstoffgehalt weniger als 40 ppm beträgt und mindestens 70 Gew.-% der Pulverteilchen eine Primärpartikelgröße in einem Bereich von 20 bis weniger als 100 nm aufweisen.

Das Siliziumdioxidpulver weist weiter bevorzugt die Merkmalskombination a./b./f./g. auf, wobei die BET-Oberfläche in einem Bereich von 20 bis 35 $m^2$/g liegt, die Schüttdichte in einem Bereich von 0,05 bis 0,3 g/mL liegt, der Gesamtgehalt an Metallen, die von Aluminium verschieden sind, in einem Bereich von 1 ppb bis 1 ppm liegt und mindestens 70 Gew.-% der Pulverteilchen eine Primärpartikelgröße in einem Bereich von 20 bis weniger als 100 nm aufweisen.

Das Siliziumdioxidpulver weist besonders bevorzugt die Merkmalskombination a./b./c./f./g. auf, wobei die BET-Oberfläche in einem Bereich von 20 bis 35 $m^2$/g liegt, die Schüttdichte in einem Bereich von 0,05 bis 0,3 g/mL liegt, der Kohlenstoffgehalt weniger als 40 ppm beträgt, der Gesamtgehalt an Metallen, die von Aluminium verschieden sind, in einem Bereich von 1 ppb bis 1 ppm liegt und mindestens 70 Gew.-% der Pulverteilchen eine Primärpartikelgröße in einem Bereich von 20 bis weniger als 100 nm aufweisen.

Die Schritte i.) - iv.) des ersten Gegenstands der Erfindung lauten:

i.) Bereitstellen eines Pulvers aus Siliziumdioxidpartikeln, sowie Bereitstellen einer Flüssigkeit;

ii.) Bilden einer Aufschlämmung beinhaltend die Flüssigkeit und die Siliziumdioxidpartikel;

iii.) Behandeln der Aufschlämmung mit Ultraschall unter Erhalt eines Vorläufersuspension;

iv.) Leiten zumindest eines Teils der Vorläufersuspension durch mindestens eine erste mehrstufige Filtervorrichtung,

wobei die erste mehrstufige Filtervorrichtung zumindest eine erste, eine zweite und eine dritte Filterstufe aufweist, wobei jede Filterstufe mindestens einen Filter beinhaltet,

wobei die zweite Filterstufe stromabwärts von der ersten Filterstufe und die dritte Filterstufe stromabwärts von der zweiten Filterstufe angeordnet ist,

wobei die erste Filterstufe eine Filterfeinheit von 5 $\mu$m oder mehr,

wobei die zweite Filterstufe eine Filterfeinheit in einem Bereich von 0,5 bis 5 $\mu$m aufweist,

wobei die dritte Filterstufe eine Filterfeinheit von 1 $\mu$m oder weniger aufweist, und

wobei die Abscheiderate für die erste Filterstufe 50% oder mehr, für die zweite Filterstufe 95% oder mehr, und für die dritte Filterstufe 99,5% oder mehr, jeweils ermittelt gemäß ISO 16889 und bezogen auf den genannten Filter, aufweist, und

wobei die Filterfeinheit angibt, welches die kleinste Partikelgröße ist, die von dem genannten Filter zurückgehalten wird.

Es können weitere Filterstufen zwischen der als ersten, zweiten und dritten Filterstufe bezeichneten Filterstufe vorgesehen sein.

Eine Flüssigkeit wird im Sinne der vorliegenden Erfindung als ein Stoff oder ein Stoffgemisch verstanden, das bei einem Druck von 1013 hPa und einer Temperatur von 20 °C flüssig ist.

Eine "Aufschlämmung" im Sinne der vorliegenden Erfindung bedeutet ein Gemisch aus mindestens zwei Stoffen, wobei das Gemisch bei den bei Betrachtung vorliegenden Bedingungen mindestens eine Flüssigkeit und mindestens einen Feststoff aufweist. Während des Verfahrens werden eine Aufschlämmung und eine Vorläufersuspension gebildet. Bei der Vorläufersuspension handelt es sich ebenfalls eine Aufschlämmung, wobei diese aber mit Ultraschall gemäß Schritt iii.) behandelt wurde. Sofern im Folgenden nicht ausdrücklich eine "Aufschlämmung" oder "Vorläufersuspension" bezeichnet wird, also allgemein von einer "Aufschlämmung" gesprochen wird, kann das so Beschriebene prinzipiell für die Aufschlämmung, oder für die Vorläufersuspension, oder sowohl für die Aufschlämmung als auch die Vorläufersuspension gelten. Dies kann so begründet werden, dass bei der Behandlung der Aufschlämmung mit Ultraschall unter Erhalt der Vorläufersuspension nicht jedes der nachfolgend beschrieben Merkmale sich durch die Behandlung ändert, oder dass sich ein Merkmal zwar ändert, aber innerhalb des allgemein beschriebenen Merkmals verbleibt.

Als Flüssigkeit eignen sich prinzipiell alle dem Fachmann bekannten und zum vorliegenden Einsatzzweck geeignet erscheinende Stoffe und Stoffgemische. Bevorzugt ist die Flüssigkeit ausgewählt aus der Gruppe bestehend aus organischen Flüssigkeiten und Wasser. Bevorzugt ist das Siliziumdioxidpulver in der Flüssigkeit in einer Menge von weniger als 0,5 g/L, bevorzugt in einer Menge von weniger als 0,25 g/L, besonders bevorzugt in einer Menge von weniger als 0,1 g/L löslich, die g/L jeweils angegeben als g Siliziumdioxidpulver pro Liter Flüssigkeit.

Bevorzugt eignen sich als Flüssigkeit polare Lösungsmittel. Dies können organische Flüssigkeiten oder Wasser sein. Bevorzugt ist die Flüssigkeit ausgewählt aus der Gruppe bestehend aus Wasser, Methanol, Ethanol, n-Propanol, iso-Propanol, n-Butanol, tert-Butanol und Mischungen aus mehr als einem davon. Besonders bevorzugt ist die Flüssigkeit Wasser. Besonders bevorzugt beinhaltet die Flüssigkeit destilliertes oder entionisiertes Wasser, zum Beispiel auch "höchstreines" Wasser. Diese hat eine elektrische Leitfähigkeit von *<0,2 $\mu$S/cm.*

Bevorzugt wird aus dem Pulver aus Siliziumdioxidpartikeln und der Flüssigkeit eine Aufschlämmung gebildet. Die Siliziumdioxidpartikel sind in der Flüssigkeit bei Raumtemperatur nahezu unlöslich, können jedoch in die Flüssigkeit in hohen Gewichtsanteilen unter Erhalt der Aufschlämmung eingebracht werden. Die Aufschlämmung wird durch Mischen ihrer Bestandteile erhalten.

Das Pulver aus Siliziumdioxidpartikeln und die Flüssigkeit können in beliebiger Weise gemischt werden. Zum Beispiel kann das Pulver zu der Flüssigkeit, oder die Flüssigkeit zum Pulver gegeben werden. Das Gemisch kann während des Zugebens oder nach dem Zugeben bewegt werden. Besonders bevorzugt wird das Gemisch während und nach dem Zugeben bewegt. Beispiele für das Bewegen sind ein Schütteln und ein Rühren, oder eine Kombination von beidem. Bevorzugt kann das Pulver unter Rühren zu der Flüssigkeit gegeben werden. Weiter bevorzugt kann ein Teil des Pulvers zu der Flüssigkeit gegeben werden, wobei das so erhaltene Gemisch bewegt wird, und das Gemisch anschließend mit dem übrigen Teil des Pulvers vermischt wird. Ebenso kann ein Teil der Flüssigkeit zu dem Pulver gegeben werden, wobei das so erhaltene Gemisch bewegt wird, und das Gemisch anschließend mit dem übrigen Teil der Flüssigkeit vermischt wird.

Durch das Mischen des Pulvers aus Siliziumdioxidpartikeln und der Flüssigkeit wird eine Aufschlämmung erhalten. Bevorzugt ist die Aufschlämmung eine Suspension, in der die Siliziumdioxidpartikel gleichmäßig in der Flüssigkeit verteilt ist. Unter "gleichmäßig" wird verstanden, dass die Dichte und die Zusammensetzung der Aufschlämmung an jeder Stelle um nicht mehr als 10 % von der durchschnittlichen Dichte und der durchschnittlichen Zusammensetzung abweichen, jeweils bezogen auf die Gesamtmenge an Aufschlämmung. Eine gleichmäßige Verteilung der Siliziumdioxidpartikel in der Flüssigkeit kann durch wie ein zuvor bereits beschriebenes Bewegen hergestellt, oder erhalten werden, oder beides. Auch die Vorläufersuspension ist eine solche Suspension mit den gerade beschriebenen Eigenschaften.

Bevorzugt hat die Aufschlämmung, wie auch die Vorläufersuspension, ein Litergewicht im Bereich von 1000 bis 2000 g/L, zum Beispiel im Bereich von 1200 bis 1900 g/L oder von 1300 bis 1800 g/L, besonders bevorzugt im Bereich von 1400 bis 1700 g/L. Das Litergewicht wird mittels Auswiegens eines volumenkalibrierten Behälters bestimmt.

Gemäß einer Ausführungsform gilt für die Aufschlämmung mindestens eines, zum Beispiel mindestens zwei oder mindestens drei oder mindestens vier, besonders bevorzugt mindestens fünf der folgenden Merkmale:

A.) die Aufschlämmung weist einen Feststoffgehalt von mindestens 20 Gew.-%, zum Beispiel in einem Bereich von 20 bis 70 Gew.-%, oder in einem Bereich von 30 bis 50 Gew.-%, oder in einem Bereich von 55 bis 75 Gew.-%, besonders bevorzugt in einem Bereich von 60 bis 70 Gew.-% auf, jeweils bezogen auf das Gesamtgewicht der Aufschlämmung;

B.) die Aufschlämmung weist einen pH-Wert in einem Bereich von 3 oder mehr auf, zum Beispiel von mehr als 4 oder einen pH-Wert im Bereich von 4,5 bis 8 oder von 4,5 bis 7, wobei der pH-Wert an einer 4 gew.-%igen Aufschlämmung bestimmt wird;

C.) mindestens 90 % der Siliziumdioxidpartikel in der Aufschlämmung weisen in einer 4 Gew.-%igen Aufschlämmung eine Partikelgröße gemäß DIN ISO 13320-1 im Bereich von 1 nm bis < 100 $\mu$m auf, zum Beispiel in einem Bereich von 200 bis 700 nm auf;

D.) einen Gehalt an Chloratomen von 500 ppm oder weniger;

E.) einen Gehalt von 5 ppm oder weniger an Atomen, die von Si, O, H, C, Cl verschieden sind;

F.) die Aufschlämmung ist rheopex;

G.) die Aufschlämmung wird in Kontakt mit einer Kunststoffoberfläche transportiert;

H.) die Aufschlämmung wird geschert;

I.) die Aufschlämmung weist eine Temperatur von mehr als 0°C auf, bevorzugt in einem Bereich von 5 bis 35°C;

J.) die Aufschlämmung weist eine Viskosität gemäß DIN 53019-1 (5 rpm, 30 Gew.-%) in einem Bereich von 500 bis 2000 mPas, zum Beispiel im Bereich von 600 bis 1700 mPas, besonders bevorzugt im Bereich von 650 bis 1350 mPas auf;

K.) mindestens 5 % der Siliziumdioxidpartikel in der Aufschlämmung weisen in einer 4 Gew.-%igen Aufschlämmung eine Partikelgröße gemäß DIN ISO 13320-1 im Bereich von > 10 $\mu$m auf.

Gemäß einer anderen Ausführungsform gilt für die Vorläufersuspension ebenfalls mindestens eines, zum Beispiel mindestens zwei oder mindestens drei oder mindestens vier, besonders bevorzugt mindestens fünf der zuvor genannten Merkmale A.) - K.).

Bevorzugt weisen die Siliziumdioxidpartikel in einer 4 Gew.-%igen wässrigen Aufschlämmung, die nicht durch eine Deagglomeration vorbehandelt wurden, eine Partikelgröße $D_{10}$ in einem Bereich von 50 bis 250 nm auf, besonders bevorzugt im Bereich von 100 bis 150 nm. Bevorzugt weisen die Siliziumdioxidpartikel in einer 4 Gew.-%igen wässrigen Aufschlämmung eine Partikelgröße $D_{50}$ in einem Bereich von 100 bis 400 nm auf, besonders bevorzugt im Bereich von 200 bis 250 nm. Bevorzugt weisen die Siliziumdioxidpartikel in einer 4 Gew.-%igen wässrigen Aufschlämmung eine Partikelgröße $D_{90}$ in einem Bereich von 200 bis 600 nm auf, besonders bevorzugt in einem Bereich von 350 bis 400 nm. Die Partikelgröße wird mittels DIN ISO 13320-1 bestimmt. Die Angaben zur Partikelgröße $D_{10}$, $D_{50}$ oder $D_{90}$, oder eine Kombination von zwei oder mehr davon, können auch für die Vorläufersuspension gelten.

Unter der Partikelgröße wird die Größe der aus den Primärpartikeln zusammengelagerten Teilchen verstanden, die in einem Siliziumdioxidpulver, als Siliziumdioxidpartikel in einer Aufschlämmung, in einer Vorläufersuspension oder in einem Siliziumdioxidgranulat vorliegen. Unter der mittleren Partikelgröße wird der arithmetische Mittelwert aller Partikelgrößen des genannten Stoffes verstanden. Der $D_{50}$-Wert gibt an, dass 50 % der Partikel, bezogen auf die gesamte Teilchenzahl, kleiner als der angegebene Wert sind. Der $D_{10}$-Wert gibt an, dass 10 % der Partikel, bezogen auf die gesamte Teilchenzahl, kleiner als der angegebene Wert sind. Der $D_{90}$-Wert gibt an, dass 90 % der Partikel, bezogen auf die gesamte Teilchenzahl, kleiner als der angegebene Wert sind. Die Partikelgröße wird mittels dynamischem Bildanalyseverfahren nach ISO 13322-2:2006-11 bestimmt.

Unter dem "isolektrischen Punkt" wird der pH-Wert verstanden, bei dem das Zeta-Potential den Wert 0 annimmt. Das Zeta-Potential wird gemäß ISO 13099-2:2012 bestimmt.

Bevorzugt wird der pH-Wert der Aufschlämmung auf einen Wert in dem oben genannten Bereich eingestellt.

Bevorzugt können zum Einstellen des pH-Werts Stoffe wie NaOH oder $NH_3$, zum Beispiel als wässrige Lösung der Aufschlämmung zugegeben werden. Dabei wird die Aufschlämmung oftmals bewegt. Die Angaben zum pH-Wert der Aufschlämmung können auch für den pH-Wert einer Vorläufersuspension gelten.

Die Aufschlämmung wird in dem folgenden Schritt iii.) mit Ultraschall unter Erhalt einer Vorläufersuspension behandelt. Dies geschieht, weil in einer Aufschlämmung immer einige Partikel des in der Aufschlämmung vorliegenden Feststoffs zu größeren Gebilden, auch Agglomeraten genannt, zusammenlagern. Diese Gebilde werden mittels der Ultraschallbehandlung deagglomeriert. Mit dem Begriff "Deagglomerieren" werden Maßnahmen und Vorgehensweisen bezeichnet, mit Hilfe derer etwaige, in einer Suspension oder Aufschlämmung zusammenlagernde Ansammlungen von Partikeln, hier auch Gebilde genannt, aufgelöst und die Partikel vereinzelt werden. Es gibt auch andere Verfahren zum Deagglomerieren derartiger in einer Aufschlämmung vorhandener Gebilde, zum Beispiel, das Behandeln der Aufschlämmung in einer Kugelmühle. In dieser werden üblicherweise Edelstahlkugeln durch die Flüssigkeit bewegt. Bewegungsenergie, die beim Auftreffen einer solchen Kugel auf ein Partikelgebilde auf dieses übertragen wird, führt zum Deagglomerieren dieses Gebildes, bis hin zurück zu den Partikeln. Der Einsatz einer Kugelmühle wird für die Herstellung hochreiner Stoffe als nachteilig empfunden, da infolge der Bewegung der Kugeln und Kontakt dieser untereinander oder der Kugeln mit dem Mahlbehälter immer mechanischer Abrieb von Material der Kugel oder des Mahlbehälters entsteht. Dieser ist üblicherweise metallisch. Da er bei der Herstellung hochreiner Stoffe als Verunreinigung stört, muss er in zusätzlichen Reinigungsschritten und/oder Nachbehandlungen der gemahlenen Aufschlämmung oder ihrer Folgeprodukte aufwendig entfernt werden.

Für die Behandlung mit Ultraschall kann prinzipiell jede Methode und jede Ultraschallquelle ausgewählt werden, die dem Fachmann bekannt und für die vorliegende Anwendung geeignet erscheint.

Ultraschall im vorliegenden Kontext ist Schall mit einer Peakfrequenz im Bereich von 20 bis 100 kHz. Dabei kann es sich um einen monofrequenten Schall oder Schall einer Bandbreite handeln. In letzterem Fall liegen zumindest 60 % der bei der Behandlung eingesetzten Ultraschallfrequenzen in einem Bereich aufgespannt durch die Peakfrequenz $\pm$ 10 Hz.

In einer weiteren Ausführungsform dauert die Behandlung der Aufschlämmung mit Ultraschall mindestens 10 Sekunden, zum Beispiel mindestens 20 Sekunden oder mindestens 40 Sekunden, oder mindestens 60, 120, 180 oder 240 Sekunden.

In einer weiteren Ausführungsform dauert die Behandlung der Aufschlämmung mit Ultraschall höchstens 1000 Sekunden, zum Beispiel höchstens 500 Sekunden oder höchstens 200 Sekunden, oder höchstens 100, 50 oder 20 Sekunden.

In einer weiteren Ausführungsform dauert die Behandlung der Aufschlämmung mit Ultraschall in einem Bereich von 10 bis 1800 Sekunden, zum Beispiel von 30 bis 1000 Sekunden, oder von 30 bis 600 Sekunden, oder von 40 bis 300 Sekunden.

Die durch Ultraschall angewendete Leistungsdichte ergibt sich aus der elektrischen Leistungsaufnahme der Ultraschallquelle geteilt durch das Volumen der Aufschlämmung. In einer weiteren Ausführungsform wird Ultraschallquelle ein Ultraschallgenerator oder eine Rührwerkskugelmühle, oder eine Kombination von beiden eingesetzt.

In einer weiteren Ausführungsform ist die Temperatur der Aufschlämmung während der Ultraschallbehandlung in einem Bereich von 5 bis 45 °C, zum Beispiel zwischen 10 und 40 °C, oder zwischen 15 und 40 °C.

In einer weiteren Ausführungsform ist die in die Aufschlämmung durch Ultraschall einwirkende Leistungsdichte weniger als 600 W/Liter, zum Beispiel weniger als 450 W/Liter, oder etwa 300 W/Liter, die Leistungsdichte bezogen auf den Volumen der Aufschlämmung. Eine Leistungsdichte von 100 W/Liter wird üblicherweise nicht unterschritten.

In einer Ausführungsform beträgt die Leistungsdichte durch Ultraschall in einem Bereich von 400 bis 500 W/Liter und die Behandlungsdauer in einem Bereich von 10 bis 90 Sekunden.

In einer anderen Ausführungsform beträgt die Leistungsdichte durch Ultraschall in einem Bereich von 300 bis 400 W/Liter und die Behandlungsdauer in einem Bereich von 90 bis 250 Sekunden.

In einer mittels Deagglomeration behandelten und auf 4 Gew.-% eingestellten Aufschlämmung weisen bevorzugt mindestens 90 % der Siliziumdioxidpartikel eine Partikelgröße gemäß DIN ISO 13320-1 im Bereich von 1 nm bis 1 $\mu$m auf, zum Beispiel in einem Bereich von 30 bis 600 nm, oder 100 bis 300 nm auf, wobei die Partikelgröße in einer auf 4 Gew.-% Feststoffgehalt eingestellten Siliziumdioxidsuspension gemessen wird.

In einer mittels Deagglomeration behandelten und auf 4 Gew.-% eingestellten Aufschlämmung weisen bevorzugt weniger als 1 % der Siliziumdioxidpartikel eine Partikelgröße gemäß DIN ISO 13320-1 von mehr als 1 $\mu$m auf, wobei die Partikelgröße in einer auf 4 Gew.-% Feststoffgehalt eingestellten Siliziumdioxidsuspension gemessen wird.

Zumindest ein Teil der Vorläufersuspension wird in dem folgenden Schritt iv.) durch eine erste mehrstufige Filtervorrichtung geleitet. Die Siliziumdioxidsuspension wird dabei nach dem Durchtritt der Vorläufersuspension durch die mehrstufige Filtervorrichtung als Filtrat erhalten. Die erste mehrstufige Filtervorrichtung weist zumindest eine erste, eine zweite und eine dritte Filterstufe auf. Die erste mehrstufige Filtervorrichtung kann weitere Filterstufen, wie zum Beispiel eine vierte, und gegebenenfalls eine fünfte, und gegebenenfalls eine sechste Filterstufe aufweisen. Die Filterstufen innerhalb einer mehrstufigen Filtervorrichtung sind in einer bestimmten Reihenfolge angeordnet. Sie sind in Richtung stromabwärts nummeriert. Das bedeutet, dass die Vorläufersuspension zuerst die erste Filterstufe, stromabwärts davon die zweite Filterstufe und so weiter durchströmt. Ferner ist eine Anordnung von mehreren Filtern nebeneinander denkbar. In diesem Fall würden unterschiedliche Mengen Suspension in etwa gleichzeitig die nebeneinander angeordneten Filter durchströmen. Durch das Anordnen mehrere Filter innerhalb einer Filterstufe nebeneinander kann die Standzeit der Filterstufe, oder der Durchsatz durch die Filterstufe, oder beides erhöht werden. Ferner können zwischen der bereits genannten ersten und zweiten Filterstufe, oder zwischen der zweiten und dritten Filterstufe, jeweils weitere Filterstufen vorgesehen sein, die vorliegend nicht weiter beschrieben sind. Zudem können sowohl zwischen der ersten und der zweiten Filterstufe als auch zwischen der zweiten und der dritten Filterstufe unabhängige voneinander eine oder mehrere, hier nicht weiter beschriebene Filterstufen vorgesehen sein.

Jede der Filterstufen beinhaltet mindestens einen Filter. Innerhalb einer Filterstufe kann ein einzelner Filter vorgesehen sein. Es kann ebenso eine Mehrzahl an Filtern vorgesehen sein. Diese sind üblicherweise nebeneinander angeordnet. In diesem Fall handelt es sich bei der Mehrzahl an Filtern üblicherweise um Filter mit gleichen Kenndaten. Wie bereits beschrieben, können mehrere Filter nebeneinander angeordnet werden, um den Strom innerhalb der Filterstufe zu teilen. Dabei wird oftmals die Standzeit der Filterstufe oder der Durchsatz der Filterstufe, oder beides, erhöht.

Die erste Filterstufe weist eine Filterfeinheit von 5 $\mu$m oder mehr, zum Beispiel von 5 $\mu$m bis 15 $\mu$m, oder etwa 10 $\mu$m, oder etwa 15 $\mu$m auf.

Die zweite Filterstufe weist eine Filterfeinheit in einem Bereich von 0,5 bis 5 $\mu$m auf, zum Beispiel in einem Bereich von 0,5 bis 2 $\mu$m, oder etwa 1 $\mu$m, oder etwa 2 $\mu$m auf.

Die dritte Filterstufe weist eine Filterfeinheit von 1 $\mu$m oder weniger auf, zum Beispiel 1 $\mu$m oder 0,5 $\mu$m auf.

Mindestens eine der Filterstufen ausgewählt aus der ersten, zweiten und dritten Filterstufe eine weist eine Abscheiderate von 99, 5% oder mehr auf, zum Beispiel von 99,8%, oder von 99,9% auf.

Die Filterfeinheit bezeichnet die kleinste Partikelgröße, die ein Filter mit einer bestimmten Effektivität herausfiltern kann. Die Filterfeinheit wird im Folgenden auch mit x angegeben.

Die Abscheiderate $\varepsilon_x$, (auch Filtrationsrate) wird in allen genannten Fällen gemäß ISO 16889:2008 angegeben. Nach dieser Norm wird ein $\beta_x$-Wert als Quotient von $N_x$ und $N_h$ ermittelt, mit $N_x$ = Zahl der Partikel vor dem Filter, $N_h$ = Zahl der Partkel nach dem Filter und x die Filterfeinheit. Die Filterfeinheit ist die Partikelgröße in $\mu$m, gegen die die Abscheiderate ermittelt wurde. Die Abscheiderate, auch mit $\varepsilon_x$ angegeben ist dann $(\beta_x - 1)/\beta_x$.

Als Beispiel bedeutet eine Abscheiderate $\varepsilon_{10}$ = 75%, dass für eine Suspension mit 400 Partikeln einer Partikelgrö-βe von 10 $\mu$m oder mehr pro Volumeneinheit stromaufwärts des Filters diese Suspension nach dem Filter eine Zahl von 100 Partikeln mit einer Partikelgröße von 10 $\mu$m oder mehr pro Volumeneinheit stromabwärts des Filters aufweist. In diesem Beispiel wurden der Suspension 75% an Partikeln entzogen mit einer Partikelgröße von 10 $\mu$m oder mehr.

In Anlehnung an die Definition der Abscheiderate und Filterfeinheit für einen einzelnen Filter können entsprechende Angaben für eine Filterstufe beinhaltend einen oder mehrere einzelne Filter getätigt werden. Es gelten die oben angegebenen Bereiche und bevorzugten Ausgestaltungen

Die erste Filtervorrichtung kann durch mindestens eines, oder mehrere, oder alle der folgenden Merkmale gekennzeichnet sein:

(a) die erste Filterstufe weist eine Abscheiderate von 90% oder weniger auf, zum Beispiel 85%, 80% oder 75%, oder von 80 bis 99,9%, oder von 80 bis 95% auf;
(b) die erste Filterstufe weist eine Filterfeinheit in einem Bereich von 5 $\mu$m oder mehr, von 5 bis 25 $\mu$m, oder 5 bis 15 $\mu$m auf, zum Beispiel 10 $\mu$m oder 5 $\mu$m;
(c) die zweite Filterstufe weist eine Abscheiderate von 80% oder mehr auf, zum Beispiel von 95% oder mehr, zum Beispiel 98%, 99%, 99,9% oder 99,99%, oder in einem Bereich von 80 bis 99,9%, oder von 80 bis 95%;
(d) die zweite Filterstufe weist eine Filterfeinheit in einem Bereich von 0,5 $\mu$m oder mehr, z.B. 0,5 bis 10 $\mu$m, oder 0,5 bis 2 $\mu$m auf, zum Beispiel 0,5 $\mu$m, 1,0 $\mu$m, 1,5 $\mu$m oder 2,0 $\mu$m;
(e) die dritte Filterstufe weist eine Abscheiderate von 80 % oder mehr, zum Beispiel von 99,5 % oder mehr auf, zum Beispiel 99,9% oder 99,99%, oder in einem Bereich von 80 bis 99,9%, oder in einem Bereich von 95 bis 99,9% auf;
(f) die dritte Filterstufe weist eine Filterfeinheit in einem Bereich von 0,5 $\mu$m oder mehr, zum Beispiel im Bereich von 0,5 bis 10 $\mu$m, oder von 0,5 bis 3 $\mu$m, oder von 0,5 bis 1 $\mu$m auf;

oder eine Kombination von zwei oder mehr der Merkmale (a) bis (f), wobei auch jede Kombination der beispielhaft genannten Werte untereinander bevorzugt ist. In einer Ausführungsform ist eine Kombination aller Merkmale (a) bis (f) vorteilhaft, zum Beispiel Beispiel F1.3 in nachfolgender Tabelle A.

In einer bevorzugten Ausführungsform weist die erste Filterstufe eine Filterfeinheit von 5 $\mu$m oder mehr, zum Beispiel im Bereich von 5 $\mu$m bis 25 $\mu$m, und eine Abscheiderate im Bereich von 80% bis 99,9%, bevorzugt 80% bis 95% auf.

In einer weiteren Ausführungsform weist zweite Filterstufe eine Filterfeinheit von 0,5 $\mu$m oder mehr, zum Beispiel im Bereich von 0,5 μm bis 10 μm, und eine Abscheiderate im Bereich von 80% bis 99,9%, bevorzugt 95% bis 99,9% auf.

In einer weiteren Ausführungsform weist die dritte Filterstufe eine Filterfeinheit von 0,5 μm oder mehr, zum Beispiel im Bereich von 0,5 μm bis 10 μm, und eine Abscheiderate im Bereich von 80% bis 99,9%, bevorzugt 95% bis 99,9% auf.

Die erste Filtervorrichtung kann gemäß weiteren Beispielen zum Beispiel durch folgende Merkmalskombinationen gekennzeichnet sein:

**Tabelle A**

| Merkmal // Beispiel | (a) in % | (b) in μm | (c) in % | (d) in μm | (e) in % | (f) in μm |
|---|---|---|---|---|---|---|
| F1.1 | 90 | 5 | 95 | 0,5 | 95 | 0,5 |
| F1.2 | 85 | 10 | 99 | 1,0 | 99,9 | 0,5 |
| F1.3 | 80 | 10 | 99,9 | 0,5 | 80 | 0,5 |
| F1.4 | 80 | 10 | 99,9 | 1,0 | 99,9 | 0,5 |

In einer weiteren Ausführungsform beinhaltet die erste, mehrstufige Filtervorrichtung mindestens einen Tiefenfilter. Unter einem Tiefenfilter wird im vorliegenden Kontext ein Filter verstanden, in der die abzuscheidenden Partikel über eine Strecke innerhalb des Filters zurückgehalten werden. Dabei wird im Betrieb des Filters üblicherweise kein Filterkuchen gebildet. Demgegenüber werden bei einem Flächenfilter oder Oberflächenfilter die abzuscheidenden Partikel an der Grenzfläche des Oberflächenfilters abgeschieden. Dabei wird im Betrieb des Filters ein Filterkuchen aufgebaut. Die erste mehrstufige Filtervorrichtung kann ferner mehrere Tiefenfilter beinhalten. Es ist ebenso möglich, dass alle eingesetzten Filter der ersten mehrstufigen Filtervorrichtung Tiefenfilter sind.

In einer weiteren Ausführungsform wird mindestens eine weitere, bevorzugt mehrstufige Filtervorrichtung stromabwärts von der ersten, mehrstufigen Filtervorrichtung eingesetzt. Es können zudem zwei, drei, vier, fünf und bis zu 10 oder mehr in einer Reihenfolge stromabwärts angeordnete mehrstufige Filtervorrichtungen vorgesehen sein.

In einer weiteren Ausführungsform ist zumindest die zweite, mehrstufige Filtervorrichtung mit Tiefenfiltern versehen.

In einer weiteren Ausführungsform beinhaltet die zweite Filterstufe der ersten Filtervorrichtung mindestens einen ersten Filter mit einer Abscheiderate von 90% oder weniger und mindestens einen weiteren Filter mit einer Abscheiderate von 95% oder mehr.

In einer weiteren Ausführungsform beträgt die Standzeit der ersten, mehrstufigen Filtervorrichtung mindestens 100 Liter, zum Beispiel 150 Liter oder mehr, oder 250 Liter oder mehr, oder 500 Liter, oder 800 Liter und mehr, oder 1000 Liter und mehr, die Liter jeweils bezogen auf das von der ersten mehrstufigen Filtervorrichtung gefilteile Volumen an Vorläufersuspension.

In einer weiteren Ausführungsform beträgt die Standzeit der zweiten, optional mehrstufigen Filtervorrichtung mindestens 100 Liter, zum Beispiel 150 Liter oder mehr, oder 250 Liter oder mehr, oder 500 Liter, die Liter jeweils bezogen auf das von der zweiten Filtervorrichtung gefilterte Volumen an Vorläufersuspension.

Die Standzeit bedeutet im Zusammenhang mit einer Filtervorrichtung das Volumen an einer Suspension, das die Filtervorrichtung passieren kann, bevor die Filtervorrichtung zusetzt. Das Zusetzen kann anhand eines Druckanstiegs vor dem Filter auf das mindestens 1,5-fache gegenüber dem frisch eingesetzten Filter bei unveränderter Pumpleistung erkannt werden. Bei Zusetzen des Filters muss der Arbeitsschritt pausiert werden, und der zugesetzte Filter, oder die zugesetzten Filter, gereinigt oder getauscht werden.

In einer weiteren Ausführungsform weist die Aufschlämmung weniger als 5 Gew.-%, weniger als 2 Gew.-%, zum Beispiel 0 Gew.-% (keine), Additive, insbesondere Additive zur Stabilisierung auf, die Gew.-% bezogen auf das Gesamtgewicht der Aufschlämmung. Oftmals weist die Aufschlämmung zumindest 0,1 Gew.-% Additive auf, zum Beispiel in einem Bereich von 0,1 bis 5 Gew.-%, die Gew.-% bezogen auf das Gesamtgewicht der Aufschlämmung. Der Gehalt an Additiven ändert sich im Zuge einer Filtration üblicherweise nicht, oder allenfalls kaum. Dementsprechend weist die Vorläufersuspension wie auch die verfahrensgemäß erhältliche Siliziumdioxidsuspension einen Gehalt an Additiven zur Stabilisierung wie für die Aufschlämmung angegeben auf.

Gemäß einer weiteren Ausführungsform gilt für die durch das Verfahren erhältliche Siliziumdioxidsuspension mindestens eines, zum Beispiel mindestens zwei oder mindestens drei oder mindestens vier, besonders bevorzugt mindestens fünf der folgenden Merkmale:

A. die Siliziumdioxidsuspension ist rheopex unter den in genannten Testbedingungen, das bedeutet bei einer Temperatur von weniger als 45 °C und einer Feststoffkonzentration im Bereich von 20 bis 70 Gew.-%;

B. mindestens 90 % der Siliziumdioxidpartikel in der Siliziumdioxidsuspension weisen eine Partikelgröße in einem

Bereich von 1 nm bis < 10 $\mu$m, zum Beispiel in einem Bereich von 1 nm bis 1 $\mu$m, von 30 bis 600 nm, oder von 100 bis 300 nm, oder 200 bis 300 nm auf, wobei die Partikelgröße in einer auf 4 Gew.-% Feststoffgehalt eingestellten Siliziumdioxidsuspension gemäß DIN ISO 13320-1 bestimmt wird;

C. die Siliziumdioxidsuspension weist einen pH-Wert in einem Bereich von 3 oder mehr auf, zum Beispiel von mehr als 4 oder einen pH-Wert im Bereich von 4,5 bis 8 oder von 4,5 bis 7, wobei der pH-Wert an einer auf 4 Gew.-% eingestellten Siliziumdioxidsuspension bestimmt wird;

D. einen Gehalt an Chlor von weniger als 500 ppm, 350ppm oder weniger, oder 200 ppm oder weniger, die ppm;

E. einen Aluminiumgehalt von weniger als 200ppb, zum Beispiel im Bereich von 1 bis 100 ppb, besonders bevorzugt im Bereich von 1 bis 80 ppb;

F. einen Gehalt von 5 ppm oder weniger an Atomen, die von Si, O, H, C, Cl verschieden sind;

G. die Siliziumdioxidsuspension weist eine Temperatur von mehr als 0°C auf, bevorzugt in einem Bereich von 5 bis 35°C;

H. die Siliziumdioxidsuspension weist eine Viskosität gemäß DIN 53019-1 (5 rpm, 30 Gew.-%) in einem Bereich von 500 bis 2000 mPas, zum Beispiel im Bereich von 600 bis 1700 mPas, besonders bevorzugt im Bereich von 650 bis 1350 mPas auf;

I. weniger als 1 % der Siliziumdioxidpartikel in der Siliziumdioxidsuspension weisen eine Partikelgröße von mehr als 1 $\mu$m auf, wobei die Partikelgröße in einer auf 4 Gew.-% Feststoffgehalt eingestellten Siliziumdioxidsuspension gemäß DIN ISO 13320-1 gemessen wird;

wobei die Gew.-%, ppm und ppb jeweils auf die Gesamtmenge an Siliziumdioxidpartikeln in der Suspension bezogen sind.

Herstellung eines Siliziumdioxidgranulats

Schritt v.) ist dann das Bilden eines Siliziumdioxidgranulats, wobei die Siliziumdioxidsuspension aus Schritt iv.) weiterverarbeitet wird. In einer Ausführungsform kann in diesem Schritt eine von Siliziumdioxid verschiedene Siliziumkomponente zugegeben werden.

Das Siliziumdioxidgranulat weist einen größeren Partikeldurchmesser auf als die in der Siliziumdioxidsuspension vorliegenden Siliziumdioxidpartikel.

Zum Herstellen des Siliziumdioxidgranulats eignen sich prinzipiell alle dem Fachmann bekannten Verfahren, durch die eine Erhöhung des Partikeldurchmessers erreicht wird.

Ein Siliziumdioxidgranulat weist einen größeren Partikeldurchmesser auf als ein Siliziumdioxidpulver, und ebenso als die in der zuvor beschriebenen Siliziumdioxidsuspension enthaltenen Siliziumdioxidpartikel.

Das Siliziumdioxidgranulat weist einen Partikeldurchmesser auf, der größer ist als der Partikeldurchmesser des Siliziumdioxidpulvers. Bevorzugt ist der Partikeldurchmesser des Siliziumdioxidgranulats in einem Bereich von 500 bis 50.000-mal größer als der Partikeldurchmesser des Siliziumdioxidpulvers, zum Beispiel 1.000 bis 10.000-mal größer, besonders bevorzugt 2.000 bis 8000-mal größer.

Bevorzugt sind mindestens 90 % des in Schritt iv.) gebildeten Siliziumdioxidgranulats aus pyrogen erzeugtem Siliziumdioxidpulver hergestellt, zum Beispiel mindestens 95 Gew.-% oder mindestens 98 Gew.-%, besonders bevorzugt mindestens 99 Gew.-% oder mehr, jeweils bezogen auf das Gesamtgewicht des Siliziumdioxidgranulats.

Bevorzugt wird beim Verarbeiten ein Siliziumdioxidgranulat mit Granulen gebildet, wobei die Granulen eine sphärische Morphologie aufweisen; weiter bevorzugt beinhaltet das Verarbeiten ein Sprühgranulieren oder ein Rollgranulieren.

Unter einem Pulver werden Partikel trockener fester Stoffe mit einer Primärpartikelgröße im Bereich von 1 bis weniger als 100 nm verstanden.

Das Siliziumdioxidgranulat kann durch Granulieren von Siliziumdioxidpulver erhalten werden. Ein Siliziumdioxidgranulat weist in der Regel eine BET-Oberfläche von 3 $m^2$/g oder mehr und eine Dichte von weniger als 1,5 $g/cm^3$ auf. Unter Granulieren versteht man das Überführen von Pulverteilchen in Granulen. Beim Granulieren bilden sich Zusammenlagerungen von mehreren Siliziumdioxidpulverteilchen, also größere Agglomerate, die als "Siliziumdioxidgranulen" bezeichnet werden. Diese werden oft auch als "Siliziumdioxidgranulatteilchen" oder "Granulatteilchen" bezeichnet. In ihrer Gesamtheit bilden Granulen ein Granulat, z.B. die Siliziumdioxidgranulen ein "Siliziumdioxidgranulat". Das Siliziumdioxidgranulat weist einen größeren Partikeldurchmesser auf als das Siliziumdioxidpulver.

Der Vorgang des Granulierens, um ein Pulver in Granulate zu überführen, wird später näher erläutert.

Unter Siliziumdioxidkörnung werden im vorliegenden Kontext Siliziumdioxidpartikel verstanden, die durch ein Zerkleinern eines Siliziumdioxidkörpers, insbesondere eines Quarzglaskörper erhältlich sind. Eine Siliziumdioxidkörnung weist in der Regel eine Dichte von mehr als 1,2 $g/cm^3$, zum Beispiel in einem Bereich von 1,2 bis 2,2 $g/cm^3$, und besonders bevorzugt von etwa 2,2 $g/cm^3$ auf. Weiter bevorzugt beträgt die BET-Oberfläche einer Siliziumdioxidkörnung in der Regel weniger als 1 $m^2$/g, bestimmt gemäß DIN ISO 9277:2014-01.

Als Siliziumdioxidpulver kommen prinzipiell alle dem Fachmann geeigneten Siliziumdioxidpartikel in Betracht, insbesondere die bereits in Zusammenhang mit Schritt i.) beschriebenen Siliziumdioxidpartikel.

Unter einem Partikeldurchmesser oder einer Partikelgröße wird der Durchmesser eines Partikels verstanden, der sich als "area equivalent circular diameter $x_{Ai}$" gemäß der Formel

$$x_{Ai} = \sqrt{\frac{4A_i}{\pi}}$$

ergibt, wobei Ai die Fläche des betrachteten Partikels bei einer Bildanalyse bedeutet. Als Methoden zur Bestimmung eignen sich zum Beispiel ISO 13322-1:2014 oder ISO 13322-2:2009. Vergleichende Angaben wie "größerer Partikeldurchmesser" bedeutet immer, dass die in Bezug gesetzten Werte mit derselben Methode bestimmt wurden.

Bevorzugt weisen die Granulen des Siliziumdioxidgranulats eine sphärische Morphologie auf. Unter einer sphärischen Morphologie wird eine runde bis ovale Form der Partikel verstanden. Die Granulen des Siliziumdioxidgranulats weisen bevorzugt eine mittlere Sphärizität in einem Bereich von 0,7 bis 1,3 SPHT3, zum Beispiel eine mittlere Sphärizität in einem Bereich von 0,8 bis 1,2 SPHT3, besonders bevorzugt eine mittlere Sphärizität in einem Bereich von 0,85 bis 1,1 SPHT3 auf. Das Merkmal SPHT3 ist in den Testmethoden beschrieben.

Weiterhin bevorzugt weisen die Granulen des Siliziumdioxidgranulats eine mittlere Symmetrie in einem Bereich von 0,7 bis 1,3 Symm3, zum Beispiel eine mittlere Symmetrie in einem Bereich von 0,8 bis 1,2 Symm3, besonders bevorzugt eine mittlere Symmetrie in einem Bereich von 0,85 bis 1,1 Symm3 auf. Das Merkmal der mittleren Symmetrie Symm3 ist in den Testmethoden beschrieben.

Granulieren

Das Siliziumdioxidgranulat wird durch Granulieren von Siliziumdioxidpulver erhalten. Unter Granulieren versteht man das Überführen von Pulverteilchen in Granulen. Beim Granulieren bilden sich durch Zusammenlagerungen von mehreren Siliziumdioxidpulverteilchen größere Agglomerate, die als "Siliziumdioxidgranulen" bezeichnet werden. Diese werden oft auch als, "Siliziumdioxidgranulatteilchen" oder "Granulatteilchen" bezeichnet. In ihrer Gesamtheit bilden Granulen ein Granulat, z.B. die Siliziumdioxidgranulen ein "Siliziumdioxidgranulat".

Im vorliegenden Fall kann prinzipiell jedes Granulierverfahren ausgewählt werden, das dem Fachmann bekannt und zum Granulieren von Siliziumdioxidpulver geeignet erscheint. Bei den Granulierverfahren kann zwischen Aufbaugranulation und Pressgranulation, und weiter zwischen Nass- und Trocken-Granulierverfahren unterschieden werden. Bekannte Methoden sind Rollgranulation in einem Granulierteller, Sprühgranulation, Zentrifugalzerstäubung, Wirbelschichtgranulation, Gefriergranulieren, sowie Granulierverfahren unter Einsatz einer Granuliermühle, Kompaktierung, Walzenpressen, Brikettierung, Schülpenherstellung oder Extrudierung.

Bevorzugt wird beim Verarbeiten ein Siliziumdioxidgranulat mit Granulen gebildet, die eine sphärische Morphologie aufweisen; wobei das Verarbeiten weiter bevorzugt durch Sprühgranulieren oder Rollgranulieren erfolgt. Weiter bevorzugt beinhaltet ein Siliziumdioxidgranulat mit Granulen, die eine sphärische Morphologie aufweisen, höchstens 50 % Granulen, bevorzugt höchstens 40 % Granulen, weiter bevorzugt höchstens 20 % Granulen, mehr bevorzugt zwischen 0 und 50%, zwischen 0 und 40% oder zwischen 0 und 20%, oder zwischen 10 und 50%, zwischen 10 und 40% oder zwischen 10 und 20% Granulen, die nicht eine sphärische Morphologie aufweisen, die Prozentangabe jeweils bezogen auf die Gesamtzahl an Granulen im Granulat. Die Granulen mit einer sphärischen Morphologie weisen die in dieser Beschreibung bereits genannten SPHT3-Werte auf.

Sprühgranulieren

Gemäß einer bevorzugten Ausführungsform von Schritt v.) wird ein Siliziumdioxidgranulat durch Sprühgranulieren der Siliziumdioxidsuspension gebildet. Das Sprühgranulieren wird auch als Sprühtrocknen bezeichnet.

Das Sprühtrocknen erfolgt bevorzugt in einem Sprühturm. Zum Sprühtrocknen wird die Siliziumdioxidsuspension bei erhöhter Temperatur unter Druck gesetzt. Die unter Druck stehende Siliziumdioxidsuspension wird anschließend über eine Düse entspannt und so in den Sprühturm gesprüht. In Folge dessen bilden sich Tropfen, die augenblicklich trocknen und zunächst trockene Kleinstpartikel ("Keime") bilden. Die Kleinstpartikel bilden zusammen mit einem auf die Partikel wirkenden Gasstrom eine Wirbelschicht. Sie werden so im Schwebezustand gehalten und können damit eine Oberfläche zum Trocknen weiterer Tröpfchen bilden.

Die Düse, durch die die Siliziumdioxidsuspension in den Sprühturm gesprüht wird, bildet bevorzugt einen Einlass in den Innenraum des Sprühturms.

Die Düse weist beim Sprühen bevorzugt eine Kontaktfläche mit der Siliziumdioxidsuspension auf. Unter der "Kontaktfläche" wird der Bereich der Düse verstanden, der beim Sprühen in Kontakt mit der Siliziumdioxidsuspension kommt. Oftmals ist zumindest ein Teil der Düse als Rohr geformt, durch das die Siliziumdioxidsuspension beim Sprühen geleitet wird, so dass die Innenseite des Hohlrohrs mit der Siliziumdioxidsuspension in Berührung kommt.

Die Kontaktfläche beinhaltet bevorzugt ein Glas, einen Kunststoff oder eine Kombination davon. Bevorzugt beinhaltet die Kontaktfläche ein Glas, besonders bevorzugt Quarzglas. Bevorzugt beinhaltet die Kontaktfläche einen Kunststoff. Prinzipiell sind alle dem Fachmann bekannten Kunststoffe geeignet, die bei den Verfahrenstemperaturen stabil sind und keine Fremdatome an die Siliziumdioxidsuspension abgeben. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt besteht die Kontaktfläche aus einem Glas, einem Kunststoff oder einer Kombination davon, zum Beispiel ausgewählt aus der Gruppe bestehend aus Quarzglas und Polyolefinen, besonders bevorzugt ausgewählt aus der Gruppe bestehend aus Quarzglas und Homo- oder Copolymere beinhaltend Polypropylen, Polyethylen, Polybutadien oder Kombinationen aus zwei oder mehr davon. Bevorzugt beinhaltet die Kontaktfläche keine Metalle, insbesondere kein Wolfram, Titan, Tantal, Chrom, Cobalt, Nickel, Eisen, Vanadium, Zirkonium und Mangan.

Es ist prinzipiell möglich, dass die Kontaktfläche und die weiteren Teile der Düse aus dem gleichen oder aus verschiedenen Materialien bestehen. Bevorzugt enthalten die weiteren Teile der Düse das gleiche Material wie die Kontaktfläche. Es ist ebenso möglich, dass die weiteren Teile der Düse ein von der Kontaktfläche verschiedenes Material enthalten. Zum Beispiel kann die Kontaktfläche mit einem geeigneten Material, zum Beispiel einem Glas oder einem Kunststoff beschichtet sein.

Bevorzugt ist die Düse zu mehr als 70 Gew.-%, bezogen auf das Gesamtgewicht der Düse, aus einem Element ausgewählt aus der Gruppe bestehend aus Glas, Kunststoff oder einer Kombination von Glas und Kunststoff gebildet, zum Beispiel zu mehr als 75 Gew.-% oder zu mehr als 80 Gew.-% oder zu mehr als 85 Gew.-% oder zu mehr als 90 Gew.-% oder zu mehr als 95 Gew.-%, besonders bevorzugt zu mehr als 99 Gew.-%.

Bevorzugt umfasst die Düse ein Düsenplättchen. Das Düsenplättchen ist bevorzugt aus Glas, Kunststoff oder einer Kombination aus Glas und Kunststoff gebildet. Bevorzugt ist das Düsenplättchen aus Glas gebildet, besonders bevorzugt Quarzglas. Bevorzugt ist das Düsenplättchen aus Kunststoff gebildet. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt beinhaltet das Düsenplättchen keine Metalle, insbesondere kein Wolfram, Titan, Tantal, Chrom, Cobalt, Nickel, Eisen, Vanadium, Zirkonium und Mangan.

Bevorzugt umfasst die Düse eine Drallschnecke. Die Drallschnecke ist bevorzugt aus Glas, Kunststoff oder einer Kombination aus Glas und Kunststoff gebildet. Bevorzugt ist die Drallschnecke aus Glas gebildet, besonders bevorzugt Quarzglas. Bevorzugt ist die Drallschnecke aus Kunststoff gebildet. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt beinhaltet die Drallschnecke keine Metalle, insbesondere kein Wolfram, Titan, Tantal, Chrom, Cobalt, Nickel, Eisen, Vanadium, Zirkonium und Mangan.

Die Düse kann darüber hinaus weitere Bestandteile umfassen. Bevorzugte weitere Bauteile sind ein Düsenkörper, besonders bevorzugt ist ein die Drallschnecke und das Düsenplättchen umgebender Düsenkörper, ein Kreuzstück und eine Prallplatte. Bevorzugt umfasst eine Düse eines oder mehr, besonders bevorzugt alle, der weiteren Bauteile. Die weiteren Bauteile können unabhängig voneinander prinzipiell aus einem beliebigen, dem Fachmann bekannten und zu diesem Zweck geeigneten Material bestehen, zum Beispiel aus einem Metall-haltigen Material, aus Glas oder aus einem Kunststoff. Bevorzugt ist der Düsenkörper aus Glas gebildet, besonders bevorzugt Quarzglas. Bevorzugt sind die weiteren Bauteile aus Kunststoff gebildet. Bevorzugte Kunststoffe sind Polyolefine, zum Beispiel Homo- oder Copolymere beinhaltend mindestens ein Olefin, besonders bevorzugt Homo- oder Copolymere beinhaltend Polypropylen, Polyethylen, Polybutadien oder Kombinationen aus zwei oder mehr davon. Bevorzugt beinhalten die weiteren Bauteile keine Metalle, insbesondere kein Wolfram, Titan, Tantal, Chrom, Cobalt, Nickel, Eisen, Vanadium, Zirkonium und Mangan.

Bevorzugt weist der Sprühturm einen Gaseinlass und einen Gasauslass auf. Durch den Gaseinlass kann Gas in den Innenraum des Sprühturms eingebracht, und durch den Gasauslass kann es ausgeleitet werden. Es ist auch möglich, Gas über die Düse in den Sprühturm einzuleiten. Ebenso kann Gas über den Auslass des Sprühturms ausgeleitet werden. Weiterhin bevorzugt kann Gas über die Düse und einen Gaseinlass des Sprühturms zugeführt, und über den Auslass des Sprühturms und einen Gasauslass des Sprühturms ausgeleitet werden.

Bevorzugt liegt im Innenraum des Sprühturms eine Atmosphäre ausgewählt aus Luft, einem Inertgas, mindestens zwei Inertgasen oder eine Kombination von Luft mit mindestens einem Inertgas, bevorzugt mindestens zwei Inertgasen vor. Als Inertgase sind bevorzugt ausgewählt aus der Liste bestehend aus Stickstoff, Helium, Neon, Argon, Krypton und Xenon. Zum Beispiel liegt im Innenraum des Sprühturms Luft, Stickstoff oder Argon vor, besonders bevorzugt Luft.

Weiter bevorzugt ist die im Sprühturm vorliegende Atmosphäre Teil eines Gasstroms. Der Gasstrom wird in den Sprühturm bevorzugt über einen Gaseinlass eingeleitet und über einen Gasauslass ausgeleitet. Es ist auch möglich Teile des Gasstroms über die Düse einzuleiten und Teile des Gasstroms über einen Feststoffauslass auszuleiten. Der Gasstrom kann im Sprühturm weitere Bestandteile aufnehmen. Diese können beim Sprühtrocknen aus der Siliziumdioxidsuspension stammen und in den Gasstrom übergehen.

Bevorzugt wird dem Sprühturm ein trockener Gasstrom zugeführt. Unter einem trockenen Gasstrom wird ein Gas oder ein Gasgemisch verstanden, dessen relative Feuchte bei der im Sprühturm eingestellten Temperatur unterhalb des Kondensationspunktes liegt. Eine relative Luftfeuchte von 100 % entspricht einer Wassermenge von 17,5 g/m$^3$ bei 20°C. Das Gas wird bevorzugt auf eine Temperatur in einem Bereich von 150 bis 450°C, zum Beispiel von 200 bis 420°C oder von 300 bis 400°C, besonders bevorzugt von 320 bis 400°C vorgewärmt.

Der Innenraum des Sprühturms ist bevorzugt temperierbar. Bevorzugt beträgt die Temperatur im Innenraum des Sprühturms bis zu 550°C, zum Beispiel 300 bis 500°C, besonders bevorzugt 320 bis 450°C.

Der Gasstrom hat am Gaseinlass bevorzugt eine Temperatur in einem Bereich von 150 bis 450°C, zum Beispiel von 200 bis 420°C oder von 300 bis 400°C, besonders bevorzugt von 320 bis 400°C.

Am Feststoffauslass, dem Gasauslass oder an beiden Orten hat der ausgeleitete Gasstrom bevorzugt eine Temperatur von weniger als 170°C, zum Beispiel von 50 bis 150°C, besonders bevorzugt von 100 bis 130°C.

Weiter bevorzugt liegt der Unterschied zwischen der Temperatur des Gasstroms beim Einleiten und dem Gasstrom beim Ausleiten in einem Bereich von 100 bis 330°C, zum Beispiel von 150 bis 300 °C.

Die so erhaltenen Siliziumdioxidgranulen liegen als Agglomerat einzelner Teilchen von Siliziumdioxidpulver vor. Die einzelnen Teilchen des Siliziumdioxidpulvers sind im Agglomerat weiterhin erkennbar. Die mittlere Teilchengröße der Teilchen des Siliziumdioxidpulvers liegt bevorzugt im Bereich von 10 bis 1000 nm, zum Beispiel im Bereich von 20 bis 500 nm oder von 30 bis 250 nm oder von 35 bis 200 nm oder von 40 bis 150 nm, oder besonders bevorzugt im Bereich von 50 bis 100 nm. Die mittlere Teilchengröße dieser Teilchen wird gemäß DIN ISO 13320-1 ermittelt.

Das Sprühtrocknen kann in Anwesenheit von Hilfsstoffen durchgeführt werden. Prinzipiell können alle Stoffe als Hilfsstoffe eingesetzt werden, die dem Fachmann bekannt sind und zum vorliegenden Einsatzzweck geeignet erscheinen. Als Hilfsstoffe kommen zum Beispiel sogenannte Bindemittel in Betracht. Beispiele für geeignete Bindemittel sind Metalloxide wie Calciumoxid, Metallcarbonate wie Calciumcarbonat und Polysaccharide wie Cellulose, Celluloseether, Stärke und Stärkederivate.

Besonders bevorzugt wird das Sprühtrocknen im Rahmen der vorliegenden Erfindung ohne Hilfsstoffe durchgeführt.

Bevorzugt wird vor, nach oder vor und nach dem Entnehmen des Siliziumdioxidgranulats aus dem Sprühturm ein Teil davon abgetrennt. Zum Abtrennen kommen alle dem Fachmann bekannten und geeignet erscheinenden Verfahren in Betracht. Bevorzugt erfolgt das Abtrennen durch ein Sichten oder ein Sieben.

Bevorzugt werden vor dem Entnehmen des durch Sprühtrocknung gebildeten Siliziumdioxidgranulats aus dem Sprühturm Partikel mit einer Partikelgröße von weniger als 50 μm, zum Beispiel mit einer Partikelgröße von weniger als 70 μm besonders bevorzugt mit einer Partikelgröße von weniger als 90 μm durch Sichten abgetrennt. Das Sichten erfolgt bevorzugt durch einen Zyklon, der bevorzugt im unteren Bereich des Sprühturms, besonders bevorzugt oberhalb des Auslasses des Sprühturms, angeordnet ist.

Bevorzugt werden nach dem Entnehmen des Siliziumdioxidgranulats aus dem Sprühturm Teilchen mit einer Partikelgröße von mehr als 1000 μm, zum Beispiel mit einer Partikelgröße von mehr als 700 μm besonders bevorzugt mit einer Partikelgröße von mehr als 500 μm durch Sieben abgetrennt. Das Sieben der Partikel kann prinzipiell nach allen dem Fachmann bekannten und zu diesem Zweck geeigneten Verfahren erfolgen. Bevorzugt erfolgt das Sieben mittels einer Rüttelrinne.

Gemäß einer Ausführungsform ist das Sprühtrocknen der Siliziumdioxidsuspension durch eine Düse in einen Sprühturm durch mindestens eines, zum Beispiel zwei oder drei, besonders bevorzugt alle der folgenden Merkmale gekennzeichnet:

a] Sprühgranulieren in einem Sprühturm;
b] Vorliegen eines Drucks der Siliziumdioxidsuspension an der Düse von nicht mehr als 40 bar, zum Beispiel in einem Bereich von 1,3 bis 20 bar von 1,5 bis 18 bar oder von 2 bis 15 bar oder von 4 bis 13 bar, oder besonders bevorzugt im Bereich von 5 bis 12 bar, wobei der Druck absolut (in Bezug auf p = 0 hPa) angegeben ist;
c] eine Temperatur der Tröpfchen beim Eintritt in den Sprühturm in einem Bereich von 10 bis 50°C, bevorzugt in einem Bereich von 15 bis 30°C, besonders bevorzugt in einem Bereich von 18 bis 25°C.
d] eine Temperatur an der dem Sprühturm zugewandten Seite der Düse in einem Bereich von 100 bis 450°C, zum Beispiel in einem Bereich von 250 bis 440°C, besonders bevorzugt von 320 bis 430°C;
e] einen Durchsatz an Siliziumdioxidsuspension durch die Düse in einem Bereich von 0,05 bis 1 m$^3$/h, zum Beispiel in einem Bereich von 0,1 bis 0,7 m$^3$/h oder von 0,2 bis 0,5 m$^3$/h, besonders bevorzugt in einem Bereich von 0,25 bis 0,4 m$^3$/h;
f] einen Feststoffgehalt der Siliziumdioxidsuspension von mindestens 40 Gew.-%, zum Beispiel in einem Bereich von 50 bis 80 Gew.-%, oder in einem Bereich von 55 bis 75 Gew.-%, besonders bevorzugt in einem Bereich von 60 bis 70 Gew.-% auf, jeweils bezogen auf das Gesamtgewicht der Siliziumdioxidsuspension;

g] einen Gaszustrom in den Sprühturm in einem Bereich von 10 bis 100 kg/min, zum Beispiel in einem Bereich von 20 bis 80 kg/min oder von 30 bis 70 kg/min, besonders bevorzugt in einem Bereich von 40 bis 60 kg/min;

h] eine Temperatur des Gasstroms beim Eintritt in den Sprühturm in einem Bereich von 100 bis 450°C, zum Beispiel in einem Bereich von 250 bis 440°C, besonders bevorzugt von 320 bis 430°C;

i] eine Temperatur des Gasstroms beim Austritt aus dem Sprühturm von weniger als 170°C;

j] das Gas ist ausgewählt aus der Gruppe bestehend aus Luft, Stickstoff und Helium, oder einer Kombination von zwei oder mehr davon; bevorzugt Luft;

k] eine Restfeuchte des Granulats bei Entnahme aus dem Sprühturm von weniger als 5 Gew.-%, zum Beispiel von weniger als 3 Gew.-% oder von weniger als 1 Gew.-% oder in einem Bereich von 0,01 bis 0,5 Gew.-%, besonders bevorzugt in einem Bereich von 0,1 bis 0,3 Gew.-%, jeweils bezogen auf das Gesamtgewicht des bei der Sprühtrocknung entstehenden Siliziumdioxidgranulats;

l] mindestens 50 Gew.-% des Sprühgranulats, bezogen auf das Gesamtgewicht des bei der Sprühtrocknung entstehenden Siliziumdioxidgranulats, vollzieht eine Flugzeit in einem Bereich von 1 bis 100 s, zum Beispiel über einen Zeitraum von 10 bis 80 s, besonders bevorzugt über einen Zeitraum vom 25 bis 70 s;

m] mindestens 50 Gew.-% des Sprühgranulats, bezogen auf das Gesamtgewicht des bei der Sprühtrocknung entstehenden Siliziumdioxidgranulats, legt eine Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

n] der Sprühturm weist eine zylindrische Geometrie auf;

o] eine Höhe des Sprühturms von mehr als 10 m, zum Beispiel von mehr als 15 m oder von mehr als 20 m oder von mehr als 25 m oder von mehr als 30 m oder in einem Bereich von 10 bis 25 m, besonders bevorzugt in einem Bereich von 15 bis 20 m;

p] Absichten von Partikeln mit einer Größe von weniger als 90 $\mu$m vor der Entnahme des Granulats aus dem Sprühturm;

q] Absieben von Partikeln mit einer Größe von mehr als 500 $\mu$m nach der Entnahme des Granulats aus dem Sprühturm, bevorzugt auf einer Rüttelrinne;

r] der Austritt der Tröpfchen der Siliziumdioxidsuspension aus der Düse erfolgt in einem Winkel von 30 bis 60 Grad entgegen der Lotrichtung, besonders bevorzugt bei einem Winkel von 45 Grad entgegen der Lotrichtung.

Unter der Lotrichtung wird die Richtung des Schwerkraftvektors verstanden.

Die Flugstrecke bedeutet den Weg, den ein Tröpfchen der Siliziumdioxidsuspension ab Austritt aus der Düse im Gasraum des Sprühturms unter Bildung einer Granule bis zum Abschluss des Flug- und Fallvorgangs zurücklegt. Der Flug- und Fallvorgang endet regelmäßig durch Auftreffen der Granule am Boden des Sprühturms, oder durch Auftreffen der Granule auf bereits auf dem Boden des Sprühturms liegenden anderen Granulen, je nachdem, was zuerst eintritt.

Die Flugzeit ist die Dauer, die eine Granule für das Zurücklegen der Flugstrecke im Sprühturm benötigt. Bevorzugt weisen die Granulen im Sprühturm eine helixförmige Flugbahn auf.

Bevorzugt legen mindestens 60 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

Bevorzugt legen mindestens 70 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

Bevorzugt legen mindestens 80 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 oder von mehr als 50 oder von mehr als 70 oder von mehr als 100 oder von mehr als 150 oder von mehr als 200 oder in einem Bereich von 20 bis 200 m oder von 10 bis 150 oder von 20 bis 100, besonders bevorzugt einem Bereich von 30 bis 80 m.

Bevorzugt legen mindestens 90 Gew.-% des Sprühgranulats, bezogen auf das Gesamtgewicht des bei der Sprühtrocknung entstehenden Siliziumdioxidgranulats, eine mittlere Flugstrecke von mehr als 20 m zurück, zum Beispiel von mehr als 30 m, oder von mehr als 50 m, oder von mehr als 70 m, oder von mehr als 100 m, oder von mehr als 150 m, oder von mehr als 200 m, oder in einem Bereich von 20 m bis 200 m oder von 10 m bis 150 m oder von 20 m bis 100 m, besonders bevorzugt einem Bereich von 30 m bis 80 m.

Rollgranulation

Gemäß einer anderen bevorzugten Ausführungsform von Schritt v.) wird ein Siliziumdioxidgranulat durch Rollgranulieren der Siliziumdioxidsuspension gebildet.

Das Rollgranulieren erfolgt durch Rühren der Siliziumdioxidsuspension in Gegenwart eines Gases bei erhöhter Temperatur. Bevorzugt erfolgt das Rollgranulieren in einem mit einem Rührwerkzeug ausgerüsteten Rührbehälter. Bevorzugt rotiert der Rührbehälter gegensinnig zum Rührwerkzeug. Bevorzugt weist der Rührbehälter außerdem einen Einlass, durch den Siliziumdioxidpulver in den Rührbehälter eingetragen werden kann, einen Auslass, durch den Siliziumdioxidgranulat entnommen werden kann, einen Gaseinlass und einen Gasauslass, auf.

Für das Rühren der Siliziumdioxidsuspension wird bevorzugt ein Stiftwirbler verwendet. Unter einem Stiftwirbler wird ein Rührwerkzeug verstanden, das mit mehreren länglichen Stiften versehen ist, deren Längsachse jeweils koaxial zur Rotationsachse des Rührwerkzeugs verläuft. Der Bewegungsablauf der Stifte beschreibt bevorzugt koaxiale Kreise um die Rotationsachse.

Bevorzugt wird die Siliziumdioxidsuspension auf einen pH-Wert von weniger als 7 eingestellt, zum Beispiel auf einen pH-Wert im Bereich von 2 bis 6,5, besonders bevorzugt auf einen pH-Wert in einem Bereich von 4 bis 6. Zum Einstellen des pH-Werts wird bevorzugt eine anorganische Säure verwendet, zum Beispiel eine Säure ausgewählt aus der Gruppe bestehend aus Salzsäure, Schwefelsäure, Salpetersäure und Phosphorsäure, besonders bevorzugt Salzsäure.

Bevorzugt liegt im Rührbehälter eine Atmosphäre ausgewählt aus Luft, einem Inertgas, mindestens zwei Inertgasen oder eine Kombination von Luft mit mindestens einem Inertgas, bevorzugt mindestens zwei Inertgasen vor. Als Inertgase sind bevorzugt ausgewählt aus der Liste bestehend aus Stickstoff, Helium, Neon, Argon, Krypton und Xenon. Zum Beispiel liegt im Rührbehälter Luft, Stickstoff oder Argon vor, besonders bevorzugt Luft.

Weiter bevorzugt ist die im Rührbehälter vorliegende Atmosphäre Teil eines Gasstroms. Der Gasstrom wird in den Rührbehälter bevorzugt über den Gaseinlass eingeleitet und über den Gasauslass ausgeleitet. Der Gasstrom kann im Rührbehälter weitere Bestandteile aufnehmen. Diese können beim Rollgranulieren aus der Siliziumdioxidsuspension stammen und in den Gasstrom übergehen.

Bevorzugt wird dem Rührbehälter ein trockener Gasstrom zugeführt. Unter einem "trockenen Gasstrom" wird ein Gas oder ein Gasgemisch verstanden, dessen relative Feuchte bei der im Rührbehälter eingestellten Temperatur unterhalb des Kondensationspunktes liegt. Das Gas wird bevorzugt auf eine Temperatur in einem Bereich von 50 bis 300°C, zum Beispiel von 80 bis 250°C, besonders bevorzugt von 100 bis 200°C vorgewärmt.

Bevorzugt werden pro 1 kg der eingesetzten Siliziumdioxidsuspension 10 bis 150 m$^3$ Gas pro Stunde in den Rührbehälter eingeleitet, zum Beispiel 20 bis 100 m$^3$ Gas pro Stunde, besonders bevorzugt 30 bis 70 m$^3$ Gas pro Stunde.

Durch den Gasstrom wird die Siliziumdioxidsuspension während des Rührens unter Bildung von Siliziumdioxidgranulen getrocknet. Das gebildete Granulat wird der Rührkammer entnommen.

Bevorzugt wird das entnommene Granulat weiter getrocknet. Bevorzugt erfolgt die Trocknung kontinuierlich, zum Beispiel in einem Drehrohrofen. Bevorzugte Temperaturen zur Trocknung liegen in einem Bereich von 80 bis 250°C, zum Beispiel in einem Bereich von 100 bis 200°C, besonders bevorzugt in einem Bereich von 120 bis 180°C.

Kontinuierlich bedeutet im Kontext der vorliegenden Erfindung in Bezug auf ein Verfahren, dass dieses fortlaufend betrieben werden kann. Das bedeutet, dass Zufuhr und Entnahme von am Verfahren beteiligten Stoffen und Materialien beim Durchführen des Verfahrens laufend erfolgen kann. Es ist nicht notwendig, dafür das Verfahren zu unterbrechen.

Kontinuierlich als Attribut eines Gegenstands, z.B. in Bezug auf einen "kontinuierlichen Ofen", bedeutet, dass dieser Gegenstand so ausgelegt ist, dass ein in ihm erfolgendes Verfahren oder in ihm erfolgender Verfahrensschritt kontinuierlich geführt werden kann.

Das durch Rollgranulieren erhaltene Granulat kann gesiebt werden. Das Sieben kann vor oder nach dem Trocknen erfolgen. Bevorzugt wird vor dem Trocknen gesiebt. Bevorzugt werden Granulen mit einer Partikelgröße von weniger als 50 μm zum Beispiel mit einer Partikelgröße von weniger als 80 μm besonders bevorzugt mit einer Partikelgröße von weniger als 100 μm ausgesiebt. Weiter bevorzugt werden Granulen mit einer Partikelgröße von mehr als 900 μm, zum Beispiel mit einer Partikelgröße von mehr als 700 μm, besonders bevorzugt mit einer Partikelgröße von mehr als 500 μm ausgesiebt. Das Aussieben größerer Partikel kann prinzipiell nach allen dem Fachmann bekannten und zu diesem Zweck geeigneten Verfahren erfolgen. Bevorzugt erfolgt das Absieben grö-ßerer Partikel mittels einer Rüttelrinne.

Gemäß einer weiteren Ausführungsform ist das Rollgranulieren durch mindestens eines, zum Beispiel zwei oder drei, besonders bevorzugt aller der folgenden Merkmale gekennzeichnet:

[a] das Granulieren erfolgt in einem rotierenden Rührbehälter;

[b] das Granulieren erfolgt unter einem Gasstrom von 10 bis 150 kg Gas pro Stunde und pro 1 kg Siliziumdioxidsuspension;

[c] die Gastemperatur beträgt beim Einleiten 40 bis 200°C;

[d] Granulen mit einer Partikelgröße von weniger als 100 $\mu$m und von mehr als 500 $\mu$m werden abgesiebt;

[e] die gebildeten Granulen weisen eine Restfeuchte von 15 bis 30 Gew.-% auf;

[f] die gebildeten Granulen werden bei 80 bis 250°C getrocknet, bevorzugt in einem kontinuierlichen Trockenrohr, besonders bevorzugt bis zu einer Restfeuchte von weniger als 1 Gew.-%.

Bevorzugt wird das durch Granulation, insbesondere durch Sprüh- oder Rollgranulieren erhaltene Siliziumdioxidgranulat, weiter vorbehandelt, bevor es zu Quarzglaskörpern verarbeitet wird. Diese Vorbehandlung kann verschiedenen Zwecken dienen, die entweder die Verarbeitung zu Quarzglaskörpern erleichtern oder die Eigenschaften der resultierenden Quarzglaskörper beeinflussen. Zum Beispiel kann das Siliziumdioxidgranulat verdichtet, gereinigt, oberflächenmodifiziert oder getrocknet werden.

Siliziumdioxidgranulat, welches durch die Granulation erhalten wurde, aber nicht bzw. noch nicht weiter vorbehandelt wurde, wird im Folgenden als Siliziumdioxidgranulat I bezeichnet. Infolge einer oder mehrerer Vorbehandlungsschritte vor dem Bilden einer Glasschmelze behandeltes Siliziumdioxidgranulat wird im Folgenden als Siliziumdioxidgranulat II bezeichnet.

Das durch Granulieren erhaltene Siliziumdioxidgranulat, also Siliziumdioxidgranulat I kann mindestens eines, bevorzugt mehrere der folgenden Merkmale aufweisen:

[A] eine BET-Oberfläche im Bereich von 20 bis 50 $m^2$/g, zum Beispiel in einem Bereich von 20 bis 40 $m^2$/g; besonders bevorzugt in einem Bereich von 25 bis 35 $m^2$/g; dabei beläuft sich bevorzugt der Mikroporenanteil auf eine BET-Oberfläche in einem Bereich von 4 bis 5 $m^2$/g; zum Beispiel in einem Bereich von 4,1 bis 4,9 $m^2$/g; besonders bevorzugt in einem Bereich von 4,2 bis 4,8 $m^2$/g; und

[B] eine mittlere Partikelgröße in einem Bereich von 180 bis 300 $\mu$m, zum Beispiel in einem Bereich von 220 bis 280 $\mu$m, besonders bevorzugt in einem Bereich von 230 bis 270 $\mu$m;

[C] eine Schüttdichte in einem Bereich von 0,5 bis 1,2 g/$cm^3$, zum Beispiel in einem Bereich von 0,6 bis 1,1 g/$cm^3$, besonders bevorzugt in einem Bereich von 0,7 bis 1,0 g/$cm^3$;

[D] einen Kohlenstoffgehalt von weniger als 50 ppm, zum Beispiel weniger als 40 ppm oder weniger als 30 ppm oder weniger als 20 ppm oder weniger als 10 ppm, besonders bevorzugt in einem Bereich von 1 ppb bis 5 ppm;

[E] einen Aluminiumgehalt von weniger als 200 ppb, bevorzugt von weniger als 100 ppb, zum Beispiel von weniger als 50 ppb oder von 1 bis 200 ppb oder von 15 bis 100 ppb, besonders bevorzugt in einem Bereich von 1 bis 50 ppb auf.

[F] eine Stampfdichte in einem Bereich von 0,5 bis 1,2 g/$cm^3$, zum Beispiel in einem Bereich von 0,6 bis 1,1 g/$cm^3$, besonders bevorzugt in einem Bereich von 0,75 bis 1,0 g/$cm^3$;

[G] ein Porenvolumen in einem Bereich von 0,1 bis 1,5 mL/g, zum Beispiel in einem Bereich von 0,15 bis 1,1 mL/g; besonders bevorzugt in einem Bereich von 0,2 bis 0,8 mL/g,

[H] einen Chlorgehalt von weniger als 200 ppm, bevorzugt von weniger als 150 ppm, zum Beispiel weniger als 100 ppm, oder von weniger als 50 ppm, oder von weniger als 1 ppm, oder von weniger als 500 ppb, oder von weniger als 200 ppb, oder in einem Bereich von 1 ppb bis weniger als 200 ppm, oder von 1 ppb bis 100 ppm, oder von 1 ppb bis 1 ppm, oder von 10 ppb bis 500 ppb, oder von 10 ppb bis 200 ppb, besonders bevorzugt von 1 ppb bis 80 ppb;

[I] Metallgehalt von Metallen, die von Aluminium verschieden sind, von weniger als 1000 ppb, bevorzugt in einem Bereich von 1 bis 900 ppb, zum Beispiel in einem Bereich von 1 bis 700 ppb, besonders bevorzugt in einem Bereich von 1 bis 500 ppb;

[J] eine Restfeuchte von weniger als 10 Gew.-%, bevorzugt in einem Bereich von 0,01 Gew.-% bis 5 Gew.-%, zum Beispiel von 0,02 bis 1 Gew.-%, besonders bevorzugt von 0,03 bis 0,5 Gew.-%; wobei die Gew.-%, ppm und ppb jeweils auf das Gesamtgewicht des Siliziumdioxidgranulats I bezogen sind.

Unter dem OH-Gehalt, auch Hydroxygruppengehalt, wird der Gehalt an OH-Gruppen in einem Material, zum Beispiel in Siliziumdioxidpulver, in Siliziumdioxidgranulat oder in einem Quarzglaskörper, verstanden. Der Gehalt an OH-Gruppen wird spektroskopisch nach im Infrarot durch Vergleich der ersten und der dritten OH-Bande bestimmt.

Unter dem Chlorgehalt wird der Gehalt an elementarem Chlor oder Chlorid-Ionen in dem Siliziumdioxidgranulat, dem Siliziumdioxidpulver oder dem Quarzglaskörper verstanden.

Unter dem Aluminiumgehalt wird der Gehalt an elementarem Aluminium oder Aluminium-Ionen in dem Siliziumdioxidgranulat, dem Siliziumdioxidpulver oder dem Quarzglaskörper verstanden.

Bevorzugt weist das Siliziumdioxidgranulat I einen Mikroporenanteil in einem Bereich von 4 bis 5 $m^2$/g auf; zum Beispiel in einem Bereich von 4,1 bis 4,9 $m^2$/g; besonders bevorzugt in einem Bereich von 4,2 bis 4,8 $m^2$/g.

Das Siliziumdioxidgranulat I weist bevorzugt eine Dichte in einem Bereich von 2,1 bis 2,3 g/$cm^3$, besonders bevorzugt in einem Bereich von 2,18 bis 2,22 g/$cm^3$ auf.

Unter einer Partikelgröße wird die Größe der aus den Primärpartikeln zusammengelagerten Teilchen verstanden, die in einem Siliziumdioxidpulver, in einer Aufschlämmung oder in einem Siliziumdioxidgranulat vorliegen.

Unter einer mittleren Partikelgröße wird der arithmetische Mittelwert aller Partikelgrößen des genannten Stoffes verstanden. Der $D_{50}$-Wert gibt an, dass 50 % der Partikel, bezogen auf die gesamte Teilchenzahl, kleiner als der angegebene Wert sind. Der $D_{10}$-Wert gibt an, dass 10 % der Partikel, bezogen auf die gesamte Teilchenzahl, kleiner als der angegebene Wert sind. Der $D_{90}$-Wert gibt an, dass 90 % der Partikel, bezogen auf die gesamte Teilchenzahl, kleiner als der angegebene Wert sind. Die Partikelgröße wird mittels dynamischem Bildanalyseverfahren nach ISO 13322-2:2006-11 bestimmt.

Das Siliziumdioxidgranulat I weist bevorzugt eine Partikelgröße $D_{50}$ in einem Bereich von 150 bis 300 $\mu$m, zum Beispiel in einem Bereich von 180 bis 280 $\mu$m, besonders bevorzugt in einem Bereich von 220 bis 270 $\mu$m. Weiterhin bevorzugt weist das Siliziumdioxidgranulat I eine Partikelgröße $D_{10}$ in einem Bereich von 50 bis 150 $\mu$m auf, zum Beispiel in einem Bereich von 80 bis 150 $\mu$m, besonders bevorzugt in einem Bereich von 100 bis 150 $\mu$m auf. Weiterhin bevorzugt weist das Siliziumdioxidgranulat I eine Partikelgröße $D_{90}$ in einem Bereich von 250 bis 620 $\mu$m, zum Beispiel in einem Bereich von 280 bis 550 $\mu$m, besonders bevorzugt in einem Bereich von 300 bis 450 $\mu$m auf.

Das Siliziumdioxidgranulat I weist bevorzugt die Merkmalskombination [A]/[B]/[C] oder [A]/[B]/[E] oder [A]/[B]/[G] auf, weiter bevorzugt die Merkmalskombination [A]/[B]/[C]/[E] oder [A]/[B]/[C]/[G] oder [A]/[B]/[E]/[G], besonders bevorzugt die Merkmalskombination [A]/[B]/[C]/[E]/[G].

Das Siliziumdioxidgranulat I weist bevorzugt die Merkmalskombination [A]/[B]/[C] auf, wobei die BET-Oberfläche in einem Bereich von 20 bis 40 $m^2$/g, die mittlere Partikelgröße in einem Bereich von 180 bis 300 $\mu$m und die Schüttdichte in einem Bereich von 0,6 bis 1,1 g/mL liegt.

Das Siliziumdioxidgranulat I weist bevorzugt die Merkmalskombination [A]/[B]/[E] auf, wobei die BET-Oberfläche in einem Bereich von 20 bis 40 $m^2$/g, die mittlere Partikelgröße in einem Bereich von 180 bis 300 $\mu$m und der Aluminiumgehalt in einem Bereich von 1 bis 50 ppb liegt.

Das Siliziumdioxidgranulat I weist bevorzugt die Merkmalskombination [A]/[B]/[G] auf, wobei die BET-Oberfläche in einem Bereich von 20 bis 40 $m^2$/g, die mittlere Partikelgröße in einem Bereich von 180 bis 300 $\mu$m und das Porenvolumen in einem Bereich von 0,2 bis 0,8 mL/g liegt.

Das Siliziumdioxidgranulat I weist bevorzugt die Merkmalskombination [A]/[B]/[C]/[E] auf, wobei die BET-Oberfläche in einem Bereich von 20 bis 40 $m^2$/g, die mittlere Partikelgröße in einem Bereich von 180 bis 300 $\mu$m, die Schüttdichte in einem Bereich von 0,6 bis 1,1 g/mL und der Aluminiumgehalt in einem Bereich von 1 bis 50 ppb liegt.

Das Siliziumdioxidgranulat I weist bevorzugt die Merkmalskombination [A]/[B]/[C]/[G] auf, wobei die BET-Oberfläche in einem Bereich von 20 bis 40 $m^2$/g, die mittlere Partikelgröße in einem Bereich von 180 bis 300 $\mu$m, die Schüttdichte in einem Bereich von 0,6 bis 1,1 g/mL und das Porenvolumen in einem Bereich von 0,2 bis 0,8 mL/g liegt.

Das Siliziumdioxidgranulat I weist bevorzugt die Merkmalskombination [A]/[B]/[E]/[G] auf, wobei die BET-Oberfläche in einem Bereich von 20 bis 40 $m^2$/g, die mittlere Partikelgröße in einem Bereich von 180 bis 300 $\mu$m, der Aluminiumgehalt in einem Bereich von 1 bis 50 ppb und das Porenvolumen in einem Bereich von 0,2 bis 0,8 mL/g liegt.

Das Siliziumdioxidgranulat I weist bevorzugt die Merkmalskombination [A]/[B]/[C]/[E]/[G] auf, wobei die BET-Oberfläche in einem Bereich von 20 bis 40 $m^2$/g, die mittlere Partikelgröße in einem Bereich von 180 bis 300 $\mu$m, die Schüttdichte in einem Bereich von 0,6 bis 1,1 g/mL, der Aluminiumgehalt in einem Bereich von 1 bis 50 ppb und das Porenvolumen in einem Bereich von 0,2 bis 0,8 mL/g liegt.

Optionale Behandlungen des Granulats

Bevorzugt kann das Siliziumdioxidgranulat I einer thermischen, mechanischen oder chemischen Behandlung oder einer Kombination aus zwei oder mehr Behandlungen unterworfen werden, wobei ein Siliziumdioxidgranulat II erhalten wird.

a. chemisch

Gemäß einer bevorzugten Ausführungsform des ersten Gegenstands der Erfindung weist das Siliziumdioxidgranulat I einen Kohlenstoffgehalt $w_{C(1)}$ auf. Der Kohlenstoffgehalt $w_{C(1)}$ beträgt bevorzugt weniger als 50 ppm, zum Beispiel im Bereich von weniger als 40 ppm oder von weniger 30 ppm, besonders bevorzugt in einem Bereich von 1 ppb bis 20 ppm, jeweils auf das Gesamtgewicht des Siliziumdioxidgranulats I bezogen.

Gemäß einer bevorzugten Ausführungsform des ersten Gegenstands der Erfindung beinhaltet das Siliziumdioxidgranulat I mindestens zwei Teilchen. Bevorzugt können die mindestens zwei Teilchen eine Relativbewegung zueinander ausführen. Als Maßnahmen zum Erzeugen der Relativbewegung kommen prinzipiell alle dem Fachmann bekannten und geeignet erscheinenden Maßnahmen in Betracht. Insbesondere bevorzugt ist ein Mischen. Ein Mischen kann prinzipiell in beliebiger Weise durchgeführt werden. Bevorzugt wird hierfür ein Durchlaufofen ausgewählt. Dementsprechend können die mindestens zwei Teilchen bevorzugt eine Relativbewegung zueinander ausführen, indem sie in einem Durchlaufofen, zum Beispiel einem Drehrohrofen, bewegt werden.

Unter Durchlauföfen werden Öfen verstanden, bei denen das Be- und Entladen des Ofens, die sogenannte Chargierung, kontinuierlich erfolgt. Beispiele für Durchlauföfen sind Drehrohröfen, Rollenöfen, Förderbandöfen, Durchfahröfen, Durchstoßöfen. Bevorzugt werden zur Behandlung des Siliziumdioxidgranulats I Drehrohröfen verwendet.

Gemäß einer bevorzugten Ausführungsform des ersten Gegenstands der Erfindung wird das Siliziumdioxidgranulat I mit einem Reaktanden unter Erhalt eines Siliziumdioxidgranulats II behandelt. Das Behandeln wird durchgeführt, um die Konzentration bestimmter Stoffe im Siliziumdioxidgranulat zu verändern. Das Siliziumdioxidgranulat I kann Verunreinigungen oder bestimmte Funktionalitäten aufweisen, deren Anteil verringert werden soll, wie zum Beispiel: OH-Gruppen, kohlenstoffhaltige Verbindungen, Übergangsmetalle, Alkalimetalle und Erdalkalimetalle. Die Verunreinigungen und Funktionalitäten können aus dem Ausgangsmaterial stammen oder im Laufe des Verfahrens eingetragen werden. Die Behandlung des Siliziumdioxidgranulats I kann verschiedenen Zwecken dienen. Zum Beispiel kann der Einsatz von behandeltem Siliziumdioxidgranulat I, also Siliziumdioxidgranulat II, die Verarbeitung des Siliziumdioxidgranulats zu Quarzglaskörpern vereinfachen. Ferner können durch diese Auswahl die Eigenschaften der resultierenden Quarzglaskörper angepasst sein. Zum Beispiel kann das Siliziumdioxidgranulat I gereinigt oder oberflächenmodifiziert werden. Die Behandlung des Siliziumdioxidgranulats I kann also eingesetzt werden, um die Eigenschaften der resultierenden Quarzglaskörper zu verbessern.

Bevorzugt eignen sich als Reaktand ein Gas oder eine Kombination mehrerer Gase. Diese wird auch als Gasgemisch bezeichnet. Prinzipiell können alle dem Fachmann bekannten Gase eingesetzt werden, die für die genannte Behandlung bekannt sind und geeignet erscheinen. Bevorzugt wird ein Gas ausgewählt aus der Gruppe bestehend aus HCl, $Cl_2$, $F_2$, $O_2$, $O_3$, $H_2$, $C_2F_4$, $C_2F_6$, $HClO_4$, Luft, Inertgas, z.B. $N_2$, He, Ne, Ar, Kr, oder Kombinationen aus zwei oder mehr davon eingesetzt. Bevorzugt erfolgt die Behandlung in Anwesenheit eines Gases oder einer Kombination aus zwei oder mehr als Gasen. Bevorzugt erfolgt die Behandlung in einem Gasgegenstrom, oder in einem Gasgleichstrom.

Bevorzugt ist der Reaktand ausgewählt aus der Gruppe bestehend aus HCl, $Cl_2$, $F_2$, $O_2$, Os oder Kombinationen von zwei oder mehr davon. Bevorzugt werden Gemische von zwei oder mehr der zuvor genannten Gase zum Behandeln von Siliziumdioxidgranulat I verwendet. Durch die Anwesenheit von F, Cl oder beiden können Metalle, die als Verunreinigungen im Siliziumdioxidgranulat I enthalten sind, wie zum Beispiel Übergangsmetalle, Alkalimetalle und Erdalkalimetalle, entfernt werden. Dabei können die vorgenannten Metalle mit Bestandteilen des Gasgemischs unter den Verfahrensbedingungen gasförmige Verbindungen eingehen, die anschließend ausgetragen werden und so nicht mehr im Granulat vorliegen. Weiter bevorzugt kann der OH-Gehalt in dem Siliziumdioxidgranulat I durch die Behandlung des Siliziumdioxidgranulats I mit diesen Gasen verringert werden.

Bevorzugt wird als Reaktand ein Gasgemisch von HCl und $Cl_2$ eingesetzt. Bevorzugt weist das Gasgemisch einen Gehalt an HCl in einem Bereich von 1 bis 30 Vol.-%, beispielsweise in einem Bereich von 2 bis 15 Vol.-%, besonders bevorzugt in einem Bereich von 3 bis 10 Vol.-% auf. Ebenfalls bevorzugt weist das Gasgemisch einen Gehalt an $Cl_2$ in einem Bereich von 20 bis 70 Vol.-%, beispielsweise in einem Bereich von 25 bis 65 Vol.-%, besonders bevorzugt in einem Bereich von 30 bis 60 Vol.-% auf. Der Rest zu 100 Vol.-% kann durch ein oder mehrere Inertgase, z.B. $N_2$, He, Ne, Ar, Kr, oder durch Luft ergänzt werden. Bevorzugt liegt der Anteil an Inertgas in Reaktanden in einem Bereich von 0 bis weniger als 50 Vol.-%, zum Beispiel in einem Bereich von 1 bis 40 Vol.-% oder von 5 bis 30 Vol.-%, besonders bevorzugt in einem Bereich von 10 bis 20 Vol.-%, jeweils bezogen auf das Gesamtvolumen des Reaktanden.

$O_2$, $C_2F_2$, oder Mischungen davon mit $Cl_2$ werden bevorzugt zur Reinigung von Siliziumdioxidgranulat I verwendet, das aus einem Siloxan oder eines Gemischs mehrerer Siloxane hergestellt wurde.

Der Reaktand in Form eines Gases oder Gasgemisches wird bevorzugt als Gasstrom oder als Teil eines Gasstroms mit einem Durchsatz in einem Bereich von 50 bis 2000 L/h, beispielsweise in einem Bereich von 100 bis 1000 L/h, besonders bevorzugt in einem Bereich von 200 bis 500 L/h mit dem Siliziumdioxidgranulat kontaktiert. Eine bevorzugte Ausgestaltung des Kontaktierens ist ein Kontakt von Gasstrom und Siliziumdioxidgranulat in einem Durchlaufofen, zum Beispiel einem Drehrohrofen. Eine andere bevorzugte Ausgestaltung des Kontaktierens ist ein Wirbelschichtverfahren (fluidized bed).

Durch das Behandeln des Siliziumdioxidgranulats I mit dem Reaktanden wird ein Siliziumdioxidgranulat II mit einem Kohlenstoffgehalt $w_{C(2)}$ erhalten. Der Kohlenstoffgehalt $w_{C(2)}$ des Siliziumdioxidgranulats II ist kleiner als der Kohlenstoffgehalt $w_{C(1)}$ des Siliziumdioxidgranulats I, bezogen auf das Gesamtgewicht des jeweiligen Siliziumdioxidgranulats. Bevorzugt ist $w_{C(2)}$ um 0,5 bis 99 %, beispielsweise um 20 bis 80 % oder 50 bis 95 %, besonders bevorzugt um 60 bis 99 % kleiner als $w_{C(1)}$.

b. thermisch

Bevorzugt wird das Siliziumdioxidgranulat vor dem Bilden einer Glasschmelze zusätzlich einer thermischen oder mechanischen Behandlung oder einer Kombination dieser Behandlungen unterworfen. Eine oder mehrere dieser zusätzlichen Behandlungen können vor oder während der Behandlung mit dem Reaktanden erfolgen. Alternativ oder ergänzend kann die zusätzliche Behandlung auch am Siliziumdioxidgranulat II durchgeführt werden. Die im Folgenden verwendete allgemeine Bezeichnung "Siliziumdioxidgranulat" beinhaltet die Alternativen "Siliziumdioxidgranulat I" und "Siliziumdioxidgranulat II". Ebenso ist es möglich, die nachfolgend beschriebenen Behandlungen sowohl am "Siliziumdioxidgranulat I", als auch am behandelten Siliziumdioxidgranulat I, dem "Siliziumdioxidgranulat II", durchzuführen. Bevorzugt erfolgt eine solche thermische Behandlung im Nachgang zu einer wie zuvor beschriebenen chemischen Behandlung.

Die Behandlung des Siliziumdioxidgranulats kann verschiedenen Zwecken dienen. Zum Beispiel erleichtert diese Behandlung die Verarbeitung des Siliziumdioxidgranulats zu Quarzglaskörpern. Die Behandlung kann auch die Eigenschaften der resultierenden Quarzglaskörper beeinflussen. Zum Beispiel kann das Siliziumdioxidgranulat verdichtet, gereinigt, oberflächenmodifiziert oder getrocknet werden. Dabei kann sich die spezifische Oberfläche (BET) verringern. Ebenso können die Schüttdichte und die mittlere Partikelgröße aufgrund von Agglomerationen von Siliziumdioxidpartikeln zunehmen. Die thermische Behandlung kann dynamisch oder statisch durchgeführt werden.

Für die dynamisch thermische Behandlung eignen sich prinzipiell alle Öfen, in denen das Siliziumdioxidgranulat thermisch behandelt und dabei bewegt werden kann. Für die dynamisch thermische Behandlung werden bevorzugt Durchlauföfen verwendet.

Eine bevorzugte mittlere Verweilzeit des Siliziumdioxidgranulats bei der dynamisch thermischen Behandlung ist mengenabhängig. Bevorzugt liegt die mittlere Verweilzeit des Siliziumdioxidgranulats bei der dynamisch thermischen Behandlung im Bereich von 10 bis 180 min, zum Beispiel im Bereich von 20 bis 120 min oder von 30 bis 90 min. Besonders bevorzugt liegt die mittlere Verweilzeit des Siliziumdioxidgranulats bei der dynamisch thermischen Behandlung im Bereich von 30 bis 90 min.

Im Fall eines kontinuierlichen Verfahrens gilt zur Bestimmung der Verweilzeit als eine Charge eine definierte Portion eines Stroms an Siliziumdioxidgranulat, z.B. ein Gramm, ein Kilogramm oder eine Tonne. Beginn und Ende des Verweilens sind hier durch Ein- und Ausführen aus dem kontinuierlichen Ofenbetrieb bestimmt.

Bevorzugt liegt der Durchsatz des Siliziumdioxidgranulats bei einem kontinuierlichen Verfahren zur dynamisch thermischen Behandlung im Bereich von 1 bis 50 kg/h, zum Beispiel im Bereich von 5 bis 40 kg/h oder von 8 bis 30 kg/h. Besonders bevorzugt liegt der Durchsatz hier im Bereich von 10 bis 20 kg/h.

Im Falle eines diskontinuierlichen Verfahrens zur dynamisch thermischen Behandlung ergibt sich die Behandlungszeit aus dem Zeitraum zwischen einem Beladen und anschließendem Entladen des Ofens.

Im Falle eines diskontinuierlichen Verfahrens zur dynamisch thermischen Behandlung beträgt der Durchsatz in einem Bereich von 1 bis 50 kg/h, zum Beispiel im Bereich von 5 bis 40 kg/h oder von 8 bis 30 kg/h. Besonders bevorzugt beträgt der Durchsatz im Bereich von 10 bis 20 kg/h. Der Durchsatz kann durch eine Charge einer bestimmten Menge, die eine Stunde lang behandelt wird, erreicht werden. Gemäß einer anderen Ausführungsform kann der Durchsatz erreicht werden durch eine Anzahl von Chargen pro Stunde, wobei zum Beispiel die Menge einer Charge dem Durchsatz pro Stunde durch die Anzahl der Chargen entspricht. Die Behandlungszeit entspricht dann dem Bruchteil einer Stunde, der sich aus 60 Minuten durch die Anzahl der Chargen pro Stunde ergibt.

Bevorzugt erfolgt die dynamisch thermische Behandlung des Siliziumdioxidgranulats bei einer Ofentemperatur von mindestens 500°C, zum Beispiel im Bereich von 510 bis 1700°C oder von 550 bis 1500°C oder von 580 bis 1300°C, besonders bevorzugt im Bereich von 600 bis 1200°C.

In der Regel hat der Ofen in der Ofenkammer die angegebene Temperatur. Bevorzugt weicht diese Temperatur um weniger als 10 % von der angegebenen Temperatur nach oben oder unten ab, bezogen auf die gesamte Behandlungszeit und die gesamte Länge des Ofens sowohl zu jedem Zeitpunkt der Behandlung als auch an jeder Stelle des Ofens.

Alternativ kann insbesondere das kontinuierliche Verfahren einer dynamisch thermischen Behandlung des Siliziumdioxidgranulats bei unterschiedlichen Ofentemperaturen erfolgen. Beispielsweise kann der Ofen über die Behandlungszeit eine konstante Temperatur aufweisen, wobei die Temperatur über die Länge des Ofens in Abschnitten variiert. Solche Abschnitte können gleich lang oder unterschiedlich lang sein. Bevorzugt ist in diesem Fall eine vom Eingang des Ofens zum Ausgang des Ofens hin zunehmende Temperatur. Bevorzugt ist die Temperatur am Eingang um wenigstens 100°C niedriger als am Ausgang, zum Beispiel 150°C niedriger oder 200°C niedriger oder 300°C niedriger oder 400°C niedriger. Weiter bevorzugt beträgt die Temperatur am Ausgang bevorzugt mindestens 500°C, zum Beispiel im Bereich von 510 bis 1700°C oder von 550 bis 1500°C oder von 580 bis 1300°C, besonders bevorzugt im Bereich von 600 bis 1200°C. Weiter bevorzugt beträgt die Temperatur am Eingang bevorzugt mindestens 300°C, zum Beispiel von 400 bis 1000°C oder von 450 bis 900°C oder von 500 bis 800°C oder von 550 bis 750°C, besonders bevorzugt von 600 bis 700°C. Weiter kann jeder der genannten Temperaturbereiche am Ofeneingang mit jedem der genannten Temperaturbereiche am Ofenausgang kombiniert werden. Bevorzugte Kombinationen von Ofeneingangs- und Ofenausgangtemperaturbereichen sind:

| Bereich Ofeneingangstemperatur [°C] | Bereich Ofenausgangstemperatur [°C] |
|---|---|
| 400 - 1000 | 510 - 1300 |

(fortgesetzt)

| Bereich Ofeneingangstemperatur [°C] | Bereich Ofenausgangstemperatur [°C] |
|---|---|
| 450 - 900 | 550 - 1260 |
| 480 - 850 | 580 - 1200 |
| 500 - 800 | 600 - 1100 |
| 530 - 750 | 630 - 1050 |

Für die statisch thermische Behandlung des Siliziumdioxidgranulats werden bevorzugt in einem Ofen angeordnete Tiegel verwendet. Als Tiegel eignen sich Sintertiegel oder Blechtiegel. Bevorzugt sind Walzblechtiegel aus mehreren, miteinander vernieteten Platten. Als Tiegelmaterial sind beispielsweise Refraktärmetalle, insbesondere Wolfram, Molybdän und Tantal. Die Tiegel können ferner aus Graphit gebildet sein oder im Falle der Tiegel aus Refraktärmetallen mit Graphitfolie ausgeschlagen sein. Weiter bevorzugt können die Tiegel aus Siliziumdioxid gebildet sein. Besonders bevorzugt werden Siliziumdioxidtiegel eingesetzt.

Die mittlere Verweilzeit des Siliziumdioxidgranulats bei der statisch thermischen Behandlung ist mengenabhängig. Bevorzugt liegt die mittlere Verweilzeit des Siliziumdioxidgranulats bei der statisch thermischen Behandlung bei einer Menge von 20 kg Siliziumdioxidgranulat I im Bereich von 10 bis 180 min, zum Beispiel im Bereich von 20 bis 120 min, besonders bevorzugt im Bereich von 30 bis 90 min.

Bevorzugt erfolgt die statisch thermische Behandlung des Siliziumdioxidgranulats bei einer Ofentemperatur von mindestens 800°C, zum Beispiel im Bereich von 900 bis 1700°C oder von 950 bis 1600°C oder von 1000 bis 1500°C oder von 1050 bis 1400°C, besonders bevorzugt im Bereich von 1100 bis 1300°C.

Bevorzugt erfolgt die statisch thermische Behandlung des Siliziumdioxidgranulats I bei konstanter Ofentemperatur. Die statisch thermische Behandlung kann auch bei einer variierenden Ofentemperatur erfolgen. Bevorzugt nimmt in diesem Fall die Temperatur im Laufe der Behandlung zu, wobei die Temperatur zu Beginn der Behandlung um wenigstens 50°C niedriger ist als am Ende, zum Beispiel 70°C niedriger oder 80°C niedriger oder 100°C niedriger oder 110°C niedriger, und wobei die Temperatur am Ende bevorzugt mindestens 800°C, zum Beispiel im Bereich von 900 bis 1700°C oder von 950 bis 1600°C oder von 1000 bis 1500°C oder von 1050 bis 1400°C, besonders bevorzugt im Bereich von 1100 bis 1300°C beträgt.

c. mechanisch

Gemäß einer weiteren bevorzugten Ausführungsform kann das Siliziumdioxidgranulat vor dem Bilden einer Glasschmelze mechanisch behandelt werden. Die mechanische Behandlung kann zum Erhöhen der Schüttdichte durchgeführt werden. Die mechanische Behandlung kann im Anschluss an die zuvor beschriebene thermische Behandlung durchgeführt werden. Mittels einer mechanischen Behandlung kann vermieden werden, dass die Agglomerate im Siliziumdioxidgranulat und damit die mittlere Partikelgröße der einzelnen, behandelten Siliziumdioxidgranulen im Siliziumdioxidgranulat zu groß werden. Eine Vergrößerung der Agglomerate kann die Weiterverarbeitung erschweren oder nachteilige Auswirkungen auf die Eigenschaften der mit dem erfindungsgemäßen Verfahren hergestellten Quarzglaskörper haben, oder eine Kombination beider Effekte bedeuten. Eine mechanische Behandlung des Siliziumdioxidgranulats fördert zudem einen gleichmäßigen Kontakt der Oberflächen der einzelnen Siliziumdioxidgranulen mit dem Gas oder den Gasen. Dies wird insbesondere bei einer Kombination aus gleichzeitiger mechanischer und chemischer Behandlung mit einem oder mehreren Gasen erreicht. Dadurch kann die Wirkung der chemischen Behandlung verbessert werden.

Die mechanische Behandlung des Siliziumdioxidgranulats kann durch Bewegen von zwei oder mehr Siliziumdioxidgranulen in einer Relativbewegung zueinander erfolgen, beispielsweise durch das Drehen des Rohrs eines Drehrohrofens.

Bevorzugt wird das Siliziumdioxidgranulat I chemisch, thermisch und mechanisch behandelt. Dies kann in Bezug auf die Behandlungen gleichzeitig, nacheinander oder überlappend erfolgen. Überlappend bedeutet, dass eine Behandlung noch nicht abgeschlossen ist, bevor die nächste beginnt. Kriterium für die Beurteilung der zeitlichen Abfolge sind die Maßnahmen an einer Charge Siliziumdioxidgranulat, nicht etwa die Betriebszeiten einzelner Prozesse insgesamt. Besonders erfolgt eine gleichzeitige chemische, thermische und mechanische Behandlung des Siliziumdioxidgranulats I.

Bei der chemischen Behandlung wird der Gehalt an Verunreinigungen im Siliziumdioxidgranulat I verringert. Dazu kann das Siliziumdioxidgranulat I in einem Drehrohrofen bei erhöhter Temperatur unter chlor- und sauerstoffhaltiger Atmosphäre behandelt werden. Im Siliziumdioxidgranulat I vorliegendes Wasser verdampft, organische Materialien reagieren zu CO und $CO_2$. Metallverunreinigungen können zu flüchtigen, chlorhaltigen Verbindungen konvertiert werden.

Bevorzugt wird das Siliziumdioxidgranulat I in einer chlor- und sauerstoffhaltigen Atmosphäre in einem Drehrohrofen bei einer Temperatur von mindestens 500°C, bevorzugt in einem Temperaturbereich von 550 bis 1300°C oder von 600 bis 1260°C oder von 650 bis 1200°C oder von 700 bis 1000°C, besonders bevorzugt in einem Temperaturbereich von 700 bis 900°C behandelt. Die chlorhaltige Atmosphäre enthält beispielsweise HCl oder $Cl_2$ oder eine Kombination aus beiden. Diese Behandlung bewirkt eine Reduzierung des Kohlenstoffgehalts.

Ferner werden bevorzugt Alkali- und Eisenverunreinigungen reduziert. Bevorzugt wird zudem eine Verringerung der Anzahl an OH-Gruppen erreicht. Bei Temperaturen unterhalb von 700°C können sich lange Behandlungsdauern ergeben, bei Temperaturen oberhalb von 1 100°C besteht die Gefahr, dass sich Poren des Granulats unter Einschluss von Chlor oder gasförmigen Chlorverbindungen schließen.

d. kombinierte Behandlung

Bevorzugt ist es auch möglich, mehrere chemische Behandlungsschritte bei jeweils gleichzeitiger thermischer und mechanischer Behandlung nacheinander durchzuführen. Beispielsweise kann das Siliziumdioxidgranulat I erst in einer chlorhaltigen Atmosphäre und anschließend in einer sauerstoffhaltigen Atmosphäre behandelt werden. Daraus resultierende niedrige Konzentrationen an Kohlenstoff, Hydroxylgruppen und Chlor erleichtern das Einschmelzen.

Gemäß einer weiteren bevorzugten Ausführungsform wird die Vorbehandlung des Siliziumdioxidgranulats vor dem Bilden einer Glasschmelze durch mindestens eines, zum Beispiel durch mindestens zwei oder mindestens drei, besonders bevorzugt durch eine Kombination von allen der folgenden Merkmale gekennzeichnet:

N1) der Reaktand beinhaltet HCl, $Cl_2$ oder eine Kombination davon;
N2) die Behandlung wird in einem Drehrohrofen durchgeführt;
N3) Die Behandlung wird bei einer Temperatur in einem Bereich von 600 bis 900°C durchgeführt;
N4) der Reaktand bildet einen Gegenstrom;
N5) der Reaktand weist einen Gasstrom in einem Bereich von 50 bis 2000 L/h, bevorzugt 100 bis 1000 L/h, besonders bevorzugt 200 bis 500 L/h auf;
N6) der Reaktand weist einen Volumenanteil an Inertgas in einem Bereich von 0 bis weniger als 50 Vol.-%.

Das so erhaltene Siliziumdioxidgranulat wird wie bereits erwähnt auch als Siliziumdioxidgranulat II bezeichnet. Besonders bevorzugt wird das Siliziumdioxidgranulat II aus dem Siliziumdioxidgranulat I in einem Drehrohrofen mittels einer Kombination aus thermischer, mechanischer und chemischer Behandlung erhalten.

Das Siliziumdioxidgranulat II kann eines oder mehrere der folgenden Merkmale aufweisen:

(A) eine BET-Oberfläche im Bereich von 10 bis 35 $m^2$/g, zum Beispiel in einem Bereich von 10 bis 30 $m^2$/g, besonders bevorzugt in einem Bereich von 20 bis 30 $m^2$/g; und
(B) eine mittlere Partikelgröße in einem Bereich von 100 bis 300 $\mu$m auf, zum Beispiel in einem Bereich von 150 bis 280 $\mu$m oder von 200 bis 270 $\mu$m, besonders bevorzugt in einem Bereich von 230 bis 260 $\mu$m.
(C) eine Schüttdichte in einem Bereich von 0,7 bis 1,2 g/$cm^3$, zum Beispiel in einem Bereich von 0,75 bis 1,1 g/$cm^3$, besonders bevorzugt in einem Bereich von 0,8 bis 1,0 g/$cm^3$;
(D) einen Kohlenstoffgehalt von weniger als 5 ppm, zum Beispiel weniger als 4,5 ppm oder in einem Bereich von 1 ppb bis 4 ppm, besonders bevorzugt von weniger als 4 ppm;
(E) einen Aluminiumgehalt von weniger als 200 ppb, zum Beispiel von weniger als 150 ppb oder von weniger als 100 ppb oder von 1 bis 150 ppb oder von 1 bis 100 ppb, besonders bevorzugt in einem Bereich von 1 bis 80 ppb;
(F) Stampfdichte in einem Bereich von 0,7 bis 1,2 g/$cm^3$, zum Beispiel in einem Bereich von 0,75 bis 1,1 g/$cm^3$, besonders bevorzugt in einem Bereich von 0,8 bis 1,0 g/$cm^3$;
(G) ein Porenvolumen in einem Bereich von 0,1 bis 2,5 mL/g, zum Beispiel in einem Bereich von 0,2 bis 1,5 mL/g; besonders bevorzugt in einem Bereich von 0,4 bis 1 mL/g;
(H) einen Chlorgehalt von weniger als 500 ppm, bevorzugt von weniger als 400 ppm, zum Beispiel weniger als 350 ppm oder bevorzugt von weniger als 330 ppm oder in einem Bereich von 1 ppb bis 500 ppm oder von 10 ppb bis 450 ppm besonders bevorzugt von 50 ppb bis 300 ppm;
(I) einen Metallgehalt von Metallen, die von Aluminium verschieden sind, von weniger als 1000 ppb, zum Beispiel in einem Bereich von 1 bis 400 ppb, besonders bevorzugt in einem Bereich von 1 bis 200 ppb;
(J) eine Restfeuchte von weniger als 3 Gew.-%, zum Beispiel in einem Bereich von 0,001 Gew.-% bis 2 Gew.-%, besonders bevorzugt von 0,01 bis 1 Gew.-%,

wobei die Gew.-%, ppm und ppb jeweils auf das Gesamtgewicht des Siliziumdioxidgranulats II bezogen sind.

Bevorzugt weist das Siliziumdioxidgranulat II einen Mikroporenanteil in einem Bereich von 1 bis 2 $m^2$/g zum Beispiel in einem Bereich von 1,2 bis 1,9 $m^2$/g, besonders bevorzugt in einem Bereich von 1,3 bis 1,8 $m^2$/g auf.

Das Siliziumdioxidgranulat II weist bevorzugt eine Dichte in einem Bereich von 0,5 bis 2,0 g/cm$^3$, zum Beispiel von 0,6 bis 1,5 g/cm$^3$, besonders bevorzugt von 0,8 bis 1,2 g/cm$^3$ auf. Die Dichte wird entsprechend der in den Testmethoden beschriebenen Methode bestimmt.

Das Siliziumdioxidgranulat II weist bevorzugt eine Partikelgröße D$_{50}$ in einem Bereich von 150 bis 250 μm, zum Beispiel in einem Bereich von 180 bis 250 μm, besonders bevorzugt in einem Bereich von 200 bis 250 μm. Weiterhin bevorzugt weist das Siliziumdioxidgranulat II eine Partikelgröße D$_{10}$ in einem Bereich von 50 bis 150 μm auf, zum Beispiel in einem Bereich von 80 bis 150 μm, besonders bevorzugt in einem Bereich von 100 bis 150 μm auf. Weiterhin bevorzugt weist das Siliziumdioxidgranulat II eine Partikelgröße D$_{90}$ in einem Bereich von 250 bis 450 μm, zum Beispiel in einem Bereich von 280 bis 420 μm, besonders bevorzugt in einem Bereich von 300 bis 400 μm auf.

Das Siliziumdioxidgranulat II weist bevorzugt die Merkmalskombination (A)/(B)/(D) oder (A)/(B)/(F) oder (A)/(B)/(I) auf, weiter bevorzugt die Merkmalskombination (A)/(B)/(D)/(F) oder (A)/(B)/(D)/(I) oder (A)/(B)/(F)/(I), besonders bevorzugt die Merkmalskombination (A)/(B)/(D)/(F)/(I).

Das Siliziumdioxidgranulat II weist bevorzugt die Merkmalskombination (A)/(B)/(D) auf, wobei die BET-Oberfläche in einem Bereich von 10 bis 30 m$^2$/g liegt, die mittlere Partikelgröße in einem Bereich von 150 bis 280 μm liegt und der Kohlenstoffgehalt weniger als 4 ppm beträgt.

Das Siliziumdioxidgranulat II weist bevorzugt die Merkmalskombination (A)/(B)/(F) auf, wobei die BET-Oberfläche in einem Bereich von 10 bis 30 m$^2$/g, die mittlere Partikelgröße in einem Bereich von 150 bis 280 μm und die Stampfdichte in einem Bereich von 0,8 bis 1,0 g/mL liegt.

Das Siliziumdioxidgranulat II weist bevorzugt die Merkmalskombination (A)/(B)/(I) auf, wobei die BET-Oberfläche in einem Bereich von 10 bis 30 m$^2$/g, die mittlere Partikelgröße in einem Bereich von 150 bis 280 μm und der Metallgehalt von Metallen, die von Aluminium verschieden sind, in einem Bereich von 1 bis 400 ppb liegt.

Das Siliziumdioxidgranulat II weist bevorzugt die Merkmalskombination (A)/(B)/(D)/(F) auf, wobei die BET-Oberfläche in einem Bereich von 10 bis 30 m$^2$/g liegt, die mittlere Partikelgröße in einem Bereich von 150 bis 280 μm liegt, der Kohlenstoffgehalt weniger als 4 ppm beträgt und die Stampfdichte in einem Bereich von 0,8 bis 1,0 g/mL liegt.

Das Siliziumdioxidgranulat II weist bevorzugt die Merkmalskombination (A)/(B)/(D)/(I) auf, wobei die BET-Oberfläche in einem Bereich von 10 bis 30 m$^2$/g liegt, die mittlere Partikelgröße in einem Bereich von 150 bis 280 μm liegt, der Kohlenstoffgehalt weniger als 4 ppm beträgt und der Metallgehalt von Metallen, die von Aluminium verschieden sind, in einem Bereich von 1 bis 400 ppb liegt.

Das Siliziumdioxidgranulat II weist bevorzugt die Merkmalskombination (A)/(B)/(F)/(I) auf, wobei die BET-Oberfläche in einem Bereich von 10 bis 30 m$^2$/g, die mittlere Partikelgröße in einem Bereich von 150 bis 280 μm, die Stampfdichte in einem Bereich von 0,8 bis 1,0 g/mL und der Metallgehalt von Metallen, die von Aluminium verschieden sind, in einem Bereich von 1 bis 400 ppb liegt.

Das Siliziumdioxidgranulat II weist bevorzugt die Merkmalskombination (A)/(B)/(D)/(F)/(I) auf, wobei die BET-Oberfläche in einem Bereich von 10 bis 30 m$^2$/g liegt, die mittlere Partikelgröße in einem Bereich von 150 bis 280 μm liegt, der Kohlenstoffgehalt weniger als 4 ppm beträgt, die Stampfdichte in einem Bereich von 0,8 bis 1,0 g/mL liegt und der Metallgehalt von Metallen, die von Aluminium verschieden sind, in einem Bereich von 1 bis 400 ppb liegt.

Das Siliziumdioxidgranulat kann - sowohl das Siliziumdioxidgranulat I oder Siliziumdioxidgranulat II, oder beide - weitere Bestandteile, beispielsweise in Form von Molekülen, Ionen oder Elementen beinhalten. Bevorzugt beinhaltet das Siliziumdioxidgranulat weniger als 5 ppm, zum Beispiel weniger als 3 ppm, besonders bevorzugt weniger als 1 ppm, jeweils bezogen auf das Gesamtgewicht des Siliziumdioxidgranulat, an Atomen, die von Si, O, H, C, Cl verschieden sind. Oftmals sind weitere Bestandteile, ausgedrückt als Menge an Atomen, die von Si, O, H, C, Cl verschieden sind, in einer Menge von mindestens 1 ppb enthalten. Die weiteren Bestandteile können insbesondere ausgewählt sein aus der Gruppe bestehend aus Kohlenstoff, Fluorid, Jodid, Bromid, Phosphor oder einer Mischung von mindestens zwei hiervon.

Bevorzugt beinhaltet das Siliziumdioxidgranulat weniger als 10 ppm Kohlenstoff, zum Beispiel weniger als 8 ppm oder weniger als 5 ppm, besonders bevorzugt weniger als 4 ppm, jeweils bezogen auf das Gesamtgewicht des Siliziumdioxidgranulats. Oftmals ist Kohlenstoff in einer Menge von mindestens 1 ppb im Siliziumdioxidgranulat enthalten.

Bevorzugt beinhaltet das Siliziumdioxidgranulat weniger als 100 ppm, zum Beispiel weniger als 80 ppm, besonders bevorzugt weniger als 70 ppm, jeweils bezogen auf das Gesamtgewicht des Siliziumdioxidgranulats, an weiteren Bestandteilen. Oftmals sind die weiteren Bestandteile jedoch in einer Menge von mindestens 1 ppb enthalten.

Vorbehandlungsschritte vor dem Schmelzen

Es ist prinzipiell möglich, das in Schritt v.) gebildete Siliziumdioxidgranulat einem oder mehreren Vorbehandlungsschritten zu unterziehen, bevor es in Schritt vi.) bis zum Erhalt einer Glasschmelze erwärmt wird. Als Vorbehandlungsschritte kommen beispielsweise thermische oder mechanische Behandlungsschritte in Betracht.

a.) Vorverdichten

Zum Beispiel kann das Siliziumdioxidgranulat vor dem Erwärmen im Rahmen von Schritt vi.) verdichtet werden. Unter "Verdichten" wird eine Verringerung der BET-Oberfläche und eine Verringerung des Porenvolumens verstanden.

Das Siliziumdioxidgranulat wird bevorzugt thermisch durch Erhitzen des Siliziumdioxidgranulats oder mechanisch durch Ausüben eines Drucks auf das Siliziumdioxidgranulat, beispielsweise Walzen oder Pressen des Siliziumdioxidgranulats, verdichtet. Bevorzugt wird das Siliziumdioxidgranulat durch Erhitzen verdichtet. Besonders bevorzugt erfolgt das Verdichten des Siliziumdioxidgranulats durch Erhitzen mittels einer mit dem Schmelzofen verbundenen Vorheizstrecke.

Bevorzugt wird das Siliziumdioxid durch Erhitzen bei einer Temperatur in einem Bereich von 800 bis 1400°C, zum Beispiel bei einer Temperatur in einem Bereich von 850 bis 1300°C, besonders bevorzugt bei einer Temperatur in einem Bereich von 900 bis 1200°C verdichtet.

In einer weiteren Ausführungsform wird die BET-Oberfläche des Siliziumdioxidgranulats vor Schritt vi.) nicht auf weniger als 5 $m^2$/g verringert, bevorzugt nicht auf weniger als 7 $m^2$/g oder nicht auf weniger als 10 $m^2$/g, besonders bevorzugt nicht auf weniger als 15 $m^2$/g. Es ist weiterhin bevorzugt, dass die BET-Oberfläche des Siliziumdioxidgranulats vor Schritt vi.) gegenüber dem in Schritt i.) bereitgestellten Siliziumdioxidgranulat nicht verringert wird.

In einer weiteren Ausführungsform wird die BET-Oberfläche des Siliziumdioxidgranulats auf weniger als 20 $m^2$/g verringert, zum Beispiel auf weniger als 15$m^2$/g, oder auf weniger als 10 $m^2$/g, oder auf einen Bereich von mehr als 5 bis weniger als 20 $m^2$/g oder von 7 bis 15 $m^2$/g, besonders bevorzugt auf einen Bereich von 9 bis 12 $m^2$/g. Bevorzugt wird die BET-Oberfläche des Siliziumdioxidgranulats vor Schritt vi.) gegenüber dem in Schritt v.) gebildeten Siliziumdioxidgranulats um weniger als 40 $m^2$/g verringert, zum Beispiel um 1 bis 20 $m^2$/g oder um 2 bis 10 $m^2$/g, besonders bevorzugt um 3 bis 8 $m^2$/g, wobei die BET-Oberfläche nach dem Verdichten mehr als 5 $m^2$/g beträgt.

Das verdichtete Siliziumdioxidgranulat weist bevorzugt mindestens eines, zum Beispiel mindestens zwei oder mindestens drei oder mindestens vier, besonders bevorzugt mindestens fünf der folgenden Merkmale auf:

A. eine BET-Oberfläche in einem Bereich von mehr als 5 bis weniger als 35 $m^2$/g, zum Beispiel von 10 bis 30 $m^2$/g, besonders bevorzugt auf einen Bereich von 15 bis 25 $m^2$/g;

B. eine Partikelgröße $D_{10}$ in einem Bereich von 100 bis 300 $\mu$m, besonders bevorzugt in einem Bereich von 120 bis 200 $\mu$m;

C. eine Partikelgröße $D_{50}$ in einem Bereich von 150 bis 550 $\mu$m, besonders bevorzugt in einem Bereich von 200 bis 350 $\mu$m;

D. eine Partikelgröße $D_{90}$ in einem Bereich von 300 bis 650 $\mu$m, besonders bevorzugt in einem Bereich von 400 bis 500 $\mu$m;

E. eine Schüttdichte in einem Bereich von 0,7 bis 1,6 $g/cm^3$, oder von 0,8 - 1,2 $g/cm^3$, besonders bevorzugt von 1,0 bis 1,4 $g/cm^3$;

F. eine Stampfdichte in einem Bereich von 1,0 bis 1,4 $g/cm^3$, besonders bevorzugt von 1,15 bis 1,35 $g/cm^3$;

G. eine Menge von Kohlenstoff von weniger als 5 ppm, zum Beispiel von weniger als 4,5 ppm, besonders bevorzugt von weniger als 4 ppm;

H. einen Cl-Gehalt von weniger als 500 ppm, besonders bevorzugt von 1 ppb bis 200 ppm,

wobei die ppm und ppb jeweils auf das Gesamtgewicht des verdichteten Siliziumdioxidgranulats bezogen sind.

Das verdichtete Siliziumdioxidgranulat weist bevorzugt die Merkmalskombination A./F./G. oder A./F./H. oder A./G./H. auf, besonders bevorzugt die Merkmalskombination A./F./G./H.

Das verdichtete Siliziumdioxidgranulat weist bevorzugt die Merkmalskombination A./F./G. auf, wobei die BET-Oberfläche in einem Bereich von 10 bis 30 $m^2$/g liegt, die Stampfdichte in einem Bereich von 1,15 bis 1,35 g/mL liegt und der Kohlenstoffgehalt weniger als 4 ppm beträgt.

Das verdichtete Siliziumdioxidgranulat weist bevorzugt die Merkmalskombination A./F./H. auf, wobei die BET-Oberfläche in einem Bereich von 10 bis 30 $m^2$/g, die Stampfdichte in einem Bereich von 1,15 bis 1,35 g/mL und der Chlorgehalt in einem Bereich von 1 ppb bis 200 ppm liegt.

Das verdichtete Siliziumdioxidgranulat weist bevorzugt die Merkmalskombination A./G./H. auf, wobei die BET-Oberfläche in einem Bereich von 10 bis 30 $m^2$/g liegt, der Kohlenstoffgehalt weniger als 4 ppm beträgt und der Chlorgehalt in einem Bereich von 1 ppb bis 200 ppm liegt.

Das verdichtete Siliziumdioxidgranulat weist bevorzugt die Merkmalskombination A./F./G./H. auf, wobei die BET-Oberfläche in einem Bereich von 10 bis 30 $m^2$/g liegt, die Stampfdichte in einem Bereich von 1,15 bis 1,35 g/mL liegt, der Kohlenstoffgehalt weniger als 4 ppm beträgt und der Chlorgehalt in einem Bereich von 1 ppb bis 200 ppm liegt.

b.) Zugabe einer Siliziumverbindung

In mindestens einem Verfahrensschritt des Verfahrens zum Herstellen eines Quarzglaskörpers kann eine von Siliziumdioxid verschiedene Siliziumkomponente zugegeben werden. Die Zugabe einer von Siliziumdioxid verschiedenen Siliziumkomponente wird im Folgenden auch als Si-Dotieren bezeichnet.

Die von Siliziumdioxid verschiedene Siliziumkomponente kann prinzipiell in beliebiger Form zugegeben werden, zum Beispiel als Feststoff, als Flüssigkeit, als Gas, in Lösung oder als Dispersion. Bevorzugt wird die von Siliziumdioxid verschiedene Siliziumkomponente als Pulver zugegeben. Das Pulver beziehungsweise die von Siliziumdioxid verschiedene Siliziumkomponente hat bevorzugt eine mittlere Partikelgröße von bis zu 10 mm auf, zum Beispiel von bis zu 1000 $\mu$m von bis zu 400 $\mu$m oder in einem Bereich von 1 bis 400 $\mu$m, zum Beispiel 2 bis 200 $\mu$m oder 3 bis 100 $\mu$m, besonders bevorzugt in einem Bereich von 1 bis 50 $\mu$m, oder 2 bis 20 $\mu$m. Die Partikelgrößenangaben sind bezogen auf den Zustand der von Siliziumdioxid verschiedenen Siliziumkomponente bei Raumtemperatur. In einer alternativen, bevorzugten Ausführungsform kann die von Siliziumdioxid verschiedene Siliziumkomponente als Flüssigkeit oder als Gas zugegeben werden.

Die von Siliziumdioxid verschiedene Siliziumkomponente wird bevorzugt in einer Menge in einem Bereich von 1 bis 100.000 ppm zugegeben, zum Beispiel in einem Bereich von 10 bis 10.000 ppm oder von 30 bis 1000 ppm oder in einem Bereich von 50 bis 500 ppm, besonders bevorzugt in einem Bereich von 80 bis 200 ppm, weiter besonders bevorzugt in einem Bereich von 200 bis 300 ppm, die ppm jeweils bezogen auf das Gesamtgewicht an Siliziumdioxid.

Die von Siliziumdioxid verschiedene Siliziumkomponente weist bevorzugt eine Reinheit von mindestens 99.5 Gew.-% auf, zum Beispiel von mindestens 99,8 Gew.-% oder von mindestens 99.9 Gew.-%, oder von mindestens 99,99 Gew.-%, besonders bevorzugt von mindestens 99,999 Gew.-%, jeweils bezogen auf das Gesamtgewicht der Siliziumkomponente.

Bevorzugt weist die von Siliziumdioxid verschiedene Siliziumkomponente eine Menge an Kohlenstoff von nicht mehr als 10 ppm auf, zum Beispiel nicht mehr als 50 ppm, besonders bevorzugt nicht mehr als 1 ppm, jeweils bezogen auf das Gesamtgewicht der Siliziumkomponente.

Die von Siliziumdioxid verschiedene Siliziumkomponente ist bevorzugt ausgewählt aus Silizium, einer Silizium-Wasserstoff-Verbindung, einer Silizium-Sauerstoffverbindung oder einer Silizium-Wasserstoff-Sauerstoff-Verbindung. Besonders bevorzugt ist die von Siliziumdioxid verschiedene Siliziumkomponente elementares Silizium.

Bevorzugt weist die von Siliziumdioxid verschiedene Siliziumkomponente eine Menge an Verunreinigungen ausgewählt aus der Gruppe bestehend aus Al, Ca, Co, Cr, Cu, Fe, Ge, Hf, K, Li, Mg, Mn, Mo, Na, Nb, Ni, Ti, V, W, Zn, Zr von nicht mehr als 250 ppm auf, zum Beispiel nicht mehr als 150 ppm, besonders bevorzugt nicht mehr als 100 ppm, jeweils bezogen auf das Gesamtgewicht der Siliziumkomponente. Besonders bevorzugt gilt dies, wenn als Siliziumkomponente Silizium ausgewählt ist.

Prinzipiell kann das Si-Dotieren in jedem Verfahrensschritt erfolgen. Die von Siliziumdioxid verschiedene Siliziumkomponente kann bereits in Verfahrensschritt i.) oder Verfahrensschritt ii.) zugegeben werden. In einer anderen Ausführungsform wird die von Siliziumdioxid verschiedene Siliziumkomponente während des Verarbeitens des Siliziumdioxidpulvers zu einem Siliziumdioxidgranulat zugegeben (Schritt v.)). Zum Beispiel kann die von Siliziumdioxid verschiedene Siliziumkomponente vor, während oder nach dem Granulieren zu dem Siliziumdioxid gegeben werden. Ferner kann die Siliziumkomponente in die Glasschmelze in Schritt vi.) eingebracht werden. Die Zugabe während eines oder mehrerer der Verfahrensschritte i.), ii.) und v.) ist jedoch gegenüber einer Zugabe in Schritt vi.) bevorzugt. Insbesondere erfolgt die Zugabe in Schritt v.).

Bevorzugt kann durch Zugabe der von Siliziumdioxid verschiedenen Siliziumkomponente zu der Aufschlämmung beinhaltend Siliziumdioxidpulver Si-dotiert werden. Zum Beispiel wird dazu die von Siliziumdioxid verschiedene Siliziumkomponente mit dem Pulver aus Siliziumdioxidpartikeln vermischt und anschließend in einer Flüssigkeit aufgeschlämmt, oder die von Siliziumdioxid verschiedene Siliziumkomponente wird zu einer Aufschlämmung aus Siliziumdioxidpartikeln in einer Flüssigkeit gegeben und aufgeschlämmt, oder das Siliziumdioxidpulver wird zu einer Aufschlämmung oder Lösung aus der von Siliziumdioxid verschiedenen Siliziumkomponente in einer Flüssigkeit gegeben und aufgeschlämmt.

Bevorzugt kann durch Zugabe der von Siliziumdioxid verschiedenen Siliziumkomponente beim Granulieren Si-dotiert werden. Es ist prinzipiell möglich, die von Siliziumdioxid verschiedene Siliziumkomponente zu jedem beliebigen Zeitpunkt während des Granulierens zuzugeben. Im Falle des Sprühgranulierens kann die von Siliziumdioxid verschiedene Siliziumkomponente zum Beispiel durch die Düse gemeinsam mit der Aufschlämmung in den Sprühturm gesprüht werden. Im Falle des Rollgranulierens kann die von Siliziumdioxid verschiedene Siliziumkomponente bevorzugt in fester Form oder als Aufschlämmung zum Beispiel nach dem Eintragen der Aufschlämmung in den Rührbehälter gegeben werden.

Weiter bevorzugt kann durch Zugabe der von Siliziumdioxid verschiedenen Siliziumkomponente nach dem Granulieren Si-dotiert werden. Zum Beispiel kann bei einer weiteren Behandlung des Siliziumdioxidgranulats dotiert werden, bevorzugt durch Zugabe der von Siliziumdioxid verschiedenen Siliziumkomponente während einer thermischen oder mechanischen Behandlung des Siliziumdioxidgranulats, oder beim Vorverdichten.

Weiter bevorzugt kann die von Siliziumdioxid verschiedene Siliziumkomponente auch während mehrerer der vorgenannten Abschnitte zugegeben werden, insbesondere während und nach der thermischen oder mechanischen Behandlung des Siliziumdioxidgranulats und/oder beim Vorverdichten.

Die von Siliziumdioxid verschiedene Siliziumkomponente kann prinzipiell Silizium oder jede dem Fachmann bekannte und reduzierend wirkende Silizium-haltige Verbindung sein. Bevorzugt ist die von Siliziumdioxid verschiedene Siliziumkomponente Silizium, eine Silizium-Wasserstoff-Verbindung, zum Beispiel ein Silan, eine Silizium-Sauerstoff-Verbindung, zum Beispiel Siliziummonooxid, oder eine Silizium-Wasserstoff-Sauerstoff-Verbindung, zum Beispiel Disiloxan. Beispiele für bevorzugte Silane sind Monosilan, Disilan, Trisilan, Tetrasilan Pentasilan, Hexasilan Heptasilan, höhere Homologe und Isomere der zuvor genannten, sowie zyklische Silane wie Cyclopentasilan. Besonders bevorzugt wird Silizium ausgewählt.

in einer weiteren Ausführungsform kann die von Siliziumdioxid verschiedene Siliziumkomponente zusammen mit dem Siliziumdioxidgranulat direkt in den Schmelztiegel gegeben werden. Bevorzugt kann Silizium als die von Siliziumdioxid verschiedene Siliziumkomponente zusammen mit dem Siliziumdioxidgranulat in den Schmelztiegel gegeben werden. Das Silizium wird bevorzugt als Pulver zugegeben, insbesondere in der für die von Siliziumdioxid verschiedene Siliziumkomponente bereits genannten Partikelgröße.

Bevorzugt wird die von Siliziumdioxid verschiedene Siliziumkomponente vor dem Einführen in den Schmelztiegel zu dem Siliziumdioxidgranulat gegeben. Die Zugabe kann prinzipiell jederzeit nach der Bildung des Granulats erfolgen, zum Beispiel in der Vorheizstrecke, vor oder während dem Vorverdichten des Siliziumdioxidgranulats.

Ein durch Zugabe von einer von Siliziumdioxid verschiedenen Siliziumkomponente erhaltenes Siliziumdioxidgranulat wird im Folgenden als "Si-dotiertes Granulat" bezeichnet. Bevorzugt weist das Si-dotierte Granulat mindestens eines, zum Beispiel mindestens zwei oder mindestens drei oder mindestens vier, besonders bevorzugt mindestens fünf der folgenden Merkmale auf:

[1] eine BET-Oberfläche in einem Bereich von mehr als 5 bis weniger als 40 $m^2/g$, zum Beispiel von 10 bis 30 $m^2/g$, besonders bevorzugt in einem Bereich von 15 bis 25 $m^2/g$;

[2] eine Partikelgröße $D_{10}$ in einem Bereich von 100 bis 300 $\mu$m, besonders bevorzugt in einem Bereich von 120 bis 200 $\mu$m;

[3] eine Partikelgröße $D_{50}$ in einem Bereich von 150 bis 550 $\mu$m, besonders bevorzugt in einem Bereich von 200 bis 350 $\mu$m;

[4] eine Partikelgröße $D_{90}$ in einem Bereich von 300 bis 650 $\mu$m, besonders bevorzugt in einem Bereich von 400 bis 500 $\mu$m;

[5] eine Schüttdichte in einem Bereich von 0,8 bis 1,6 $g/cm^3$, besonders bevorzugt von 1,0 bis 1,4 $g/cm^3$;

[6] eine Stampfdichte in einem Bereich von 1,0 bis 1,4 $g/cm^3$, besonders bevorzugt von 1,15 bis 1,35 $g/cm^3$;

[7] eine Menge von Kohlenstoff von weniger als 5 ppm, zum Beispiel von weniger als 4,5 ppm, besonders bevorzugt von weniger als 4 ppm;

[8] einen Cl-Gehalt von weniger als 500 ppm, besonders bevorzugt von 1 ppb bis 200 ppm;

[9] einen Al-Gehalt von weniger als 200 ppb, besonders bevorzugt von 1 ppb bis 100 ppb;

[10] einen Metallgehalt von Metallen, die von Aluminium verschieden sind, von weniger als 1000 ppb, zum Beispiel in einem Bereich von 1 bis 400 ppb, besonders bevorzugt in einem Bereich von 1 bis 200 ppb;

[11] eine Restfeuchte von weniger als 3 Gew.-%, zum Beispiel in einem Bereich von 0,001 Gew.-% bis 2 Gew.-%, besonders bevorzugt von 0,01 bis 1 Gew.-%;

wobei die Gew.-%, ppm und ppb jeweils auf das Gesamtgewicht des Si-dotierten Granulats bezogen sind.

Schritt vi.)

In Schritt vi.) wird aus dem Siliziumdioxidgranulat eine Glasschmelze gebildet. Üblicherweise wird dabei das Siliziumdioxidgranulat erwärmt, bis eine Glasschmelze erhalten wird. Das Erwärmen des Siliziumdioxidgranulats zu einer Glasschmelze kann prinzipiell auf allen dem Fachmann zu diesem Zwecke bekannten Wegen erfolgen.

V-Zug zum Herstellen einer Glasschmelze

Das Bilden einer Glasschmelze aus dem Siliziumdioxidgranulat, zum Beispiel durch Erwärmen, kann durch ein kontinuierliches Verfahren erfolgen. Dabei kann das Siliziumdioxidgranulat bevorzugt kontinuierlich in einen Ofen eingebracht oder die Glasschmelze kontinuierlich dem Ofen entnommen werden, oder beides. Weiter bevorzugt wird das Siliziumdioxidgranulat kontinuierlich in den Ofen eingebracht und die Glasschmelze kontinuierlich dem Ofen entnommen.

Dazu geeignet ist prinzipiell ein Ofen, der mindestens einen Einlass und mindestens einen Auslass aufweist. Unter einem Einlass wird eine Öffnung verstanden, durch die Siliziumdioxid und gegebenenfalls weitere Stoffe in den Ofen eingetragen werden können. Unter einem Auslass wird eine Öffnung verstanden, durch die zumindest ein Teil des Siliziumdioxids aus dem Ofen entnommen werden kann. Der Ofen kann beispielsweise vertikal und horizontal ausgerichtet sein. Bevorzugt ist der Ofen vertikal ausgerichtet. Bevorzugt liegt mindestens ein Einlass über mindestens einem Auslass. "Über" bedeutet im Zusammenhang mit Einbauten und Merkmalen eines Ofens, insbesondere einem Ein- und Auslass, dass die Einbaute oder das Merkmal, das "über" einem anderen angeordnet ist, eine höhere Lage über NormalNull (NN) aufweist. Unter "vertikal" wird verstanden, dass die direkte Verbindung zwischen dem Einlass und dem Auslass des Ofens eine Abweichung von nicht mehr als 30° zur Lotrichtung aufweist.

Gemäß einer Ausführungsform beinhaltet der Ofen einen hängenden Blechtiegel. In den hängenden Blechtiegel wird das Siliziumdioxidgranulat eingetragen und unter Erhalt einer Glasschmelze erwärmt. Unter einem Blechtiegel wird ein Tiegel verstanden der mindestens ein Walzblech beinhaltet. Bevorzugt weist ein Blechtiegel mehrere Walzbleche auf. Diese sind miteinander durch geeignete Verbindungsmittel, zum Beispiel Nieten, verbunden. Unter einem hängenden Blechtiegel wird ein Blechtiegel der zuvor beschriebenen Art verstanden, der in einem Ofen hängend angeordnet ist.

Der hängende Blechtiegel kann prinzipiell aus allen dem Fachmann bekannten und zum Schmelzen von Siliziumdioxid geeigneten Materialien bestehen. Bevorzugt beinhaltet das Blech des hängenden Blechtiegels ein gesintertes Material, zum Beispiel ein sogenanntes Sintermetall. Unter Sintermetallen werden Metalle oder Legierungen verstanden, die durch Sintern von Metallpulvern erhalten werden. Ein Sintermetall kann zu einem Blech umgeformt werden, zum Beispiel durch Walzen. Ein Blechtiegel aus Sintermetall beinhaltet bevorzugt zwei oder mehr, oder eine Vielzahl an Blechen. Diese Bleche können aus gewalztem Sintermetall bestehen.

Bevorzugt beinhaltet das Blech des Blechtiegels mindestens ein Element ausgewählt aus der Gruppe bestehend aus Refraktärmetallen. Unter Refraktärmetallen werden die Metalle der 4. Nebengruppe (Ti, Zr, Hf), der 5. Nebengruppe (V, Nb, Ta) und der 6. Nebengruppe (Cr, Mo, W) verstanden.

Bevorzugt beinhaltet das Blech des Blechtiegels ein Sintermetall ausgewählt aus der Gruppe bestehend aus Molybdän, Wolfram oder einer Kombination davon. Weiter bevorzugt enthält das Blech des Blechtiegels mindestens ein weiteres Refraktärmetall, besonders bevorzugt Rhenium, Osmium, Iridium, Ruthenium oder einer Kombination aus zwei oder mehr davon.

Bevorzugt beinhaltet das Blech des Blechtiegels eine Legierung aus Molybdän mit einem Refraktärmetall, oder Wolfram mit einem Refraktärmetall. Besonders bevorzugte Legierungsmetalle sind Rhenium, Osmium, Iridium, Ruthenium oder einer Kombination aus zwei oder mehr davon. Gemäß einem weiteren Beispiel ist das Blech des Blechtiegels eine Legierung aus Molybdän mit Wolfram, Rhenium, Osmium, Iridium, Ruthenium oder einer Kombination aus zwei oder mehr davon. Zum Beispiel ist das Blech des Blechtiegels eine Legierung aus Wolfram mit Molybdän, Rhenium, Osmium, Iridium, Ruthenium oder einer Kombination aus zwei oder mehr davon.

Bevorzugt kann das zuvor beschriebene Blech des Blechtiegels mit einem Refraktärmetall beschichtet sein. Gemäß einem Beispiel ist das Blech des Blechtiegels mit Rhenium, Osmium, Iridium, Ruthenium, Molybdän und Wolfram, oder einer Kombination aus zwei oder mehr davon beschichtet.

Bevorzugt weisen das Blech und die Beschichtung verschiedene Zusammensetzungen auf. Zum Beispiel ist ein Molybdänblech mit einer oder mehreren Schichten aus Rhenium, Osmium, Iridium, Ruthenium, Wolfram oder jeweils einer Kombination von zwei oder mehr davon beschichtet. Gemäß einem anderen Beispiel ist ein Wolframblech mit einer oder mehreren Schichten aus Rhenium, Osmium, Iridium, Ruthenium, Molybdän oder jeweils einer Kombination von zwei oder mehr davon beschichtet. Gemäß einem weiteren Beispiel kann das Blech des Blechtiegels aus mit Rhenium legierten Molybdän oder aus mit Rhenium legierten Wolfram bestehen, und zur Tiegelinnenseite mit einer oder mehreren Schichten beinhaltend Rhenium, Osmium, Iridium, Ruthenium oder jeweils einer Kombination von zwei oder mehr davon beschichtet sein.

Bevorzugt weist das Blech des hängenden Blechtiegels eine Dichte 95 % oder mehr der theoretischen Dichte auf, zum Beispiel eine Dichte von 95 % bis 98 % oder von 96 % bis 98 %. Weiter bevorzugt sind höhere theoretische Dichten, insbesondere im Bereich von 98 bis 99,95 %. Die theoretische Dichte eines Werkstoffs entspricht der Dichte eines porenfreien und 100 % dichten Materials. Eine Dichte des Blechs des Blechtiegels von mehr als 95 % der theoretischen Dichte kann beispielsweise durch Sintern eines Sintermetalls und anschließendes Verdichten des gesinterten Materials erhalten werden. Besonders bevorzugt ist ein Blechtiegel durch Sintern eines Sintermetalls, Walzen unter Erhalt eines Blechs und Verarbeiten des Blechs zu einem Tiegel erhältlich.

Bevorzugt weist der Blechtiegel mindestens einen Deckel, eine Wand und eine Bodenplatte auf. Bevorzugt weist der hängende Blechtiegel mindestens eines, zum Beispiel mindestens zwei oder mindestens drei oder mindestens vier, besonders bevorzugt mindestens fünf oder alle der folgenden Merkmale auf:

(a) mindestens eine, z.B. mehr als eine oder mindestens zwei oder mindestens drei oder mindestens fünf, besonders bevorzugt drei oder vier Lagen des Blechs;

(b) mindestens ein Blech, z.B. mindestens drei oder mindestens vier oder mindestens sechs oder mindestens acht oder mindestens zwölf oder mindestens 15 oder mindestens 16 oder mindestens 20 Bleche, besonders bevorzugt zwölf oder 16 Bleche;

(c) mindestens eine Verbindung von zwei Blechstücken, z.B. mindestens zwei oder mindestens fünf oder mindestens zehn oder mindestens 18 oder mindestens 24 oder mindestens 36 oder mindestens 48 oder mindestens 60 oder mindestens 72 oder mindestens 48 oder mindestens 96 oder mindestens 120 oder mindestens 160, besonders bevorzugt 36 oder 48 Verbindungen von zwei gleichen oder mehreren verschiedenen Blechstücken des hängenden Blechtiegels;

(d) die Blechstücke des hängenden Blechtiegels sind vernietet, z.B. an mindestens einer Verbindung, durch Tiefziehen, z.B. durch eine Kombination von Tiefziehen mit Blech-Ansetzen, oder durch Senken verbunden, verschraubt oder verschweißt, z.B. durch Elektronenstrahlschweißen und Versintern der Schweißstellen, besonders bevorzugt vernietet;

(e) das Blech des hängenden Blechtiegels ist durch einen Umformschritt, der mit einer Erhöhung der physikalischen Dichte verbunden ist, erhältlich, bevorzugt durch Umformen eines gesinterten Metalls oder einer gesinterten Legierung; weiter bevorzugt ist das Umformen ein Walzen;

(f) eine Aufhängung aus Kupfer, Aluminium, Stahl, Eisen, Nickel oder einem Refraktärmetall, z.B. aus dem Tiegelmaterial, bevorzugt eine wassergekühlte Aufhängung aus Kupfer oder Stahl;

(g) eine Düse, bevorzugt eine fest mit dem Tiegel verbundene Düse;

(h) einen Dorn, zum Beispiel einen mit Stegen an der Düse befestigten Dorn oder einen mit einer Haltestange am Deckel befestigten Dorn oder einen von unterhalb des Tiegels mit einer Haltestange verbundenen Dorn;

(i) mindestens einen Gaseinlass, z.B. in Form eines Füllrohrs oder als separater Einlass;

(j) mindestens einen Gasauslass, z.B. als separater Auslass am Deckel oder in der Wand des Tiegels;

(k) einen gekühlten Mantel, bevorzugt einen wassergekühlten Mantel;

(l) eine Isolation von außen, bevorzugt eine Isolation von außen aus Zirkoniumoxid.

Der hängende Blechtiegel kann prinzipiell auf jede dem Fachmann geläufige und hierfür geeignet erscheinende Art beheizt werden. Der hängende Blechtiegel kann beispielsweise mittels elektrischer Heizelemente (resistiv) oder durch Induktion erhitzt werden. Bei resistiver Heizung wird die feste Oberfläche des Blechtiegels von außen erwärmt und gibt die Energie von dort an deren Innenseite ab. Bei induktiver Heizung wird die Energie direkt durch Spulen in die Seitenwand des Schmelztiegels eingekoppelt und von dort an die Tiegelinnenseite abgegeben. Bei einer resistiven Heizung wird die Energie durch Strahlung eingekoppelt, wobei die feste Oberfläche von außen erwärmt wird und die Energie von dort an deren Innenseite abgegeben wird. Bevorzugt wird der Schmelztiegel induktiv erhitzt.

Gemäß einer weiteren Ausführungsform der vorliegenden Erfindung erfolgt der Energieeintrag in den Schmelztiegel, insbesondere zum Schmelzen eines Schmelzguts, nicht durch ein Erwärmen des Schmelztiegels, oder eines darin vorliegenden Schmelzguts, oder beidem, mittels einer Flamme, wie zum Beispiel einer in den Schmelztiegel oder auf den Schmelztiegel gerichteten Brennerflamme. Gemäß einer weiteren Ausführungsform werden zum Schmelzen des Schmelzguts keine Brenner vorgesehen.

Durch die hängende Anordnung kann der hängende Blechtiegel im Ofen bewegt werden. Bevorzugt kann der Tiegel in den Ofen zumindest teilweise hinein- und herausgefahren werden. Liegen im Ofen verschiedene Heizzonen vor, werden deren Temperaturprofile auf den sich im Ofen befindlichen Tiegel übertragen. Durch das Verändern der Position des Tiegels im Ofen können so mehrere Heizzonen, variierende Heizzonen oder mehrere variierende Heizzonen im Tiegel realisiert werden.

Der Blechtiegel weist eine Düse auf. Die Düse ist aus einem Düsenmaterial gebildet. Bevorzugt beinhaltet das Düsenmaterial ein vorverdichtetes Material, zum Beispiel mit einer Dichte in einem Bereich von mehr als 95 %, zum Beispiel von 98 bis 100%, besonders bevorzugt von 99 bis 99,999 %, jeweils bezogen auf die theoretische Dichte des Düsenmaterials. Bevorzugt beinhaltet das Düsenmaterial ein Refraktärmetall, zum Beispiel Molybdän, Wolfram oder eine Kombination davon mit einem weiteren Refraktärmetall. Als Düsenmaterial besonders bevorzugt ist Molybdän. Bevorzugt kann eine Düse beinhaltend Molybdän eine Dichte von 100 % der theoretischen Dichte aufweisen.

Bevorzugt ist die in einem Blechtiegel enthaltene Bodenplatte dicker als die Seiten des Blechtiegels. Bevorzugt besteht die Bodenplatte aus dem gleichen Material wie die Seiten des Blechtiegels. Bevorzugt ist die Bodenplatte des Blechtiegels kein Walzblech. Die Bodenplatte ist zum Beispiel 1,1 bis 5000 mal dicker oder 2 bis 1000 mal dicker oder 4 bis 500 mal dicker, besonders bevorzugt 5 bis 50 mal dicker, jeweils mit Bezug auf eine Wand des Blechtiegels.

Gemäß einer anderen Ausführungsform beinhaltet der Ofen einen hängenden oder einen stehenden Sintertiegel. In den hängenden oder stehenden Sintertiegel wird das Siliziumdioxidgranulat eingetragen und unter Erhalt einer Glasschmelze erwärmt.

Unter einem Sintertiegel wird ein Tiegel verstanden, der aus einem Sintermaterial gefertigt ist, das mindestens ein Sintermetall beinhaltet und eine Dichte von nicht mehr als 96 % der theoretischen Dichte des Metalls aufweist. Unter Sintermetallen werden Metalle oder Legierungen verstanden, die durch Sintern von Metallpulvern erhalten werden. Das Sintermaterial und das Sintermetall in einem Sintertiegel sind nicht gewalzt.

Bevorzugt weist das Sintermaterial des Sintertiegels eine Dichte von 85 % oder mehr der theoretischen Dichte des Sintermaterials auf, zum Beispiel eine Dichte von 85 % bis 95 % oder von 90 % bis 94 %, besonders bevorzugt von 91 % bis 93 %.

Das Sintermaterial kann prinzipiell aus allen dem Fachmann bekannten und zum Schmelzen von Siliziumdioxid geeigneten Materialien bestehen. Bevorzugt ist das Sintermaterial gefertigt aus mindestens einem der Elemente ausgewählt aus der Gruppe bestehend aus Refraktärmetallen, Graphit oder mit Graphitfolie ausgeschlagenen Materialien.

Bevorzugt beinhaltet das Sintermaterial ein erstes Sintermetall ausgewählt aus der Gruppe bestehend aus Molybdän, Wolfram und einer Kombination davon. Weiter bevorzugt beinhaltet das Sintermaterial außerdem mindestens ein weiteres Refraktärmetall, das von dem ersten Sintermetall verschieden ist, besonders bevorzugt ausgewählt aus der Gruppe bestehend aus Molybdän, Wolfram, Rhenium, Osmium, Iridium, Ruthenium oder einer Kombination aus zwei oder mehr davon.

Bevorzugt beinhaltet das Sintermaterial eine Legierung aus Molybdän mit einem Refraktärmetall, oder Wolfram mit einem Refraktärmetall. Besonders bevorzugt als Legierungsmetall sind Rhenium, Osmium, Iridium, Ruthenium oder einer Kombination aus zwei oder mehr davon. Gemäß einem weiteren Beispiel beinhaltet das Sintermaterial eine Legierung aus Molybdän mit Wolfram, Rhenium, Osmium, Iridium, Ruthenium oder einer Kombination aus zwei oder mehr davon. Zum Beispiel beinhaltet das Sintermaterial eine Legierung aus Wolfram mit Molybdän, Rhenium, Osmium, Iridium, Ruthenium oder einer Kombination aus zwei oder mehr davon.

Gemäß einer weiteren Ausführungsform kann das zuvor beschriebene Sintermaterial eine Beschichtung beinhalten, die ein Refraktärmetall, insbesondere Rhenium, Osmium, Iridium, Ruthenium oder eine Kombination aus zwei oder mehr davon enthält. Gemäß einem Beispiel enthält die Beschichtung Rhenium, Osmium, Iridium, Ruthenium, Molybdän und Wolfram, oder eine Kombination aus zwei oder mehr davon.

Bevorzugt weisen das Sintermaterial und seine Beschichtung verschiedene Zusammensetzungen auf. Zum Beispiel ist ein Sintermaterial beinhaltend Molybdän mit einer oder mehreren Schichten aus Rhenium, Osmium, Iridium, Ruthenium, Wolfram oder jeweils einer Kombination von zwei oder mehr davon beschichtet. Gemäß einem anderen Beispiel ist ein Sintermaterial beinhaltend Wolfram mit einer oder mehreren Schichten aus Rhenium, Osmium, Iridium, Ruthenium, Molybdän oder jeweils einer Kombination von zwei oder mehr davon beschichtet. Gemäß einem weiteren Beispiel kann das Sintermaterial aus mit Rhenium legierten Molybdän oder aus mit Rhenium legierten Wolfram bestehen, und zur Tiegelinnenseite mit einer oder mehreren Schichten beinhaltend Rhenium, Osmium, Iridium, Ruthenium oder jeweils einer Kombination von zwei oder mehr davon beschichtet sein.

Bevorzugt wird ein Sintertiegel durch Sintern des Sintermaterials in einer Form gefertigt. Der Sintertiegel kann als Ganzes in einer Form gefertigt werden. Es ist ebenso möglich, dass einzelne Teile des Sintertiegels in einer Form gefertigt und anschließend zu dem Sintertiegel verarbeitet werden. Bevorzugt wird der Tiegel aus mehr als einem Teil gefertigt, zum Beispiel aus einer Bodenplatte und einem oder mehreren Seitenteilen. Die Seitenteile sind bevorzugt in einem Stück bezogen auf den Umfang des Tiegels gefertigt. Bevorzugt kann der Sintertiegel aus mehreren übereinander angeordneten Seitenteilen gefertigt werden. Bevorzugt werden die Seitenteile des Sintertiegels durch Verschrauben oder durch eine Nut-Feder Verbindung abgedichtet. Ein Verschrauben erfolgt bevorzugt durch Fertigen von Seitenteilen, die an den Rändern ein Gewinde aufweisen. Bei einer Nut-Feder-Verbindung haben zwei zu verbindende Seitenteile an den Rändern je eine Nut, in die als verbindendes drittes Teil eine Feder eingesteckt wird, so dass eine formschlüssige Verbindung senkrecht zur Tiegelwandebene gebildet wird. Besonders bevorzugt wird ein Sintertiegel aus mehr als einem Seitenteil gefertigt, zum Beispiel aus zwei oder mehr Seitenteilen, besonders bevorzugt aus drei oder mehr Seitenteilen. Besonders bevorzugt sind die Teile des hängenden Sintertiegels verschraubt. Besonders bevorzugt sind die Teile des stehenden Sintertiegels mittels einer Nut-Feder-Verbindung verbunden.

Die Bodenplatte kann prinzipiell durch alle dem Fachmann bekannten und zu diesem Zweck geeigneten Maßnahmen mit der Tiegelwand verbunden werden. Gemäß einer Ausführungsform ist die Bodenplatte mit einem Außengewinde versehen und wird durch Einschrauben der Bodenplatte in die Tiegelwand mit dieser verbunden. Gemäß einer weiteren Ausführungsform wird die Bodenplatte mit Hilfe von Schrauben mit der Tiegelwand verbunden. Gemäß einer weiteren Ausführungsform wird die Bodenplatte in den Sintertiegel eingehängt, beispielsweise durch Einlegen der Bodenplatte auf einen Innenkragen der Tiegelwand. Gemäß einer weiteren Ausführungsform werden zumindest ein Teil der Tiegelwand und eine verdickte Bodenplatte in einem Stück gesintert. Besonders bevorzugt sind die Bodenplatte und die Tiegelwand des hängenden Sintertiegels verschraubt. Besonders bevorzugt sind die Bodenplatte und die Tiegelwand des stehenden Sintertiegels mittels einer Nut-Feder-Verbindung verbunden.

Bevorzugt ist die in einem Sintertiegel enthaltene Bodenplatte dicker als die Seiten, zum Beispiel 1,1 bis 20 mal dicker oder 1,2 bis 10 mal dicker oder 1,5 bis 7 mal dicker, besonders bevorzugt 2 bis 5 mal dicker. Bevorzugt weisen die Seiten über den Umfang und über die Höhe des Sintertiegels eine konstante Wandstärke auf.

Der Sintertiegel weist eine Düse auf. Die Düse ist aus einem Düsenmaterial gebildet. Bevorzugt beinhaltet das Düsenmaterial ein vorverdichtetes Material, zum Beispiel mit einer Dichte in einem Bereich von mehr als 95 %, zum Beispiel von 98 bis 100%, besonders bevorzugt von 99 bis 99,999 %, jeweils bezogen auf die theoretische Dichte des Düsenmaterials. Bevorzugt beinhaltet das Düsenmaterial ein Refraktärmetall, zum Beispiel Molybdän, Wolfram oder eine Kombination davon mit einem Refraktärmetall. Als Düsenmaterial besonders bevorzugt ist Molybdän. Bevorzugt kann eine Düse beinhaltend Molybdän eine Dichte von 100 % der theoretischen Dichte aufweisen.

Der hängende Sintertiegel kann prinzipiell auf jede dem Fachmann geläufige und hierfür geeignet erscheinende Weise beheizt werden. Der hängende Sintertiegel kann beispielsweise induktiv oder resistiv erhitzt werden. Bei induktiver Heizung wird die Energie direkt durch Spulen in die Seitenwand des Sintertiegels eingekoppelt und von dort an die Tiegelinnenseite abgegeben. Bei resistiver Heizung wird die Energie durch Strahlung eingekoppelt, wobei die feste Oberfläche von außen erwärmt wird und die Energie von dort an deren Innenseite abgegeben wird. Bevorzugt wird der Sintertiegel induktiv erhitzt. Bei einer resistiven Heizung wird die Energie durch Strahlung eingekoppelt, wobei die feste Oberfläche von außen erwärmt wird und die Energie von dort an deren Innenseite abgegeben wird. Bevorzugt wird der Schmelztiegel induktiv erhitzt.

Gemäß einer weiteren Ausführungsform der vorliegenden Erfindung erfolgt der Energieeintrag in den Schmelztiegel, insbesondere zum Schmelzen eines Schmelzguts, nicht durch ein Erwärmen des Schmelztiegels, oder eines darin vorliegenden Schmelzguts, oder beidem, mittels einer Flamme, wie zum Beispiel einer in den Schmelztiegel oder auf den Schmelztiegel gerichteten Brennerflamme.

Bevorzugt weist der Sintertiegel eine oder mehr als eine Heizzone auf, zum Beispiel eine oder zwei oder drei oder mehr als drei Heizzonen, bevorzugt eine oder zwei oder drei Heizzonen, besonders bevorzugt eine Heizzone. Die Heizzonen des Sintertiegels können auf die gleiche oder unterschiedliche Temperaturen gebracht werden. Zum Beispiel können alle Heizzonen auf eine Temperatur oder alle Heizzonen auf verschiedene Temperaturen oder zwei oder mehr Heizzonen auf eine und eine oder mehr Heizzonen unabhängig voneinander auf andere Temperaturen gebracht werden. Bevorzugt werden alle Heizzonen auf unterschiedliche Temperaturen gebracht, zum Beispiel nimmt die Temperatur der Heizzonen in Richtung des Materialtransports des Siliziumdioxidgranulats zu.

Unter einem hängenden Sintertiegel wird ein Sintertiegel der zuvor beschriebenen Art verstanden, der in einem Ofen hängend angeordnet ist.

Bevorzugt weist der hängende Sintertiegel mindestens eines, zum Beispiel mindestens zwei oder mindestens drei oder mindestens vier, besonders bevorzugt alle der folgenden Merkmale auf:

{a} eine Aufhängung, bevorzugt eine höhenverstellbare Aufhängung;
{b} mindestens zwei abgedichtete Ringe als Seitenteile, bevorzugt mindestens zwei miteinander verschraubte Ringe als Seitenteile;
{c} eine Düse, bevorzugt eine fest mit dem Tiegel verbundene Düse;
{d} einen Dorn, zum Beispiel einen mit Stegen an der Düse befestigten Dorn oder einen mit einer Haltestange am Deckel befestigten Dorn oder einen von unterhalb des Tiegels mit einer Haltestange verbundenen Dorn;
{e} mindestens einen Gaseinlass, z.B. in Form eines Füllrohrs oder als separater Einlass, besonders bevorzugt in Form eines Füllrohrs;
{f} mindestens einen Gasauslass, z.B. am Deckel oder in der Wand des Tiegels.
{g} einen gekühlten Mantel, besonders bevorzugt einen wassergekühlten Mantel;
{h} eine Isolation auf der Außenseite des Tiegels, zum Beispiel auf der Außenseite des gekühlten Mantels, bevorzugt eine Isolationsschicht aus Zirkoniumoxid.

Als Aufhängung bevorzugt ist eine bei der Fertigung des hängenden Sintertiegels angebrachte Aufhängung, zum Beispiel eine als integraler Bestandteil des Tiegels vorgesehene Aufhängung, besonders bevorzugt eine als integraler Bestandteil des Tiegels vorgesehene Aufhängung aus dem Sintermaterial. Als Aufhängung weiterhin bevorzugt ist eine an den Sintertiegel angebrachte Aufhängung aus einem von dem Sintermaterial verschiedenen Material, zum Beispiel aus Aluminium, Stahl, Eisen, Nickel oder Kupfer, bevorzugt aus Kupfer, besonders bevorzugt eine gekühlte, zum Beispiel eine wassergekühlte, an den Sintertiegel angebrachte Aufhängung aus Kupfer.

Durch die hängende Anordnung kann der hängende Sintertiegel im Ofen bewegt werden. Bevorzugt kann der Tiegel in den Ofen zumindest teilweise hinein- und herausgefahren werden. Liegen im Ofen verschiedene Heizzonen vor, werden deren Temperaturprofile auf den sich im Ofen befindlichen Tiegel übertragen. Durch das Verändern der Position des Tiegels im Ofen können so mehrere Heizzonen, variierende Heizzonen oder mehrere variierende Heizzonen im Tiegel realisiert werden.

Unter einem stehenden Sintertiegel wird ein Sintertiegel der zuvor beschriebenen Art verstanden, der in einem Ofen stehend angeordnet ist.

Bevorzugt weist der stehende Sintertiegel mindestens eines, zum Beispiel mindestens zwei oder mindestens drei oder mindestens vier, besonders bevorzugt alle der folgenden Merkmale auf:

/a/ einen als Stehfläche geformten Bereich, bevorzugt einen als Stehfläche geformten Bereich am Boden des Tiegels, weiter bevorzugt einen in der Bodenplatte des Tiegels als Stehfläche geformten Bereich, besonders bevorzugt einen als Stehfläche geformten Bereich am äußeren Rand des Bodens des Tiegels;

/b/ mindestens zwei abgedichtete Ringe als Seitenteile, bevorzugt mindestens zwei durch eine Nut-Feder-Verbindung abgedichtete Ringe als Seitenteile;

/c/ eine Düse, bevorzugt eine fest mit dem Tiegel verbundene Düse, besonders bevorzugt eine im nicht als Stehfläche geformten Bereich des Bodens des Tiegels;

/d/ einen Dorn, zum Beispiel einen mit Stegen an der Düse befestigten Dorn oder einen mit Stegen am Deckel befestigten Dorn oder einen von unterhalb des Tiegels mit einer Haltestange verbundenen Dorn;

/e/ mindestens einen Gaseinlass, z.B. in Form eines Füllrohrs oder als separater Einlass;

/f/ mindestens einen Gasauslass, z.B. als separater Auslass am Deckel oder in der Wand des Tiegels;

/g/ einen Deckel.

Der stehende Sintertiegel weist bevorzugt eine Trennung der Gasräume im Ofen und im Bereich unterhalb des Ofens auf. Unter dem Bereich unterhalb des Ofens wird der Bereich unterhalb der Düse verstanden, in dem sich die entnommene Glasschmelze befindet. Bevorzugt werden die Gasräume durch die Fläche, auf der der Tiegel steht, getrennt. Gas, das sich im Gasraum des Ofens zwischen Ofeninnenwand und Tiegelaußenwand befindet, kann nicht nach unten in den Bereich unterhalb des Ofens entweichen. Die entnommene Glasschmelze hat keinen Kontakt zu den Gasen aus dem Gasraum des Ofens. Bevorzugt weisen aus einem Ofen mit einem stehend angeordneten Sintertiegel entnommene Glasschmelzen und daraus gebildete Quarzglaskörper eine höhere Oberflächenreinheit auf als aus einem Ofen mit einem hängend angeordneten Sintertiegel entnommene Glasschmelzen und daraus gebildete Quarzglaskörper.

In allen Ausgestaltungen des Tiegels bevorzugt ist der Tiegel so mit dem Einlass und dem Auslass des Ofens verbunden, dass durch den Einlass des Ofens Siliziumdioxidgranulat über den Einlass des Tiegels in den Tiegel gelangen kann und durch den Auslass des Tiegels und den Auslass des Ofens Glasschmelze entnommen werden kann.

Bevorzugt beinhaltet der Tiegel neben dem mindestens einen Einlass mindestens eine Öffnung, bevorzugt mehrere Öffnungen, durch die Gas ein- und ausgeleitet werden kann. Bevorzugt umfasst der Tiegel mindestens zwei Öffnungen, wobei mindestens eine als Gaseinlass und mindestens eine als Gasauslass verwendet werden kann. Bevorzugt führt die Verwendung mindestens einer Öffnung als Gaseinlass und mindestens einer Öffnung als Gasauslass zu einem Gasstrom im Tiegel.

Durch den Einlass des Tiegels wird das Siliziumdioxidgranulat in den Tiegel eingebracht und anschließend im Tiegel erwärmt. Das Erwärmen kann in Anwesenheit eines Gases oder eines Gemisches aus zwei oder mehr Gasen durchgeführt werden. Beim Erwärmen kann außerdem an das Siliziumdioxidgranulat gebundenes Wasser in die Gasphase übergehen und so ein weiteres Gas bilden. Das Gas oder das Gemisch aus zwei oder mehr Gasen befindet sich im Gasraum des Tiegels. Unter dem Gasraum des Tiegels wird der Bereich im Innern des Tiegels verstanden, der nicht von einer festen oder flüssigen Phase belegt ist. Geeignete Gase sind zum Beispiel Wasserstoff, Inertgase sowie zwei oder mehr davon. Unter Inertgasen werden solche Gase verstanden, die bis zu einer Temperatur von 2400 °C mit den im Tiegel vorgesehenen Stoffen nicht reagieren. Bevorzugte Inertgase sind Stickstoff, Helium, Neon, Argon, Krypton und Xenon, besonders bevorzugt Argon und Helium. Bevorzugt wird das Erwärmen in reduzierender Atmosphäre durchgeführt. Diese kann bevorzugt durch Wasserstoff oder eine Kombination von Wasserstoff und einem Inertgas, zum Beispiel durch eine Kombination von Wasserstoff und Helium, oder von Wasserstoff und Stickstoff, oder von Wasserstoff und Argon, besonders bevorzugt durch eine Kombination aus Wasserstoff und Helium bereitgestellt werden.

Bevorzugt wird ein zumindest teilweiser Gasaustausch von Luft, Sauerstoff und Wasser gegen Wasserstoff, mindestens ein Inertgas, oder gegen eine Kombination von Wasserstoff und mindestens einem Inertgas an dem Siliziumdioxidgranulat durchgeführt. Der zumindest teilweise Gasaustausch wird an dem Siliziumdioxidgranulat beim Einbringen des Siliziumdioxidgranulats, oder vor dem Erwärmen, oder während des Erwärmens, oder während mindestens zwei der vorgenannten Tätigkeiten durchgeführt. Bevorzugt wird das Siliziumdioxidgranulat in einem Gasstrom von Wasserstoff und mindestens einem Inertgas, zum Beispiel Argon oder Helium, zum Schmelzen erwärmt.

Bevorzugt weist der Ofen für alle Ausgestaltungen, bevorzugt auch ein darin befindlicher Schmelztiegel, mindestens einen Gasauslass auf, durch den dem Ofen zugeführtes und beim Betrieb des Ofens gebildetes Gas entnommen wird. Der Ofen kann zudem mindestens einen dedizierten Gaseinlass aufweisen. Alternativ oder zusätzlich kann Gas durch die Feststoffzuführung, auch als Feststoffeinlass bezeichnet, eingebracht werden, zum Beispiel zusammen mit dem Siliziumdioxidgranulat, oder davor, danach, oder durch eine Kombination von zwei oder mehr der vorgenannten Möglichkeiten.

Der Ofen und der Gasstrom sind bevorzugt durch die im Rahmen des ersten Gegenstands beschriebenen Merkmale gekennzeichnet. Bevorzugt wird der Gasstrom durch Einleiten eines Gases durch einen Einlass in den Ofen und durch Ausleiten eines Gases durch einen Auslass aus dem Ofen gebildet. Unter der "Gasaustauschrate" wird das Volumen an Gas verstanden, dass pro Zeit durch den Auslass aus dem Ofen geführt wird. Die Gasaustauschrate wird auch als Durchsatz des Gasstroms oder als Volumendurchsatz bezeichnet.

Bevorzugt liegt die Gasaustauschrate des Gasstroms in einem Bereich von 200 bis 3000 Liter/h, zum Beispiel von 200 bis 2000 Liter/h, besonders bevorzugt von 200 bis 1000 Liter/h.

Die Ofentemperatur zum Schmelzen des Siliziumdioxidgranulats liegt bevorzugt im Bereich von 1700 bis 2500°C, zum Beispiel im Bereich von 1900 bis 2400°C, besonders bevorzugt im Bereich von 2100 bis 2300°C.

Bevorzugt beträgt die Verweilzeit im Ofen in einem Bereich von 1 Stunde bis 50 Stunden, zum Beispiel 1 bis 30 Stunden, besonders bevorzugt 5 bis 20 Stunden. Die Verweilzeit bedeutet im vorliegenden Kontext die Zeit, die benötigt wird, um während des Durchführens des Verfahrens dem Schmelzofen, in dem die Glasschmelze gebildet wird, eine Füllmenge des Schmelzofens verfahrensgemäß zu entnehmen. Die Füllmenge ist die insgesamt im Schmelzofen vorliegende Masse an Siliziumdioxid. Das Siliziumdioxid kann dabei als Feststoff und als Glasschmelze vorliegen.

Bevorzugt nimmt die Ofentemperatur über die Länge, in Richtung des Materialtransports zu. Bevorzugt nimmt die Ofentemperatur über die Länge, in Richtung des Materialtransports um mindestens 100°C, zum Beispiel um mindestens 300°C oder um mindestens 500°C oder um mindestens 700°C, besonders bevorzugt um mindestens 1000°C zu. Bevorzugt beträgt die höchste Temperatur im Ofen 1700 bis 2500°C, zum Beispiel 1900 bis 2400°C, besonders bevorzugt 2100 bis 2300°C. Die Zunahme der Ofentemperatur kann gleichmäßig oder entsprechend eines Temperaturprofils erfolgen.

Bevorzugt nimmt die Ofentemperatur, bevor die Glasschmelze aus dem Ofen entnommen wird, ab. Bevorzugt nimmt die Ofentemperatur bevor die Glasschmelze aus dem Ofen entnommen wird um 50 bis 500°C ab, zum Beispiel um 100°C oder um 400°C, besonders bevorzugt um 150 bis 300°C. Bevorzugt beträgt die Temperatur der Glasschmelze beim Entnehmen 1750 bis 2100°C, zum Beispiel 1850 bis 2050°C, besonders bevorzugt 1900 bis 2000°C.

Bevorzugt nimmt die Ofentemperatur über die Länge, in Richtung des Materialtransports zu und bevor die Glasschmelze aus dem Ofen entnommen wird ab. Bevorzugt nimmt dabei die Ofentemperatur über die Länge, in Richtung des Materialtransports um mindestens 100°C, zum Beispiel um mindestens 300°C oder um mindestens 500°C oder um mindestens 700°C, besonders bevorzugt um mindestens 1000°C zu. Bevorzugt beträgt die höchste Temperatur im Ofen 1700 bis 2500°C, zum Beispiel 1900 bis 2400°C, besonders bevorzugt 2100 bis 2300°C. Bevorzugt nimmt die Ofentemperatur bevor die Glasschmelze aus dem Ofen entnommen wird um 50 bis 500°C ab, zum Beispiel um 100°C oder um 400°C, besonders bevorzugt um 150 bis 300°C.

Vorheizstrecke

Bevorzugt weist der Ofen mindestens eine erste und eine weitere miteinander durch einen Durchlass verbundene Kammern auf, wobei die erste und die weitere Kammer verschiedene Temperaturen aufweisen, wobei die Temperatur der ersten Kammer niedriger ist als die Temperatur der weiteren Kammer. In der weiteren Kammer wird aus dem Siliziumdioxidgranulat eine Glasschmelze gebildet. Diese Kammer wird im Folgenden als Schmelzkammer bezeichnet. Eine mit der Schmelzkammer über eine Stoffführung verbundene, aber vorgelagerte Kammer wird auch als Vorheizstrecke bezeichnet. Es ist zum Beispiel diejenige, bei der mindestens ein Auslass unmittelbar mit einem Einlass der Schmelzkammer verbunden ist. Die vorgenannte Anordnung kann auch in eigenständigen Öfen ausgebildet sein. Dann ist die Schmelzkammer ein Schmelzofen. In Bezug auf die weitere Beschreibung kann der Schmelzofen jedoch synonym zur Schmelzkammer verstanden werden. Dementsprechend gelten die Ausführungen zum Schmelzofen auch für die Schmelzkammer, und umgekehrt. Der Begriff der Vorheizstrecke ist beiden Betrachtungsweisen gleich.

Bevorzugt hat das Siliziumdioxidgranulat bei Eintritt in den Ofen eine Temperatur in einem Bereich von 20 bis 1300°C.

Gemäß einer ersten Ausführungsform wird das Siliziumdioxidgranulat vor Eintritt in die Schmelzkammer nicht temperiert. Zum Beispiel hat das Siliziumdioxidgranulat bei Eintritt in den Ofen eine Temperatur in einem Bereich von 20 bis 40°C, besonders bevorzugt von 20 bis 30°C. Wird gemäß Schritt i.) Siliziumdioxidgranulat II bereitgestellt, hat es beim Eintritt in den Ofen bevorzugt eine Temperatur in einem Bereich von 20 bis 40°C, besonders bevorzugt von 20 bis 30°C.

Gemäß einer anderen Ausführungsform wird das Siliziumdioxidgranulat vor Eintritt in den Ofen auf eine Temperatur in einem Bereich von 40 bis 1300°C temperiert. Temperieren bedeutet das Einstellen der Temperatur auf einen gewählten Wert. Das Temperieren kann prinzipiell auf allen dem Fachmann bekannten und zum Temperieren von Siliziumdioxidgranulat bekannten Wegen erfolgen. Zum Beispiel kann das Temperieren in einem separat von der Schmelzkammer angeordneten Ofen oder in einem mit der Schmelzkammer verbundenen Ofen erfolgen.

Bevorzugt erfolgt das Temperieren in einer mit der Schmelzkammer verbundenen Kammer. Bevorzugt umfasst der Ofen also eine Vorheizstrecke, in der das Siliziumdioxid temperiert werden kann. Bevorzugt ist die Vorheizstrecke selbst ein Durchlaufofen, besonders bevorzugt ein Drehrohrofen. Unter einem Durchlaufofen wird eine beheizte Kammer verstanden, die während des Betriebs eine Bewegung des Siliziumdioxids von einem Einlass des Durchlaufofens zu einem Auslass des Durchlaufofens bewirkt. Bevorzugt ist der Auslass mit dem Einlass des Schmelzofens direkt verbunden. So kann das Siliziumdioxidgranulat aus der Vorheizstrecke ohne weitere Zwischenschritte oder Maßnahmen in den Schmelzofen gelangen.

Es ist weiter bevorzugt, dass die Vorheizstrecke mindestens einen Gaseinlass und mindestens einen Gasauslass umfasst. Durch den Gaseinlass kann Gas in den Innenraum, den Gasraum der Vorheizstrecke gelangen, und durch den Gasauslass kann es ausgeleitet werden. Es ist auch möglich, Gas über den Einlass für das Siliziumdioxidgranulat der Vorheizstrecke in die Vorheizstrecke einzuleiten. Ebenso kann Gas über den Auslass der Vorheizstrecke ausgeleitet und anschließend von dem Siliziumdioxidgranulat getrennt werden. Weiterhin bevorzugt kann Gas über den Einlass für das Siliziumdioxidgranulat und einen Gaseinlass der Vorheizstrecke zugeführt, und über den Auslass der Vorheizstrecke und einen Gasauslass der Vorheizstrecke ausgeleitet werden.

Bevorzugt wird in der Vorheizstrecke durch Verwenden des Gaseinlasses und des Gasauslasses ein Gasstrom ausgebildet. Geeignete Gase sind zum Beispiel Wasserstoff, Inertgase sowie zwei oder mehr davon. Bevorzugte Inertgase sind Stickstoff, Helium, Neon, Argon, Krypton und Xenon, besonders bevorzugt Stickstoff und Helium. Bevorzugt liegt in der Vorheizstrecke eine reduzierende Atmosphäre vor. Diese kann bevorzugt durch Wasserstoff oder eine Kombination von Wasserstoff und einem Inertgas, zum Beispiel durch eine Kombination von Wasserstoff und Helium oder von Wasserstoff und Stickstoff, besonders bevorzugt durch eine Kombination aus Wasserstoff und Helium, bereitgestellt werden. Weiter bevorzugt liegt in der Vorheizstrecke eine oxidierende Atmosphäre vor. Diese kann bevorzugt durch Sauerstoff oder eine Kombination aus Sauerstoff und einem oder mehreren weiteren Gasen bereitgestellt werden, besonders bevorzugt ist Luft. Es ist weiter bevorzugt möglich, das Siliziumdioxid bei vermindertem Druck in der Vorheizstrecke zu temperieren.

Zum Beispiel hat das Siliziumdioxidgranulat bei Eintritt in den Ofen eine Temperatur in einem Bereich von 100 bis 1 100°C oder von 300 bis 1000 oder von 600 bis 900°C.

Gemäß einer Ausführungsform des ersten Gegenstands beinhaltet der Ofen mindestens zwei Kammern. Bevorzugt beinhaltet der Ofen eine erste und mindestens eine weitere Kammer. Die erste und die weitere Kammer sind miteinander durch einen Durchlass verbunden.

Die mindestens zwei Kammern können in dem Ofen prinzipiell beliebig angeordnet sein, bevorzugt vertikal oder horizontal, besonders bevorzugt vertikal. Bevorzugt sind die Kammern im Ofen so angeordnet, dass bei der Durchführung des Verfahrens gemäß dem ersten Gegenstand Siliziumdioxidgranulat die erste Kammer passiert und anschließend in der weiteren Kammer unter Erhalt einer Glasschmelze erhitzt wird. Die weitere Kammer weist bevorzugt die zuvor beschriebenen Merkmale des Schmelzofens und des darin angeordneten Tiegels auf.

Bevorzugt enthält jede der Kammern einen Einlass und einen Auslass. Bevorzugt ist der Einlass des Ofens mit dem Einlass der ersten Kammer durch einen Durchlass verbunden. Bevorzugt ist der Auslass des Ofens mit dem Auslass der weiteren Kammer durch einen Durchlass verbunden. Bevorzugt ist der Auslass der ersten Kammer durch einen Durchlass mit dem Einlass der weiteren Kammer verbunden.

Bevorzugt sind die Kammern so im Ofen angeordnet, dass durch den Einlass des Ofens das Siliziumdioxidgranulat in die erste Kammer gelangen kann. Bevorzugt sind die Kammern so im Ofen angeordnet, dass durch den Auslass des Ofens eine Siliziumdioxidglasschmelze aus der weiteren Kammer entnommen werden kann. Besonders bevorzugt kann durch den Einlass des Ofens das Siliziumdioxidgranulat in die erste Kammer gelangen und durch den Auslass des Ofens eine Siliziumdioxidglasschmelze aus einer weiteren Kammer entnommen werden.

Durch den Durchlass kann das Siliziumdioxid als Granulat oder Pulver in der durch das Verfahren vorgegebenen Richtung des Materialtransports von einer ersten in eine weitere Kammer gelangen. Durch einen Durchlass verbundene Kammern schließen Anordnungen ein, in denen zwischen einer ersten und einer weiteren Kammer weitere Zwischenelemente in Richtung des Materialtransports angeordnet sind. Den Durchlass können prinzipiell Gase, Flüssigkeiten und Feststoffe passieren. Bevorzugt können Siliziumdioxidpulver, Suspensionen von Siliziumdioxidpulver und Siliziumdioxidgranulat den Übergang zwischen einer ersten und einer weiteren Kammer passieren. Während der Durchführung des erfindungsgemäßen Verfahrens können über den Durchlass zwischen der ersten und der weiteren Kammer alle in die erste Kammer eingetragenen Stoffe in die weitere Kammer gelangen. Bevorzugt gelangt über den Durchlass zwischen der ersten und weiteren Kammer nur Siliziumdioxid in Form von Granulat oder Pulver in die weitere Kammer. Bevorzugt ist der Durchlass zwischen der ersten und der weiteren Kammer durch das Siliziumdioxid verschlossen, so dass der Gasraum der ersten und der weiteren Kammer voneinander getrennt sind, bevorzugt so, dass in den Gasräumen verschiedene Gase oder Gasgemische, verschiedene Drücke oder beides vorliegen können. Gemäß einer anderen Ausgestaltung wird der Durchlass von einer Schleuse gebildet, bevorzugt durch eine Zellenradschleuse.

Bevorzugt weist die erste Kammer des Ofens mindestens einen Gaseinlass und mindestens einen Gasauslass auf. Der Gaseinlass kann prinzipiell jede Form aufweisen, die dem Fachmann bekannt und zum Einleiten eines Gases geeignet ist, zum Beispiel eine Düse, ein Ventil oder ein Rohr. Der Gasauslass kann prinzipiell jede Form aufweisen, die dem Fachmann bekannt und zum Ausleiten eines Gases geeignet ist, zum Beispiel eine Düse, ein Ventil oder ein Rohr.

Bevorzugt wird durch den Einlass des Ofens Siliziumdioxidgranulat in die erste Kammer eingebracht und erwärmt. Das Erwärmen kann in Anwesenheit eines Gases oder einer Kombination aus zwei oder mehr Gasen durchgeführt werden. Dazu liegt das Gas oder die Kombination aus zwei oder mehr Gasen im Gasraum der ersten Kammer vor. Unter dem Gasraum der ersten Kammer wird der Bereich der ersten Kammer verstanden, der nicht von einer festen oder flüssigen Phase belegt ist. Geeignete Gase sind zum Beispiel Wasserstoff, Sauerstoff, Inertgase sowie zwei oder mehr davon. Bevorzugte Inertgase sind Stickstoff, Helium, Neon, Argon, Krypton und Xenon, besonders bevorzugt sind Stickstoff, Helium und eine Kombination davon. Bevorzugt wird das Erwärmen in reduzierender Atmosphäre durchgeführt. Diese kann bevorzugt durch Wasserstoff oder eine Kombination von Wasserstoff und Helium bereitgestellt werden.

Bevorzugt wird das Siliziumdioxidgranulat in der ersten Kammer in einem Strom des Gases oder der Kombination aus zwei oder mehr Gasen erwärmt.

Es ist weiter bevorzugt, dass das Siliziumdioxidgranulat in der ersten Kammer bei vermindertem Druck, zum Beispiel bei einem Druck von weniger als 500 mbar oder weniger als 300 mbar, zum Beispiel 200 mbar oder weniger erwärmt wird.

Bevorzugt ist die erste Kammer mit mindestens einer Vorrichtung versehen, mit der das Siliziumdioxidgranulat, bewegt wird. Prinzipiell können alle Vorrichtungen ausgewählt werden, die dem Fachmann zu diesem Zwecke bekannt sind und geeignet erscheinen. Bevorzugt geeignet sind Rühr-, Schüttel- oder Schwenkvorrichtungen.

Gemäß einer weiteren Ausführungsform sind die Temperaturen in der ersten und in der weiteren Kammer verschieden. Bevorzugt ist die Temperatur in der ersten Kammer geringer als die Temperatur in der weiteren Kammer. Bevorzugt liegt die Temperaturdifferenz zwischen der ersten und der weiteren Kammer in einem Bereich von 600 bis 2400°C, zum Beispiel in einem Bereich von 1000 bis 2000°C oder von 1200 bis 1800°C, besonders bevorzugt in einem Bereich von 1500 bis 1700°C. Weiter bevorzugt ist die Temperatur in der ersten Kammer 600 bis 2400°C, zum Beispiel 1000 bis 2000°C oder 1200 bis 1800°C, besonders bevorzugt 1500 bis 1700°C niedriger als die Temperatur in der weiteren Kammer.

Gemäß einer weiteren Ausführungsform ist die erste Kammer des Ofens eine Vorheizstrecke, besonders bevorzugt eine wie oben beschriebene Vorheizstrecke, die die oben beschriebenen Merkmale aufweist. Bevorzugt ist die Vorheizstrecke durch einen Durchlass mit der weiteren Kammer verbunden. Bevorzugt gelangt Siliziumdioxid aus der Vorheizstrecke über einen Durchlass in die weitere Kammer. Der Durchlass zwischen der Vorheizstrecke und der weiteren Kammer kann verschlossen sein, so dass keine in die Vorheizstrecke eingeleiteten Gase durch den Durchlass in die weitere Kammer gelangen. Bevorzugt ist der Durchlass zwischen der Vorheizstrecke und der weiteren Kammer verschlossen, so dass das Siliziumdioxid nicht mit Wasser in Berührung kommt. Der Durchlass zwischen der Vorheizstrecke und der weiteren Kammer kann verschlossen sein, so dass der Gasraum der Vorheizstrecke und der ersten Kammer so voneinander getrennt sind, dass in den Gasräumen verschiedene Gase oder Gasgemische, verschiedene Drücke oder beides vorliegen können. Als Durchlass eignen sich bevorzugt die zuvor beschriebenen Ausgestaltungen.

Gemäß einer weiteren Ausführungsform ist die erste Kammer des Ofens keine Vorheizstrecke. Zum Beispiel ist die erste Kammer eine Ausgleichskammer. Unter einer Ausgleichskammer wird eine Kammer des Ofens verstanden, in der Durchsatzvariationen in einer vorgeschalteten Vorheizstrecke oder Durchsatzunterschiede zwischen einer Vorheizstrecke und der weiteren Kammer ausgeglichen werden. Zum Beispiel kann der ersten Kammer wie oben beschrieben ein Drehrohrofen vorgeschaltet sein. Dieser weist üblicherweise einen Durchsatz auf, der um bis zu 6 % des durchschnittlichen Durchsatzes variieren kann. Bevorzugt wird Siliziumdioxid in einer Ausgleichskammer auf der Temperatur gehalten, mit der es in die Ausgleichskammer gelangt.

Es ist ebenso möglich, dass der Ofen eine erste Kammer und mehr als eine weitere Kammer aufweist, zum Beispiel zwei weitere Kammern oder drei weitere Kammern oder vier weitere Kammern oder fünf weitere Kammern oder mehr als fünf weitere Kammern, besonders bevorzugt zwei weitere Kammern. Weist der Ofen zwei weitere Kammern auf, ist die erste Kammer bevorzugt eine Vorheizstrecke, die erste der weiteren Kammern eine Ausgleichskammer und die zweite der weiteren Kammern die Schmelzkammer, bezogen auf die Richtung des Materialtransports.

Gemäß einer weiteren Ausführungsform liegt in der ersten Kammer ein Additiv vor. Das Additiv ist bevorzugt ausgewählt aus der Gruppe bestehend aus Halogenen, Inertgasen, Basen, Sauerstoff oder einer Kombination aus zwei oder mehr davon.

Als Additive sind prinzipiell Halogene in elementarer Form und Halogenverbindungen geeignet. Bevorzugte Halogene sind ausgewählt aus der Gruppe bestehend aus Chlor, Fluor, chlorhaltigen Verbindungen und fluorhaltigen Verbindungen. Besonders bevorzugt sind elementares Chlor und Chlorwasserstoff.

Als Additive sind prinzipiell alle Inertgase sowie Mischungen aus zwei oder mehr davon geeignet. Bevorzugte Inertgase sind Stickstoff, Helium oder eine Kombination daraus.

Als Additive sind prinzipiell auch Basen geeignet. Bevorzugte Basen als Additive sind anorganische und organische Basen.

Weiter geeignet als Additiv ist Sauerstoff. Der Sauerstoff liegt bevorzugt als sauerstoffhaltige Atmosphäre vor, zum Beispiel in Kombination mit einem Inertgas oder einem Gemisch aus zwei oder mehr Inertgasen, besonders bevorzugt in Kombination mit Stickstoff, Helium oder Stickstoff und Helium.

Die erste Kammer kann prinzipiell jedes Material beinhalten, dass dem Fachmann bekannt und zum Erhitzen von Siliziumdioxid geeignet ist. Bevorzugt beinhaltet die erste Kammer mindestens ein Element ausgewählt aus der Gruppe bestehend aus Quarzglas, einem Refraktärmetall, Aluminium und einer Kombination aus zwei oder mehr davon, besonders bevorzugt beinhaltet die erste Kammer Quarzglas oder Aluminium.

Bevorzugt übersteigt die Temperatur in der ersten Kammer 600°C nicht, wenn die erste Kammer ein Polymer oder Aluminium beinhaltet. Bevorzugt beträgt die Temperatur in der ersten Kammer 100 bis 1100°C, wenn die erste Kammer Quarzglas beinhaltet. Bevorzugt beinhaltet die erste Kammer im wesentlichen Quarzglas.

Beim Transport des Siliziumdioxids von der ersten Kammer zur weiteren Kammer durch den Durchlass zwischen der ersten und der weiteren Kammer kann das Siliziumdioxid prinzipiell in jedem beliebigen Zustand vorliegen. Bevorzugt liegt das Siliziumdioxid als Feststoff vor, zum Beispiel als Partikel, Pulver oder Granulat. Gemäß einer Ausführungsform des ersten Gegenstands erfolgt der Transport des Siliziumdioxids von der ersten zur weiteren Kammer als Granulat.

Gemäß einer weiteren Ausführungsform ist die weitere Kammer ein Tiegel aus einem Blech oder einem Sintermaterial, welches ein Sintermetall beinhaltet, wobei das Blech oder das Sintermetall ausgewählt ist aus der Gruppe bestehend aus Molybdän, Wolfram und einer Kombination davon.

Taupunktmessung

Unter dem Taupunkt wird die Temperatur verstanden, unterhalb der bei unverändertem Druck ein Bestandteil des untersuchten Gases oder Gasgemisches kondensiert. Im Allgemeinen versteht man darunter die Kondensation von Wasser. Der Taupunkt wird mit einem Taupunktspiegelhygrometer gemäß der im Methodenteil beschriebenen Messmethode bestimmt.

Erfindungsgemäß beträgt der Taupunkt des Gases beim Austritt aus dem Ofen durch den Gasauslass weniger als 0°C.

Erfindungsgemäß weist der Ofen, bevorzugt auch ein darin befindlicher Schmelztiegel, mindestens einen Gasauslass auf, durch den dem Ofen zugeführtes und beim Betrieb des Ofens gebildetes Gas entnommen wird. Der Ofen kann zudem mindestens einen dedizierten Gaseinlass aufweisen. Alternativ oder zusätzlich kann Gas durch die Feststoffzuführung, auch als Feststoffeinlass bezeichnet, eingebracht werden, zum Beispiel zusammen mit dem Siliziumdioxidgranulat, oder davor, danach, oder durch eine Kombination von zwei oder mehr der vorgenannten Möglichkeiten.

Erfindungsgemäß weist das Gas, das durch den Gasauslass dem Ofen entnommen wird, beim Austritt aus dem Ofen durch den Gasauslass einen Taupunkt von weniger als 0°C, zum Beispiel von weniger als -10°C, oder weniger als -20°C auf. Der Taupunkt wird gemäß der im Methodenteil beschriebenen Messmethode bei einem schwachen Überdruck von 5 bis 20 mbar bestimmt. Als Messgerät geeignet ist zum Beispiel ein Gerät mit der Bezeichnung "Optidew" der Firma Michell Instruments GmbH, D-61381 Friedrichsdorf.

Der Taupunkt des Gases wird bevorzugt an einer Messstelle in einem Abstand von 10 cm oder mehr von dem Gasauslass des Ofens bestimmt. Oftmals beträgt dieser Abstand zwischen 10 cm und 5 m. In diesem Abstandsbereich - hier beschrieben durch "beim Austritt" - ist der Abstand der Messstelle vom Gasauslass des Ofens für das Ergebnis der Taupunktmessung unerheblich. Das Gas wird von dem Auslass bis zur Messstelle fluidleitend geführt, zum Beispiel in einem Schlauch oder einem Rohr. Die Temperatur des Gases beträgt an der Messstelle oftmals zwischen 10 und 60°C, zum Beispiel 20 bis 50°C insbesondere 20 bis 30°C.

Geeignete Gase und Gasgemische wurden bereits beschrieben. Es wurde im Rahmen eigener Versuche festgestellt, dass die vorstehend genannten Angaben für jedes der genannten Gase und Gasgemische gilt.

Gemäß einer weiteren bevorzugten Ausführungsform weist das Gas oder das Gasgemisch vor Eintritt in den Ofen, insbesondere den Schmelztiegel einen Taupunkt von weniger als -50°C, zum Beispiel weniger als -60°C, oder weniger als -70°C, oder weniger als -80 °C auf. Ein Taupunkt von -60°C wird in der Regel nicht überschritten. Ebenfalls sind folgende Bereiche für den Taupunkt bei Eintritt in den Ofen bevorzugt: von -50 bis -100°C; von - 60 bis -100°C und von -70 bis -100°C.

Gemäß einer weiteren bevorzugten Ausführungsform beträgt der Taupunkt des Gases vor Eintritt in den Ofen mindestens 30°C weniger als beim Austritt aus dem Schmelztiegel, zum Beispiel mindestens 50°C weniger, oder 60°C weniger, oder auch 80°C weniger. Für das Messen des Taupunkts beim Austritt aus dem Schmelztiegel gelten die obenstehenden Angaben. Für eine Messung des Taupunkts vor Eintritt in den Ofen gilt entsprechendes. Da zwischen dem Ort der Messung und dem Ofen keine Quelle für einen Feuchtigkeitseintrag und keine Möglichkeit des Kondensationsniederschlags vorgesehen ist, kommt es hier auf den Abstand der Messstelle zum Gaseinlass des Ofens nicht an.

Gemäß einer bevorzugten Ausführungsform wird der Ofen insbesondere der Schmelztiegel mit einer Gasaustauschrate in einem Bereich von 200 bis 3000 L/h betrieben.

Gemäß einer bevorzugten Ausführungsform ist der Schmelztiegel zumindest zum Teil aus einem Material beinhaltend eines oder mehrere Metalle ausgewählt aus Molybdän, Wolfram, Rhenium, Iridium, Osmium gebildet.

Gemäß einer bevorzugten Ausführungsform beinhaltet der Quarzglaskörper weniger als 1000 ppb Gesamtmenge von einem oder mehreren Metallen ausgewählt aus Molybdän, Wolfram, Rhenium, Iridium, Osmium, die Gesamtmenge bezogen auf das Gesamtgewicht des Quarzglaskörpers.

Gemäß einer bevorzugten Ausführungsform wird der Taupunkt in einer Messzelle bestimmt, wobei die Messzelle durch eine Membran von dem durch den Gasauslass tretenden Gas getrennt ist. Die Membran ist bevorzugt permeabel für Feuchtigkeit. Mit dieser Maßnahme kann die Messzelle vor einer im Gasstrom befindlichen Menge an Staub und anderen Partikeln geschützt werden, die durch den Gasstrom aus dem Schmelzofen, insbesondere einem Schmelztiegel mit ausgetragen werden. Durch diese Maßnahme kann die Einsatzzeit einer Messsonde erheblich verlängert werden. Die Einsatzzeit bedeutet die Zeitspanne unter dem Betrieb des Ofens, während der weder ein Austausch der Messsonde, noch Reinigen der Messsonde erforderlich werden.

Gemäß einer bevorzugten Ausführungsform wird zum Bestimmen des Taupunkts ein Taupunktspiegelmessgerät, auch Taupunktspiegelhygrometer, eingesetzt.

In einer Ausführungsform des ersten Gegenstands wird die Schmelzenergie zum Durchführen von Schritt vi.) über eine feste Oberfläche auf das Siliziumdioxidgranulat übertragen. Als Siliziumdioxidgranulat zum Beispiel das verdichtete Siliziumdioxidgranulat ausgewählt sein.

Als feste Oberfläche wird eine Oberfläche verstanden, die von der Oberfläche des Siliziumdioxidgranulats verschieden ist und die bei Temperaturen, auf die das Siliziumdioxidgranulat zum Schmelzen erhitzt wird, nicht schmilzt oder sich zersetzt. Geeignete Materialien der festen Oberfläche sind zum Beispiel die als Tiegelmaterialien geeigneten Materialien.

Die feste Oberfläche kann prinzipiell jede dem Fachmann bekannte und für diese Zwecke geeignete Oberfläche sein. Zum Beispiel kann als feste Oberfläche der Tiegel oder ein separates Bauteil, das nicht der Tiegel ist, verwendet werden.

Die feste Oberfläche kann prinzipiell auf allen dem Fachmann bekannten und für diese Zwecke geeigneten Wegen erhitzt werden, um die Schmelzenergie auf das Siliziumdioxidgranulat zu übertragen. Bevorzugt wird die feste Oberfläche durch resistive Beheizung oder Induktionsheizung erhitzt. Bei induktiver Heizung wird die Energie direkt durch Spulen in die feste Oberfläche eingekoppelt und von dort an deren Innenseite abgegeben. Bei resistiver Heizung wird die feste Oberfläche von außen erwärmt und gibt die Energie von dort an deren Innenseite ab. Dabei ist ein Heizraumgas mit niedrigerer Wärmekapazität, beispielsweise eine Argonatmosphäre oder eine argonhaltige Atmosphäre, vorteilhaft. Zum Beispiel kann die feste Oberfläche elektrisch oder auch durch Befeuern der festen Oberfläche mit einer Flamme von außen erhitzt werden. Bevorzugt wird die feste Oberfläche auf eine Temperatur erhitzt, die eine zum Schmelzen des Siliziumdioxidgranulats ausreichende Energiemenge auf das Siliziumdioxidgranulat und/oder bereits zum Teil geschmolzenes Siliziumdioxidgranulat übertragen kann.

Gemäß einer Ausführungsform der vorliegenden Erfindung erfolgt der Energieeintrag in den Tiegel zumindest während Schritt vi.) nicht durch ein Erwärmen des Tiegels, oder eines darin vorliegenden Schmelzguts, oder beidem, mittels einer Flamme, wie zum Beispiel einer in den Tiegel oder auf den Tiegel gerichteten Brennerflamme.

Wird als feste Oberfläche ein separates Bauteil verwendet, kann dieses in beliebiger Weise mit dem Siliziumdioxidgranulat in Kontakt gebracht werden, zum Beispiel durch Auflegen des Bauteils auf das Siliziumdioxidgranulat oder durch Einführen des Bauteils zwischen die Granulen des Siliziumdioxidgranulats oder durch Unterschieben des Bauteils zwischen Tiegel und Siliziumdioxidgranulat oder durch eine Kombination von zwei oder mehr davon. Das Bauteil kann vor oder während oder vor und während des Übertragens der Schmelzenergie erhitzt werden.

Bevorzugt wird die Schmelzenergie über die Tiegelinnenseite auf das Siliziumdioxidgranulat übertragen. Dabei wird der Tiegel soweit erhitzt, dass das Siliziumdioxidgranulat schmilzt. Der Tiegel wird bevorzugt resistiv oder induktiv erhitzt. Die Wärme wird von der Außenseite auf die Innenseite des Tiegels übertragen. Die feste Oberfläche der Tiegelinnenseite überträgt die Schmelzenergie auf das Siliziumdioxidgranulat.

Gemäß einer weiteren Ausführungsform wird die Schmelzenergie auf das Siliziumdioxidgranulat nicht über einen Gasraum auf das Siliziumdioxidgranulat übertragen. Weiter bevorzugt wird die Schmelzenergie auf das Siliziumdioxidgranulat nicht durch Befeuern des Siliziumdioxidgranulats mit einer Flamme übertragen. Beispiele für diese ausgeschlossenen Energieübertragungswege sind Richten von einer oder mehreren Brennerflammen von oben in den Schmelztiegel, oder auf das Siliziumdioxid, oder beides.

Schritt vii.)

Die Glasschmelze wird durch den Auslass aus dem Ofen, bevorzugt über eine Düse, entnommen. Ein Quarzglaskörper wird aus mindestens einem Teil der Glasschmelze gebildet. Bevorzugt wird dazu mindestens ein Teil der in Schritt vi.) hergestellten Glasschmelze entnommen.

Die Entnahme eines Teils der in Schritt vi) hergestellten Glasschmelze kann prinzipiell kontinuierlich aus dem Schmelzofen oder der Schmelzkammer, oder nach abgeschlossener Herstellung der Glasschmelze erfolgen. Bevorzugt wird ein Teil der Glasschmelze kontinuierlich entnommen. Die Glasschmelze wird durch den Auslass aus dem Ofen oder den Auslass der Schmelzkammer, jeweils bevorzugt über eine Düse, entnommen.

Die Glasschmelze kann vor, während oder nach der Entnahme auf eine Temperatur abgekühlt werden, die das Formen der Glasschmelze ermöglicht. Mit dem Abkühlen der Glasschmelze ist ein Ansteigen der Viskosität der Glasschmelze verbunden. Die Glasschmelze wird bevorzugt soweit abgekühlt, dass beim Formen die gebildete Form erhalten bleibt und das Formen gleichzeitig möglichst zügig, zuverlässig und mit geringem Kraftaufwand durchgeführt werden kann. Der Fachmann kann die Viskosität der Glasschmelze zum Formen durch Variieren der Temperatur der Glasschmelze am Formwerkzeug einfach ermitteln. Bevorzugt hat die Glasschmelze beim Entnehmen eine Temperatur im Bereich von 1750 bis 2100°C, zum Beispiel 1850 bis 2050°C, besonders bevorzugt 1900 bis 2000°C. Bevorzugt wird die Glasschmelze nach dem Entnehmen auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Der gebildete Quarzglaskörper kann ein massiver Körper oder ein Hohlkörper sein. Unter einem massiven Körper wird ein Körper verstanden, der im Wesentlichen aus einem einzigen Material besteht. Gleichwohl kann ein massiver Körper einen oder mehrere Einschlüsse aufweisen, z.B. Gasblasen. Solche Einschlüsse in einem massiven Körper haben oftmals eine Größe von 65 mm$^3$ oder weniger, zum Beispiel von weniger als 40 mm$^3$, oder von weniger als 20 mm$^3$, oder von weniger als 5 mm$^3$, oder von weniger als 2 mm$^3$, besonders bevorzugt von weniger als 0,5 mm$^3$. Bevorzugt beinhaltet ein massiver Körper weniger als 0,02 Vol.-% seines Volumens, zum Beispiel weniger als 0,01 Vol.-% oder weniger als 0,001 Vol.-% an Einschlüssen, jeweils bezogen auf das Gesamtvolumen des massiven Körpers.

Der Quarzglaskörper weist eine äußere Form auf. Unter der äußeren Form wird die Form des Außenrands des Querschnitts des Quarzglaskörpers verstanden. Die äußere Form des Quarzglaskörpers ist im Querschnitt bevorzugt rund, elliptisch oder polygon mit drei oder mehr Ecken, zum Beispiel 4, 5, 6, 7 oder 8 Ecken, besonders bevorzugt ist der Quarzglaskörper rund.

Bevorzugt hat der Quarzglaskörper eine Länge im Bereich von 100 bis 10000 mm, zum Beispiel von 1000 bis 4000 mm, besonders bevorzugt von 1200 bis 3000 mm.

Bevorzugt hat der Quarzglaskörper einen Außendurchmesser im Bereich von 1 bis 500 mm, zum Beispiel in einem Bereich von 2 bis 400 mm, besonders bevorzugt in einem Bereich von 5 bis 300 mm.

Das Formen des Quarzglaskörpers erfolgt mittels einer Düse. Dazu wird die Glasschmelze durch die Düse geführt. Die äußere Form eines durch die Düse geformten Quarzglaskörpers wird durch die Form der Öffnung der Düse bestimmt. Ist die Öffnung der Düse rund, wird beim Formen des Quarzglaskörpers ein Zylinder gebildet. Weist die Öffnung der Düse eine Struktur auf, wird diese Struktur auf die äußere Form des Quarzglaskörpers übertragen. Ein Quarzglaskörper, der mittels einer Düse mit Strukturen an der Öffnung gebildet wird, weist ein Abbild der Strukturen in Längsrichtung auf dem Glasstrang auf.

Die Düse ist in den Schmelzofen integriert. Bevorzugt ist sie als Teil des Tiegels in den Schmelzofen integriert, besonders bevorzugt als Teil des Auslasses des Tiegels.

Bevorzugt wird der mindestens ein Teil der Glasschmelze durch die Düse aus dem Schmelzofen entnommen. Die äußere Form des Quarzglaskörpers wird durch das Entnehmen mindestens eines Teils der Glasschmelze durch die Düse gebildet.

Bevorzugt wird der Quarzglaskörper nach dem Bilden abgekühlt, um seine Form zu erhalten. Bevorzugt wird der Quarzglaskörper nach dem Formen auf eine Temperatur abgekühlt, die mindestens 1000°C unterhalb der Temperatur der Glasschmelze beim Formen liegt, zum Beispiel mindestens 1500°C oder mindestens 1800°C, besonders bevorzugt 1900 bis 1950°C. Bevorzugt wird der Quarzglaskörper auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Gemäß einer Ausführungsform kann der erhaltene Quarzglaskörper mit mindestens einer Maßnahme ausgewählt aus der Gruppe bestehend aus chemischer, thermischer oder mechanischer Behandlung behandelt werden.

Bevorzugt wird der Quarzglaskörper chemisch nachbehandelt. Nachbehandeln betrifft das Behandeln eines bereits gebildeten Quarzglaskörpers. Unter chemischem Nachbehandeln des Quarzglaskörpers wird prinzipiell jede Maßnahme verstanden, die dem Fachmann bekannt ist und geeignet erscheint, durch den Einsatz von Stoffen die chemische Struktur oder die Zusammensetzung der Oberfläche des Quarzglaskörpers, oder beides, zu verändern. Bevorzugt umfasst das chemische Nachbehandeln mindestens eine Maßnahme ausgewählt aus der Gruppe bestehend aus Behandeln mit Fluorverbindungen und Ultraschallreinigung.

Als Fluorverbindungen kommen insbesondere Fluorwasserstoff und Fluor enthaltende Säuren, zum Beispiel Flusssäure, in Frage. Die Flüssigkeit weist bevorzugt einen Gehalt an Fluorverbindungen in einem Bereich von 35 bis 55 Gew.-%, bevorzugt in einem Bereich von 35 bis 45 Gew.-% auf, die Gew.-% jeweils bezogen auf die Gesamtmenge an Flüssigkeit. Der Rest zu 100 Gew.-% ist üblicherweise Wasser. Bevorzugt wird als Wasser vollentsalztes oder deionisiertes Wasser ausgewählt.

Eine Ultraschallreinigung erfolgt bevorzugt in einem Flüssigkeitsbad, besonders bevorzugt in Anwesenheit von Detergenzien. Im Fall der Ultraschallreinigung kommen in der Regel keine Fluorverbindungen, zum Beispiel weder Flusssäure noch Fluorwasserstoff, zum Einsatz.

Die Ultraschallreinigung des Quarzglaskörpers wird bevorzugt unter mindestens einer, zum Beispiel mindestens zwei oder mindestens drei oder mindestens vier oder mindestens fünf, besonders bevorzugt allen der folgenden Bedingungen durchgeführt:

- Die Ultraschallreinigung erfolgt in einem kontinuierlichen Verfahren.
- Die Anlage zur Ultraschallreinigung weist sechs miteinander durch Rohre verbundene Kammern auf.
- Die Verweilzeit der Quarzglaskörper in jeder Kammer kann eingestellt werden. Bevorzugt ist die Verweilzeit der Quarzglaskörper in jeder Kammer gleich. Bevorzugt liegt die Verweilzeit in jeder Kammer in einem Bereich von 1 bis 120 min, zum Beispiel von weniger als 5 min oder von 1 bis 5 min oder von 2 bis 4 min oder von weniger als 60 min oder von 10 bis 60 min oder von 20 bis 50 min, besonders bevorzugt in einem Bereich von 5 bis 60 min.

- Die erste Kammer umfasst ein basisches Medium, bevorzugt enthaltend Wasser und eine Base, und einen Ultraschallreiniger.
- Die dritte Kammer umfasst ein saures Medium, bevorzugt enthaltend Wasser und eine Säure, und einen Ultraschallreiniger.
- In der zweiten Kammer und in der vierten bis sechsten Kammer wird der Quarzglaskörper mit Wasser, bevorzugt entsalztem Wasser gereinigt.
- Die vierte bis sechste Kammer wird als Kaskade mit Wasser, bevorzugt entsalztem Wasser betrieben. Bevorzugt wird das Wasser nur in die sechste Kammer eingeleitet und läuft von der sechsten in die fünfte und von der fünften in die vierte Kammer.

Bevorzugt wird der Quarzglaskörper thermisch nachbehandelt. Unter thermischem Nachbehandeln des Quarzglaskörpers wird prinzipiell jede Maßnahme verstanden, die dem Fachmann bekannt ist und geeignet erscheint, den Quarzglaskörper durch Einwirkung von Temperatur in seiner Form oder Struktur oder beidem zu verändern. Bevorzugt umfasst das thermische Nachbehandeln mindestens eine Maßnahme ausgewählt aus der Gruppe bestehend aus Tempern, Stauchen, Aufblasen, Ausziehen, Verschweißen und einer Kombination aus zwei oder mehr davon. Bevorzugt erfolgt die thermische Nachbehandlung ohne das Ziel des Materialabtrags.

Das Tempern erfolgt bevorzugt durch Erhitzen des Quarzglaskörpers in einem Ofen, bevorzugt auf eine Temperatur in einem Bereich von 900 bis 1300 °C, zum Beispiel in einem Bereich von 900 bis 1250°C oder von 1040 bis 1300°C, besonders bevorzugt in einem Bereich von 1000 bis 1050°C oder von 1200 bis 1300°C. Bevorzugt wird bei der thermischen Behandlung eine Temperatur von 1300°C nicht für einen zusammenhängenden Zeitraum von mehr als 1 h überschritten, besonders bevorzugt wird eine Temperatur von 1300°C während der gesamten thermischen Behandlungsdauer nicht überschritten. Das Tempern kann prinzipiell bei vermindertem Druck, bei Normaldruck oder bei erhöhtem Druck erfolgen, bevorzugt bei vermindertem Druck, besonders bevorzugt im Vakuum.

Das Stauchen erfolgt bevorzugt durch Erhitzen des Quarzglaskörpers, bevorzugt auf eine Temperatur von etwa 2100°C, und anschließendes Umformen während einer rotierenden Drehbewegung, bevorzugt mit einer Drehgeschwindigkeit von etwa 60 U/min. Beispielsweise kann ein Quarzglaskörper in Form einer Stange durch Stauchen zu einem Zylinder umgeformt werden.

Bevorzugt kann ein Quarzglaskörper durch Einblasen eines Gases in den Quarzglaskörper aufgeblasen werden. Zum Beispiel kann ein Quarzglaskörper durch Aufblasen zu einem Großrohr umgeformt werden. Bevorzugt wird dazu der Quarzglaskörper, bevorzugt auf eine Temperatur von etwa 2100°C, während eine rotierende Drehbewegung, bevorzugt mit einer Drehgeschwindigkeit von etwa 60 U/min, ausgeführt wird, erhitzt und der Innenraum mit einem Gas gespült, bevorzugt bei einem definierten und geregelten Innendruck bis etwa 100 mbar. Unter einem Großrohr wird ein Rohr mit einem Außendurchmesser von mindestens 500 mm verstanden.

Ein Quarzglaskörper kann bevorzugt ausgezogen werden. Das Ausziehen erfolgt bevorzugt durch Erhitzen des Quarzglaskörpers, bevorzugt auf eine Temperatur von etwa 2100°C, und anschließendes Ziehen mit einer geregelten Ziehgeschwindigkeit auf den gewünschten Außendurchmesser des Quarzglaskörpers. Zum Beispiel können aus Quarzglaskörpern durch Ausziehen Lampenrohre geformt werden.

Bevorzugt wird der Quarzglaskörper mechanisch nachbehandelt. Unter mechanischem Nachbehandeln des Quarzglaskörpers wird prinzipiell jede Maßnahme verstanden, die dem Fachmann bekannt ist und geeignet erscheint, durch eine abrasive Maßnahme die Gestalt des Quarzglaskörpers zu verändern oder den Quarzglaskörper in mehrere Stücke zu teilen. Insbesondere beinhaltet das mechanische Nachbehandeln mindestens eine Maßnahme ausgewählt aus der Gruppe bestehend aus Schleifen, Bohren, Honen, Sägen, Wasserstrahlschneiden, Laserstrahlschneiden, Aufrauen durch Sandstrahlen, Fräsen und einer Kombination aus zwei oder mehr davon.

Bevorzugt wird der Quarzglaskörper mit einer Kombination dieser Maßnahmen, zum Beispiel mit einer Kombination aus einer chemischen und einer thermischen Nachbehandlung oder einer chemischen und einer mechanischen Nachbehandlung oder einer thermischen und einer mechanischen Nachbehandlung, besonders bevorzugt mit einer Kombination aus einer chemischen, einer thermischen und einer mechanischen Nachbehandlung behandelt. Weiterhin bevorzugt kann der Quarzglaskörper jeweils, unabhängig voneinander, mehreren der vorgenannten Maßnahmen unterworfen werden.

Gemäß einer weiteren Ausführungsform kann das Verfahren folgenden, optionalen Verfahrensschritt enthalten: viii.) Bilden eines Hohlkörpers mit mindestens einer Öffnung aus dem Quarzglaskörper.

Der gebildete Hohlkörper weist eine innere und eine äußere Form auf. Unter innerer Form wird die Form des Innenrands des Hohlkörpers im Querschnitt verstanden. Die innere und äußere Form des Querschnitts des Hohlkörpers können gleich oder verschieden sein. Die innere und äußere Form des Hohlkörpers kann im Querschnitt rund, elliptisch oder polygon mit drei oder mehr Ecken, zum Beispiel 4, 5, 6, 7 oder 8 Ecken, sein.

Bevorzugt entspricht die äußere Form des Querschnitts der inneren Form des Querschnitts des Hohlkörpers. Besonders bevorzugt hat der Hohlkörper im Querschnitt eine runde innere und eine runde äußere Form.

In einer anderen Ausgestaltung kann sich der Hohlkörper in der inneren und äußeren Form unterscheiden. Bevorzugt weist der Hohlkörper im Querschnitt eine runde äußere Form und eine polygone innere Form auf. Besonders bevorzugt weist der Hohlkörper im Querschnitt eine runde äußere Form und eine hexagonale innere Form auf.

Bevorzugt hat der Hohlkörper eine Länge im Bereich von 100 bis 10000 mm, zum Beispiel von 1000 bis 4000 mm, besonders bevorzugt von 1200 bis 2000 mm.

Bevorzugt hat der Hohlkörper eine Wanddicke in einem Bereich von 0,8 bis 50 mm, zum Beispiel in einem Bereich von 1 bis 40 mm oder von 2 bis 30 mm oder von 3 bis 20 mm, besonders bevorzugt in einem Bereich von 4 bis 10 mm.

Bevorzugt hat der Hohlkörper einen Außendurchmesser 2,6 bis 400 mm, zum Beispiel in einem Bereich von 3,5 bis 450 mm, besonders bevorzugt in einem Bereich von 5 bis 300 mm.

Bevorzugt hat der Hohlkörper einen Innendurchmesser 1 bis 300 mm, zum Beispiel in einem Bereich von 5 bis 280 mm oder von 10 bis 200 mm, besonders bevorzugt in einem Bereich von 20 bis 100 mm.

Der Hohlkörper enthält eine oder mehr Öffnungen. Bevorzugt enthält der Hohlkörper eine Öffnung. Bevorzugt enthält der Hohlkörper eine gerade Zahl an Öffnungen, zum Beispiel 2, 4, 6, 8, 10, 12, 14, 16 18 oder 20 Öffnungen. Bevorzugt enthält der Hohlkörper zwei Öffnungen. Bevorzugt ist der Hohlkörper ein Rohr. Diese Form des Hohlkörpers ist besonders bevorzugt, wenn der Lichtleiter nur einen Kern beinhaltet. Der Hohlkörper kann mehr als zwei Öffnungen enthalten. Die Öffnungen liegen bevorzugt jeweils paarweise gegenüberliegend in den Enden des Quarzglaskörpers. Zum Beispiel weist jedes Ende des Quarzglaskörpers 2, 3, 4, 5, 6, 7 oder mehr als 7 Öffnungen auf, besonders bevorzugt 5, 6 oder 7 Öffnungen. Bevorzugte Formen sind zum Beispiel Rohre, Zwillingsrohre, also Rohre mit zwei parallelen Kanälen, Vielkanalstäbe, also Rohre mit mehr als zwei parallelen Kanälen.

Der Hohlkörper kann prinzipiell auf allen dem Fachmann bekannten Wegen geformt werden. Bevorzugt wird der Hohlkörper mittels einer Düse geformt. Bevorzugt enthält die Düse in der Mitte ihrer Öffnung eine Vorrichtung, die die Glasschmelze beim Formen ableitet. So kann aus einer Glasschmelze ein Hohlkörper geformt werden.

Das Bilden eines Hohlkörpers kann durch Verwendung einer Düse und anschließende Nachbehandlung erfolgen. Als Nachbehandlung eignen sich prinzipiell alle dem Fachmann bekannten Verfahren zur Herstellung eines Hohlkörpers aus einem massiven Körper, zum Beispiel das Stauchen von Kanälen, Bohren, Honen oder Schleifen. Bevorzugt geeignet ist als Nachbehandlung das Führen des massiven Körpers über einen oder mehrere Dornen, wobei ein Hohlkörper gebildet wird. Ebenso kann der Dorn in den massiven Körper unter Bilden eines Hohlkörpers eingebracht werden. Bevorzugt wird der Hohlkörper nach dem Bilden abgekühlt.

Bevorzugt wird der Hohlkörper nach dem Bilden auf eine Temperatur von weniger als 500°C, zum Beispiel von weniger als 200°C oder weniger als 100°C oder weniger als 50°C, besonders bevorzugt auf eine Temperatur im Bereich von 20 bis 30°C abgekühlt.

Ein zweiter Gegenstand (nicht Gegenstand der Erfindung) ist ein Quarzglaskörper erhältlich nach dem erfindungsgemässen Verfahren. Dementsprechend bevorzugt ist auch ein Verfahren zum Herstellen eines Quarzglaskörpers, wobei zunächst die gemäß dem ersten Gegenstand der Erfindung beschriebenen Schritte i.) bis vii.) durchgeführt werden

In einer Ausführungsform weist der Quarzglaskörper des zweiten Gegenstands, ebenso wie der gemäß dem ersten Gegenstand erhältliche Quarzglaskörper, mindestens eines, bevorzugt zwei oder mehrere bis hin zu alle der folgenden Merkmale auf:

A] einen Chlorgehalt von weniger als 60 ppm;

B] einen Aluminiumgehalt von weniger als 200 ppb;

C] einen ODC-Anteil von weniger als $5 \cdot 10^{19}/cm^3$, zum Beispiel in einem Bereich von $0{,}1 \cdot 10^{15}$ bis $3 \cdot 10^{15}$ /$cm^3$, besonders bevorzugt in einem Bereich von $0{,}5 \cdot 10^{15}$ bis $2{,}0 \cdot 10^{15}$ /$cm^3$;

D] einen Gehalt an Atomen, die von Si, O, H, C verschieden sind, von weniger als 5 ppm;

E] eine Viskosität (p=1013 hPa) in einem Bereich von $\log_{10} (\eta\ (1250°C)\ /\ dPas) = 11{,}4$ bis $\log_{10} (\eta\ (1250°C)\ /\ dPas) = 12{,}9$, oder $\log_{10} (\eta\ (1300°C)\ /\ dPas) = 11{,}1$ bis $\log_{10} (\eta\ (1300°C)\ /\ dPas) = 12{,}2$, oder $\log_{10} (\eta\ (1350°C)\ /\ dPas) = 10{,}5$ bis $\log_{10} (\eta\ (1350°C)\ /\ dPas) = 11{,}5$;

F] eine Brechzahlhomogenität von weniger als $10^{-4}$;

G] eine zylindrische Form;

H] einen Wolframgehalt von weniger als 100 ppb, von weniger als 40 ppb, oder weniger als 10 ppb, oder weniger 5 ppb;

I] einen Molybdängehalt von weniger als 100 ppb, von weniger als 40 ppb, oder weniger als 10 ppb, oder weniger 5 ppb;

wobei die ppb und ppm jeweils auf das Gesamtgewicht des Quarzglaskörpers bezogen sind.

Ein dritter Gegenstand der vorliegenden Erfindung ist ein Verfahren zum Herstellen eines Lichtleiters beinhaltend folgende Schritte:

A/ Bereitstellen eines Quarzglaskörpers gemäß dem zweiten Gegenstand der Erfindung, oder einer seiner Ausführungsformen, oder eines nach dem Verfahren gemäß dem ersten Gegenstand erhältlichen Quarzglaskörpers, insbesondere durch Durchführen der Verfahrensschritte i.) bis vii.) gemäß dem ersten Gegenstand;
wobei der Quarzglaskörper zunächst zu einem Hohlkörper mit mindestens einer Öffnung verarbeitet wird;
B/ Einbringen eines oder mehrerer Kernstäbe in den Quarzglaskörper durch die mindestens eine Öffnung unter Erhalt eines Vorläufers;
C/ Ziehen des Vorläufers aus Schritt B/ in der Wärme unter Erhalt eines Lichtleiters mit einem oder mehreren Kernen und einer Hülle M1.

Schritt A/

Der in Schritt A/ bereitgestellte Quarzglaskörper ist bevorzugt gekennzeichnet durch die Merkmale gemäß des ersten und/oder zweiten Gegenstands der Erfindung. Dieser Quarzglaskörper kann insbesondere durch Durchführen der Verfahrensschritte i.) bis vii.) gemäß dem ersten Gegenstand der Erfindung erhalten werden. Weiterhin kann der Quarzglaskörper durch ein Umformverfahren zu einem Hohlkörper mit mindestens einer Öffnung geformt worden sein. Besonders bevorzugt weist der so erhältliche Quarzglaskörper die Merkmale gemäß des fünften Gegenstands auf.

Schritt B/

Durch die mindestens eine Öffnung des Quarzglaskörpers werden ein oder mehrere Kernstäbe eingebracht (Schritt B/). Als Kernstab wird im Zusammenhang mit der vorliegenden Erfindung ein Gegenstand bezeichnet, der vorgesehen ist, in eine Hülle, zum Beispiel eine Hülle M1, eingebracht und zu einem Lichtleiter verarbeitet zu werden. Der Kernstab hat einen Kern aus Quarzglas. Bevorzugt beinhaltet der Kernstab einen Kern aus Quarzglas und eine den Kern umgebende erste Mantelschicht M0.
Jeder Kernstab besitzt eine Form, die so gewählt ist, dass sie in den Quarzglaskörper passt. Bevorzugt entspricht die äußere Form eines Kernstabs der Form einer Öffnung des Quarzglaskörpers. Besonders bevorzugt ist der Quarzglaskörper ein Rohr und der Kernstab ein Stab mit einem runden Querschnitt.
Der Durchmesser des Kernstabs ist geringer als der Innendurchmesser des Hohlkörpers. Bevorzugt ist der Durchmesser des Kernstabs 0,1 bis 3 mm kleiner als der Innendurchmesser des Hohlkörpers, zum Beispiel 0,3 bis 2,5 mm kleiner oder 0,5 bis 2 mm kleiner oder 0,7 bis 1,5 mm kleiner, besonders bevorzugt 0,8 bis 1,2 mm kleiner.
Bevorzugt liegt das Verhältnis des Innendurchmessers des Quarzglaskörpers zum Durchmesser des Kernstabs im Bereich von 2:1 bis 1,0001:1, zum Beispiel im Bereich von 1,8:1 bis 1,01:1 oder im Bereich von 1,6:1 bis 1,005:1 oder im Bereich von 1,4:1 bis 1,01:1, besonders bevorzugt im Bereich von 1,2:1 bis 1,05:1.
Bevorzugt kann ein Bereich innerhalb des Quarzglaskörpers, der nicht durch den Kernstab ausgefüllt ist, mit mindestens einer weiteren Komponente gefüllt werden, zum Beispiel einem Siliziumdioxidpulver oder einem Siliziumdioxidgranulat.
Es ist ebenso möglich, dass in einen Quarzglaskörper ein sich bereits in mindestens einem weiteren Quarzglaskörper befindlicher Kernstab eingeführt wird. Der weitere Quarzglaskörper hat dabei einen Außendurchmesser, der geringer als der Innendurchmesser des Quarzglaskörpers ist. Der in den Quarzglaskörper eingeführte Kernstab kann sich auch bereits in zwei oder mehr weiteren Quarzglaskörpern, zum Beispiel in 3 oder 4 oder 5 oder 6 oder mehr weiteren Quarzglaskörpern befinden.
Ein so erhältlicher mit einem oder mehreren Kernstäben versehener Quarzglaskörper wird im Folgenden als "Vorläufer" bezeichnet.

Schritt C/

Der Vorläufer wird in der Wärme gezogen (Schritt C/). Das so erhaltene Produkt ist ein Lichtleiter mit einem oder mehreren Kernen und mindestens einer Hülle M1.
Bevorzugt erfolgt das Ziehen des Vorläufers mit einer Geschwindigkeit im Bereich von 1 bis 100 m/h, zum Beispiel mit einer Geschwindigkeit im Bereich von 2 bis 50 m/h oder von 3 bis 30 m/h. Besonders bevorzugt erfolgt das Ziehen des Quarzglaskörpers mit einer Geschwindigkeit im Bereich von 5 bis 25 m/h.
Bevorzugt wird das Ziehen in der Wärme bei einer Temperatur von bis zu 2500°C durchgeführt, zum Beispiel bei einer Temperatur im Bereich von 1700 bis 2400°C besonders bevorzugt bei einer Temperatur im Bereich von 2100 bis 2300°C.
Bevorzugt wird der Vorläufer durch einen Ofen geführt, der den Vorläufer von außen erhitzt.
Bevorzugt wird der Vorläufer verlängert, auch "elongieren" genannt, bis die gewünschte Dicke des Lichtleiters erreicht wird. Bevorzugt wird der Vorläufer auf die 1.000 bis 6.000.000 fache Länge elongiert, zum Beispiel auf die 10.000 bis 500.000 fache Länge oder auf die 30.000 bis 200.000 fache Länge, jeweils bezogen auf die Länge des in Schritt A/ bereitgestellten Quarzglaskörpers. Besonders bevorzugt wird der Vorläufer auf die 100.000 bis 10.000.000 fache Länge elongiert, zum Beispiel auf die 150.000 bis 5.800.000 fache Länge oder auf die 160.000 bis 640.000 fache Länge oder auf die 1.440.000 bis 5.760.000 fache Länge oder auf die 1.440.000 bis 2.560.000 fache Länge, jeweils bezogen auf die Länge des in Schritt A/ bereitgestellten Quarzglaskörpers.

Bevorzugt wird der Durchmesser des Vorläufers durch das Elongieren um einen Faktor in einem Bereich von 100 bis 3.500 verringert, zum Beispiel in einem Bereich von 300 bis 3.000 oder von 400 bis 800 oder von 1.200 bis 2.400 oder von 1.200 bis 1.600 jeweils bezogen auf den Durchmesser des in Schritt A/ bereitgestellten Quarzglaskörpers.

Der Lichtleiter, auch als Lichtwellenleiter bezeichnet, kann jedes Material beinhalten, das dazu geeignet ist elektromagnetische Strahlung, insbesondere Licht, zu leiten oder zu führen.

Unter Leiten oder Führen von Strahlung wird die Ausdehnung der Strahlung über die Längsausdehnung des Lichtleiters ohne wesentliche Behinderung oder Dämpfung der Intensität der Strahlung bezeichnet. Dabei wird die Strahlung über ein Ende des Lichtleiters in den Leiter eingekoppelt. Bevorzugt leitet der Lichtleiter elektromagnetische Strahlung in einem Wellenlängenbereich von 170 bis 5000 nm. Bevorzugt liegt die Dämpfung der Strahlung durch den Lichtleiter in dem jeweiligen Wellenlängenbereich in einem Bereich von 0,1 bis 10 dB/km. Bevorzugt weist der Lichtleiter eine Übertragungsrate von bis zu 50 Tbit/s auf.

Der Lichtleiter weist bevorzugt einen Curl-Parameter von mehr als 6 m auf. Unter dem Curl-Parameter wird gemäß vorliegendem Kontext der Biegeradius einer Faser, z.B. eines Lichtleiters oder einer Hülle M1, verstanden, der sich bei einer frei beweglichen Faser ohne äußere Krafteinwirkung einstellt.

Der Lichtleiter ist bevorzugt biegbar ausgestaltet. Biegbar im Sinne der Erfindung bedeutet, dass der Lichtleiter durch einen Biegeradius von 20 mm oder weniger gekennzeichnet, zum Beispiel von 10 mm oder weniger, besonders bevorzugt weniger als 5 mm oder weniger. Unter einem Biegeradius wird der engste Radius bezeichnet, der geformt werden kann, ohne einen Bruch des Lichtleiters zu bewirken und ohne Beeinträchtigung der Fähigkeit des Lichtleiters Strahlung zu leiten. Eine Beeinträchtigung liegt bei einer Dämpfung des durch eine Biegung des Lichtleiters durchgeleiteten Lichts um mehr als 0,1 dB vor. Die Dämpfung wird bevorzugt bei einer Referenzwellenlänge von 1550 nm angegeben.

Der Lichtleiter weist bevorzugt eine längliche Form auf. Der Lichtleiter wird in seiner Form durch seine Längsausdehnung L und seinem Querschnitt Q definiert. Der Lichtleiter weist bevorzugt eine runde Außenwand entlang seiner Längsausdehnung L auf. Ein Querschnitt Q des Lichtleiters wird immer in einer Ebene bestimmt, die senkrecht zu der Außenwand des Lichtleiters steht. Ist der Lichtleiter in der Längsausdehnung L gekrümmt, so wird der Querschnitt Q senkrecht zur Tangente an einem Punkt auf der Lichtleiter Außenwand ermittelt. Der Lichtleiter weist bevorzugt einen Durchmesser $d_L$ in einem Bereich von 0,04 bis 1,5 mm auf. Der Lichtleiter weist bevorzugt eine Länge in einem Bereich von 1 m bis 100 km auf.

Der Lichtleiter kann einen oder mehrere Kerne aufweisen, zum Beispiel einen Kern oder zwei Kerne oder drei Kerne oder vier Kerne oder fünf Kerne oder sechs Kerne oder sieben Kerne oder mehr als sieben Kerne, besonders bevorzugt einen Kern. Bevorzugt werden mehr als 90 %, zum Beispiel mehr als 95 %, besonders bevorzugt mehr als 98 % der elektromagnetischen Strahlung, die durch den Lichtleiter geleitet werden, in den Kernen geführt. Für den Transport von Licht in den Kernen gelten die als bevorzugt genannten Wellenlängenbereiche, die bereits für den Lichtleiter angegeben wurden. Bevorzugt ist das Material der Kerne ausgewählt aus der Gruppe bestehend aus Glas oder Quarzglas, oder einer Kombination der beiden, besonders bevorzugt Quarzglas. Die Kerne können unabhängig voneinander aus dem gleichen Material oder aus unterschiedlichen Materialien bestehen. Bevorzugt bestehen alle Kerne aus dem gleichen Material, besonders bevorzugt aus Quarzglas.

Jeder Kern weist einen, bevorzugt runden, Querschnitt $Q_K$ auf und hat eine längliche Form mit der Länge $L_K$. Der Querschnitt $Q_K$ eines Kerns ist unabhängig von dem Querschnitt $Q_K$ jedes weiteren Kerns. Die Querschnitte $Q_K$ der Kerne können gleich oder verschieden sein. Bevorzugt sind die Querschnitte $Q_K$ aller Kerne gleich. Ein Querschnitt $Q_K$ eines Kerns wird immer in einer Ebene bestimmt, die senkrecht zu der Außenwand des Kerns bzw. der Lichtleiter Außenwand steht. Ist ein Kern in der Längsausdehnung gekrümmt, so wird der Querschnitt $Q_K$ senkrecht zur Tangente an einem Punkt auf der Außenwand dieses Kerns ermittelt. Die Länge $L_K$ eines Kerns ist unabhängig von der Länge $L_K$ jedes weiteren Kerns. Die Längen $L_K$ der Kerne können gleich oder verschieden sein. Bevorzugt sind die Längen $L_K$ aller Kerne gleich. Jeder Kern weist bevorzugt eine Länge $L_K$ in einem Bereich von 1 m bis 100 km auf. Jeder Kern weist einen Durchmesser $d_K$ auf. Der Durchmesser $d_K$ eines Kerns ist unabhängig von dem Durchmesser $d_K$ jedes weiteren Kerns. Die Durchmesser $d_K$ der Kerne können gleich oder verschieden sein. Bevorzugt sind die Durchmesser $d_K$ aller Kerne gleich. Bevorzugt liegt der Durchmesser $d_K$ jedes Kerns in einem Bereich von 0,1 bis 1000 $\mu$m, zum Beispiel von 0,2 bis 100 $\mu$m oder von 0,5 bis 50 $\mu$m, besonders bevorzugt von 1 bis 30 $\mu$m auf.

Jeder Kern weist mindestens einen Brechungsindexverlauf senkrecht zur maximalen Kernausdehnung auf. "Brechungsindexverlauf" bedeutet, dass der Brechungsindex senkrecht zur maximalen Kernausdehnung konstant ist oder sich verändert. Der bevorzugte Brechungsindexverlauf entspricht einem konzentrischen Brechungsindexprofil, zum Beispiel einem konzentrischen Brechungsindexprofil, bei dem sich ein erster Bereich mit dem maximalen Brechungsindex im Zentrum des Kerns befindet, dem sich ein weiterer Bereich mit einem niedrigeren Brechungsindex anschließt. Bevorzugt weist jeder Kern nur einen Brechungsindexverlauf über seine Länge $L_K$ auf. Der Brechungsindexverlauf eines Kerns ist unabhängig von dem Brechungsindexverlauf jedes weiteren Kerns. Die Brechungsindexverläufe der Kerne können gleich oder verschieden sein. Bevorzugt sind die Brechungsindexverläufe aller Kerne gleich. Es ist prinzipiell auch möglich, dass ein Kern eine Vielzahl verschiedener Brechungsindexverläufe aufweist.

Jeder Brechungsindexverlauf senkrecht zur maximalen Kernausdehnung weist einen maximalen Brechungsindex $n_K$ auf. Jeder Brechungsindexverlauf senkrecht zur maximalen Kernausdehnung kann zudem weitere niedrigere Brechungsindices aufweisen. Der niedrigste Brechungsindex des Brechungsindexverlaufs ist bevorzugt nicht um mehr als 0,5 geringer als der maximale Brechungsindex $n_K$ des Brechungsindexverlaufs. Der niedrigste Brechungsindex des Brechungsindexverlaufs ist bevorzugt um 0,0001 bis 0,15, zum Beispiel um 0,0002 bis 0,1, besonders bevorzugt um 0,0003 bis 0,05 geringer als der maximale Brechungsindex $n_K$ des Brechungsindexverlaufs.

Bevorzugt weist der Kern einen Brechungsindex $n_K$ in einem Bereich von 1,40 bis 1,60, zum Beispiel in einem Bereich von 1,41 bis 1,59, besonders bevorzugt in einem Bereich von 1,42 bis 1,58 auf, jeweils ermittelt bei einer Referenzwellenlänge von $\lambda_r$ = 589 nm (Natrium D-Linie), bei einer Temperatur von 20°C und bei Normaldruck (p = 1013 hPa). Weitere Angaben hierzu siehe Abschnitt Testmethoden. Der Brechungsindex $n_K$ eines Kerns ist unabhängig von dem Brechungsindex $n_K$ jedes weiteren Kerns. Die Brechungsindices $n_K$ der Kerne können gleich oder verschieden sein. Bevorzugt sind die Brechungsindices $n_K$ aller Kerne gleich.

Bevorzugt weist jeder Kern des Lichtleiters eine Dichte in einem Bereich von 1,9 bis 2,5 g/cm³, zum Beispiel in einem Bereich von 2,0 bis 2,4 g/cm³, besonders bevorzugt in einem Bereich von 2,1 bis 2,3 g/cm³ auf. Bevorzugt weisen die Kerne eine Restfeuchte von weniger als 100 ppb auf, zum Beispiel von weniger als 20 ppb oder von weniger als 5 ppb, besonders bevorzugt von weniger als 1 ppb, jeweils bezogen auf das Gesamtgewicht des Kerns. Die Dichte eines Kerns ist unabhängig von der Dichte jedes weiteren Kerns. Die Dichten der Kerne können gleich oder verschieden sein. Bevorzugt sind die Dichten aller Kerne gleich.

Beinhaltet ein Lichtleiter mehr als einen Kern, ist jeder Kern unabhängig von den weiteren Kernen durch die obenstehenden Merkmale gekennzeichnet. Es ist bevorzugt, dass alle Kerne die gleichen Merkmale aufweisen.

Die Kerne sind erfindungsgemäß von mindestens einer Hülle M1 umgeben. Die Hülle M1 umgibt die Kerne bevorzugt über die gesamte Länge der Kerne. Bevorzugt umgibt die Hülle M1 die Kerne zu mindestens 95 %, zum Beispiel zu mindestens 98 % oder zu mindestens 99 %, besonders bevorzugt zu 100 % der Außenoberfläche, also der gesamten Außenwand, der Kerne. Oftmals sind die Kerne bis auf die Enden (jeweils die letzten 1-5 cm) vollständig von der Hülle M1 umgeben. Dies dient dem Schutz der Kerne vor mechanischer Beeinträchtigung.

Die Hülle M1 kann jedes Material, beinhaltend Siliziumdioxid, beinhalten, das einen niedrigeren Brechungsindex aufweist als mindestens ein Punkt P im Verlauf des Querschnitts $Q_K$ des Kerns. Bevorzugt ist dieser mindestens eine Punkt im Verlauf des Querschnitts $Q_K$ des Kerns, der Punkt, der im Zentrum des Kerns liegt. Weiterhin bevorzugt ist der Punkt P im Verlauf des Querschnitts $Q_K$ des Kerns der Punkt, der ein Maximum des Brechungsindexes $n_{Kmax}$ im Kern aufweist. Bevorzugt weist die Hülle M1 einen Brechungsindex $n_{M1}$ auf, der mindestens 0,0001 geringer ist als der Brechungsindex des Kerns $n_K$ an dem mindestens einen Punkt im Verlauf des Querschnitts Q des Kerns. Bevorzugt weist die Hülle M1 einen Brechungsindex $n_{M1}$ auf, der in einem Bereich von 0,0001 bis 0,5, zum Beispiel in einem Bereich von 0,0002 bis 0,4, besonders bevorzugt in einem Bereich von 0,0003 bis 0,3 geringer ist als der Brechungsindex des Kerns $n_K$.

Die Hülle M1 weist bevorzugt einen Brechungsindex $n_{M1}$ in einem Bereich von 0,9 bis 1,599, zum Beispiel in einem Bereich von 1,30 bis 1,59, besonders bevorzugt in einem Bereich von 1,40 bis 1,57 auf. Bevorzugt bildet die Hülle M1 einen Bereich des Lichtleiters mit einem konstanten Brechungsindex $n_{M1}$. Unter einem Bereich mit konstantem Brechungsindex wird ein Bereich verstanden in dem der Brechungsindex nicht mehr als 0,0001 von dem Mittelwert des Brechungsindex $n_{M1}$ in diesem Bereich abweicht.

Prinzipiell kann der Lichtleiter weitere Hüllen beinhalten. Besonders bevorzugt weist zumindest eine der weiteren Hüllen, bevorzugt mehrere oder alle, einen Brechungsindex auf, der niedriger ist als der Brechungsindex $n_K$ jedes Kerns. Bevorzugt weist der Lichtleiter eine oder zwei oder drei oder vier oder mehr als vier weitere Hüllen auf, die die Hülle M1 umgeben. Bevorzugt weisen die die Hülle M1 umgebenden weiteren Hüllen einen Brechungsindex auf, der niedriger ist als der Brechungsindex $n_{M1}$ der Hülle M1.

Bevorzugt weist der Lichtleiter eine oder zwei oder drei oder vier oder mehr als vier weitere Hüllen auf, die die Kerne umgeben und von der Hülle M1 umgeben sind, also zwischen den Kernen und der Hülle M1 liegen. Weiterhin bevorzugt weisen die zwischen den Kernen und der Hülle M1 liegenden weiteren Hüllen einen Brechungsindex auf, der höher ist als der Brechungsindex $n_{M1}$ der Hülle M1.

Bevorzugt nimmt der Brechungsindex vom Kern des Lichtleiters zur äußersten Hülle hin ab. Die Abnahme des Brechungsindexes vom Kern zur äußersten Hülle kann in Stufen oder stetig verlaufen. Die Abnahme des Brechungsindex kann verschiedene Abschnitte aufweisen. Weiter bevorzugt kann der Brechungsindex in mindestens einem Abschnitt stufenweise und in mindestens einem anderen Abschnitt stetig abnehmen. Die Stufen können gleich oder verschieden hoch sein. Es ist durchaus möglich, zwischen Abschnitten mit abnehmendem Brechungsindex Abschnitte mit steigendem Brechungsindex vorzusehen.

Die unterschiedlichen Brechungsindices der verschiedenen Hüllen können beispielsweise durch Dotierung der Hülle M1, der weiteren Hüllen und/oder der Kerne eingestellt werden.

Je nach Art der Herstellung eines Kerns kann ein Kern bereits nach seiner Herstellung eine erste Mantelschicht M0 aufweisen. Diese dem Kern unmittelbar benachbarte Mantelschicht M0 wird manchmal auch als integrale Mantelschicht bezeichnet. Die Mantelschicht M0 liegt dem Kernmittelpunkt näher als die Hülle M1 und, wenn enthalten, die weiteren Hüllen. Die Mantelschicht M0 dient in der Regel nicht der Lichtleitung bzw. Strahlungsleitung. Vielmehr trägt die Mantelschicht M0 dazu bei, dass die Strahlung innerhalb des Kerns verbleibt und dort transportiert wird. Die im Kern geleitete Strahlung wird also bevorzugt am Übergang vom Kern in die Mantelschicht M0 reflektiert. Dieser Übergang von dem Kern zur Mantelschicht M0 ist bevorzugt durch eine Brechungsindexänderung gekennzeichnet. Der Brechungsindex der Mantelschicht M0 ist bevorzugt kleiner als der Brechungsindex $n_K$ des Kerns. Bevorzugt beinhaltet die Mantelschicht M0 das gleiche Material wie der Kern, weist jedoch aufgrund einer Dotierung oder von Additiven einen geringeren Brechungsindex als der Kern auf.

Bevorzugt besteht zumindest die Hülle M1 aus Siliziumdioxid und weist mindestens eines, bevorzugt mehrere oder alle der folgenden Merkmale auf:

a) einen OH-Gehalt von weniger als 5 ppm, besonders bevorzugt von weniger als 1 ppm;

b) einen Chlorgehalt von weniger als 200 ppm, bevorzugt von weniger als 100 ppm, zum Beispiel von weniger als 80 ppm, besonders bevorzugt von weniger als 60 ppm;

c) einen Aluminiumgehalt von weniger als 200 ppb, bevorzugt von weniger als 100 ppb, zum Beispiel von weniger als 80 ppb, besonders bevorzugt von weniger als 60 ppb;

d) einen ODC-Anteil von weniger als $5 \cdot 10^{15}$ /cm$^3$, zum Beispiel in einem Bereich von $0,1 \cdot 10^{15}$ bis $3 \cdot 10^{15}$ / cm$^3$, besonders bevorzugt in einem Bereich von $0,5 \cdot 10^{15}$ bis $2,0 \cdot 10^{15}$ /cm$^3$;

e) einen Metallgehalt von Metallen, die von Aluminium verschieden sind, von weniger als 1 ppm, zum Beispiel von weniger als 0,5 ppm, besonders bevorzugt von weniger als 0,1 ppm;

f) eine Viskosität (p=1013 hPa) in einem Bereich von $\log_{10} (\eta \, (1250°C) / dPas) = 11,4$ bis $\log_{10} (\eta \, (1250°C) / dPas) = 12,9$ und/oder $\log_{10} (\eta \, (1300°C) / dPas) = 11,1$ bis $\log_{10} (\eta \, (1300°C) / dPas) = 12,2$ und/oder $\log_{10} (\eta \, (1350°C) / dPas) = 10,5$ bis $\log_{10} (\eta \, (1350°C) / dPas) = 11,5$;

g) einen Curl-Parameter von mehr als 6 m;

h) eine Brechzahlhomogenität von weniger als $1 \cdot 10^{-4}$;

i) einen Transformationspunkt Tg in einem Bereich von 1150 bis 1250°C, besonders bevorzugt in einem Bereich von 1180 bis 1220°C,

wobei die ppb und ppm jeweils bezogen sind auf das Gesamtgewicht der Hülle M1.

Bevorzugt weist die Hülle eine Brechzahlhomogenität von weniger als $1 \cdot 10^{-4}$ auf. Die Brechzahlhomogenität bezeichnet die maximale Abweichung des Brechungsindex an jeder Stelle einer Probe, beispielsweise einer Hülle M1 oder eines Quarzglaskörpers, bezogen auf den Mittelwert aller an der Probe ermittelten Brechungsindices. Zur Bestimmung des Mittelwerts wird der Brechungsindex an mindestens sieben Messpunkten ermittelt.

Bevorzugt weist die Hülle M1 einen Metallgehalt an von Aluminium verschiedenen Metallen von weniger als 1000 ppb, zum Beispiel von weniger als 500 ppb, besonders bevorzugt von weniger als 100 ppb, jeweils bezogen auf das Gesamtgewicht der Hülle M1, auf. Oftmals weist die Hülle M1 jedoch einen Gehalt an von Aluminium verschiedenen Metallen in einer Menge von mindestens 1 ppb auf. Solche Metalle sind beispielsweise Natrium, Lithium, Kalium, Magnesium, Calcium, Strontium, Germanium, Kupfer, Molybdän, Titan, Eisen und Chrom. Diese können zum Beispiel als Element, als Ion, oder als Teil eines Moleküls oder eines Ions oder eines Komplexes vorliegen.

Die Hülle M1 kann weitere Bestandteile beinhalten. Bevorzugt beinhaltet die Hülle M1 weniger als 5 ppm, zum Beispiel weniger als 45 ppm, besonders bevorzugt weniger als 4 ppm weiteren Bestandteilen wobei die ppm jeweils bezogen sind auf das Gesamtgewicht der Hülle M1 sind. Als weitere Bestandteile kommen zum Beispiel Kohlenstoff, Fluor, Jod, Brom und Phosphor in Betracht. Diese können zum Beispiel als Element, als Ion, oder als Teil eines Moleküls oder eines Ions oder eines Komplexes vorliegen. Oftmals weist die Hülle M1 jedoch einen Gehalt an Atomen, die von Si, O, H, C, Cl verschieden sind, in einer Menge von mindestens 1 ppb auf.

Bevorzugt beinhaltet die Hülle M1 Kohlenstoff zu weniger als 5 ppm, zum Beispiel zu weniger als 4 ppm oder zu weniger als 3 ppm, besonders bevorzugt zu weniger als 2 ppm, jeweils bezogen auf das Gesamtgewicht der Hülle M1. Oftmals weist die Hülle M1 jedoch einen Gehalt an Kohlenstoff in einer Menge von mindestens 1 ppb auf.

Bevorzugt weist die Hülle M1 eine homogen verteilte OH-Menge, Cl-Menge oder Al-Menge auf.

In einer Ausführungsform des Lichtleiters weist die Hülle M1 einen Gewichtsanteil von mindestens 80 Gew.-%. Zum Beispiel mindestens 85 Gew.-%, besonders bevorzugt mindestens 90 Gew.-%, jeweils bezogen auf das Gesamtgewicht der Hülle M1 und der Kerne, auf. Bevorzugt weist die Hülle M1 einen Gewichtsanteil von mindestens 80 Gew.-%. Zum Beispiel mindestens 85 Gew.-%, besonders bevorzugt mindestens 90 Gew.-%, jeweils bezogen auf das Gesamtgewicht der Hülle M1, der Kerne und der zwischen der Hülle M1 und der Kerne liegenden weiteren Hüllen, auf. Bevorzugt weist die Hülle M1 einen Gewichtsanteil von mindestens 80 Gew.-%. Zum Beispiel mindestens 85 Gew.-%,

besonders bevorzugt mindestens 90 Gew.-%, jeweils bezogen auf das Gesamtgewicht des Lichtleiters auf.

Bevorzugt weist die Hülle M1 eine Dichte in einem Bereich von 2,1 bis 2,3 g/cm$^3$, besonders bevorzugt in einem Bereich von 2,18 bis 2,22 g/cm$^3$ auf.

Ein weiterer Aspekt betrifft einen Lichtleiter, erhältlich durch ein Verfahren beinhaltend folgende Schritte:

A/ Bereitstellen eines Quarzglaskörpers gemäß dem dritten Gegenstand der Erfindung, oder eines nach dem Verfahren gemäß dem ersten Gegenstand erhältlichen Quarzglaskörpers, wobei der Quarzglaskörper zunächst zu einem Hohlkörper mit mindestens einer Öffnung verarbeitet wird;

B/ Einbringen eines oder mehrerer Kernstäbe in den Quarzglaskörper durch die mindestens eine Öffnung unter Erhalt eines Vorläufers;

C/ Ziehen des Vorläufers aus Schritt B/ in der Wärme unter Erhalt eines Lichtleiters mit einem oder mehreren Kernen und einer Hülle M1.

Die Schritte A/, B/ und C/ sind bevorzugt gekennzeichnet durch die im Rahmen des vierten Gegenstands beschriebene Merkmale.

Der Lichtleiter ist bevorzugt gekennzeichnet durch die im Rahmen des dritten Gegenstands beschriebene Merkmale.

Ein vierter Gegenstand der vorliegenden Erfindung betrifft ein Verfahren zum Herstellen eines Leuchtmittels beinhaltend folgende Schritte:

(i) Bereitstellen eines Quarzglaskörpers gemäß dem zweiten Gegenstand der Erfindung, oder eines nach dem Verfahren gemäß dem ersten Gegenstand erhältlichen Quarzglaskörpers, insbesondere durch Durchführen der Verfahrensschritte i.) bis vii.) gemäß dem ersten Gegenstand, wobei der Quarzglaskörper zunächst zu einem Hohlkörper verarbeitet wird;

(ii) gegebenenfalls Bestücken des Hohlkörpers mit Elektroden;

(iii) Füllen des Hohlkörpers mit einem Gas.

Schritt (i)

In Schritt (i) wird der Quarzglaskörper bereitgestellt. Der in Schritt (i) bereitgestellte Quarzglaskörper wir zunächst zu einem Hohlkörper beinhaltend mindestens eine Öffnung verarbeitet, zum Beispiel eine Öffnung oder zwei Öffnungen oder drei Öffnungen oder vier Öffnungen, besonders bevorzugt eine Öffnung oder zwei Öffnungen.

Bevorzugt wird für den Schritt (i) ein Quarzglaskörper erhältlich nach einem Verfahren gemäß dem ersten Gegenstand bereitgestellt. Bevorzugt weist der Quarzglaskörper die im Rahmen des ersten oder zweiten Gegenstands beschriebenen Merkmale auf.

Zur Verarbeitung eines Quarzglaskörpers gemäß dem vierten Gegenstand zu einem Hohlkörper kommen mehrere Möglichkeiten in Betracht.

Die Verarbeitung des Quarzglaskörpers zu einem Hohlkörper mit einer Öffnung kann prinzipiell mittels allen dem Fachmann bekannten und für die Herstellung von Glashohlkörpern mit einer Öffnung geeigneten Verfahren erfolgen. Geeignet sind zum Beispiel Verfahren beinhaltend ein Pressen, Blasen, Saugen oder Kombinationen davon. Es ist ebenfalls möglich, aus einem Hohlkörper mit zwei Öffnungen durch Schließen einer Öffnung, beispielsweise durch Zusammenschmelzen, einen Hohlkörper mit einer Öffnung zu bilden.

Der Hohlkörper besteht aus einem Material, das Siliziumdioxid beinhaltet, bevorzugt in einer Menge in einem Bereich von 98 bis 100 Gew.-%, beispielsweise in einem Bereich von 99,9 bis 100 Gew.-%, besonders bevorzugt zu 100 Gew.-%, jeweils bezogen auf das Gesamtgewicht des Hohlkörpers.

Das Material aus dem der Hohlkörper hergestellt ist, weist bevorzugt mindestens eines, bevorzugt mehrere, beispielsweise zwei, oder bevorzugt alle der folgenden Merkmale auf:

HK1. Einen Siliziumdioxidgehalt von bevorzugt mehr als 95 Gew.-%, beispielsweise von mehr als 97 Gew.-%, besonders bevorzugt von mehr als 99 Gew.-%, bezogen auf das Gesamtgewicht des Materials;

HK2. Eine Dichte in einem Bereich von 2,1 bis 2,3 g/cm$^3$, besonders bevorzugt in einem Bereich von 2,18 bis 2,22 g/cm$^3$ auf;

(fortgesetzt)

HK3. Eine Lichtdurchlässigkeit bei mindestens einer Wellenlänge im sichtbaren Bereich von 350 bis 750 nm in einem Bereich von 10 bis 100 %, beispielsweise in einem Bereich von 30 bis 99,99 %, besonders bevorzugt in einem Bereich von 50 bis 99,9 %, bezogen auf die Lichtmenge die innerhalb des Hohlkörpers erzeugt wird;

HK4. Einen OH-Gehalt von weniger als 500 ppm, zum Beispiel von weniger als 400 ppm, besonders bevorzugt von weniger als 300 ppm;

HK5. Einen Chlorgehalt von weniger als 200 ppm, bevorzugt von weniger als 100 ppm, zum Beispiel von weniger als 80 ppm, besonders bevorzugt von weniger als 60 ppm;

HK6. Einen Aluminiumgehalt von weniger als 200 ppb, zum Beispiel von weniger als 100 ppb, besonders bevorzugt von weniger als 80 ppb;

HK7. Einen Kohlenstoffgehalt von weniger als 5 ppm, zum Beispiel von weniger als 4,5 ppm, besonders bevorzugt von weniger als 4 ppm;

HK8. Einen ODC-Anteil von weniger als $5 \cdot 10^{19}/cm^3$;

HK9. Einen Metallgehalt von Metallen, die von Aluminium verschieden sind, von weniger als 1 ppm, zum Beispiel von weniger als 0,5 ppm, besonders bevorzugt von weniger als 0,1 ppm;

HK10. Eine Viskosität (p=1013 hPa) in einem Bereich von $\log_{10} \eta$ (1250°C) = 11,4 bis $\log_{10} \eta$ (1250°C)=12,4 und/oder logio $\eta$ (1300°C) = 11,1 bis logio $\eta$ (1350°C)=11,7 und/oder $\log_{10} \eta$ (1350°C) = 10,5 bis $\log_{10} \eta$ (1350°C)=11,1;

HK11. Einen Transformationspunkt Tg in einem Bereich von 1150 bis 1250°C, besonders bevorzugt in einem Bereich von 1180 bis 1220°C;

wobei die ppm und ppb jeweils auf das Gesamtgewicht des Hohlkörpers bezogen sind.

### Schritt (ii)

Bevorzugt wird der Hohlkörper aus Schritt (i) vor dem Befüllen mit einem Gas mit Elektroden, bevorzugt mit zwei Elektroden bestückt. Bevorzugt sind die Elektroden mit einer elektrischen Stromzuführung verbunden. Bevorzugt sind die Elektroden mit einem Lampensockel verbunden.

Das Material der Elektroden ist bevorzugt ausgewählt aus der Gruppe der Metalle. Prinzipiell kann jedes Metall als Elektrodenmaterial ausgewählt werden, dass während den Betriebsbedingungen des Leuchtmittels nicht oxidiert, korrodiert, geschmolzen oder sonstwie als Elektrode in seiner Form oder Leitfähigkeit beeinträchtigt wird. Das Elektrodenmaterial ist bevorzugt ausgewählt aus der Gruppe bestehend aus Eisen, Molybdän, Kupfer, Wolfram, Rhenium, Gold und Platin oder mindestens zwei davon ausgewählt, wobei Wolfram, Molybdän oder Rhenium bevorzugt sind.

### Schritt (iii)

Der in Schritt (i) bereitgestellte und gegebenenfalls in Schritt (ii) mit Elektroden bestückte Hohlkörper wird mit einem Gas gefüllt.

Das Befüllen kann auf allen dem Fachmann bekannten und für das Befüllen geeigneten Verfahren erfolgen. Bevorzugt wird ein Gas durch die mindestens eine Öffnung in den Hohlkörper geleitet.

Bevorzugt wird der Hohlkörper vor dem Befüllen mit einem Gas evakuiert, bevorzugt auf einen Druck von weniger als 2 mbar. Durch anschließendes Einleiten eines Gases wird der Hohlkörper mit dem Gas gefüllt. Diese Schritte können wiederholt werden, um Verunreinigungen mit Luft, insbesondere mit Sauerstoff zu minimieren. Bevorzugt werden diese Schritte mindestens zweimal, zum Beispiel mindestens dreimal oder mindestens viermal, besonders bevorzugt mindestens fünfmal wiederholt bis die Menge an Verunreinigungen mit anderen Gasen wie Luft, insbesondere Sauerstoff, ausreichend gering ist. Dieses Vorgehen ist besonders zum Füllen von Hohlkörpern mit einer Öffnung bevorzugt.

Beinhaltet ein Hohlkörper zwei oder mehr Öffnungen, wird der Hohlkörper bevorzugt durch eine der Öffnungen gefüllt. Die sich vor dem Befüllen mit dem Gas im Hohlkörper befindliche Luft kann durch die mindestens eine weiter Öffnung austreten. Das Gas wird solange durch den Hohlkörper geleitet bis die Menge an Verunreinigungen mit anderen Gasen wie Luft, insbesondere Sauerstoff ausreichend gering ist.

Bevorzugt wird der Hohlkörper mit einem Inertgas oder einer Kombination aus zwei oder mehr Inertgasen gefüllt, zum Beispiel mit Stickstoff, Helium, Neon, Argon, Krypton, Xenon oder einer Kombination aus zwei oder mehr davon, besonders bevorzugt mit Krypton, Xenon oder einer Kombination aus Stickstoff und Argon. Weitere bevorzugte Füllmittel für Hohlkörper von Leuchtmitteln sind Deuterium und Quecksilber.

Bevorzugt wird der Hohlkörper nach dem Befüllen mit einem Gas verschlossen, so dass das Gas bei der weiteren Verarbeitung nicht austritt, so dass bei der weiteren Verarbeitung keine Luft von außen eintritt, oder beides. Das Verschließen kann durch Abschmelzen oder das Aufsetzen eines Verschlusses erfolgen. Geeignete Verschlüsse sind zum Beispiel Quarzglasverschlüsse, die zum Beispiel auf den Hohlkörper ausgeschmolzen werden, oder Lampensockel. Bevorzugt wird der Hohlkörper durch Abschmelzen geschlossen.

Das Leuchtmittel beinhaltet einen Hohlkörper und gegebenenfalls Elektroden. Das Leuchtmittel weist bevorzugt mindestens eines, zum Beispiel mindestens zwei oder mindestens drei oder mindestens vier, besonders bevorzugt mindestens fünf der folgenden Merkmale auf:

I.) ein Volumen in einem Bereich von 0,1 cm$^3$ bis 10 m$^3$, beispielsweise in einem Bereich von 0,3 cm$^3$ bis 8 m$^3$, besonders bevorzugt in einem Bereich von 0,5 cm$^3$ bis 5 m$^3$;
II.) eine Länge in einem Bereich von 1 mm bis 100 m, beispielsweise in einem Bereich von 3 mm bis 80 m, besonders bevorzugt in einem Bereich von 5 mm bis 50 m;
III.) einen Abstrahlwinkel in einem Bereich von 2 bis 360°, beispielsweise in einem Bereich von 10 bis 360°, besonders bevorzugt in einem Bereich von 30 bis 360°;
IV.) eine Abstrahlung von Licht in einem Wellenlängenbereich von 145 bis 4000 nm, beispielsweise in einem Bereich von 150 bis 450 nm, oder von 800 bis 4000 nm, besonders bevorzugt in einem Bereich von 160 bis 280 nm;
V.) eine Leistung in einem Bereich von 1 mW bis 100 kW, besonders bevorzugt in einem Bereich von 1 kW bis 100 kW, oder in einem Bereich von 1 bis 100 Watt.

Ein weiterer Aspekt betrifft ein Leuchtmittel, erhältlich durch ein Verfahren beinhaltend folgende Schritte:

(i) Bereitstellen eines Quarzglaskörpers gemäß dem zweiten Gegenstand der Erfindung oder eines nach einem Verfahren gemäß dem ersten Gegenstand erhältlichen Quarzglaskörpers, insbesondere durch Durchführen der Verfahrensschritte i.) bis vii.), wobei der Quarzglaskörper zunächst zu einem Hohlkörper verarbeitet wird;

(ii) gegebenenfalls Bestücken des Hohlkörpers mit Elektroden;

(iii) Füllen des Hohlkörpers mit einem Gas.

Die Schritte (i), (ii) und (iii) sind bevorzugt gekennzeichnet durch die im Rahmen des siebten Gegenstands beschriebene Merkmale.
Das Leuchtmittel ist bevorzugt gekennzeichnet durch die im Rahmen des siebten Gegenstands beschriebene Merkmale.
Ein fünfter Gegenstand der vorliegenden Erfindung betrifft ein Verfahren zum Herstellen eines Formkörpers beinhaltend die folgenden Schritte:

(1) Bereitstellen eines Quarzglaskörpers gemäß dem zweiten Gegenstand der Erfindung oder eines nach einem Verfahren gemäß dem ersten Gegenstand erhältlichen Quarzglaskörpers, insbesondere durch Durchführen der Verfahrensschritte i.) bis vii.) gemäß dem ersten Gegenstand;

(2) Formen des Quarzglaskörpers unter Erhalt des Formkörpers.

Der in Schritt (1) bereitgestellte Quarzglaskörper ist ein Quarzglaskörper gemäß dem zweiten Gegenstand oder erhältlich nach einem Verfahren gemäß dem ersten Gegenstand der Erfindung. Bevorzugt weist der bereitgestellte Quarzglaskörper die Merkmale des ersten oder zweiten Gegenstands auf.

Schritt (2)

Zum Formen des in Schritt (1) bereitgestellten Quarzglaskörpers kommen prinzipiell alle dem Fachmann bekannten und für das Formen von Quarzglas geeigneten Verfahren in Betracht. Bevorzugte wird der Quarzglaskörper wie im Rahmen des ersten, vierten und fünften Gegenstands beschrieben zu einem Formkörper geformt. Weiter bevorzugt kann der Formkörper mittels Glasbläsern bekannten Techniken gebildet werden.
Der Formkörper kann prinzipiell jede aus Quarzglas formbare Gestalt annehmen. Bevorzugte Formkörper sind zum Beispiel:

- Hohlkörper mit mindestens einer Öffnung wie Rundkolben und Standkolben,
- Aufsätze und Verschlüsse für solche Hohlkörper,
- Offene Artikel wie Schalen und Boote (Trägergestelle für Wafer),

- Tiegel, sowohl offen als auch verschließbar ausgestaltet,
- Platten und Fenster,
- Küvetten,
- Rohre und Hohlzylinder, zum Beispiel Reaktionsrohre, Profilrohre, rechteckige Kammern,
- Stangen, Stäbe und Blöcke, zum Beispiel in runder oder eckiger, symmetrischer oder asymmetrischer Ausführung,
- einseitig oder beidseitig verschlossene Rohre und Hohlzylinder,
- Dome und Glocken,
- Flansche,
- Linsen und Prismen,
- zusammengeschweißte Teile,
- gebogene Teile, zum Beispiel konvexe oder konkave Oberflächen und Platten, gebogene Stangen und Rohre.

Gemäß einer Ausführungsform kann der Formkörper nach dem Formen behandelt werden. Hierbei kommen prinzipiell alle im Rahmen des ersten Gegenstands beschriebenen Verfahren in Betracht, die zum Nachbearbeiten des Quarzglaskörpers geeignet sind. Bevorzugt kann der Formkörper mechanisch bearbeitet werden, zum Beispiel durch Bohren, Honen, Außenschleifen, Zerkleinern oder Ausziehen.

Ein weiterer Aspekt betrifft einen Formkörper, erhältlich durch ein Verfahren beinhaltend folgende Schritte:

(1) Bereitstellen eines Quarzglaskörpers gemäß dem zweiten Gegenstand der Erfindung, oder eines Quarzglaskörpers erhältlich nach dem Verfahren gemäß erstem Gegenstand der Erfindung, insbesondere durch Durchführen der Verfahrensschritte i.) bis vii.) gemäß dem ersten Gegenstand;

(2) Formen des Quarzglaskörpers unter Erhalt des Formkörpers.

Die Schritte (1) und (2) sind bevorzugt gekennzeichnet durch die im Rahmen des achten Gegenstands beschriebene Merkmale.

Der Formkörper ist bevorzugt gekennzeichnet durch die im Rahmen des achten Gegenstands beschriebene Merkmale.

Ein sechster Gegenstand der Erfindung ist ein Verfahren zum Herstellen einer Beschichtung auf einem Substrat, beinhaltend die folgenden Schritte:

|A| Bereitstellen einer Siliziumdioxidsuspension erhältlich nach gemäß dem ersten Gegenstand oder einer seiner Ausführungsformen und eines Substrats;
|B| Aufbringen einer Schicht der Siliziumdioxidsuspension auf dem Substrat;

wobei eine Beschichtung auf dem Substrat gebildet wird.

Die in Schritt |A| bereitgestellte Siliziumdioxidsuspension ist erhältlich nach einem Verfahren gemäß dem ersten Gegenstand der Erfindung. Die Siliziumdioxidsuspension kann weitere Merkmale entsprechend der im Zusammenhang mit dem ersten Gegenstand beschriebenen Ausführungsformen aufweisen.

Für das Aufbringen in Schritt |B| kommen prinzipiell alle dem Fachmann bekannten und für das Herstellen einer Beschichtung geeignete Verfahren in Betracht. Dabei wird das Substrat, zu mindestens einem Teil mit der Siliziumdioxidsuspension überlagert.

In einer weiteren Ausführungsform kann das Aufbringen ein Ablegen der Siliziumdioxidsuspension auf dem Substrat oder ein Tauchen des Substrats in die Siliziumdioxidsuspension oder eine Kombination aus beiden Formen sein. Das Aufbringen durch Ablegen der Siliziumdioxidsuspension kann z. B. durch Spincoating, Tränkung, Gießen, Auftropfen, Spritzen, Aufsprühen, Aufrakeln, Bestreichen oder Bedrucken, beispielsweise über eine Dosierpumpe oder ein Inkjet-, Sieb-, Tief-, Offset- oder Tampondrucken auf das Substrat erfolgen. Die Siliziumdioxidsuspension kann mit einer Nassfilmdicke in einem Bereich von 0,01 $\mu m$ bis 250 $\mu m$, zum Beispiel in einem Bereich von 0,1 $\mu m$ bis 50 $\mu m$ aufgebracht werden.

Unter Ablegen wird ferner verstanden, dass die zum Aufbringen verwendete Siliziumdioxidsuspension mittels eines Hilfsmittels auf dem Substrat aufgebracht wird. Dies kann durch unterschiedliche Hilfsmittel geschehen. So kann die zum Aufbringen verwendete Siliziumdioxidsuspension auf das Substrat durch eine Düse gesprüht, gespritzt oder durch eine Schlitzdüse abgelegt werden. Weitere in Frage kommende Methoden sind das Vorhanggießen und das Spincoating. Zusätzlich kann die Siliziumdioxidsuspension beispielsweise über eine Rolle oder Walze auf die Oberfläche des Substrats aufgebracht werden. Als Sprüh- bzw. Spritzverfahren sind beispielsweise die Mikro-Dosierung oder der Digitaldruck über eine Düse bekannt. Hierbei kann auf die zum Aufbringen verwendete Siliziumdioxidsuspension ausgeübt werden oder die Siliziumdioxidsuspension wird einfach tropfend auf das Substrat aufgebracht.

Bei dem Tauchen kann das Substrat durch ein Bad in der Siliziumdioxidsuspension gezogen werden. Soll das Substrat lediglich zum Teil beschichtet werden, kann gegebenenfalls auch nur die zu beschichtende Oberfläche in die Siliziumdioxidsuspension eingetaucht und wieder herausgezogen werden, so wie dies zum Beispiel beim Dipcoating praktiziert wird. Durch mehrmaliges Tauchen können unterschiedliche Schichtdicken erreicht werden. Außerdem kann die Dicke der Schicht durch die Viskosität und den Feststoffanteil der Siliziumdioxidsuspension eingestellt werden. Auf diese Weise können Nassschichtdicken der Siliziumdioxidsuspension beim Aufbringen in einem Bereich zwischen von 0,5 bis 1000 μm, bevorzugt in einem Bereich von 5 bis 250 μm, besonders bevorzugt in einem Bereich von 10 bis 100 μm erzielt werden.

Gegebenenfalls, aber nicht notwendigerweise schließt sich ein Schritt [C] an, Verringern des Flüssigkeitsanteils der Beschichtung. Der Schritt |C| wird durchgeführt, bis der Flüssigkeitsanteil der Beschichtung, bezogen auf das Gesamtgewicht der Beschichtung, einen Sollwert erreicht oder unterschreitet. Dieser Sollwert kann zum Beispiel bei 10 Gew.-%, 5 Gew.-%, 2 Gew.-% oder auch 0,2 Gew.-% liegen, die Gew.-% jeweils bezogen auf das Gesamtgewicht der Beschichtung. Prinzipiell kommen alle dem Fachmann bekannten und geeignet erscheinenden Methoden zum Verringern des Flüssigkeitsanteils einer Schicht in Betracht, insbesondere mindestens eine ausgewählt aus der Gruppe bestehend aus: ein Trocknen in der Wärme, ein Trocknen durch Überstreichen der Beschichtung mit einem Gas oder Gasgemisch, Verdunsten von Flüssigkeit bei reduziertem Umgebungsdruck, Anregen der Molekülbewegung der Flüssigkeit, bei Wasser zum Beispiel mit Mikrowellen, und so weiter. Zudem kommt eine Kombination von zwei oder mehr der genannten Methoden in Betracht. Dabei kann die Kombination räumlich und/oder zeitlich gleichzeitig, räumlich und/oder zeitlich aufeinanderfolgend, oder räumlich und/oder zeitlich überlappend ausgestaltet sein. Überlappend bedeutet im vorliegenden Kontext, dass eine erste Methode noch nicht abgeschlossen ist, wenn eine folgende Methode bereits begonnen wird.

Die Erfindung wird im Folgenden mittels Figuren exemplarisch illustriert. Die Figuren sind nicht maßstabsgerecht und sollen die Erfindung nicht einschränken.

KURZBESCHREIBUNG DER FIGUREN

**Figuren**

**Fig. 1**  Flussdiagramm (Verfahren zum Herstellen eines Quarzglaskörpers)
**Fig. 2**  Flussdiagramm Variante (Verfahren zum Herstellen eines Quarzglaskörpers)
**Fig. 3**  eine erste Filteranordnung mit drei Filterstufen, einer 1., 2. und 3. Filterstufe
**Fig. 4**  schematische Darstellung eines Sprühturms
**Fig. 5**  schematische Darstellung eines hängenden Tiegels in einem Ofen
**Fig. 6**  schematische Darstellung eines stehenden Tiegels in einem Ofen
**Fig. 7**  schematische Darstellung eines Tiegels mit einer Taupunktmessvorrichtung
**Fig. 8**  Flussdiagramm (Verfahren zum Herstellen eines Formkörpers)
**Fig. 9**  exemplarische Darstellung a) die Partikelgrößenverteilung einer Aufschlämmung vor Schritt iii.), b) der Vorläufersuspension nach dem Dispergieren in Schritt iii.)
**Fig. 10**  Beispiele für heiße Quarzglaskörper: a) viele Blasen, b) kaum Blasen, c) sehr viele Blasen (Schaumglas)
**Fig. 11**  vergleichende Aufnahmen von Wolfram-Verunreinigungen in Quarzglasproben: a), b) heiße Glaskörper, a) starke Wolfram-Verunreinigungen, b) keine Wolfram-Verunreinigungen, c) Wolfram-Verfärbungen an erkalteten Zwillingsglasrohren.
**Fig. 12**  vergleichende Abbildung von erkalteten Quarzglasproben wobei das Schmelzgut aus einem Granulat gebildet wurde, hergestellt aus a) einer ungefilterter Siliziumdioxidsuspension; b) aus einer erfindungsgemäß gefilterten Siliziumdioxidsuspension
**Fig. 13** Skizze  einer Anordnung zur Beurteilung der Fluoreszenz einer Quarzglasprobe.

BESCHREIBUNG DER FIGUREN

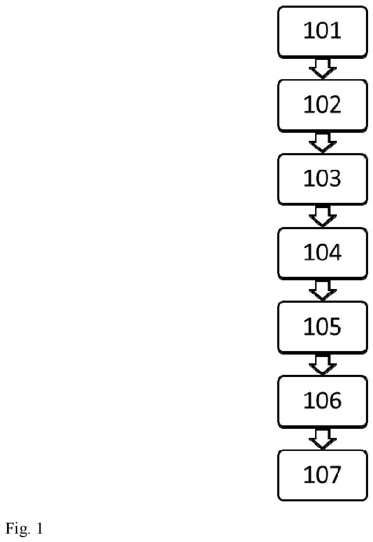

**Figur 1** zeigt ein Flussdiagramm enthaltend die Schritte 101 bis 107 eines Verfahrens 100 zur Herstellung eines Quarzglaskörpers gemäß der vorliegenden Erfindung beinhaltend zumindest die folgenden Schritte (i) Bereitstellen eines Pulver aus Siliziumdioxidpartikeln und einer Flüssigkeit 101; (ii) Bereitstellen einer Aufschlämmung durch Mischen des Pulvers mit der Flüssigkeit; (iii) Behandeln der Aufschlämmung mit Ultraschall unter Erhalt eines Vorläufersuspension 103; (iv) Leiten zumindest eines Teils der Vorläufersuspension durch eine erste mehrstufige Filtervorrichtung, wobei eine Siliziumdioxidsuspension erhalten wird (104); v.) Bilden eines Siliziumdioxidgranulats aus der Siliziumdioxidsuspension; vi.) Bilden einer Glasschmelze aus dem Siliziumdioxidgranulat in einem Ofen; vii.) Bilden eines Quarzglaskörpers aus zumindest einem Teil der Glasschmelze.

Das Behandeln der Aufschlämmung in Schritt iii.) umfasst ein Zerkleinern mindestens eines Teils der Siliziumdioxidpartikel unter Erhalt einer sogenannten Vorläufersuspension. In Schritt iv.) ist die erste mehrstufige Filtervorrichtung derart ausgebildet, dass sie zumindest eine erste, eine zweite und eine dritte Filterstufe aufweist, wobei die zweite Filterstufe stromabwärts von der ersten Filterstufe, und die dritte Filterstufe stromabwärts von der zweiten Filterstufe angeordnet ist. Jede Filterstufe beinhaltet mindestens einen Filter. Schritt v.) beinhaltet ein Granulieren, wobei das Siliziumdioxidgranulat einen größeren Partikeldurchmesser aufweist als die in der Siliziumdioxidsuspension enthaltenen Siliziumdioxidpartikel. Im Rahmen des in Figur 1 beschriebenen Verfahrens wird in mindestens einem der Verfahrensschritte eine von Siliziumdioxid verschiedene Siliziumkomponente zugegeben (nicht gezeigt.)

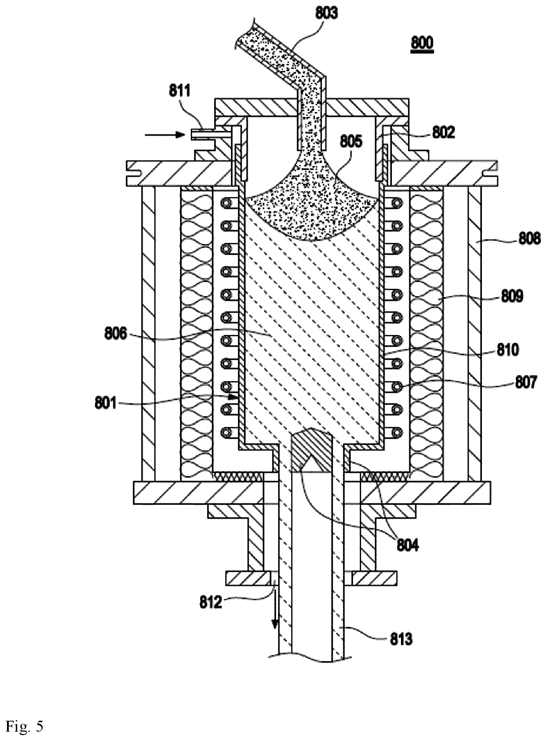

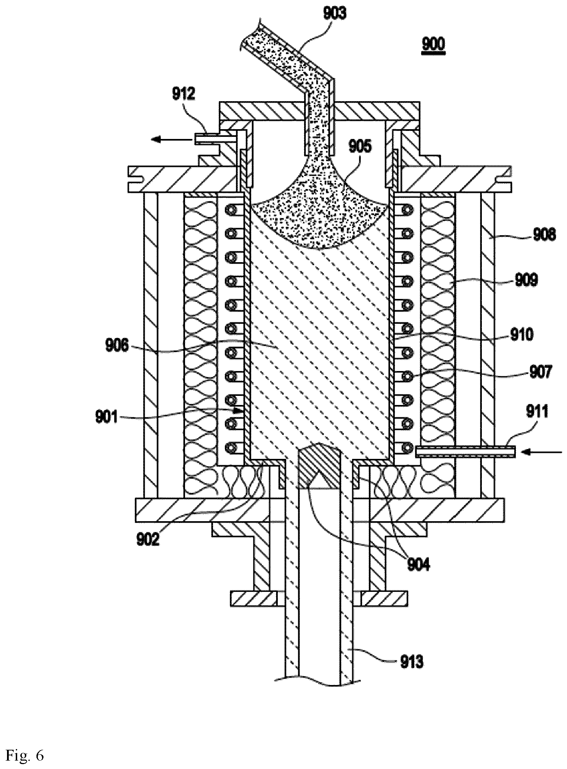

Der Ofen beinhaltet einen Schmelztiegel. Dieser kann sowohl als hängender oder stehender Schmelztiegel ausgebildet sein (vergleiche Figur 5 und 6). Ferner weist der Ofen bzw. der Schmelztiegel zumindest einen Gasauslass, in aller Regel aber auch einen Gaseinlass auf, durch den die im Ofen vorliegende Atmosphäre beeinflusst werden kann. Einzelheiten dazu, insbesondere zur Vorgehensweise bei der Taupunktmessung des Gases bei Austritt aus dem Ofen, werden im Zusammenhang mit den Figuren 5, 6 und 7 erläutert.

Das Schmelzen in Schritt 106 erfolgt bevorzugt in einer reduzierenden, wasserstoffhaltigen Atmosphäre. In dem Schritt 107 wird ein Quarzglaskörper gebildet. Die Bildung des Quarzglaskörpers erfolgt hier bevorzugt durch Entnehmen zumindest eines Teils der Glasschmelze aus dem Tiegel und Abkühlen. Die Entnahme kann durch eine Düse am unteren Ende des Tiegels erfolgen. In diesem Fall kann die Form des Quarzglaskörpers durch die Ausgestaltung der Düse bestimmt werden. So können beispielsweise massive Körper erhalten werden. Hohle Körper werden beispielsweise erhalten, wenn in der Düse zusätzlich ein Dorn vorgesehen ist. Dieses exemplarisch dargestellte Verfahren zur Herstellung von Quarzglaskörpern, und insbesondere Schritt 107, erfolgt bevorzugt kontinuierlich. Aus einem massiven Quarzglaskörper kann alternativ zu Schritt 107 in einem nachgelagerten, optionalen Schritt 108 ein Hohlkörper geformt werden.

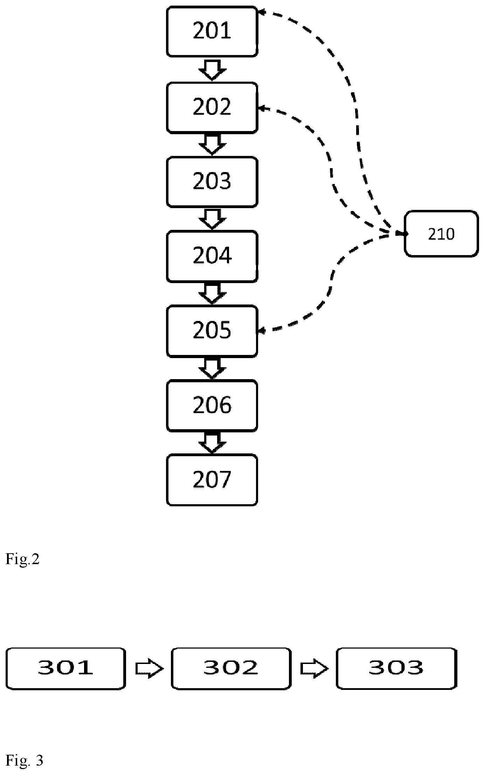

**Figur 2** zeigt das gleiche Verfahren wie in Figur 1. Eine von Siliziumdioxid verschiedene Siliziumkomponente 210 wird während Schritt i.) 201, ii.) 202 oder Schritt v.) 205, in letzterem Fall bevorzugt vor Bilden des Granulats zugegeben. Zudem kann die Siliziumkomponente 210 auch während zwei oder während allen drei Schritte, also in mehreren Teilen zugegeben werden.

**Figur 3** zeigt schematisch eine Filteranordnung beinhaltend drei Filterstufen mit je einem ersten Filter 301, einem zweiten Filter 302 und einem dritten Filter 303. Diese sind stromabwärts angeordnet.

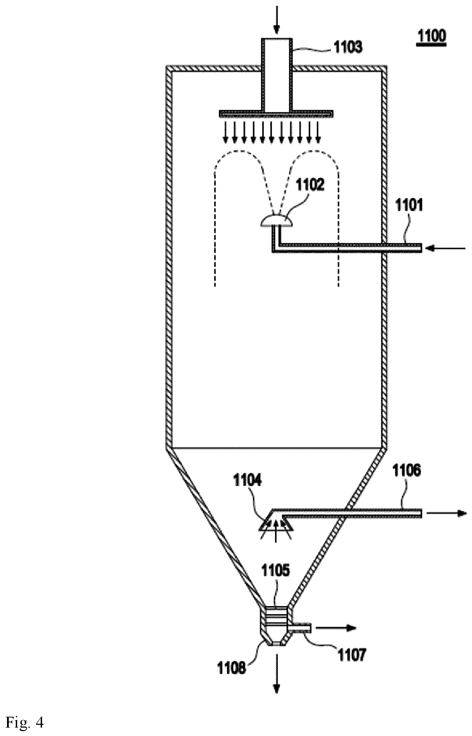

In **Figur 4** ist eine bevorzugte Ausführungsform eines Sprühturms 1100 zum Sprühgranulieren von Siliziumdioxid gezeigt. Der Sprühturm 1100 umfasst eine Zuführung 1101, durch die eine unter Druck stehende Aufschlämmung enthaltend Siliziumdioxidpulver und eine Flüssigkeit dem Sprühturm zugeführt wird. Am Ende der Leitung befindet sich eine Düse 1102, durch die die Aufschlämmung fein verteilt in den Sprühturm eingebracht wird. Bevorzugt ist die Düse schräg nach oben ausgerichtet, so dass die Aufschlämmung als feine Tröpfchen in Richtung der Düsenausrichtung in den Sprühturm gesprüht wird und dann im Bogen schwerkraftgetrieben nach unten fällt. Am oberen Ende des Sprühturms befindet sich ein Gaseinlass 1103. Durch das Einführen eines Gases durch den Gaseinlass 1103 wird ein der Austrittsrichtung der Aufschlämmung aus der Düse 1102 entgegengerichteter Gasstrom erzeugt. Der Sprühturm 1100 umfasst außerdem eine Sichtvorrichtung 1104 und eine Siebvorrichtung 1105. Durch die Sichtvorrichtung 1104 werden Teilchen abgesaugt, die eine definierte Teilchengröße unterschreiten, und durch die Abführung 1106 entfernt. Entsprechend der Teilchengröße der anzusaugenden Teilchen kann die Ansaugtärke der Sichtvorrichtung 1104 reguliert werden. Durch die Siebvorrichtung 1105 werden Teilchen oberhalb einer definierten Teilchengröße abgesiebt und durch die Abführung 1107 entfernt. Entsprechend der Teilchengröße der abzusiebenden Teilchen kann die Siebdurchlässigkeit der Siebvorrichtung 1105 gewählt werden. Die verbleibenden Teilchen, ein Siliziumdioxidgranulat der gewünschten Teilchengröße, werden durch den Auslass 1108 entnommen.

In **Figur 5** ist eine bevorzugte Ausführungsform eines Ofens 800 mit einem hängenden Tiegel gezeigt. Der Tiegel 801 ist in dem Ofen 800 hängend angeordnet. Der Tiegel 801 weist in seinem oberen Bereich eine Aufhängung 802, sowie einen Feststoffeinlass 803 und eine Düse 804 als Auslass auf. Der Tiegel 801 wird über den Feststoffeinlass 803 mit Siliziumdioxidgranulat 805 befüllt. Im Betrieb liegt im oberen Bereich des Tiegels 801 Siliziumdioxidgranulat 805 vor, während im unteren Bereich des Tiegels 801 eine Glasschmelze 806 vorliegt. Der Tiegel 801 ist durch Heizelemente 807 beheizbar, die auf der Außenseite der Tiegelwand 810 angeordnet sind. Der Ofen weist zudem zwischen den Heizelementen 807 und der Ofenaußenwand 808 eine Isolationsschicht 809 auf. Der Raum zwischen der Isolationsschicht 809 und der Tiegelwand 810 kann mit einem Gas befüllt werden und weist dazu einen Gaseinlass 811 und einen Gasauslass 812 auf. Durch die Düse 804 kann ein Quarzglaskörper 813 aus dem Ofen entnommen werden.

In **Figur 6** ist eine bevorzugte Ausführungsform eines Ofens 900 mit einem stehenden Tiegel gezeigt. Der Tiegel 901 ist in dem Ofen 900 stehend angeordnet. Der Tiegel 901 weist eine Standfläche 902, einen Feststoffeinlass 903 und eine Düse 904 als Auslass auf. Der Tiegel 901 wird über den Einlass 903 mit Siliziumdioxidgranulat 905 befüllt. Im Betrieb liegt im oberen Bereich des Tiegels Siliziumdioxidgranulat 905 vor, während im unteren Bereich des Tiegels eine Glasschmelze 906 vorliegt. Der Tiegel ist durch Heizelemente 907 beheizbar, die auf der Außenseite der Tiegelwand 910 angeordnet sind. Der Ofen weist zudem zwischen den Heizelementen 907 und der Ofenaußenwand 908 eine Isolationsschicht 909 auf. Der Raum zwischen der Isolationsschicht 909 und der Tiegelwand 910 kann mit einem Gas befüllt werden und weist dazu einen Gaseinlass 911 und einen Gasauslass 912 auf. Durch die Düse 904 kann ein Quarzglaskörper 913 aus dem Tiegel 901 entnommen werden.

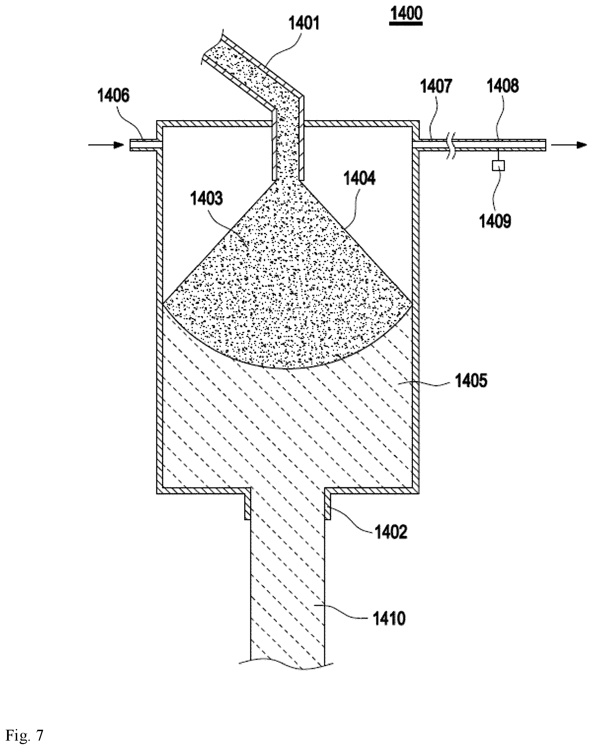

**Figur 7** zeigt einen Schmelztiegel 1400. Der Tiegel weist einen Feststoffeinlass 1401 und einen Auslass 1402 auf. Im Betrieb liegt im oberen Bereich des Tiegels 1400 Siliziumdioxidgranulat 1403 in einem Schüttkegel 1404 vor, während im unteren Bereich des Tiegels eine Glasschmelze 1405 vorliegt. Der Tiegel 1400 weist einen Gaseinlass 1406 und einen Gasauslass 1407 auf. Der Gaseinlass 1406 und der Gasauslass 1407 sind oberhalb des Schüttkegels 1404 des Siliziumdioxidgranulats 1403 angeordnet. Der Gasauslass 1407 umfasst eine Leitung zur Gasführung 1408 und eine Vorrichtung 1409 zur Messung des Taupunkts des austretenden Gases. Die Vorrichtung 1409 umfasst zum Beispiel ein Taupunktspiegelhygrometer (hier nicht gezeigt). Der Abstand zwischen dem Tiegel und der Vorrichtung 1409 zur Messung des Taupunkts kann variieren. Durch den Auslass 1402 des Tiegels 1400 kann ein Quarzglaskörper 1410 entnommen werden.

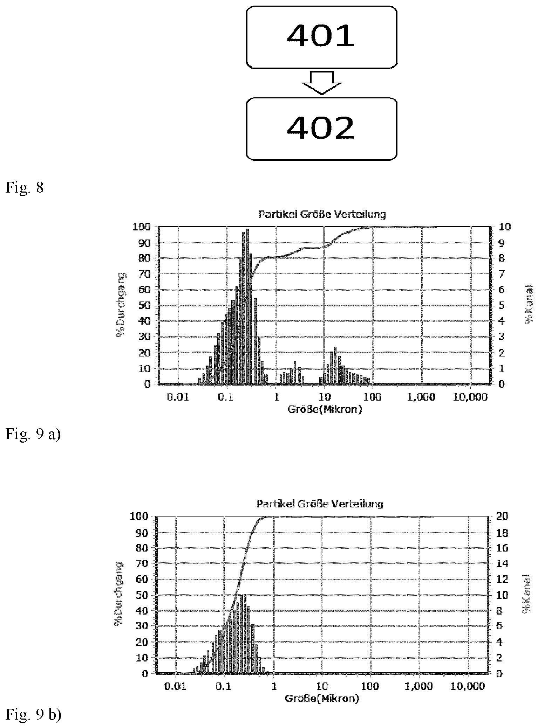

**Figur 8** zeigt ein Flussdiagramm enthaltend die Schritte 401 und 402 eines Verfahrens zur Herstellung eines Formkörpers. Im ersten Schritt 401 wird ein Quarzglaskörper bereitgestellt, bevorzugt ein gemäß Figur 1 hergestellter Quarzglaskörper. Ein solcher Quarzglaskörper kann ein massiver oder ein hohler Quarzglaskörper sein. Aus einem in Schritt 401 bereitgestellten massiven Quarzglaskörper wird in einem zweiten Schritt 402 ein Formkörper geformt.

**Figur 9** zeigt in Grafik a) exemplarisch die Partikelgrößenverteilung einer Aufschlämmung von Siliziumdioxidpulver in Wasser, wie sie dem vorliegenden Verfahren zugrunde gelegt ist. Dieser Grafik zeigt eine Menge gut aufgeschlämmter Siliziumdioxidpartikel einer Partikelgröße von kleiner 1 $\mu$m, aber auch einer Reihe Agglomerate im Bereich von 1 bis 5 $\mu$m und 10 bis 100 $\mu$m. Die Grafik b) zeigt die Partikelgrößenverteilung einer Siliziumdioxidsuspension, die durch Dispergieren einer Siliziumdioxidaufschlämmung gemäß Grafik a) erhalten wird. Nun sind alle Partikel dispergiert. Es wurde keine Partikelgrößen von Siliziumdioxidpartikeln von mehr als 1 $\mu$m nachgewiesen. Durch eine anschließende Filtration bleibt die Partikelgrößenverteilung aus Figur 5 b) betreffend die Siliziumdioxidpartikel erhalten. Jedoch werden Partikel abgeschieden, die von Siliziumdioxid verschieden sind.

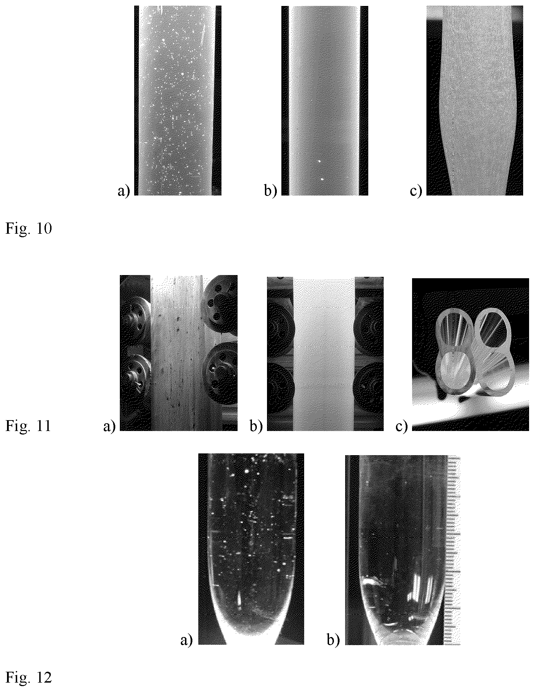

**Figur 10** zeigt vergleichend Aufnahmen von (heißen) Glaskörpern ca. 1 m nach dem Abzug aus dem Schmelztiegel, wobei als Schmelzgut ein Granulat gebildet aus a) ungefilterter Siliziumdioxidsuspension eingesetzt wurde; b) eines Glaskörpers, wobei als Schmelzgut ein Granulat aus erfindungsgemäß gefilterter Siliziumdioxidsuspension eingesetzt wurde, c) eines Glaskörpers, wobei als Schmelzgut ein Granulat wie in Beispiel 15-4 eingesetzt wurde, das heißt, die Suspension aus pyrogener Kieselsäure wurde mit einer Kugelmühle (Zirkonoxidkugeln und Becher mit Polyurethan beschichtet) vor dem Filtrieren behandelt.

**Figur 11** zeigt vergleichend Aufnahmen von Glaskörpern mit Wolframverunreinigungen. Die Aufnahmen a) und b) zeigen heiße Glaskörper, ca. 1 m nach dem Abzug aus dem Schmelztiegel. Aufnahme a) zeigt einen Glaskörper mit im Glaskörper vorliegenden Verunreinigungen mit Wolfram, Schlieren und Verfärbungen. Aufnahme b) zeigt einen Glaskörper, der frei von Verunreinigungen mit Wolfram o.ä. ist. Aufnahme c) zeigt exemplarisch zwei erkaltete Zwillingsglasrohre. Das linke Glasrohr ist erscheint transparent, aber dunkler. Die Farbtönung beruht auf einer relativ homogenen Verunreinigung mit Wolfram. Das rechte Glasrohr ist frei von solchen Verunreinigungen. Es ist transparent und absorbiert nicht im sichtbaren Bereich.

In **Figur 12** werden zwei verschiedene erkaltete Quarzglaskörper gezeigt. Der Quarzglaskörper in Abbildung a) wurde ausgehend von einer Suspension Siliziumdioxidpartikel hergestellt, die nicht gemäß der vorliegenden Erfindung behandelt wurde. Er enthält reichlich größere Blasen. Der Quarzglaskörper in Abbildung b) wurde basierend auf einer erfindungsgemäß behandelten Siliziumdioxidsuspension hergestellt. Es sind kaum Blasen erkennbar.

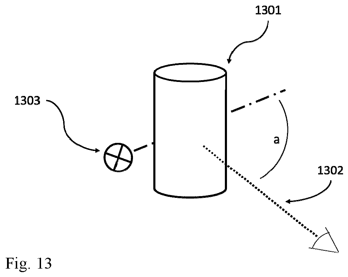

**Figur 13** zeigt eine Skizze einer Anordnung zur Beurteilung der Fluoreszenz einer Quarzglasprobe. Eine Probe 1301 wird in einem dunklen Raum vor einem schwarzen Hintergrund im 90°-Winkel (a) zur Sichtachse 1302 des Betrachters mit UV-Licht aus einer UV-Lampe 1303 bestrahlt. Der Abstand von UV-Lampe zu Probe beträgt weniger als 1 cm. Die Probe weist eine Länge von 10 mm in Richtung des Gangs des UV-Lichts auf.

TESTMETHODEN

a. OH-Gehalt

Der OH Gehalt des Glases wird durch Infrarotspektroskopie bestimmt. Die in von D. M. Dodd & D. M. Fraser angegebene Methode "Optical Determinations of OH in Fused Silica" (J.A.P. 37, 3991 (1966)) wird angewendet. Statt des darin angegebenen Geräts, wird ein FTIR-Spektrometer (Fourier-Transform-Infrarotspektrometer, aktuell System 2000 der Fa. Perkin Elmer) eingesetzt. Die Auswertung der Spektren kann prinzipiell sowohl an der Absorptionsbande bei ca. 3670 cm$^{-1}$ als auch bei der Absorptionsbande bei ca. 7200 cm$^{-1}$ erfolgen. Die Auswahl der verwendeten Bande erfolgt nach der Regel, dass der Transmissionsverlust durch die OH-Absorption zwischen 10 und 90% liegt.

### b. Oxygen Deficiency Centers (ODCs)

Zum quantitativen Nachweis wird die ODC(I)-Absorption bei 165 nm mittels einer Transmissionsmessung an zwischen 1-2 mm dicken Probe mittels eines Vakuum-UV-Spektrometers, Modell VUVAS 2000, von McPherson, Inc. (USA) bestimmt.

Dann gilt:

$$N = \alpha / \sigma$$

mit

N = Defektkonzentration [1/cm$^3$]
$\alpha$ = Optische Absorption [1/cm, Basis e] der ODC(I) Bande
$\sigma$ = Wirkungsquerschnitt [cm$^2$]
wobei als Wirkungsquerschnitt $\sigma = 7,5 \cdot 10^{-17}$ cm$^2$ eingesetzt wird (aus L. Skuja, "Color Centers and Their Transformations in Glassy SiO2", Lectures of the summer school "Photosensitivity in optical Waveguides and glasses", Juli 13-18 1998, Vitznau, Switzerland).

### c. Elementaranalyse

c-1) Massive Proben werden zertrümmert. Anschließend werden zur Reinigung ca. 20g der Probe in ein HF-beständiges Gefäß eingebracht, vollständig mit HF bedeckt und bei 100°C für eine Stunde thermisch behandelt. Nach dem Abkühlen wird die Säure verworfen und die Probe mehrmals mit Reinstwasser gespült. Anschließend wird das Gefäß mit der Probe im Trockenschrank getrocknet.
Anschließend werden ca. 2g der festen Probe (Bruchmaterial, gereinigt wie oben; Stäube etc. ohne Vorbehandlung direkt) in einen HF beständigen Aufschlussbehälter eingewogen und mit 15ml HF (50 Gew.-%) versetzt. Der Aufschlussbehälter wird verschlossen und bei 100°C solange thermisch behandelt, bis die feste Probe vollständig aufgelöst ist. Danach wird der Aufschlussbehälter geöffnet und thermisch weiter bei 100°C behandelt, bis die Lösung komplett eingedampft ist. Währenddessen wird der Aufschlussbehälter 3x mit 15m1 Reinstwasser aufgefüllt. In den Aufschlussbehälter wird 1ml HNO$_3$ gegeben, um abgeschiedene Verunreinigungen zu lösen und mit Reinstwasser auf 15ml aufgefüllt. Damit steht die Messlösung bereit.

c-2) Messung ICP-MS / ICP-OES

Ob OES oder MS verwendet wird, hängt von der erwarteten Elementkonzentration ab. Typische Bestimmungsgrenzen für die MS sind ca. 1ppb, für die OES ca. 10ppb (jeweils bezogen auf die eingewogene Probenmenge). Sie ist für jedes Element leicht unterschiedlich. Die Bestimmung der Elementkonzentration mit den Messgeräten erfolgt nach Maßgabe der Gerätehersteller (ICP-MS: Agilent 7500ce; ICP-OES: Perkin Elmer 7300 DV) und unter Verwendung von zertifizierten Referenzflüssigkeiten zur Kalibrierung. Die von den Geräten bestimmte Elementkonzentration in der Lösung (15ml) werden dann auf die ursprüngliche Einwaage der Probe (2g) umgerechnet.

Anmerkung: Es ist darauf zu achten, dass die Säure, die Gefäße, das Wasser, die Geräte eine ausreichende Reinheit aufweisen müssen, um die nachzuweisenden Elementkonzentrationen bestimmen zu können. Überprüft wird das mit dem Aufschluss einer Blindprobe ohne Quarzglas.

Folgende Elemente werden auf diese Weise bestimmt: Li, Na, Mg, K, Ca, Fe, Ni, Cr, Hf, Zr, Ti, V, Nb, W, Mo, Al.

c-3) Die Bestimmung von flüssig vorliegenden Proben erfolgt wie zuvor beschrieben, wobei die Probenvorbereitung gemäß Schritt c-1) entfällt. Es werden 15ml der flüssigen Probe in das Aufschlussgefäß gegeben. Eine Umrechnung auf eine ursprüngliche Einwaage entfällt.

Die genauen Bestimmungsgrenzen für die ICP-MS bzw. ICP-MS in Abhängigkeit der analysierten Elemente ist in der folgenden Tabelle angegebenen:

| Element / Ion | Bestimmungsgrenze ICP-OES [ppb] | Bestimmungsgrenze ICP-MS [ppb] |
|---|---|---|
| Li | 10 | 0,5 |
| Na | 20 | 5 |
| Mg | 10 | 3 |
| K | 20 | 5 |
| Ca | 30 | 15 |
| Fe | 10 | 5 |
| Ni | 8 | 1 |
| Co | 10 | 1 |
| Cr | 8 | 1 |
| Cu | 8 | 1 |
| Ge | 100 | 2 |
| Hf | 10 | |
| Mn | 8 | 1 |

| Zn | 20 | 5 |
|---|---|---|
| Zr | 10 | 3 |
| Ti | 10 | 2 |
| V | 10 | 0,5 |
| Nb | 10 | |
| W | 10 | 5 |
| Mo | 10 | 1 |
| Al | 40 | 10 |

d. Dichtebestimmung einer Flüssigkeit

Zur Bestimmung der Dichte einer Flüssigkeit wird ein genau definiertes Volumen der Flüssigkeit in ein gegenüber der Flüssigkeit und ihren Bestandteilen inertes Messgefäß eingewogen, wobei das Leergewicht und das Gewicht des befüllten Gefäßes gemessen wird. Die Dichte ergibt sich aus der Differenz der beiden Gewichtsmessungen dividiert durch das eingebrachte Volumen der Flüssigkeit.

e. Nachweis von Fluorid

15g einer Quarzglasprobe werden zerkleinert und in Salpetersäure zum Reinigen bei einer Temperatur von 70°C behandelt. Anschließend wird die Probe mehrmals mit Reinstwasser gespült, anschließend getrocknet. Davon werden 2g der Probe in einen Nickeltiegel eingewogen und mit 10g $Na_2CO_3$ sowie 0,5g ZnO überschichtet. Der Tiegel wird mit einem Ni-Deckel verschlossen und bei 1000°C für eine Stunde geglüht. Anschließend wird der Nickeltiegel mit Wasser gefüllt und aufgekocht, bis sich der Schmelzkuchen ganz gelöst hat. Die Lösung wird in einen 200ml Messkolben überführt und mit Reinstwasser auf 200 ml aufgefüllt. Nach Absetzen ungelösten Bestandteile werden 30m1 abgenommen und in einen Messkolben mit 100ml überführt, 0,75ml Eisessig und 60ml TISAB hinzugegeben und mit Reinstwasser aufgefüllt. Die Messlösung wird in ein Becherglas 150ml überführt.

Die Bestimmung des Fluoridgehalts aus der Messlösung erfolgt mittels einer ionensensitiven (Fluorid) Elektrode, geeignet für den erwarteten Konzentrationsbereich, und Anzeigegerät nach Vorgabe des Herstellers, hier eine Fluorid-Ionenselektive Elektrode und Bezugselektrode F-500 mit R503/D an einem pMX 3000/pH/ION der Firma Wissenschaftlich-Technische Werkstätten GmbH. Mit der Fluoridkonzentration in der Lösung, dem Verdünnungsfaktor und der Einwaage wird die Fluoridkonzentration im Quarzglas berechnet.

f. Nachweis von Chlor (>= 60 ppm)

15g einer Quarzglasprobe werden zerkleinert und in Salpetersäure zum Reinigen bei ca. 70°C behandelt. Anschließend wird die Probe mehrmals mit Reinstwasser gespült, anschließend getrocknet. Davon werden 2g der Probe in einen PTFE-Einsatz eines Druckbehälters gefüllt, mit 15m1 NaOH (c=10mol/l) versetzt, mit einem PTFE Deckel verschlossen und in den Druckbehälter gesetzt. Dieser wird verschlossen und bei ca. 155°C für 24 Stunden thermisch behandelt. Nach dem Abkühlen wird der PTFE Einsatz entnommen und die Lösung vollständig in einen Messkolben 100ml überführt. Dort werden 10ml HNOs (65 Gew.-%) und 15ml Acetatpuffer hinzugeben, abkühlen gelassen und mit Reinstwasser auf 100 ml aufgefüllt. Die Messlösung wird in ein Becherglas 150ml überführt. Die Messlösung hat einen pH-Wert im Bereich zwischen 5 und 7.

Die Bestimmung des Chloridgehalts aus der Messlösung erfolgt mittels Ionensensitiver (Chlorid) Elektrode, geeignet für den erwarteten Konzentrationsbereich, und Anzeigegerät nach Vorgabe des Herstellers hier einer Elektrode Typ Cl-500 und Bezugselektrode Typ R-503/D an einem pMX 3000/pH/ION der Firma Wissenschaftlich-Technische Werkstätten GmbH.

g. Chlorgehalt (< 60 ppm)

Chlorgehalte <60 ppm bis zu 0,1 ppm in Quarzglas werden mittels Neutronenaktivierungsanalyse (NAA) bestimmt. Dazu werden aus dem zu untersuchenden Quarzglaskörper 3 Bohrlinge mit je 3 mm Durchmesser und je 1 cm Länge gezogen. Diese werden zur Analyse an ein Forschungsinstitut abgegeben, in diesem Fall an das Institut für Kernchemie der Johannes-Gutenberg-Universität in Mainz. Um Kontamination der Proben mit Chlor auszuschließen wird mit dem Forschungsinstitut vereinbart, eine gründliche Reinigung der Proben in einem HF-Bad vor Ort und erst unmittelbar vor der Messung vorzunehmen. Jeder Bohrling wird mehrmals vermessen. Die Ergebnisse und die Bohrlinge werden anschließend von dem Forschungsinstitut zurückübermittelt.

h. Optische Eigenschaften

Die Transmission von Quarzglasproben wird mit kommerziellen Gitter- oder FTIR Spektrometern von Perkin Eimer bestimmt (Lambda 900 [190-3000nm] oder System 2000 [1000-5000nm]). Die Wahl richtet sich nach dem benötigten Messbereich.

Zur Bestimmung der Absoluttransmission werden die Probenkörper planparallel poliert (Oberflächenrauhigkeit RMS < 0,5nm) und die Oberfläche nach der Politur von allen Rückständen durch eine Ultraschallbehandlung befreit. Die Probendicke beträgt 1cm. Im Falle von erwartetem, starkem Transmissionsverlust durch Verunreinigung, Dotierung etc., kann auch eine dickere oder dünnere Probe ausgewählt werden, um im Messbereich des Geräts zu bleiben. Es wird eine Probendicke (Messlänge) gewählt, bei der aufgrund des Strahlendurchgangs durch die Probe nur geringfügig Artefakte auftreten und zugleich ein hinreichend detektierbarer Effekt gemessen wird.

Für die Messung der Opazität wird die Probe vor einer Ulbrichkugel im Strahlengang platziert. Die Opazität errechnet sich anhand des so gemessenen Transmissionswertes T gemäß der Formel: $O = 1/T = I_0/I$.

i. Brechzahl und Brechzahlverteilung an einem Rohr oder Stab

Die Brechzahlverteilung von Rohren / Stäben kann mittels eines York Technology Ltd. Preform Profiler P102 oder P104 charakterisiert werden. Dazu wird der Stab liegend in die Messkammer eingelegt und diese dicht verschlossen. Danach wird die Messkammer mit einem Immersionsöl aufgefüllt, das eine Brechzahl bei der Prüfwellenlänge 633nm hat, die der äußersten Glasschicht bei 633nm sehr ähnlich ist. Der Laserstrahl geht dann durch die Messkammer. Hinter der Messkammer (in Strahlrichtung) ist ein Detektor montiert, der den Ablenkwinkel (Strahleintritt in gegenüber Strahlaustritt aus der Messkammer) bestimmt. Unter Annahme der Radialsymmetrie der Brechzahlverteilung des Stabes lässt sich der diametrale Brechzahlverlauf mittels einer inversen Abel-Transformation rekonstruieren. Diese Berechnungen werden von der Software des Geräteherstellers York durchgeführt.

Die Brechzahl einer Probe wird analog der vorstehenden Beschreibung mit dem York Technology Ltd. Preform Profiler P104 bestimmt. Bei isotropen Proben ergibt sich auch bei Messen der Brechzahlverteilung nur ein Wert, die Brechzahl.

j. Kohlenstoffgehalt

Die quantitative Bestimmung des Oberflächenkohlenstoffgehaltes Siliziumdioxidgranulat und Siliziumdioxidpulver wird an einem Kohlenstoffanalysator RC612 der Fa. Leco Corporation, USA, durch die vollständige Oxidation aller Oberflächenkohlenstoffkontaminationen (außer SiC) mit Sauerstoff zu Kohlendioxid durchgeführt. Hierzu werden 4,0 g einer Probe eingewogen und in einem Quarzglasschiffchen in den Kohlenstoffanalysator eingebracht. Die Probe wird mit reinem Sauerstoff umspült und für 180 Sekunden auf 900 °C erhitzt. Das dabei gebildete $CO_2$ wird durch den Infrarotdetektor des Kohlenstoffanalysators erfasst. Unter diesen Messbedingungen liegt die Nachweisgrenze bei $\leq 1$ ppm (Gewichts-ppm) Kohlenstoff.

Ein für diese Analyse an dem oben genannten Kohlenstoffanalysator geeignetes Quarzglasschiffchen ist erhältlich als Verbrauchsmaterial für LECO-Analysator mit der LECO-Nummer 781-335 im Laborbedarfshandel, im vorliegenden Fall von Deslis Laborhandel, Flurstraße 21, D-40235 Düsseldorf (Deutschland), Deslis-Nr. LQ-130XL. Ein solches Schiffchen hat die Abmessungen von Breite/Länge/Höhe von ca. 25mm/60mm/15mm. Das Quarzglasschiffchen wird zu halber Höhe mit Probenmaterial befüllt. Für Siliziumdioxidpulver kann so eine Einwaage von 1,0 g Probenmaterial erreicht werden. Die untere Nachweisgrenze liegt dann bei <1 Gewichts-ppm Kohlenstoff. In das gleiche Quarzglasschiffchen wird bei gleicher Füllhöhe eine Einwaage von 4 g eines Siliziumdioxidgranulats erreicht (mittlere Partikelgröße im Bereich von 50 bis 500 μm). Die untere Nachweisgrenze liegt dann bei etwa 0,1 Gewichts-ppm Kohlenstoff. Die untere Nachweisgrenze ist erreicht, wenn das Messflächenintegral der Probe nicht größer ist als das dreifache Messflächenintegral einer Leerprobe (Leerprobe = Verfahren wie oben, aber mit leerem Quarzglasschiffchen).

k. Curl-Parameter

Der Curl-Parameter (auch genannt: "Fibre Curl") wird bestimmt gemäß der DIN EN 60793-1-34:2007-01 (deutsche Fassung der Norm IEC 60793-1-34:2006). Gemessen wird gemäß der in Annex A in den Abschnitten A.2.1, A.3.2 und A.4.1 beschriebenen Methode ("extrematechnique").

1. Dämpfung

Die Dämpfung wird bestimmt gemäß der DIN EN 60793-1-40:2001 (deutsche Fassung der IEC 60793-1-40:2001). Gemessen wird gemäß der in Annex beschriebenen Methode ("cut-back method") bei einer Wellenlänge λ=1550 nm.

m. Viskosität von Aufschlämmungen und Suspensionen

Die Aufschlämmung wird mit demineralisiertem Wasser (Direct-Q 3UV, Millipore, Wasserqualität: 18,2 MΩcm) auf eine Konzentration von 30 Gewichts-% Feststoffgehalt eingestellt. Anschließend wird die Viskosität an einem MCR102 der Fa. Anton-Paar gemessen. Dazu wird die Viskosität bei 5 Umdrehungen/Minute (rpm) gemessen. Es wird bei einer Temperatur von 23 °C und einem Luftdruck von 1013 hPa gemessen. Mit einer Suspension wird genau gleich verfahren.

n. Thixotropie & Rheopexie

- n1. Thixotropie

Die Aufschlämmung oder Suspension wird mit demineralisiertem Wasser (Direct-Q 3UV, Millipore, Wasserqualität: 18,2 MΩcm) auf eine Konzentration von 30 Gewichts -% Feststoffgehalt eingestellt. Anschließend wird die Thixotropie wird mit einem MCR102 der Fa. Anton-Paar mit einer Kegel-Platte-Anordnung bestimmt. Dazu wird die Viskosität bei 5 und bei 50 Umdrehungen/Minute (rpm) gemessen. Der Quotient aus dem ersten und dem zweiten Wert ergibt den Thixotropieindex. Die Messung wird bei einer Temperatur von 23 °C gemessen.

- n2. Rheopexie

Die Aufschlämmung oder Suspension wird mit demineralisiertem Wasser (Direct-Q 3UV, Millipore, Wasserqualität: 18,2 MΩcm) auf eine Konzentration von 60 Gewichts -% Feststoffgehalt eingestellt. Anschließend wird die Viskosität der auf 25°C temperierten Aufschlämmung bzw. Suspension mit einem Kinexus pro+ Rheometer mit Flügelrührer der Fa. Malvern Panalytical Ltd. Während eines Zeitraums von 15 Minuten bei einer konstanten Scherrate von 25/s oder 100/s bestimmt.

o. Zeta Potential der Aufschlämmung oder Suspension

Für Zetapotentialmessungen wird eine Zetapotentialmesszelle (Flow Cell, Beckman Coulter) eingesetzt. Die Probe wird in demineralisiertem Wasser (Direct-Q 3UV, Millipore, Wasserqualität: 18,2 MΩcm) gelöst um eine 20 mL Lösung mit Konzentration von 1 g/L zu erhalten. Der pH wird auf 7 mittels Zugabe von HNOs-Lösungen mit den Konzentrationen von 0,1 mol/L und 1 mol/L und einer NaOH-Lösung mit der Konzentration von 0,1 mol/L gebracht. Es wird bei einer Temperatur von 23 °C gemessen.

p. Isoelektrischer Punkt der Aufschlämmung oder Suspension

Für den isoelektrischen Punkt wird eine Zetapotentialmesszelle (Flow Cell, Beckman Coulter) und ein Autotitrator (DelsaNano AT, Beckman Coulter) eingesetzt. Die Probe wird in demineralisiertem Wasser (Direct-Q 3UV, Millipore, Wasserqualität: 18,2 MΩcm) gelöst um eine 20 mL Lösung mit Konzentration von 1 g/L zu erhalten. Der pH wird mittels Zugabe von HNOs-Lösungen mit den Konzentrationen von 0,1 mol/L und 1 mol/L und einer NaOH-Lösung mit der Konzentration von 0,1 mol/L variiert. Der isoelektrische Punkt ergibt sich als der pH Wert bei dem das Zeta-Potenzial gleich 0 ist. Es wird bei einer Temperatur von 23 °C gemessen.

q. pH Wert der Aufschlämmung oder Suspension

Der pH Wert der Aufschlämmung wird mittels eines WTW 3210 der Fa. Wissenschaftlich-Technische-Werkstätten GmbH gemessen. Als Elektrode wird die pH 3210 Set 3 der Fa. WTW eingesetzt. Es wird bei einer Temperatur von 23 °C gemessen.

r. Feststoffgehalt

Eine Einwaage $m_1$ einer Probe der Aufschlämmung oder Suspension wird für 4 Stunden auf 500 °C erhitzt und nach dem Abkühlen erneut gewogen ($m_2$). Der Feststoffgehalt w ergibt sich aus $m_2/m_1*100$ [Gew. %].

s. Schüttdichte

Die Schüttdichte eines Schüttguts wird gemäß der Norm DIN ISO 697:1984-01 mit einem SMG 697 der Fa. Powtec bestimmt. Das Schüttgut (Siliziumdioxidpulver bzw. -granulat) bildet keine Klumpen.

t. Stampfdichte

Die Stampfdichte eines Schüttguts wird gemäß der Norm DIN ISO 787:1995-10 gemessen. Als Schüttgut kommen vorliegend insbesondere Siliziumdioxidpulver oder Silziumdioxidgranulat in Frage.

u. Bestimmung der Porengrößenverteilung

Die Bestimmung der Porengrößenverteilung erfolgt gemäß DIN 66133 (mit einer Oberflächenspannung 480 mN/m und einem Kontaktwinkel von 140°). Für die Messung von Porengrößen kleiner als 3,7 nm wird das Pascal 400 von der Fa. Porotec angewendet. Für die Messung von Porengrößen von 3,7 nm bis 100 μm wird das Pascal 140 von der Fa. Porotec angewendet. Die Probe wird vor der Messung einer Druckbehandlung unterzogen. Genutzt wird hierzu eine Manual Hydraulic Press (Bestell-Nr. 15011 der Fa. Specac Ltd., River House, 97 Cray Avenue, Orpington, Kent BR5 4HE, U.K.). Dabei werden in eine "Pellet Die" mit 13 mm Innendurchmesser der Fa. Specac Ltd. 250 mg Probenmaterial eingewogen und laut Anzeige mit 1 t belastet. Diese Last wird 5 s gehalten und gegebenenfalls nachgeregelt. Anschließend wird die Probe entspannt und für 4 h bei 105 ± 2°C in einem Umlufttrockenschrank getrocknet.

Die Einwaage der Probe in das Penetrometer vom Typ 10 erfolgt auf 0,001 g genau und wird für eine gute Reproduzierbarkeit der Messung so gewählt, dass das "stem volume used", also das prozentual verbrauchte Hg-Volumen zum Füllen des Penetrometers im Bereich zwischen 20% bis 40% des Gesamt-Hg-Volumens beträgt. Anschließend wird das Penetrometer langsam auf 50 μm Hg evakuiert und für 5 min bei diesem Druck belassen. Folgende Parameter werden direkt von der Software der Messgeräte angegeben: Gesamtporenvolumen, Gesamtporenoberfläche (Annahme Poren zylindrisch), Durchschnittlicher Porenradius, Modaler Porenradius (häufigster Porenradius), Peak n. 2 Porenradius (μm).

v. Primärpartikelgröße

Die Primärpartikelgröße wird mittels eines Rasterelektronenmikroskops (REM) Modell Zeiss Ultra 55 gemessen. Die Probe wird in demineralisiertem Wasser (Direct-Q 3UV, Millipore, Wasserqualität: 18,2 MΩcm) suspendiert, um eine extrem verdünnte Suspension zu erhalten. Die Suspension wird mit der Ultraschallsonde (UW 2070, Bandelin electronic, 70 W, 20 kHz) für 1 min behandelt und dann auf ein Kohlenstoff-Klebepad aufgetragen.

w. Mittlere Partikelgröße eines Feststoffs in Suspension

Die Partikelgröße und Korngröße eines Feststoffs werden mittels eines Bluewave wet mit einer Meßzelle, erhältlich von Microtac GmbH, 47807 Krefeld, Deutschland gemäß deren Bedienungsanleitung gemessen. Das Bluewave wet enthält ein Sample Dosing System und ein Nassdispergiermodul. Zum Durchführen der Messung wird der Feststoff in demineralisiertem Wasser suspendiert und die so gebildete Suspension tropfenweise in das Messgerät eingebracht. Die Konzentration der zu messenden Suspension sowie die zuzugebende Suspensionsmenge in das Gerät werden vom Messgerät selbstständig durch automatisierte Verdünnung bis zum optimalen Partikelgrößen und -material abhängigen Messfenster eingestellt. Die Vorbereitung der zu messenden Suspension erfolgt im Hinblick auf ein transluzentes Erscheinungsbild der Suspension vor der tropfenweisen Einbringung in das Messgerät. Die Messparameter werden gemäß der Bedienungsanleitung bezogen auf den zu messenden Feststoff in Suspension (Partikelform, optische Eigenschaften) eingestellt. Das Bluewave wet gibt die $D_{10}$-, $D_{50}$- und $D_{90}$-Werte für eine Probe aus. Die Suspension wird mit der Ultraschallsonde (UW 2070, Bandelin electronic, 70 W, 20 kHz) für 1 min behandelt. In der Beschreibung angegebene Werte für eine 4 Gew.-% Aufschlämmung von Siliziumdioxidpartikeln, auch als Siliziumdioxidsuspension bezeichnet, bestimmt nach DIN ISO 13320-1, wurden ebenfalls mit dem Bluewave wet bestimmt.

x. Mittlere Partikelgröße von Siliziumdioxidpulver

Die mittlere Partikelgröße eines Siliziumdioxidpulvers wird in einer Suspension mittels eines Mastersizers 2000, erhältlich von Malvern Instruments Ltd., UK, gemäß deren Bedienungsanleitung unter Anwendung der Laserbeugungs-Methode gemessen. Die Probe wird in demineralisiertem Wasser (Direct-Q 3UV, Millipore, Wasserqualität: 18,2 MΩcm) suspendiert, um 20 mL Suspension mit einer Konzentration von 1 g/L zu erhalten. Die Suspension wird mit der Ultraschallsonde (UW 2070, Bandelin electronic, 70 W, 20 kHz) für 1 min behandelt.

y. Partikelgröße und Korngröße eines Feststoffs (als Bulk, nicht suspendiert)

Die Partikelgröße und Korngröße des Feststoffs, z.B. eines Siliziumdioxidgranulats, werden mittels eines Camsizers XT, erhältlich von Retsch Technology GmbH, Deutschland gemäß deren Bedienungsanleitung gemessen. Die Software gibt die $D_{10}$, $D_{50}$ und $D_{90}$-Werte für eine Probe aus.

z. BET Messung

Für die Messung der spezifischen Oberfläche wird die statisch volumetrische BET-Methode gemäß DIN ISO 9277:2010 angewendet. Für die BET Messung wird ein "NOVA 3000" bzw. ein "Quadrasorb" (von der Firma Quantachrome erhältlich), welche gemäß der SMART Methode ("Sorption Method with Adaptive dosing Rate") funktioniert, angewendet. Die Mikroporenanalyse wird mittels t-plot-Verfahren (p/p0 = 0,1-0,3) und die Mesoporenanalyse mittels MBET-Verfahren (p/p0 = 0,0-0,3) durchgeführt. Als Referenzmaterial, werden die Standards Alumina SARM-13 und SARM-214 verwendet, erhältlich bei Quantachrome. Das Tara-Gewicht der eingesetzten Messzellen (sauber und trocken) wird gewogen. Der Messzellentyp wird so gewählt, dass das zugeführte Probematerial und der Füllstab die Messzelle möglichst füllen und der tote Raum auf ein Minimum reduziert wird. Das Probematerial wird in die Messzelle gebracht. Die Menge des Probematerials wird so ausgewählt, dass der zu erwartende Messwert 10-20 $m^2$/g entspricht. Die Messzellen werden in den Ausheizstationen des BET-Messgerätes fixiert (ohne Füllstab) und auf <200 mbar evakuiert. Die Geschwindigkeit des Evakuierens wird so eingestellt, dass kein Material aus der Messzelle entweicht. In diesem Zustand wird bei 200°C für 1h ausgeheizt. Nach dem Abkühlen, wird die mit Probe gefüllte Messzelle gewogen (Brutto). Anschließend wird das Tara-gewicht vom Brutto-Gewicht abgezogen = Nettogewicht = Gewicht der Probe. Nun wird der Füllstab in die Messzelle eingeführt und diese wiederum in der Messstation des BET-Messgerätes fixiert. Vor Messstart werden die Probenbezeichnung und das Probengewicht in die Software eingepflegt. Die Messung wird gestartet. Der Sättigungsdruck des Stickstoffgases (N2 4.0) wird gemessen. Die Messzelle wird evakuiert und wird mit Hilfe eines Stickstoffbads auf 77 K heruntergekühlt. Der tote Raum wird mittels Heliumgas (He 4.6) gemessen. Es wird erneut evakuiert. Eine Mehrpunktanalyse mit mindestens 5 Messpunkten wird ausgeführt. Als Adsorptiv, wird N2 4.0 angewendet. Die spezifische Oberfläche wird in $m^2$/g angegeben.

aa. Viskosität von Glaskörpern

Die Viskosität des Glases wird mit Hilfe des Balkenbiegeviskosimeter Typ 401 - Fa. TA Instruments mit der Herstellersoftware WinTA (aktuell Version 9.0) unter Windows 10 gemäß der Norm DIN ISO 7884-4:1998-02 gemessen.

Die Stützweite zwischen den Auflagern beträgt 45mm. Probestäbchen mit rechteckigem Querschnitt werden aus Bereichen homogenen Materials geschnitten (Probenober- und - unterseite mit Feinschliff mindestens 1000-er Korn). Die Probenoberflächen nach Bearbeitung haben Korngröße = 9$\mu$m & RA = 0,15$\mu$m. Die Probestäbchen haben folgende Maße: Länge = 50mm, Breite = 5mm & Höhe = 3mm (Zuordnung Länge, Breit, Höhe wie in der Norm). Drei Proben werden gemessen und der Mittelwert errechnet. Die Probentemperatur wird durch ein Thermoelement dicht an der Probenoberfläche gemessen. Folgende Parameter werden angewendet: Heizrate = 25 K auf maximal 1500 °C, Belastungsgewicht = 100 g, maximale Durchbiegung = 3000 $\mu$m (in Abweichung von der Norm).

### za. Restfeuchte

Die Bestimmung der Restfeuchte einer Probe Siliziumdioxidgranulat erfolgt mit Hilfe eines Moisture Analyzers HX204 der Firma Mettler Toledo. Das Gerät arbeitet nach dem Prinzip der Thermogravimetrie. Der HX204 ist mit einem Halogenstrahler als Heizelement ausgerüstet. Die Trocknungstemperatur beträgt 220°C. Das Startgewicht der Probe liegt bei 10 g $\pm$ 10 %. Es wird die Messmethode "Standard" ausgewählt. Die Trocknung wird solange fortgesetzt bis die Gewichtsänderung nicht mehr als 1 mg /140 s erreicht. Die Restfeuchte ergibt sich aus der Differenz von Startgewicht der Probe zu Endgewicht der Probe, geteilt durch das Startgewicht der Probe.
Die Bestimmung der Restfeuchte von Siliziumdioxidpulver wird gemäß DIN EN ISO 787-2:1995 (2h, 105°C) durchgeführt.

### zb. Taupunktmessung

Der Taupunkt wird mittels eines Taupunkspiegelhygrometers mit der Bezeichnung "Optidew" der Firma Michell Instruments GmbH, D-61381 Friedrichsdorf bestimmt. Die Messzelle des Taupunktspiegelhygrometers ist in einem Abstand von 100 cm von dem Gasauslass des Ofens angeordnet. Das Messgerät mit der Messzelle ist dazu über ein T-Stück und einen Schlauch (Swagelok PFA, Außendurchmesser: 6mm) mit dem Gasauslass des Ofens gasleitend verbunden. An der Messzelle liegt ein Überdruck von 10$\pm$2 mbar an. Der Durchfluss des Gases durch die Messzelle beträgt 1-2 Normliter/min. Die Messzelle befindet sich in einem Raum mit einer Temperatur von 25°C, 30 % relativer Luftfeuchte und einem mittleren Luftdruck von 1013 hPa.

### zc. Schüttwinkel

Der Schüttwinkel wird nach DIN ISO 4324:1983 bestimmt.

### zd. Fluoreszenz

Die Farbe einer etwaig auftretenden Fluoreszenzerscheinung und deren Intensität wurde visuell anhand der Transmission bestimmt. Dazu wurde eine Probe (1301) im 90°-Winkel (a) zur Sichtachse (1302) mit einer UV-Lampe (2x6W, 254/365 nm, 400/610 $\mu$W/cm$^2$, 200x85x60 mm, zum Beispiel Firma Consort, Serie 21, Code E2107; unter Katalognr. CONSVL6-LC erhältlich bei VWR International GmbH, Dramstadt (Deutschland)) die UV-Licht mit 254nm Anregungswellenlänge abstrahlt (1303), im Abstand von <= 1cm an die Probe gehalten. Die Proben wiesen eine Länge von 10 mm auf. Als Umgebung wurde ein dunkler Raum gewählt. Aus Sicht des Betrachters hinter der Probe befand sich ein schwarzer Hintergrund. Der Aufbau wird in Figur 13 exemplarisch gezeigt.

### ze. Blasenanzahl

Die Menge an Blasen in einem Quarzglaskörper wurde visuell bestimmt. Es wurden nur Blasen mit einem Durchmesser von <4 mm beurteilt. Die Blasen wurden als Anzahl pro 30 kg Quarzglas ermittelt. Mit folgender Einteilung:

| Menge an Blasen | Pro 30 ke Quarzelas |
| --- | --- |
| Nahezu blasenfrei ... | < 5 Blasen |
| Niedrig ... | 5 bis < 20 Blasen |
| Hoch ... | 20 bis < 100 Blasen |
| Sehr hoch ... | 100 bis < 500 Blasen. |

zf. Gehalt an freiem Silizium

Die Bestimmung des Gehalts an freiem Silizium (letzte Zeile von Tabelle 14), z.B. aus Dotierung mit Silizium, wird bestimmt gemäß DIN EN ISO 21068-2:2008-12, Kapitel 9. Proben wurde wie in Kapitel 9.2 beschrieben mit Salzsäure vorbehandelt.

BEISPIELE

Die Erfindung wird im Folgenden durch Beispiele weiter beispielhaft illustriert. Die Erfindung ist nicht auf die Beispiele beschränkt.

## A. Herstellen von Siliziumdioxidpulver

Ein aus der Verdüsung eines Siloxans mit Luft (A) gebildete Aerosol wird mit Druck in eine Flamme eingebracht, die durch Zündung eines Gemisches von mit Sauerstoff angereicherter Luft (B) und Wasserstoff gebildet wird. Weiterhin wird ein die Flamme umgebender Luftstrom (C) eingebracht und das Prozessgemisch nachfolgend mit Prozessgas abgekühlt. Das Produkt wird an einem Filter abgeschieden. Die Verfahrensparameter sind in Tabelle 1 und die Kenndaten der resultierenden Produkte in Tabelle 2 angegeben. Experimentaldaten zu diesem Beispiel sind mit A1-x gekennzeichnet.

**Tabelle 1**

| Beispiel | | A1-1 |
|---|---|---|
| Aerosolbildung | | |
| Siloxan Zufuhr | Kg/h (kmol/h) | OMCTS* 10 (0,0337) |
| Zufuhr Luft (A) | Nm$^3$/h | 14 |
| Druck | barÜ | 1,2 |
| Zufuhr Brenner | | |
| Sauerstoffangereicherte Luft (B) | Nm$^3$/h | 69 |
| $O_2$-Gehalt | Vol.% | 32 |
| Summe $O_2$ Zufuhr | Nm$^3$/h | 25,3 |
| | Kmol/h | 1,13 |
| Zufuhr Wasserstoff | Nm$^3$/h | 27 |
| | Kmol/h | 1,21 |
| Luftstrom (C) | Nm$^3$/h | 60 |
| Stöchiometrische Verhältnisse | | |
| V | | 2,099 |
| X | | 0,938 |
| Y | | 0,991 |
| V = molares Verhältnis eingesetzter $O_2$/Bedarf an $O_2$ zur vollständigen Oxidation des Siloxans; X = als molares Verhältnis $O_2$/$H_2$; Y = (mol. Verhältnis eingesetztes $O_2$/ Bedarf an $O_2$ für stöchiometrische Umsetzung OMCTS+ Brenngase); barÜ=Überdurck; * OMCTS = Octamethylcyclotetrasiloxan. | | |

**Tabelle 2**

| Beispiel | | A1-1 |
|---|---|---|
| BET | m$^2$/g | 30 |
| Schüttdichte | g/ml | 0,114 $\pm$ 0,011 |

(fortgesetzt)

| Beispiel | | A1-1 |
|---|---|---|
| Stampfdichte | g/ml | 0,192 ± 0,015 |
| Primärpartikelgröße | nm | 94 |
| Partikelgrößenverteilung $D_{10}$ | μm | 3,978 ± 0,380 |
| Partikelgrößenverteilung $D_{50}$ | μm | 9,383 ± 0,686 |
| Partikelgrößenverteilung $D_{90}$ | μm | 25,622 ± 1,387 |
| C-Gehalt | ppm | 34±4 |
| Cl-Gehalt | ppm | < 60 * |
| Al-Gehalt | ppb | < 40 * |
| Summe der Konzentrationen von Co, Cr, Cu, Fe, Ge, Hf, K, Li, Mn, Na, Nb, Ni, Ti, V, Zn, Zr | ppb | 420 |
| Restfeuchte | Gew.-% | 0,02-1,0 |
| pH-Wert in Wasser 4% (IEP) | - | 4,8 |
| Viskosität bei 5 rpm, wässrige Suspension 30 Gew-%, 23 °C | mPas | 753 |
| Erdalkalimetallgehalt | ppb | 538 |
| *Angaben mit "<" bedeuten, dass der angegebene Wert unterschritten ist. Die Angabe ist eine interne Zielsetzung. Sie beinhaltet keinen Hinweis auf eine etwaige Nachweis- oder Bestimmungsgrenze der zugrunde gelegten Messmethode. | | |

## B. Herstellen einer Aufschlämmung aus Siliziumdioxidpulver

Ein Siliziumdioxidpulver (Tabelle 1 und 2, **Schritt A)** wird in vollentsalztem Wasser dispergiert. Das Wasser wird in dem Mischer vorgelegt. Der Mischer weist eine Rührer/Paddel-Geometrie auf. Es wird die für eine gewünschte Feststoffkonzentration berechnete Menge an Siliziumdioxidpulver, z.B. Soot, nach und nach zudosiert. Die Zudosierung erfolgt gravimetrisch über eine Kegelschleuse, während der Rührer im Behälter das Wasser rührt.

## C. Leiten über mehrstufige Filtervorrichtung

Eine Aufschlämmung aus **Schritt B** wurde in deionisiertes Wasser (L=0, 1 μS/cm) in einen Mischer mit Rührer/Paddel-Geometrie eingebracht und homogenisiert. Der Feststoffgehalt der homogenisierten Mischung betrug 65 Gew.-%. Anschließend wurde die Aufschlämmung gegebenenfalls mittels eines Ultraschallgenerators gemäß den Angaben in Tabelle 9 behandelt und dann über eine Filteranordnung geführt. Als Filtrat wird eine Siliziumdioxidsuspension erhalten.

Es wurde eine Filteranordnung mit folgenden drei Filtern Nr. 1. bis 3. (Reihenfolge stromabwärts von 1. über 2. Nach 3.) gewählt. Diese war wie folgt:

1. Filter: Acura Multiflow® (PP-Multilayer Tiefenfilter), Filterfeinheit 10 μm, Abscheiderate 80%;
2. Filter: Acura Promelt® (PP-Tiefenfilter), Filterfeinheit 1 μm, Abscheiderate 99,9%;
3. Filter: Acura Multiflow® (PP-Multilayer Tiefenfilter), Filterfeinheit 0,5 μm, Abscheiderate 80%.

Als Ultraschallgenerator wurde ein Gerät vom Typ Wirbelreaktorblock WB 4-1604 der Fa. Bandelin (Berlin, (Deutschland)) mit einer Leistungsdichte von 550W/Liter und einem Durchfluss von 250 Liter/h gewählt.

In dem Beispiel **E20-33** wurde wie für **E-20-31** angegeben verfahren. Allerdings wurde anstelle der Ultraschallbehandlung durch eine Behandlung in einer Kugelmühle Typ Diskus 20 der Firma Netzsch Feinmahltechnik GmbH, Selb (Deutschland) mit folgenden Betriebsparametern Drehzahl 900 U/min., Durchfluss 250 Liter/h, Mahlkugeln der Größe 500 μm durchgeführt, bevor die Mikrofiltration vorgenommen wurde.

**D. Zugabe einer von Siliziumdioxid verschiedenen Siliziumkomponente**

In einigen Beispielen wurde nach optionaler Ultraschallbehandlung bzw. Kugelmühle und Filtrieren eine weitere, von Siliziumdioxid verschiedene, Siliziumkomponente in die Aufschlämmung eindispergiert.

Dazu wird zunächst eine von Siliziumdioxid verschiedene Siliziumkomponente in ein mit vollentsalztem Wasser gefülltes Behältnis eingerührt, z.B. 5 g Siliziumpulver in 3000 ml vollentsalztes Wasser. Im Anschluss wird davon ein Volumen, das der gewünschten Zugabe an Siliziumkomponente entspricht, zu der in **Schritt C** erhaltenen Siliziumdioxidsuspension gegeben und erneut in dem Behälter gerührt, mit dem das Filtrat von **Schritt C** aufgefangen wurde. Die Beispiele dazu sind mit **E20-21, E20-22, E20,23, E20-41, E20,42 und E-20-43** gekennzeichnet und ebenfalls in Tabelle 9 gezeigt.

**E. Bilden eine Siliziumdioxidgranulats**

Die Aufschlämmung wird durch eine Membranpumpe gefördert und dabei mit Druck beaufschlagt und durch eine Düse in Tröpfchen überführt. Diese werden in einem Sprühturm getrocknet und sammeln sich an dessen Boden. Die Verfahrensparameter sind in Tabelle 9 angegeben, die Eigenschaften der erhaltenen Granulate in Tabelle 10. Experimentaldaten zu diesem Beispiel sind mit **E20-x** gekennzeichnet. **E20-11** ist ein Vergleichsbeispiel.

**Tabelle 9**

| Beispiel | | E20-11 | E20-21 | E20-22 | E20-23 | E20-31 | E20-32 | E20-33 | E20-41 | E20-42 | E20-43 |
|---|---|---|---|---|---|---|---|---|---|---|---|
| Edukt = Produkt aus | | A1-1 | A1-1 | A1-1 | A1-1 | A1-1 | A1-1 | A1-1 | A1-1 | A1-1 | A1-1 |
| Menge Edukt | Kg | 3000 | 3000 | 3000 | 3000 | 3000 | 3000 | 3000 | 3000 | 3000 | 3000 |
| Wasser | Güte * | VE | VE | VE | VE | VE | VE | VE | VE | VE | VE |
| | Liter | 1615 | 1615 | 1615 | 1615 | 1615 | 1615 | 1615 | 1615 | 1615 | 1615 |
| Dispersion Feststoffgehalt | Gew. % | 65 | 65 | 65 | 65 | 65 | 65 | 65 | 65 | 65 | 65 |
| Filtrierung | | | | | | | | | | | |
| erste Filteranordnung | | | | | | Ja** | Ja** | Ja** | Ja** | Ja** | Ja** |
| Ultraschall | | | | | | | ohne | ohne | | | |
| Leistungsdichte | W/L | | | | | 550 | | | 550 | 550 | 550 |
| Durchfluß | L/h | | | | | 250 | | | 250 | 250 | 250 |
| Behandlungsdauer | s | | | | | 30 | | | 30 | 30 | 30 |
| Temperatur | °C | | | | | | | | | | |
| Kugelmühle | | | | | | nein | nein | Ja | nein | nein | nein |
| Drehzahl | U/min | | | | | | | 900 | | | |
| Durchfluß | L/h | | | | | | | 250 | | | |
| Größe Mahlkugeln | µm | | | | | | | 500 | | | |
| Siliziumko mponente Stoff | | | Siliziumpulver*** | Siliziumpulver*** | Siliziumpulver*** | | | | Siliziumpulver*** | Siliziumpulver*** | Siliziumpulver*** |
| Korngröße (d50) | µm | | 8 | 8 | 8 | | | | 8 | 8 | 8 |
| Menge | ppm | | 500 | 400 | 660 | | | | 500 | 400 | 660 |
| Kohlenstoffgehalt | ppm | | 0.5 | 0.5 | 0.5 | | | | 0.5 | 0.5 | 0.5 |
| Summe der Konzentrationen von Co, Cr, Cu, Fe, Ge, Hf, K, Li, Mn, Mo, Na, Nb, Ni, Ti, V, W, Zn, Zr | ppm | | <8 | <8 | <8 | | | | <8 | <8 | <8 |

(fortgesetzt)

| Granulieren | | | | | | | | | | | |
|---|---|---|---|---|---|---|---|---|---|---|---|
| Düse Durchmesser | mm | 2,2 | 2,2 | 2,2 | 2,2 | 2,2 | 2,2 | 2,2 | 2,2 | 2,2 | 2,2 |
| Temperatur | °C | 25 | 25 | 25 | 25 | 25 | 25 | 25 | 25 | 25 | 25 |
| Druck | Bar | 16 | 16 | 16 | 16 | 16 | 16 | 16 | 16 | 16 | 16 |
| Einbauhöhe | m | 6.5 | 6,5 | 6,5 | 6,5 | 6.5 | 6.5 | 6,5 | 6,5 | 6,5 | 6,5 |
| Sprühturm Höhe | m | 18,2 | 18,2 | 18,2 | 18,2 | 18,2 | 18,2 | 18,2 | 18,2 | 18,2 | 18,2 |
| Innendurchmesser | m | 6.3 | 6,3 | 6,3 | 6,3 | 6.3 | 6.3 | 6,3 | 6,3 | 6,3 | 6,3 |
| T (Zugeführtes Gas) | °C | 380 | 380 | 380 | 380 | 380 | 380 | 380 | 380 | 380 | 380 |
| T (Abluft) | °C | 110 | 110 | 110 | 110 | 110 | 110 | 110 | 110 | 110 | 110 |
| Luftstrom | m$^3$/h | 6500 | 6500 | 6500 | 6500 | 6500 | 6500 | 6500 | 6500 | 6500 | 6500 |

Einbauhöhe = Abstand zwischen Düse und tiefstem Punkt des Sprühturminneren in Richtung des Schwerkraftverktors.

\* VE = vollentsalzt, Leitwert $\leq$ 0,1 $\mu$S;

\*\* siehe Angaben zur Filteranordnung in Schritt C.

\*\*\* Rohstoff erhältlich unter der Bezeichnung "Hyper Pure Silicon, Poly, Granules" bei Wacker Chemie AG. Dieser wurde auf die angegebene Korngröße gemahlen.

**Tabelle 10**

| Beispiel | | E20-11 | E20-21 | E20-22 | E20-23 | E20-31 | E20-32 | E20-33 | E20-41 | E20-42 | E20-43 |
|---|---|---|---|---|---|---|---|---|---|---|---|
| BET | $m^2/g$ | 30 | 30 | 30 | 30 | 30 | 30 | 30 | 30 | 30 | 30 |
| Schüttdichte (vom Granulat) | $m^2/g$ | 0,8± 0.1 | 0,8± 0.1 | 0,8± 0.1 | 0,8± 0.1 | 0,8± 0,1 | 0,8± 0.1 | | 0,8± 0.1 | 0,8± 0,1 | 0,8± 0.1 |
| Stampfdichte | $m^2/g$ | 0,9± 0,1 | 0,9± 0,1 | 0,9± 0,1 | 0,9± 0,1 | 0,9± 0,1 | 0,9± 0,1 | | 0,9± 0,1 | 0,9± 0,1 | 0,9± 0,1 |
| mittlere Partikelgrö-ße | $\mu m$ | 255 | 253 | 250 | 244 | 261 | 265 | | 255 | 243 | 257 |
| Partikelgrößenverteilung $D_{10}$ | $\mu m$ | 110 | 107 | 103 | 115 | 117 | 113 | | 111 | 116 | 109 |
| Partikelgrößenverteilung $D_{50}$ | $\mu m$ | 222 | 243 | 234 | 238 | 222 | 242 | | 222 | 229 | 227 |
| Partikelgrößenverteilung $D_{90}$ | $\mu m$ | 390 | 381 | 382 | 379 | 398 | 395 | | 392 | 385 | 386 |
| SPHT3 | Dimlos | 0,64-0,98 | 0,64-0,98 | 0,64-0,98 | 0,64-0,98 | 0,64-0,98 | 0,64-0.98 | | 0,64-0,98 | 0,64-0,98 | 0,64-0,98 |
| Aspektverhältnis B/L (Breite zu Länge) | Dimlos | 0,64-0,94 | 0,64-0,94 | 0,64-0,94 | 0,64-0,94 | 0,64-0,94 | 0,64-0,94 | | 0,64-0,94 | 0,64-0,94 | 0,64-0,94 |
| C-Gehalt | ppm | <4 | <4 | <4 | <4 | <1 | <1 | <1 | <1 | <1 | <1 |
| Cl-Gehalt | ppm | <50 | <50 | <50 | <50 | <50 | <50 | <50 | <50 | <50 | <50 |
| Al-Gehalt | ppb | <40 | <40 | <40 | <40 | <40 | <40 | <40 | <40 | <40 | <40 |
| Summe der Konzentrationen von Co, Cr, Cu, Fe, Ge, Hf, K, Li, Mn, Na, Nb, Ni, Ti, V, Zn. Zr | ppb | 203 | 201 | 196 | 199 | 2196 | 463 | 7000 | 2065 | 2052 | 2182 |
| Restfeuchte | Gew.-% | <3 | <3 | <3 | <3 | <3 | <3 | | <3 | <3 | <3 |
| Erdalkalimetallgehalt | ppb | 48 | 48 | 50 | 46 | 48 | 46 | 50 | 50 | 45 | 49 |

69

(fortgesetzt)

| Beispiel | | E20-11 | E20-21 | E20-22 | E20-23 | E20-31 | E20-32 | E20-33 | E20-41 | E20-42 | E20-43 |
|---|---|---|---|---|---|---|---|---|---|---|---|
| Porenvolumen | ml/g | 0,33± 0.1 | 0,33± 0.1 | 0,33± 0.1 | 0,33± 0.1 | 0,33± 0,1 | 0,33± 0.1 | | 0,33± 0,1 | 0,33± 0.1 | 0,33± 0.1 |
| Schüttwinkel | ° | 26± 2 | 26± 2 | 26± 2 | 26± 2 | 26± 2 | 26± 2 | | 26± 2 | 26± 2 | 26± 2 |
| Verhältnis Partikelgrößenverteilung $D_{90}/D_{10}$ (ca.) | Faktor | 4 | 4 | 4 | 3 | 3 | 3 | | 4 | 3 | 4 |
| Standzeit der Filteranordnung | Liter | | | | | >1000 | <100 | >1000 | <1000 | <1000 | <1000 |
| Angaben mit "<" bedeuten, dass der angegebene Wert unterschritten ist. Die Angabe ist eine interne Zielsetzung. Sie beinhaltet keinen Hinweis auf eine etwaige Nachweis- oder Bestimmungsgrenze der zugrunde gelegten Messmethode. | | | | | | | | | | | |

Die Granulate sind mit Ausnahme **E20-33** offenporig, zeigen eine gleichmäßige und kugelförmige Gestalt (alles mikroskopische Untersuchung). Sie neigen nicht zum Verbacken oder Verkleben. Bei **E20-33** wurde keine Granulation aufgrund des hohen Grads an Verunreinigung durchgeführt. Bei **E20-32** wurde nur eine geringe Filterstandzeit erreicht.

**F. Reinigen des Siliziumdioxidgranulats**

Siliziumdioxidgranulat wird in einem Drehrohrofen zunächst mit Sauerstoff oder Stickstoff (siehe Tabelle 11) behandelt. Die Temperatur im Eingangsbereich des Drehrohrofens betrug T1. Anschließend wird das Siliziumdioxidgranulat im Gleichstrom mit einer chlorhaltigen Komponente behandelt, wobei die Temperatur bis auf eine Temperatur T2 erhöht wird. Die Verfahrensparameter sind in Tabelle 11 angegeben, die Eigenschaften der erhaltenen behandelten Granulate in Tabelle 12.

**Tabelle 11**

| Beispiel | | F20-11 | F20-21 | F20-22 | F20-23 | F20-31 | F20-41 | F20-42 | F20-43 |
|---|---|---|---|---|---|---|---|---|---|
| **Edukt aus** | | **E20-11** | **E20-21** | **E20-22** | **E20-23** | **E20-31** | **E20-41** | **E20-42** | **E20-43** |
| Drehrohrofen | | | | | | | | | |
| Länge | cm | 200 | 200 | 200 | 200 | 200 | 200 | 200 | 200 |
| Innendurchmesser | cm | 18 | 18 | 18 | 18 | 18 | 18 | 18 | 18 |
| Durchsatz | kg/h | 20 | 20 | 20 | 20 | 20 | 20 | 20 | 20 |
| Rotationsgeschwindigkeit | U/min | 5 | 5 | 5 | 5 | 5 | 5 | 5 | 5 |
| T1 | °C | RT | RT | RT | RT | RT | RT | RT | RT |
| Atmosphäre | | Luft | Luft | Luft | Luft | Luft | Luft | Luft | Luft |
| Reaktand | | HCl | HCl | HCl | HCl | HCl | HCl | HCl | HCl |
| Zuführung | | 400l/h | 400l/h | 400l/h | 400l/h | 400l/h | 400l/h | 400l/h | 400l/h |
| Restfeuchte | Gew.-% | <1 | <1 | <1 | <1 | <1 | <1 | <1 | <1 |
| T2 | °C | 1100 | 750 | 750 | 750 | 1000 | 750 | 750 | 750 |
| Gleichstrom | | nein | nein | nein | nein | nein | nein | nein | nein |
| Komponente 1: HCl | l/h | 400 | 400 | 400 | 400 | 400 | 400 | 400 | 400 |
| Komponente 2: Cl2 | l/h | 0 | 0 | 0 | 0 | 0 | 0 | 0 | 0 |
| Komponente 3: N2 | l/h | 0 | 0 | 0 | 0 | 0 | 0 | 0 | 0 |
| Gleichstrom gesamt | l/h | 0 | 0 | 0 | 0 | 0 | 0 | 0 | 0 |

1) Bei den Drehrohröfen wurde der Durchsatz als Regelgröße gewählt. Das bedeutet, dass im Betrieb laufend der aus dem Drehrohrofen austretende Massenstrom gewogen wird und dann die Rotationsgeschwindigkeit und/oder die Neigung des Drehrohrofens entsprechend angepasst werden. Zum Beispiel kann eine Erhöhung des Durchsatzes erreicht werden durch a) Erhöhen der Rotationsgeschwindigkeit, oder b) Erhöhen der Neigung des Drehrohrs aus der Waagrechten, oder einer Kombination von a) und b). Angaben mit "<" bedeuten, dass der angegebene Wert unterschritten ist. Die Angabe ist eine interne Zielsetzung. Sie beinhaltet keinen Hinweis auf eine etwaige Nachweis- oder Bestimmungsgrenze der zugrunde gelegten Messmethode.

72

**Tabelle 12**

| Beispiel | | F20-11 | F20-21 | F20-22 | F20-23 | F20-31 | F20-41 | F20-42 | F20-43 |
|---|---|---|---|---|---|---|---|---|---|
| BET | $m^2/g$ | 25 | 29 | 28 | 28 | 26 | 29 | 29 | 29 |
| C-Gehalt | ppm | <4 | <4 | <4 | <4 | < 1 | < 1 | < 1 | < 1 |
| Al-Gehalt | ppb | <40 | <40 | <40 | <40 | <40 | <40 | <40 | <40 |
| Summe der Konzentrationen von Co, Cr, Cu, Fe, Ge, Hf, K, Li, Mn, Na, Nb, Ni, Ti, V, Zn, Zr | ppb | 206 | 215 | 218 | 215 | 252 | 246 | 235 | 247 |
| Erdalkalimetallgehalt | ppb | 43 | 43 | 42 | 45 | 42 | 48 | 44 | 40 |
| Angaben mit "<" bedeuten, dass der angegebene Wert unterschritten ist. Die Angabe ist eine interne Zielsetzung. Sie beinhaltet keinen Hinweis auf eine etwaige Nachweis- oder Bestimmungsgrenze der zugrunde gelegten Messmethode. | | | | | | | | | |

## G. **Wärmebehandlung von Siliziumdioxidgranulat**

Das Siliziumdioxidgranulat kann nun in einem Drehrohrofen einer weiteren Temperaturbehandlung unterzogen werden. Der Drehrohrofen ist durch ein in Förderrichtung ansteigendes Temperaturprofil gekennzeichnet. Erhalten wurde ein weiter behandeltes Siliziumdioxidgranulat. Die Verfahrensparameter sind in Tabelle 13 angegeben, die Eigenschaften der erhaltenen behandelten Granulate in Tabelle 14.

**Tabelle 13**

| Beispiel | | G20-11 | G20-21 | G20-22 | G20-23 | G20-31 | G20-41 | G20-42 | G20-43 |
|---|---|---|---|---|---|---|---|---|---|
| Edukt = Produkt aus | | **F20-11** | **F20-21** | **F20-22** | **F20-23** | **F20-31** | **F20-41** | **F20-42** | **F20-43** |
| Drehrohrofen | | | | | | | | | |
| Länge | cm | 200 | 200 | 200 | 200 | 200 | 200 | 200 | 200 |
| Innendurchmesser | cm | 18 | 18 | 18 | 18 | 18 | 18 | 18 | 18 |
| Durchsatz | kg/h | 20 | 20 | 20 | 20 | 20 | 20 | 20 | 20 |
| Rotationsgeschwindigkeit | U/min | 5 | 5 | 5 | 5 | 5 | 5 | 5 | 5 |
| T1 (Einlass Drehrohrofen) | °C | RT | RT | RT | RT | RT | RT | RT | RT |
| T2 (Auslass Drehrohrofen) | °C | 1000 | 1000 | 1000 | 1000 | 1000 | 1000 | 1000 | 1000 |
| Atmosphäre | | | | | | | | | |
| Gas, Strömungsrichtung | | Luft freie Konvektion | Luft freie Konvektion | Luft freie Konvektion | Luft freie Konvektion | Luft freie Konvektion | Luft freie Konvektion | Luft freie Konvektion | Luft freie Konvektion |
| RT = Raumtemperatur (25 °C). | | | | | | | | | |

**Tabelle 14**

| Beispiel | | G20-11 | G20-21 | G20-22 | G20-23 | G20-31 | G20-41 | G20-42 | G20-43 |
|---|---|---|---|---|---|---|---|---|---|
| BET | $m^2/g$ | 22 | 23 | 23 | 22 | 23 | 23 | 21 | 22 |
| Wassergehalt | ppm | <500 | <500 | <500 | <500 | <500 | <500 | <500 | <400 |
| C-Gehalt | ppm | <4 | <4 | <4 | <4 | < 1 | <1 | <1 | <1 |
| Cl-Gehalt | ppm | <60 | <60 | <60 | <60 | <60 | <60 | <60 | <60 |
| Al-Gehalt | ppb | <40 | <40 | <40 | <40 | <40 | <40 | <40 | <40 |
| Summe der Konzentrationen von Co, Cr, Cu, Fe, Ge, Hf, K, Li, Mn, Na, Nb, Ni, Ti, V, Zn, Zr | ppb | 195 | 210 | 208 | 200 | 228 | 230 | 226 | 228 |
| Erdalkalimetallgehalt | ppb | 44 | 49 | 47 | 46 | 46 | 46 | 48 | 43 |
| Si-Gehalt* * | ppm | 0 | 480 | 380 | 630 | 0 | 470 | 390 | 650 |

Angaben mit "<" bedeuten, dass der angegebene Wert unterschritten ist. Die Angabe ist eine interne Zielsetzung. Sie beinhaltet keinen Hinweis auf eine etwaige Nachweis- oder Bestimmungsgrenze der zugrunde gelegten Messmethode.
**siehe Methode Zf. in den Testmethoden

## H. Glasschmelze und Quarzglaskörper

In Schritt E gebildetes und entsprechend Schritt F und G weiter behandeltes Siliziumdioxidgranulat gemäß Tabelle 14 wird zur Herstellung eines Quarzglasrohres in einem Vertikal-Tiegelziehverfahren eingesetzt. Der Aufbau eines hängenden Schmelztiegels ist in Figur 5 schematisch gezeigt. Das Siliziumdioxidgranulat wird über die Feststoffzuführung zugegeben; das Innere des Schmelztiegels wird mit einem Gasgemisch gespült. Im Schmelztiegel bildet sich eine Glasschmelze, auf welcher ein Schüttkegel aus Siliziumdioxidgranulat aufsitzt. Im unteren Bereich des Schmelztiegels wird geschmolzenes Glas aus der Glasschmelze über eine Ziehdüse (ggf. mit einem Dorn) entnommen und als Strang vertikal nach unten abgezogen. Aufgrund des Eigengewichts und der Viskosität der Glasschmelze über der Düse und der durch die Düse vorgegebenen Lochgrö-ße ergibt sich der Durchsatz der Anlage. Durch Variieren der zugeführten Menge Siliziumdioxidgranulats und der Temperatur kann der Durchsatz auf die gewünschte Größe eingestellt werden. Die Verfahrensparameter sind in Tabelle 15 angegeben, die Eigenschaften der gebildeten Quarzglaskörper in Tabelle 16.

Am Gasauslass des Schmelztiegels wurde jeweils der Taupunkt bestimmt. Das Messprinzip ist in Figur 7 gezeigt. Zwischen dem Auslass des Schmelztiegels und der Messstelle des Taupunkts legt der Gasstrom eine Strecke von 100 cm zurück. Die Messwerte sind ebenfalls in Tabelle 16 eingetragen.

Tabelle 15

| Beispiel | | H20-V | H20-11 | H20-11A | H20-21 | H20-21A | H20-22 | H20-22A | H20-23 | H20-23A | H20-31 | H20-31A | H20-41 | H20-41A |
|---|---|---|---|---|---|---|---|---|---|---|---|---|---|---|
| Edukt = Produkt aus | | ++ | G20-11 | G20-11 | G20-21 | G20-21 | G20-22 | G20-22 | G20-23 | G20-23 | G20-31 | G20-31 | G20-41 | G20-41 |
| Schmelztiegel | | | | | | | | | | | | | | |
| Typ | | Blech-tiegel hängend | Blech-tiegel hängend | Blech-tiegel hängend | Blech-tiegel hängend | Blech-tiegel hängend | Blech-tiegel hängend | Blech-tiegel hängend | Blech-tiegel hängend | Blech-tiegel hängend | Blech-tiegel hängend | Blech-tiegel hängend | Blech-tiegel hängend | Blech-tiegel hängend |
| Metallsorte | | Wolfram | Wolfram | Wolfram | Wolfram | Wolfram | Wolfram | Wolfram | Wolfram | Wolfram | Wolfram | Wolfram | Wolfram | Wolfram |
| Länge | cm | 200 | 200 | 200 | 200 | 200 | 200 | 200 | 200 | 200 | 200 | 200 | 200 | 200 |
| Innendurchmesser | cm | 40 | 40 | 40 | 40 | 40 | 40 | 40 | 40 | 40 | 40 | 40 | 40 | 40 |
| Durchsatz | kg/h | 30 | 30 | 30 | 30 | 30 | 30 | 30 | 30 | 30 | 30 | 30 | 30 | 30 |
| T1 (Gasraum Schmelztiegel) | °C | 300 | 300 | 300 | 300 | 300 | 300 | 300 | 300 | 300 | 300 | 300 | 300 | 300 |
| T2 (Glasschmelze) | °C | 2100 | 2100 | 2100 | 2100 | 2100 | 2100 | 2100 | 2100 | 2100 | 2100 | 2100 | 2100 | 2100 |
| T3 (Düse) | °C | 1900 | 1900 | 1900 | 1900 | 1900 | 1900 | 1900 | 1900 | 1900 | 1900 | 1900 | 1900 | 1900 |
| Atmosphäre/Spülgas | | | | | | | | | | | | | | |
| Verhältnis He/H2 | | 30:70 | 30:70 | 30:70 | 30:70 | 30:70 | 30:70 | 30:70 | 30:70 | 30:70 | 30:70 | 30:70 | 30:70 | 30:70 |
| Taupunkt Einlass | °C | <-90 | <-90 | <-90 | <-90 | <-90 | <-90 | <-90 | <-90 | <-90 | <-90 | <-90 | <-90 | <-90 |
| Durchsatz Gasstrom gesamt | Nl/h | 600 | 600 | 1400 | 600 | 1400 | 600 | 1400 | 600 | 1400 | 600 | 1400 | 600 | 1400 |
| Parameter Abgas | | | | | | | | | | | | | | |
| Taupunkt Auslass | °C | -25 | 15 | 5 | -11 | -19 | -5 | -13 | -19 | -27 | 15 | 5 | -10 | -19 |

H20-V ist ein Vergleichsbeispiel, hergestellt aus natürlichem Sand. Dieser wurde analog zu Beispiel F20-11 einer Behandlung gemäß Schritt G unterzogen. Das Produkt aus Schritt G wurde in Schritt H eingesetzt. Als Ausgangsstoff bzw. Sand wurde "IOTA STD", erhältlich von Sibelco, Antwerpen (Belgien) eingesetzt. Dieser wies einen Aluminiumgehalt von 14 ppm und einen Erdalkalimetallgehalt von 0,64 ppm auf.

Angaben mit "<" bedeuten, dass der angegebene Wert unterschritten ist. Die Angabe ist eine interne Zielsetzung. Sie beinhaltet keinen Hinweis auf eine etwaige Nachweis- oder Bestimmungsgrenze der zugrunde gelegten Messmethode. Angaben mit ">" bedeuten, dass die interne gesetzte Zielsetzung erheblich überschritten wurde.

EP 4 281 418 B1

**Tabelle 16**

| Beispiel | | H20-V | H20-11 | H20-11A | H20-21 | H20-21A | H20-22 | H20-22A | H20-23 | H20-23A | H20-31 | H20-31A | H20-41 | H20-41A |
|---|---|---|---|---|---|---|---|---|---|---|---|---|---|---|
| Cl-Gehalt | ppm | <60 | <60 | <60 | <60 | <60 | <60 | <60 | <60 | <60 | <60 | <60 | <60 | <60 |
| Al-Gehalt | ppb | 15000 | <40 | <40 | <40 | <40 | <40 | <40 | <40 | <40 | <40 | <40 | <40 | <40 |
| Summe der Konzentrationen von Co, Cr, Cu, Fe, Ge, Hf, K, Li, Mn, Na, Nb, Ni, Ti, V, Zn, Zr | ppb | 4740 | 168 | 125 | 128 | 101 | 168 | 110 | 134 | 164 | 206 | 170 | 209 | 230 |
| OH-Gehalt | ppm | 110 | 400 | 400 | 32 | 29 | 171 | 156 | 0 | 0 | 400 | 400 | 32 | 29 |
| Erdalkalimetallgehalt | ppb | 648 | 50 | 58 | 59 | 57 | 71 | 72 | 81 | 71 | 52 | 56 | 60 | 65 |
| ODC-Gehalt | 1/cm$^3$ | $4*10^{15}$ | $4*10^{15}$ | $4*10^{15}$ | $3*10^{19}$ | $3*10^{19}$ | $6*10^{17}$ | $6*10^{17}$ | $5*10^{19}$ | $5*10^{19}$ | $4*10^{15}$ | $4*10^{15}$ | $3*10^{19}$ | $3*10^{19}$ |
| Gehalt an W. Mo, | ppb | <100 | >1000 | >1000 | <100 | <100 | <200 | <200 | <100 | <100 | >1000 | >1000 | <100 | <100 |
| Außendurchmesser Rohrstrang/Quarzglaskörper | cm | 19,7 | 19,7 | 19,7 | 19,7 | 19,7 | 19,7 | 19,7 | 19,7 | 19,7 | 19,7 | 19,7 | 19,7 | 19,7 |
| Viskosität @1250°C | Lg($\eta$/dPas) | nicht messbar | 11,69 ± 0,13 | 11,69 ± 0,13 | 12,14 ± 0,13 | 12,14 ± 0,13 | 12,04 ± 0,13 | 12,04 ± 0,13 | 12,41 ± 0,13 | 12,41 ± 0,13 | 11,69 ± 0,13 | 11,69 ± 0,13 | 12,14 ± 0,13 | 12,14 ± 0,13 |
| @1300°C | | 12,5 ± 0,14 | 11,26 ± 0,1 | 11,26 ± 0,1 | 11,4 ± 0,1 | 11,4 ± 0,1 | 11,36 ± 0,1 | 11,36 ± 0,1 | 11,64 ± 0,1 | 11,64 ± 0,1 | 11,26 ± 0,1 | 11,26 ± 0,1 | 11,4 ± 0,1 | 11,4 ± 0,1 |
| @1350°C | | 11,4 ± 0,1 | 10,69 ± 0,07 | 10,69 ± 0,07 | 10,86 ± 0,07 | 10,86 ± 0,07 | 10,79 ± 0,07 | 10,79 ± 0,07 | 11,03 ± 0,07 | 11,03 ± 0,07 | 10,69 ± 0,07 | 10,69 ± 0,07 | 10,86 ± 0,07 | 10,86 ± 0,07 |
| Fluoreszenz bei 254nm | | Violett (350-420nm) | keine | keine | leicht, bläulich (450nm) | leicht, bläulich (450nm) | keine | keine | deutlich, bläulich (450nm) | deutlich, bläulich (450nm) | keine | keine | leicht, bläulich (450nm) | leicht, bläulich (450nm) |
| Blasenanzahl | | fast blasenfrei | hoch | hoch | sehr hoch | sehr hoch | sehr hoch | sehr hoch | sehr hoch | sehr hoch | niedrig | niedrig | niedrig | Niedrig |

Angaben mit "<" bedeuten, dass der angegebene Wert unterschritten ist. Die Angabe ist eine interne Zielsetzung. Sie beinhaltet keinen Hinweis auf eine etwaige Nachweis- oder Bestimmungsgrenze der zugrunde gelegten Messmethode. Angaben mit ">" bedeuten, dass die interne gesetzte Zielsetzung erheblich überschritten wurde.

BEZUGSZEICHENLISTE

| | | | |
|---|---|---|---|
| 101, 201 | Schritt i.) | 813, 913 | Quarzglaskörper |
| 102, 202 | Schritt ii.) | 902 | Standfläche |
| 103, 203 | Schritt iii.) | 1100 | Sprühturm |
| 104, 204 | Schritt iv.) | 1101 | Zuführung |
| 105, 205 | Schritt v.) | 1102 | Düse |
| 106, 206 | Schritt vi.) | 1103 | Gaseinlass |
| 107, 207 | Schritt vii.) | 1104 | Sichtvorrichtung |
| 210 | Von Siliziumdioxid verschiedene Siliziumkomponente | 1105 | Siebvorrichtung |
| | | 1106 | Abführung (Sichten) |
| 301 | Erster Filter | 1107 | Abführung (Sieben) |
| 302 | Zweiter Filter | 1108 | Auslass (Granulat) |
| 303 | Dritter Filter | 1301 | Probe |
| 401 | Schritt (i) | 1302 | Sichtachse |
| 402 | Schritt (ii) | 1303 | Lichtquelle (UV) |
| 800, 900 | Ofen | 1400 | Schmelztiegel |
| 801, 901 | Tiegel | 1401 | Feststoffeinlass |
| 802 | Aufhängung | 1402 | Auslass |
| 803, 903 | Feststoffeinlass | 1403 | Siliziumdioxidgranulat |
| 804, 904 | Düse | 1404 | Schüttkegel |
| 805, 905 | Siliziumdioxidgranulat | 1405 | Glasschmelze |
| 806, 906 | Glasschmelze | 1406 | Gaseinlass |
| 807, 907 | Heizelemente | 1407 | Gasauslass |
| 808, 908 | Ofenaußenwand | 1408 | Gasführung |
| 809, 909 | Isolationsschicht | 1409 | Messvorrichtung (Taupunkt) |
| 810, 910 | Tiegelwand | 1410 | Quarzglaskörper |
| 811, 911 | Gaseinlass | a | Winkel (90°) |
| 812, 912 | Gasauslass | | |

**Patentansprüche**

1.  Ein Verfahren zum Herstellen eines Quarzglaskörpers beinhaltend die Verfahrensschritte:

    i.) Bereitstellen eines Pulvers aus Siliziumdioxidpartikeln und einer Flüssigkeit;
    ii.) Bilden einer Aufschlämmung beinhaltend die Flüssigkeit und die Siliziumdioxidpartikel durch Mischen des Pulvers und der Flüssigkeit;
    iii.) Behandeln der Aufschlämmung mit Ultraschall unter Erhalt einer Vorläufersuspension;
    iv.) Leiten zumindest eines Teils der Vorläufersuspension durch mindestens eine erste mehrstufige Filtervorrichtung unter Erhalt einer Siliziumdioxidsuspension;
    v.) Bilden eines Siliziumdioxidgranulats aus der Siliziumdioxidsuspension,
    vi.) Bilden einer Glasschmelze aus dem Siliziumdioxidgranulat in einem Ofen;
    vii.) Bilden eines Quarzglaskörpers aus zumindest einem Teil der Glasschmelze;

    wobei das Behandeln der Aufschlämmung in Schritt iii.) ein Deagglomerieren mindestens eines Teils der Siliziumdioxidpartikel beinhaltet;
    wobei in mindestens einem der Verfahrensschritte eine von Siliziumdioxid verschiedene Siliziumkomponente zugegeben wird,
    wobei Schritt v.) ein Granulieren beinhaltet; wobei das Siliziumdioxidgranulat einen größeren Partikeldurchmesser aufweist als die in der Siliziumdioxidsuspension enthaltenen Siliziumdioxidpartikel;
    wobei der Ofen einen Schmelztiegel und einen Gasauslass aufweist,

wobei ein Gas durch den Gasauslass dem Ofen entnommen wird,
wobei der Taupunkt des Gases beim Austritt aus dem Ofen durch den Gasauslass weniger als 0°C beträgt;

wobei die erste mehrstufige Filtervorrichtung zumindest eine erste, eine zweite und eine dritte Filterstufe aufweist, wobei die zweite Filterstufe stromabwärts von der ersten Filterstufe, und die dritte Filterstufe stromabwärts von der zweiten Filterstufe angeordnet ist,
wobei jede Filterstufe mindestens einen Filter beinhaltet,
wobei die erste Filterstufe eine Filterfeinheit von 5 $\mu$m oder mehr, die zweite Filterstufe eine Filterfeinheit in einem Bereich von 0,5 bis 5 $\mu$m, und die dritte Filterstufe eine Filterfeinheit von 1 $\mu$m oder weniger aufweist,
wobei die Filterfeinheit angibt, welches die kleinste Partikelgröße ist, die von dem genannten Filter zurückgehalten wird,
wobei die Abscheiderate für die erste Filterstufe 50 % oder mehr, für die zweite Filterstufe 95% oder mehr, und für die dritte Filterstufe 99,5 % oder mehr, jeweils ermittelt gemäß ISO 16889, aufweist.

2. Das Verfahren nach Anspruch 1, wobei das Granulieren ausgewählt ist aus der Gruppe bestehend aus Rollgranulieren, Sprühgranulation, Zentrifugalzerstäubung, Gefriergranulieren und einer Wirbelschichtgranulation.

3. Das Verfahren nach einem der vorhergehenden Ansprüche, wobei die von Siliziumdioxid verschiedene Siliziumkomponente bevorzugt Silizium ist.

4. Das Verfahren nach Anspruch 3, wobei eine Menge von insgesamt 10 bis 100.000 ppm an einer oder mehreren von Siliziumdioxid verschiedenen Siliziumkomponenten zugegeben wird, die ppm in Bezug auf das Gesamtgewicht an Siliziumdioxid.

5. Das Verfahren nach einem der vorhergehenden Ansprüche, wobei der Taupunkt des Gases vor Eintritt in den Ofen mindestens 30°C niedriger liegt als der Taupunkt beim Austritt aus dem Ofen durch den Gasauslass.

6. Das Verfahren nach einem der vorhergehenden Ansprüche, wobei der Schmelztiegel zumindest zum Teil aus einem Material beinhaltend eines oder mehrere Metalle ausgewählt aus Molybdän, Wolfram, Rhenium, Iridium, Osmium gebildet ist.

7. Das Verfahren nach einem der vorhergehenden Ansprüche, wobei die erste Filtervorrichtung durch mindestens eines der folgenden Merkmale gekennzeichnet ist:

   (a) Die erste Filterstufe eine Filterfeinheit in einem Bereich von 5 bis 15 $\mu$m aufweist;
   (b) Die erste Filterstufe oder eine Abscheiderate in einem Bereich von 50 bis 90% aufweist;
   (c) Die zweite Filterstufe eine Filterfeinheit in einem Bereich von 0,5 bis 2 $\mu$m aufweist;
   (d) Die zweite Filterstufe eine Abscheiderate in von 95% oder mehr aufweist;
   (e) Die dritte Filterstufe eine Filterfeinheit von 1,0 $\mu$m oder weniger aufweist;
   (f) Die dritte Filterstufe eine Abscheiderate in einem Bereich von 99,5% oder mehr aufweist;

   Oder eine Kombination von mindestens zwei der Merkmale (a) bis (f).

8. Das Verfahren nach einem der vorhergehenden Ansprüche, wobei mindestens ein Filter der in einer der Filterstufen der ersten Filtervorrichtung ausgewählt aus der ersten, zweiten und dritten Filterstufe vorgesehen ist, als Tiefenfilter ausgestaltet ist.

9. Das Verfahren nach einem der vorhergehenden Ansprüche, wobei die Behandlung der Aufschlämmung mit Ultraschall mindestens 10 Sekunden dauert.

10. Das Verfahren nach einem der vorhergehenden Ansprüche, wobei die Behandlung der Aufschlämmung mit Ultraschall durch eine Leistungsdichte von bis zu 600 W/Liter gekennzeichnet ist.

11. Das Verfahren nach einem der vorhergehenden Ansprüche, wobei die Aufschlämmung weniger als 5 Gew. - % an Additiven zur Stabilisierung der Aufschlämmung aufweist, die Gew.-% bezogen auf das Gesamtgewicht der Aufschlämmung.

**12.** Das Verfahren nach einem der vorhergehenden Ansprüche, wobei der Quarzglaskörper mindestens eines der folgenden Merkmale aufweist:

A] einen Chlorgehalt von weniger als 60 ppm;
B] einen Aluminiumgehalt von weniger als 200 ppb;
C] einen ODC-Anteil von weniger als 5- $10^{19}$/cm$^3$;
D] einen Gehalt an Atomen, die von Si, O, H, C verschieden sind, von weniger als 5 ppm;
E] eine Viskosität (p=1013 hPa) in einem Bereich von $\log_{10}$ ($\eta$ (1250°C) / dPas) = 11,4 bis $\log_{10}$ ($\eta$ (1250°C) / dPas) = 12,9;
F] eine Brechzahlhomogenität von weniger als $10^{-4}$;
G] eine zylindrische Form;
H] einen Wolframgehalt von weniger als 100 ppb;
I] einen Molybdängehalt von weniger als 100 ppb;

wobei die ppb und ppm jeweils auf das Gesamtgewicht des Quarzglaskörpers bezogen sind.

**Claims**

**1.** A method for producing a quartz glass body, comprising the method steps of:

i.) providing a powder made of silicon dioxide particles and a liquid;
ii.) forming a slurry containing the liquid and the silicon dioxide particles by mixing the powder and the liquid;
iii.) treating the slurry with ultrasound to obtain a precursor suspension;
iv.) passing at least part of the precursor suspension through at least one first multi-stage filter device to obtain a silicon dioxide suspension;
v.) forming a silicon dioxide granulate from the silicon dioxide suspension;
vi.) forming a glass melt from the silicon dioxide granulate in a furnace;
vii.) forming a quartz glass body from at least part of the glass melt;

wherein treating the slurry, in step iii.), includes deagglomerating at least some of the silicon dioxide particles;
wherein, in at least one of the method steps, a silicon component other than silicon dioxide is added;
wherein step v.) includes a granulation;
wherein the silicon dioxide granulate has a larger particle diameter than the silicon dioxide particles contained in the silicon dioxide suspension;
wherein the furnace has a crucible and a gas outlet,

wherein a gas is removed from the furnace through the gas outlet;
wherein the dew point of the gas upon exiting the furnace through the gas outlet is less than 0°C;

wherein the first multi-stage filter device comprises at least a first, a second and a third filter stage, wherein the second filter stage is arranged downstream of the first filter stage and the third filter stage is arranged downstream of the second filter stage,
wherein each filter stage contains at least one filter,
wherein the first filter stage has a filter fineness of 5 $\mu$m or more, the second filter stage has a filter fineness in a range of 0.5 to 5 $\mu$m, and the third filter stage has a filter fineness of 1 $\mu$m or less,
wherein the filter fineness indicates the smallest particle size retained by the filter,
wherein the separation rate for the first filter stage is 50% or more, for the second filter stage 95% or more, and for the third filter stage 99.5% or more, each determined according to ISO 16889.

**2.** The method according to claim 1, wherein the granulation is selected from the group consisting of roll granulation, spray granulation, centrifugal atomization, freeze granulation, and fluid bed granulation.

**3.** The method according to either of the preceding claims, wherein the silicon component other than silicon dioxide is preferably silicon.

**4.** The method according to claim 3, wherein a total quantity of 10 to 100,000 ppm of one or more silicon components other than silicon dioxide is added, ppm with respect to the total weight of silicon dioxide.

5. The method according to any of the preceding claims, wherein the dew point of the gas before entry into the furnace is at least 30°C lower than the dew point upon exiting the furnace through the gas outlet.

6. The method according to any of the preceding claims, wherein the crucible is formed at least in part from a material containing one or more metals selected from molybdenum, tungsten, rhenium, iridium, osmium.

7. The method according to any of the preceding claims, wherein the first filter device is **characterized by** at least one of the following features:

    (a) the first filter stage has a filter fineness in a range of 5 to 15 $\mu$m;
    (b) the first filter stage or has a separation rate in a range of 50 to 90%;
    (c) the second filter stage has a filter fineness in a range of 0.5 to 2 $\mu$m;
    (d) the second filter stage has a separation rate in of 95% or more;
    (e) the third filter stage has a filter fineness of 1.0 $\mu$m or less;
    (f) the third filter stage has a separation rate in a range of 99.5% or more;

or a combination of at least two of features (a) to (f).

8. The method according to any of the preceding claims, wherein at least one filter provided in one of the filter stages of the first filter device, selected from the first, second and third filter stages, is designed as a depth filter.

9. The method according to any of the preceding claims, wherein the treatment of the slurry with ultrasound lasts for at least 10 seconds.

10. The method according to any of the preceding claims, wherein the treatment of the slurry with ultrasound is **characterized by** a power density of up to 600 W/liter.

11. The method according to any of the preceding claims, wherein the slurry comprises less than 5% by weight of additives for stabilizing the slurry, the weight percent based on the total weight of the slurry.

12. The method according to any of the preceding claims, wherein the quartz glass body comprises at least one of the following features:

    A] a chlorine content of less than 60 ppm;
    B] an aluminum content of less than 200 ppb;
    C] an ODC fraction of less than $5 \cdot 10^{19}/cm^3$;
    D] a content of atoms other than Si, O, H, C of less than 5 ppm;
    E] a viscosity (p=1013 hPa) in a range of from $\log_{10}(\eta\,(1250°C)\,/\,dPas) = 11.4$ to $\log_{10}(\eta\,(1250°C)\,/\,dPas) = 12.9$;
    F] a refractive index homogeneity of less than $10^{-4}$;
    G] a cylindrical shape;
    H] a tungsten content of less than 100 ppb;
    I] a molybdenum content of less than 100 ppb;

wherein the ppb and ppm are each based on the total weight of the quartz glass body.

**Revendications**

1. Procédé de fabrication d'un corps en verre de quartz comprenant les étapes de procédé consistant à :

    i.) fournir une poudre à partir de particules de dioxyde de silicium et un liquide ;
    ii.) former une bouillie comprenant le liquide et les particules de dioxyde de silicium en mélangeant la poudre et le liquide ;
    iii.) traiter la bouillie par ultrasons pour obtenir une suspension de précurseur ;
    iv.) faire passer au moins une partie de la suspension de précurseur à travers au moins un premier dispositif de filtrage à plusieurs étages pour obtenir une suspension de dioxyde de silicium ;
    v.) former d'un granulat de dioxyde de silicium à partir de la suspension de dioxyde de silicium ;
    vi.) former un bain de verre à partir du granulat de dioxyde de silicium dans un four ;

vii.) former un corps en verre de quartz à partir d'au moins une partie du bain de verre ;

dans lequel le traitement de la bouillie à l'étape iii.) comprend une désagglomération d'au moins une partie des particules de dioxyde de silicium ;
dans lequel un composant de silicium autre que le dioxyde de silicium est ajouté dans au moins une des étapes de procédé ;
dans lequel l'étape v.) comprend une granulation ;
dans lequel le granulat de dioxyde de silicium présente un diamètre de particules supérieur à celui des particules de dioxyde de silicium contenues dans la suspension de dioxyde de silicium ;
dans lequel le four présente un creuset et une sortie de gaz,

dans lequel un gaz est retiré du four à travers la sortie de gaz ;
dans lequel le point de rosée du gaz est inférieur à 0 °C lors de la sortie du four à travers la sortie de gaz ;

dans lequel le premier dispositif de filtrage à plusieurs étages présente au moins un premier, un deuxième et un troisième étage de filtrage, dans lequel le deuxième étage de filtrage est disposé en aval du premier étage de filtrage, et le troisième étage de filtrage est disposé en aval du deuxième étage de filtrage,
dans lequel chaque étage de filtrage comprend au moins un filtre,
dans lequel le premier étage de filtrage présente une finesse de filtrage de 5 $\mu$m ou plus, le deuxième étage de filtrage présente une finesse de filtrage dans une plage allant de 0,5 à 5 $\mu$m, et le troisième étage de filtrage présente une finesse de filtrage de 1 $\mu$m ou moins,
dans lequel la finesse de filtrage indique quelle est la plus petite taille de particules retenue par ledit filtre,
dans lequel le taux de séparation est de 50 % ou plus pour le premier étage de filtrage, de 95 % ou plus pour le deuxième étage de filtrage, et de 99,5 % ou plus pour le troisième étage de filtrage, déterminé respectivement selon la norme ISO 16889.

2. Procédé selon la revendication 1, dans lequel la granulation est choisie dans le groupe constitué de granulation par roulement, granulation par pulvérisation, atomisation centrifuge, granulation par congélation et granulation en lit fluidisé.

3. Procédé selon l'une des revendications précédentes, dans lequel le composant de silicium autre que le dioxyde de silicium est de préférence le silicium.

4. Procédé selon la revendication 3, dans lequel une quantité allant de 10 à 100 000 ppm au total d'un ou plusieurs composants de silicium autres que le dioxyde de silicium est ajoutée, les ppm par rapport au poids total de dioxyde de silicium.

5. Procédé selon l'une des revendications précédentes, dans lequel le point de rosée du gaz avant l'entrée dans le four est plus bas d'au moins 30 °C que le point de rosée lors de la sortie du four à travers la sortie de gaz.

6. Procédé selon l'une des revendications précédentes, dans lequel le creuset est formé au moins en partie en un matériau comprenant un ou plusieurs métaux choisis parmi le molybdène, tungstène, rhénium, iridium, osmium.

7. Procédé selon l'une des revendications précédentes, dans lequel le premier dispositif de filtrage est **caractérisé par** au moins l'une des caractéristiques suivantes :

(a) le premier étage de filtrage présente une finesse de filtrage dans une plage allant de 5 à 15 $\mu$m ;
(b) le premier étage de filtrage ou présente un taux de séparation dans une plage allant de 50 à 90 % ;
(c) le deuxième étage de filtrage présente une finesse de filtrage dans une plage allant de 0,5 à 2 $\mu$m ;
(d) le deuxième étage de filtrage présente un taux de séparation en de 95 % ou plus ;
(e) le troisième étage de filtrage présente une finesse de filtrage de 1,0 $\mu$m ou moins ;
(f) le troisième étage de filtrage présente un taux de séparation dans une plage de 99,5 % ou plus ;

ou une combinaison d'au moins deux des caractéristiques (a) à (f).

8. Procédé selon l'une des revendications précédentes, dans lequel au moins un filtre qui est prévu dans l'un des étages de filtrage du premier dispositif de filtrage choisi parmi le premier, le deuxième et le troisième étage de filtrage est conçu comme un filtre à lit profond.

9. Procédé selon l'une des revendications précédentes, dans lequel le traitement de la bouillie par ultrasons dure au moins 10 secondes.

10. Procédé selon l'une des revendications précédentes, dans lequel le traitement de la bouillie par ultrasons est **caractérisé par** une densité de puissance allant jusqu'à 600 W/litre.

11. Procédé selon l'une des revendications précédentes, dans lequel la bouillie présente moins de 5 % en poids d'additifs pour la stabilisation de la bouillie, le % en poids étant basé sur le poids total de la bouillie.

12. Procédé selon l'une des revendications précédentes, dans lequel le corps en verre de quartz présente au moins l'une des caractéristiques suivantes :

A] une teneur en chlore inférieure à 60 ppm ;
B] une teneur en aluminium inférieure à 200 ppb ;
C] une proportion d'ODC inférieure à $5 \cdot 10^{19}/cm^3$ ;
D] une teneur en atomes autres que Si, O, H, C, inférieure à 5 ppm ;
E] une viscosité (p = 1 013 hPa) dans une plage allant de

$$\log_{10} (\eta (1\ 250\ °C) / dPas) = 11{,}4 \text{ à } \log_{10} (\eta (1\ 250\ °C) / dPas) = 12{,}9 ;$$

F] une homogénéité de l'indice de réfraction inférieure à $10^{-4}$ ;
G] une forme cylindrique ;
H] une teneur en tungstène inférieure à 100 ppb ;
I] une teneur en molybdène inférieure à 100 ppb ;

dans lequel les ppb et ppm se rapportent respectivement au poids total du corps en verre de quartz.

Fig. 1

Fig.2

Fig. 3

Fig. 4

Fig. 5

Fig. 6

Fig. 7

Fig. 8

Fig. 9 a)

Fig. 9 b)

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021013876 A1
- WO 2017103124 A2

- JP H0524852 A


**In der Beschreibung aufgeführte Nicht-Patentliteratur**

- **D. M. DODD ; D. M. FRASER.** Optical Determinations of OH in Fused Silica. *J.A.P.,* 1966, vol. 37, 3991

- **L. SKUJA.** Color Centers and Their Transformations in Glassy SiO. *Lectures of the summer school ''Photosensitivity in optical Waveguides and glasses'', Juli 13-18 1998, Vitznau, Switzerland,* 13. Juli 1998